# EUROPEAN PATENT APPLICATION

(11) **EP 4 213 062 A1**
(43) Date of publication of application: **19.07.2023**
(21) Application number: 23157096.1
(22) Date of filing: 28.06.2019
(51) Int. Cl.: G06F 30/17, B29C 64/386, B33Y 50/02, B29C 64/393, G05B 19/4099, B22F 5/04, B22F 10/28, B33Y 80/00, F01D 5/14, F01D 9/04, B22F 10/38, B22F 10/368, G06F 113/10, B22F 5/00

(54) **MANIPULATING ONE OR MORE FORMATION VARIABLES TO FORM THREE-DIMENSIONAL OBJECTS**

(30) Priority: 29.06.2018 US 201862692621 P; 07.09.2018 US 201816125644
(62) Divisional of application: 19824678.7
(71) Applicant: VELO3D, Inc., Campbell, CA 95008 (US)
(72) Inventor: BULLER, Benyamin, Cupertino, 95014 (US); TSVETANOV, Tsvetan, Santa Cruz, 95065 (US); RUSSEL, Daniel, Palo Alto, 94306 (US); SMITH, Kyle Joseph, Campbell, 95008 (US); LAPPAS, Tasso, Pasadena, 91107 (US); DZAMBAZOVA, Tatjana, Mill Valley, 94941 (US); COOL, Thomas C., Campbell, 95008 (US); WOODCOCK, Geoffrey Eric, Las Gatos, 95032 (US)
(74) Representative: Haseltine Lake Kempner LLP

(57) **Abstract**

The present disclosure relates to generation of forming instructions to form one or more three-dimensional (3D) objects. Generation of the forming instructions may include selection of one or more formation variables to form at least a portion of the one or more 3D objects. Generation of the forming instructions may include selection of a speed, feature, and/or an effect manifested in at least a portion of the formed one or more 3D objects. The forming variable(s) may be associated with a surface patch and/or volume portion of a model of the 3D object.

## Description

### CROSS REFERENCE TO RELATED APPLICATIONS

This application claims benefit of prior-filed U.S. Patent Application Serial No. 16/125,644, filed on September 7, 2018, titled "MANIPULATING ONE OR MORE FORMATION VARIABLES TO FORM THREE-DIMENSIONAL OBJECTS," that claims priority of U.S. Provisional Patent Application Serial No. 62/692,621, filed on June 29, 2018, titled "PROCESS SPECIFICATION IN THREE-DIMENSIONAL PRINTING," each of which is entirely incorporated herein by reference.

### BACKGROUND

Three-dimensional (3D) printing (e.g., additive manufacturing) is a process for making a three-dimensional object of any shape from a design. The design may be in the form of a data source, such as an electronic data source, or may be in the form of a hard copy. The hard copy may be a two-dimensional representation of a 3D object. The data source may be an electronic 3D model. 3D printing may be accomplished through an additive process in which successive layers of material are laid down one on top of another. This process may be controlled (e.g., computer controlled, manually controlled, or both). A 3D printer can be an industrial robot.

3D printing can generate custom parts. A variety of materials can be used in a 3D printing process including elemental metal, metal alloy, ceramic, elemental carbon, or polymeric material. In some 3D printing processes (e.g., additive manufacturing), a first layer of hardened material is formed, and thereafter successive layers of hardened material are added one by one, wherein each new layer of hardened material is added on a pre-formed layer of hardened material, until the entire designed three-dimensional structure (3D object) is layer-wise materialized.

3D models may be generated with a computer-aided design package, via a 3D scanner, or manually. The modeling process of preparing geometric data for 3D computer graphics may be similar to those of the plastic arts, such as sculpting or animating. 3D scanning is a process of analyzing and collecting digital data on the shape and appearance of a real object (e.g., real-life object). Based on these data, 3D models of the scanned object can be produced.

Many additive processes are currently available. They may differ in the manner layers are deposited and/or formed to create the materialized structure. They may vary in the material(s) that are used to generate the designed structure. Some methods melt and/or soften material to produce the layers. Examples of 3D printing methods include selective laser melting (SLM), selective laser sintering (SLS), direct metal laser sintering (DMLS), shape deposition manufacturing (SDM) or fused deposition modeling (FDM). Other methods cure liquid materials using different technologies such as stereo lithography (SLA). In the method of laminated object manufacturing (LOM), thin layers (made *inter alia* of paper, polymer, and/or metal) are cut to shape and joined together.

Sometimes, an additive (e.g., printing) process leads to at least a portion of a generated 3D object exhibiting an increased likelihood of at least one defect. For example, a defect may comprise a dislocation (e.g., a crack and/or a seam) in a formed 3D object, or a deformation of a (e.g., geometry of a) 3D object (as compared to a requested geometry of the 3D object). The geometrical deformation may comprise bending, warping, or twisting. The deformation may include a geometric distortion and/or altered material property, with respect to a requested three-dimensional object having one or more geometric requirements (e.g., as to shape and/or tolerances) and/or one or more requested material properties. The deformation may comprise an internal deformation. Internal may be within the 3D object or a portion thereof. The deformation may include a change in the material properties. The deformation may be disruptive (e.g., for the intended purpose of the 3D object). The deformation may comprise a geometric deformation. The deformation may comprise inconsistent material properties. The deformation may occur before, during, and/or after hardening of the transformed material. The deformation may comprise balling, warping, curling, bending, rolling, or external cracking. The geometrical deformation may comprise deviation from at least one requested dimension of the requested 3D object. The deformation in the material properties may comprise density, porosity, dislocation, metallurgical phase, crystal phase, crystal structure, alloy composition, or internal cracking. Sometimes, a prescribed (e.g., default and/or automatically specified) printing process leads to at least a portion of a generated 3D object having an increased likelihood of (e.g., developing) a defect.

Sometimes, a virtual pre-formation (e.g., software and/or computing) environment provides a formation model to assist in preparing the requested 3D object for formation on one or more manufacturing devices. For example, a virtual pre-formation environment may provide a capability of displaying a model of the requested 3D object. At times, a virtual pre-formation environment may provide a limited capability of a viewing and/or interacting with (e.g., an arbitrary portion of) the 3D model. For example, a virtual pre-formation environment may provide a capability of specifying various formation variable category options (e.g., process parameters) related to the formation of the requested 3D object, and/or various properties of the requested 3D object. The specification of the formation variable category option may be to at least a surface and/or volumetric portion of the 3D object. The surface portion may be designated in relation to one or more patches. The volumetric portion(s) may be designated in relation to one or more patches of a virtual model of the requested 3D object. Some properties of the requested 3D object may include a density, surface finish (e.g., roughness), dimensional tolerance, and/or a microstructure property (e.g., chemical makeup, size, morphology, crystal structure, or phase) of at least a portion of the requested 3D object.

### SUMMARY

At times, it is requested to control a selected effect with respect to a at least a portion of a generated (e.g., printed) 3D object. A selected effect may comprise a surface roughness, a material porosity, a presence (or absence) of a support structure, or a rate of object formation. In some embodiments, control of a selected effect comprises selection or modification of a forming (e.g., printing) procedure used in the formation a 3D object. In some embodiments, the forming procedure may comprise at least one forming feature or at least one forming process. In some embodiments, a modification to a forming process selection (e.g., a process override) includes a selection of potential forming (e.g., printing) processes for a portion of (e.g., an entire) 3D object. At times, the selection of forming processes comprises suppression (e.g., exclusion) of at least one forming process, or inclusion (e.g., coercion) of at least one forming process. At times, it may be requested to fabricate a 3D object including complex topology. For example, the 3D object may comprise overhangs (e.g., ledges), and/or cavities. For example, at least one portion of the 3D object may comprise an irregular shape. At times, it is requested to fabricate a 3D object with varied materials and/or material structures in specific (e.g., selected) portions of the 3D object. For example, at least a portion of the 3D object may be requested to include a functionally graded material. In some embodiments, control of a selected effect comprises control of the way at least a portion of a layer of hardened material is formed (e.g., generated, or printed). For example, at least a portion of a 3D object may be formed to have an altered ductility and/or microstructure (e.g., with respect to the portion formed by an initial and/or default forming process). For example, at least a portion of the 3D object may be engineered to comprise a certain chemical (e.g., metallurgical), or physical (e.g., brittle) characteristic.

At times, a capability to control and/or select an effect with respect to a at least a portion of a generated 3D object is provided by a pre-formation (e.g., virtual) environment (e.g., software). In some embodiments, distinct (e.g., separate) virtual pre-formation environments are provided for preparation of (i) a requested 3D object, and (ii) a manufacturing device that is selected to form the requested 3D object. In some embodiments, a virtual pre-formation environment enables an opening and/or importing of a virtual model of a requested 3D object that is in a native (e.g., boundary representation) computer-aided design (abbreviated herein as "CAD") file format. In some embodiments, the requested 3D object may comprise a 3D object that (a) is generatively designed, (b) is topologically optimized, or (c) comprises a networked (e.g., lightweight, sponge, and/or lattice) structure. In some embodiments, the virtual pre-formation environment provides a plurality of interactions with and/or viewing modes of a virtual model of the requested 3D object. The interactions with the virtual model of the requested 3D object may comprise (I) selection of one or more similar portions thereof, (II) generation of any regions of interest (abbreviated herein as "ROI"), (III) modifications to any (e.g., predefined) ROI, or (IV) specification of at least one formation variable category option (e.g., forming process or forming feature) for any selected portions. The virtual 3D object in the virtual pre-formation environment may comprise one or more surface patches (e.g., preserve the original surface patches of the designed virtual model of the 3D object). The surface patches may be assigned upon generation of the virtual model of the 3D object (e.g., by a designer and/or software utilized in the design). The selection of the portion(s) may comprise one or more surface patches. One or more surface patches may enclose a volume that is at least a portion of the model of the 3D object. The selected portion(s) may comprise a border between at least two surface patches and/or an edge of a surface patch. The selected portion(s) may comprise at least a portion of a patch border (e.g., also referred herein as a patch "edge," or a patch "circumference"). The viewing modes offered by the pre-formation environment may comprise a full 3D object view, a sectional view, a semi-transparent view, hiding any selected portion(s), revealing any (e.g., internal) portions, or isolating any selected portion(s), of the virtual model of the 3D object. In some embodiments, the virtual pre-formation environment enables a journal that stores (e.g., records) at least some (e.g., all) of the interactions and/or views performed by a user. In some embodiments, the virtual pre-formation environment suggests at least one orientation with which a requested 3D object may be formed by a (e.g., selected) manufacturing device. In some embodiments, the pre-formation environment offers a selection of a preferred and/or recommended manufacturing device (e.g., from a plurality of manufacturing device options). In some embodiments, the virtual pre-formation environment enables a (e.g., visual and/or data) comparison between at least two (e.g., versions of) virtual models of requested 3D object. In some embodiments, the virtual pre-formation environment facilitates product lifecycle management (comprising one or more other virtual environment types, e.g., software types) of at least one requested 3D object, e.g., for autonomous production.

The operations of any of the methods, non-transitory computer readable media, and/or controller directions described herein can be in any order. At least two of the operation in any of the methods, non-transitory computer readable media, and/or controller(s) can be performed simultaneously.

In another aspect, a method for generating forming instructions for forming a three-dimensional object, comprises: selecting at least one surface portion of a geometric model of the three-dimensional object, wherein the at least one surface portion has a curvature that ranges between an upper threshold curvature and a lower threshold curvature; and selecting (i) at least one forming process from a plurality of forming processes for forming the at least one surface portion and/or (ii) at least one forming feature to be added to the at least one surface portion during formation of the three-dimensional object, wherein the curvature is (I) an intrinsic curvature or (II) an extrinsic curvature, of the at least one surface portion.

In some embodiments, the extrinsic curvature is of a curve formed by (A) an intersection of the geometric model with a first plane that is perpendicular to a global vector and/or, (B) an intersection of the geometric model with a second plane that is perpendicular to the first plane in (A). In some embodiments, the second plane is parallel to the global vector. In some embodiments, the global vector is (aa) directed to the local gravitational center of an environment in which a three-dimensional object is formed according to the manufacturing instructions, (bb) directed opposite to a direction of layer-wise deposition to form (e.g., print) the three-dimensional object, and/or (cc) normal to a platform configured to support the three-dimensional object during its forming (e.g., printing) and directed opposite to a surface of the platform that supports the three-dimensional object. In some embodiments, the extrinsic curvature of the curve is a sectional normal curvature. In some embodiments, the upper threshold curvature and/or the lower threshold curvature comprise a global curvature. In some embodiments, the upper threshold curvature and/or the lower threshold curvature comprise a global extremum (e.g., minimum or maximum) of curvature. In some embodiments, the upper threshold curvature and/or the lower threshold curvature comprise a local curvature. In some embodiments, the upper threshold curvature and/or the lower threshold curvature comprise a local extremum (e.g., minimum or maximum) of curvature. In some embodiments, selection of the at least one surface portion comprises selecting at least one point on the surface of the geometric model and considering neighboring points on the surface of the geometric model. In some embodiments, the range between upper threshold curvature and/or the lower threshold curvature is with respect to a curvature at the at least one point on the surface. In some embodiments, considering neighboring points on the surface comprises using a flood fill algorithm. In some embodiments, selecting the at least one surface portion comprises considering an intended use of the three-dimensional object. In some embodiments, the at least one surface portion corresponds with a region of the three-dimensional object that upon formation and during the intended use undergoes a relatively higher induced stress as compared to an induced stress in an adjacent portion (e.g., a remainder) of the three-dimensional object. In some embodiments, the at least one surface portion corresponds with a region of the three-dimensional object that upon formation and during the intended use undergoes a relatively higher induced temperature variation as compared to an induced temperature variation in an adjacent portion (e.g., a remainder) of the three-dimensional object. In some embodiments, the three-dimensional object is a first three-dimensional object, and wherein the geometric model is a first geometric model, wherein selecting the at least one surface portion comprises considering build history data of a second three-dimensional object that is formed and has a similar associated second geometric model. In some embodiments, the first geometric model and the second geometric model are the same. In some embodiments, the first geometric model and the second geometric model are different. In some embodiments, selecting the at least one surface portion is while considering a computational model. In some embodiments, the computational model comprises historical data and/or a simulation. In some embodiments, the computational model comprises a physics simulation or a machine learning simulation. In some embodiments, the physics simulation comprises a simulation of the forming process of the three-dimensional object. In some embodiments, the simulation of the forming process of the three-dimensional object considers aspects including (i) the geometric model, and/or (ii) behavior of the material forming the three-dimensional object during and/or after its formation. In some embodiments, the material behavior comprises thermal conductance, material microstructure, mechanical properties. In some embodiments, the mechanical properties comprise stress, strain, contractibility, surface tension, flow, volatility, or wettability. In some embodiments, selecting the forming process comprises a coercion and/or a suppression of at least one forming process of the plurality of forming processes. In some embodiments, the coercion comprises increasing a likelihood of using the at least one forming process. In some embodiments, the coercion of the at least one forming process comprises excluding a remainder of the plurality of forming processes for forming the at least one surface portion. In some embodiments, the suppression comprises decreasing a likelihood of using the at least one forming process. In some embodiments, the forming process comprises hatching, tiling, forming globular melt pools, forming high aspect ratio melt pools, re-transforming, annealing, machining, or pre-heating. In some embodiments, selecting the forming process considers a forming parameter that comprises (a) an angle (e.g., with respect to a global vector), (b) a surface roughness, (c) a rate of formation, (d) a material composition, or (e) a dimensional fidelity (e.g., of a formed three-dimensional object to the geometric model), of the at least one surface portion. In some embodiments, the forming feature comprises generation of: (a) one or more auxiliary supports or (b) a label. In some embodiments, the forming feature comprises generation of the one or more auxiliary supports. In some embodiments, the geometric model comprises a digital model. In some embodiments, the geometric model comprises a virtual model. In some embodiments, the method further comprises determining (a) a value of the upper threshold curvature and/or (b) a value of the lower threshold curvature, while considering a forming capability of a given forming tool for forming the three-dimensional object. In some embodiments, the forming tool comprise a dispenser or a platform that supports the three-dimensional object during formation. In some embodiments, the forming tool comprises a printing, molding, welding, machining, or casting tool. In some embodiments, the forming capability comprises a dimensional accuracy capability of a formed three-dimensional object along a direction. In some embodiments, determining the (a) value of the upper threshold curvature and/or (b) the value lower threshold curvature is while considering a forming capability of a material for forming the three-dimensional object. In some embodiments, the material comprises an elemental metal, a metal alloy, a ceramic, an allotrope of elemental carbon, a resin, or a polymer. In some embodiments, the metal alloy comprises an iron-comprising alloy, a nickel-comprising alloy, a cobalt-comprising allow, a chrome-comprising alloy, a cobalt chrome-comprising alloy, a titanium-comprising alloy, a magnesium-comprising alloy, or a copper-comprising alloy. In some embodiments, the method further comprises embodying the forming (e.g., manufacturing) instructions in a data structure. In some embodiments, the data structure is configured to be read by the forming device. In some embodiments, the forming device comprise an additive manufacturing device. In some embodiments, selection of the forming process considers a selection such that a three-dimensional object formed by the forming instructions deviates from the geometric model by at most 100micrometers + FLS/1000 micrometers, wherein FLS is the Fundamental Length Scale of the geometric model. In some embodiments, the three-dimensional object formed by the manufacturing instructions deviates from the geometric model by at most 50 micrometers + FLS/2500 micrometers. In some embodiments, the FLS corresponds with a length of the geometric model in a direction.

In another aspect, a computer system for generating forming instructions for forming a three-dimensional object comprises processing circuitry coupled to a memory, the memory having recorded thereon instructions that, when executed by the processing circuitry, cause the processing circuitry to be configured to: select at least one surface portion of a geometric model of the three-dimensional object, wherein the at least one surface portion has a curvature that ranges between an upper threshold curvature and a lower threshold curvature; and select (i) at least one forming process from a plurality of forming processes for forming the at least one surface portion and/or (ii) at least one forming feature to be added to the at least one surface portion during formation of the three-dimensional object, wherein the curvature is (I) an intrinsic curvature or (II) an extrinsic curvature, of the at least one surface portion.

In some embodiments, the computer system further comprises a graphical user interface (GUI) coupled to or as part of the processing circuitry, wherein the GUI is configured to display the geometric model. In some embodiments, a user interaction provides (a) the at least one surface portion (b) any selected forming process of the plurality of forming processes and/or (c) any forming feature to be added to the at least one surface portion during formation of the three-dimensional object. In some embodiments, the user interaction comprises an interaction with the geometric model. In some embodiments, the extrinsic curvature is of a curve formed by (A) an intersection of the geometric model with a first plane that is perpendicular to a global vector and/or, (B) an intersection of the geometric model with a second plane that is perpendicular to the first plane in (A). In some embodiments, the second plane is parallel to the global vector. In some embodiments, the global vector is (aa) directed to the local gravitational center of an environment in which a three-dimensional object is formed according to the manufacturing instructions, (bb) directed opposite to a direction of layer-wise deposition to form (e.g., print) the three-dimensional object, and/or (cc) normal to a platform configured to support the three-dimensional object during its forming (e.g., printing) and directed opposite to a surface of the platform that supports the three-dimensional object. In some embodiments, the extrinsic curvature of the curve is a sectional normal curvature. In some embodiments, the upper threshold curvature and/or the lower threshold curvature comprise a global curvature. In some embodiments, the upper threshold curvature and/or the lower threshold curvature comprise a global extremum (e.g., minimum or maximum) of curvature. In some embodiments, the upper threshold curvature and/or the lower threshold curvature comprise a local curvature. In some embodiments, the upper threshold curvature and/or the lower threshold curvature comprise a local extremum (e.g., minimum or maximum) of curvature. In some embodiments, to select the at least one surface portion comprises the processing circuitry configured to select at least one point on the surface of the geometric model and to consider neighboring points on the surface of the geometric model. In some embodiments, the range between the upper threshold curvature and/or the lower threshold curvature is with respect to a curvature at the at least one point on the surface. In some embodiments, to consider neighboring points on the surface comprises utilization of a flood fill algorithm. In some embodiments, to select the at least one surface portion comprises the processing circuitry configured to consider an intended use of the three-dimensional object. In some embodiments, the at least one surface portion corresponds with a region of the three-dimensional object that upon formation and during the intended use undergoes a relatively higher induced stress as compared to an induced stress in an adjacent portion (e.g., a remainder) of the three-dimensional object. In some embodiments, the at least one surface portion corresponds with a region of the three-dimensional object that upon formation and during the intended use undergoes a relatively higher induced temperature variation as compared to an induced temperature variation in an adjacent portion (e.g., a remainder) of the three-dimensional object. In some embodiments, the three-dimensional object is a first three-dimensional object, and wherein the geometric model is a first geometric model, wherein to select the at least one surface portion comprises the processing circuitry configured to consider build history data of a second three-dimensional object that is formed and has a similar associated second geometric model. In some embodiments, the first geometric model and the associated second geometric model are the same. In some embodiments, the first geometric model and the associated second geometric model are different. In some embodiments, to select the at least one surface portion comprises the processing circuitry configured to select while considering a computational model. In some embodiments, the computational model comprises historical data and/or a simulation. In some embodiments, the computational model comprises a physics simulation or a machine learning simulation. In some embodiments, to select the at least one surface portion comprises the processing circuitry configured to select while considering a physics simulation. In some embodiments, the physics simulation comprises a simulation of the forming process of the three-dimensional object. In some embodiments, the simulation of the forming process of the three-dimensional object considers aspects including (i) the geometric model, and/or (ii) behavior of the material forming the three-dimensional object during and/or after its formation. In some embodiments, material behavior comprises thermal conductance, material microstructure, or mechanical properties. In some embodiments, the mechanical properties comprise stress, strain, contractibility, surface tension, flow, volatility, or wettability. In some embodiments, to select the forming process comprises the processing circuitry configured to coerce and/or suppress of at least one forming process of the plurality of forming processes. In some embodiments, to coerce comprises the processing circuitry configured to increase a likelihood of using the at least one forming process. In some embodiments, to coerce the at least one forming process comprises the processing circuitry configured to exclude a remainder of the plurality of forming processes for forming the at least one surface portion. In some embodiments, to suppress comprises the processing circuitry configured to decrease a likelihood of using the at least one forming process. In some embodiments, the forming process comprises hatching, tiling, forming globular melt pools, forming high aspect ratio melt pools, re-transforming, annealing, machining, or pre-heating. In some embodiments, to select the forming process comprises the processing circuitry configured to consider a forming parameter that comprises (a) an angle (e.g., with respect to a global vector), (b) a surface roughness, (c) a rate of formation, (d) a material composition, or (e) a dimensional fidelity (e.g., of a formed three-dimensional object to the geometric model), of the at least one surface portion. In some embodiments, the forming feature comprises generation of (a) one or more auxiliary supports or (b) a label. In some embodiments, the forming feature comprises generation of the one or more auxiliary supports. In some embodiments, the geometric model comprises a digital model. In some embodiments, the geometric model comprises a virtual model. In some embodiments, the computer system further comprises the processing circuitry configured to determine (a) a value of the upper threshold curvature and/or (b) a value of the lower threshold curvature while considering a forming capability of a given forming tool for forming the three-dimensional object. In some embodiments, the forming tool comprises a dispenser or a platform that supports the three-dimensional object during formation. In some embodiments, the forming tool comprises a printing, molding, welding, machining, or casting tool. In some embodiments, the forming capability comprises a dimensional accuracy capability of a formed three-dimensional object along a direction. In some embodiments, the processing circuitry is configured to determine the (a) value of the upper threshold curvature and/or (b) the value of the lower threshold curvature while considering a forming capability of a material for forming the three-dimensional object. In some embodiments, the material comprises an elemental metal, a metal alloy a ceramic, an allotrope of elemental carbon, a resin, or a polymer. In some embodiments, the metal alloy comprises an iron-comprising alloy, a nickel-comprising alloy, a cobalt-comprising allow, a chrome-comprising alloy, a cobalt chrome-comprising alloy, a titanium-comprising alloy, a magnesium-comprising alloy, or a copper-comprising alloy. In some embodiments, the computer system further comprises the processing circuitry configured to embody the forming (e.g., manufacturing) instructions in a data structure. In some embodiments, the data structure is configured to be read by the forming device. In some embodiments, the forming device comprises an additive manufacturing device. In some embodiments, the processing unit is configured to generate the forming instructions such that a three-dimensional object is formed according to the forming instructions comprises a high dimensional fidelity to the geometric object. In some embodiments, the high dimensional accuracy is such that a three-dimensional object formed by the forming instructions deviates from the geometric model by at most 100 micrometers + FLS/1000 micrometers, wherein FLS is the Fundamental Length Scale of the geometric model. In some embodiments, selection of the forming process comprises the processing circuitry configured to consider a selection such that a three-dimensional object formed by the forming instructions deviates from the geometric model by at most 100 micrometers + FLS/1000 micrometers, wherein FLS is the Fundamental Length Scale of the geometric model. In some embodiments, the three-dimensional object formed by the manufacturing instructions deviates from the geometric model by at most 50 micrometers + FLS/2500 micrometers. In some embodiments, the FLS corresponds with a length of the geometric model in a direction. In some embodiments, the processing circuitry comprises electrical circuitry.

In another aspect, a computing device configured to generate forming instructions of a three-dimensional object, including: a processor configured to: select at least one surface portion of a geometric model of the three-dimensional object, wherein the at least one surface portion has a curvature that ranges between an upper threshold curvature and a lower threshold curvature; and select (i) at least one forming process from a plurality of forming processes for forming the at least one surface portion and/or (ii) at least one forming feature for adding to the at least one surface portion, wherein the curvature is (I) an intrinsic curvature or (II) an extrinsic curvature, of the at least one surface portion.

In some embodiments, the extrinsic curvature is of a curve formed by (A) an intersection of the geometric model with a first plane that is perpendicular to a global vector and/or, (B) an intersection of the geometric model with a second plane that is perpendicular to the first plane in (A). In some embodiments, the second plane is parallel to the global vector. In some embodiments, the global vector is (aa) directed to the local gravitational center of an environment in which a three-dimensional object is formed according to the manufacturing instructions, (bb) directed opposite to a direction of layer-wise deposition to form (e.g., print) the three-dimensional object, and/or (cc) normal to a platform configured to support the three-dimensional object during its forming (e.g., printing) and directed opposite to a surface of the platform that supports the three-dimensional object. In some embodiments, the extrinsic curvature of the curve is a sectional normal curvature. In some embodiments, the upper threshold curvature and/or the lower threshold curvature comprise a global curvature. In some embodiments, the upper threshold curvature and/or the lower threshold curvature comprise a global extremum (e.g., minimum or maximum) of curvature. In some embodiments, the upper threshold curvature and/or the lower threshold curvature comprise a local curvature. In some embodiments, the upper threshold curvature and/or the lower threshold curvature comprise a local extremum (e.g., minimum or maximum) of curvature. In some embodiments, to select the at least one surface portion comprises the processor configured to select at least one point on the surface of the geometric model and to consider neighboring points on the surface of the geometric model. In some embodiments, the range between the upper threshold curvature and/or the lower threshold curvature is with respect to a curvature at the at least one point on the surface. In some embodiments, to consider neighboring points on the surface comprises utilization of a flood fill algorithm. In some embodiments, to select the at least one surface portion comprises the processor configured to consider an intended use of the three-dimensional object. In some embodiments, the at least one surface portion corresponds with a region of the three-dimensional object that upon formation and during the intended use undergoes a relatively higher induced stress as compared to an induced stress in an adjacent portion (e.g., a remainder) of the three-dimensional object. In some embodiments, the at least one surface portion corresponds with a region of the three-dimensional object that upon formation and during the intended use undergoes a relatively higher induced temperature variation as compared to an induced temperature variation in an adjacent portion (e.g., a remainder) of the three-dimensional object. In some embodiments, the three-dimensional object is a first three-dimensional object, and wherein the geometric model is a first geometric model, wherein to select the at least one surface portion comprises the processor configured to consider build history data of a second three-dimensional object that is formed and has a similar associated second geometric model. In some embodiments, the first geometric model and the associated second geometric model are the same. In some embodiments, the first geometric model and the associated second geometric model are different. In some embodiments, to select the at least one surface portion comprises the processor configured to select while considering a computational model. In some embodiments, the computational model comprises historical data and/or a simulation. In some embodiments, the computational model comprises a physics simulation or a machine learning simulation. In some embodiments, the physics simulation comprises a simulation of the forming process of the three-dimensional object. In some embodiments, the simulation of the forming process of the three-dimensional object considers aspects including (i) the geometric model, and/or (ii) behavior of the material forming the three-dimensional object during and/or after its formation. In some embodiments, material behavior comprises thermal conductance, material microstructure, or mechanical properties. In some embodiments, the mechanical properties comprise stress, strain, contractibility, surface tension, flow, volatility, or wettability. In some embodiments, to select the forming process comprises the processor configured to coerce and/or suppress of at least one forming process of the plurality of forming processes. In some embodiments, to coerce comprises the processor configured to increase a likelihood of using the at least one forming process. In some embodiments, to coerce the at least one forming process comprises the processor configured to exclude a remainder of the plurality of forming processes for forming the at least one surface portion. In some embodiments, to suppress comprises the processor configured to decrease a likelihood of using the at least one forming process. In some embodiments, the forming process comprises hatching, tiling, forming globular melt pools, forming high aspect ratio melt pools, re-transforming, annealing, machining, or pre-heating. In some embodiments, to select the forming process comprises the processor configured to consider a forming parameter that comprises (a) an angle (e.g., with respect to a global vector), (b) a surface roughness, (c) a rate of formation, (d) a material composition, or (e) a dimensional fidelity (e.g., of a formed three-dimensional object to the geometric model), of the at least one surface portion. In some embodiments, the forming feature comprises generation of (a) one or more auxiliary supports or (b) a label. In some embodiments, the forming feature comprises generation of the one or more auxiliary supports. In some embodiments, the geometric model comprises a digital model. In some embodiments, the geometric model comprises a virtual model. In some embodiments, the computing device further comprises the processor configured to determine (a) a value of the upper threshold curvature and/or (b) a value of the lower threshold curvature while considering a forming capability of a given forming tool for forming the three-dimensional object. In some embodiments, the forming tool comprises a dispenser or a platform that supports the three-dimensional object during formation. In some embodiments, the forming tool comprises a printing, molding, welding, machining, or casting tool. In some embodiments, the forming capability comprises a dimensional accuracy capability of a formed three-dimensional object along a direction. In some embodiments, the processor is configured to determine the (a) value of the upper threshold curvature and/or (b) the value of the lower threshold curvature while considering a forming capability of a material for forming the three-dimensional object. In some embodiments, the material comprises an elemental metal, a metal alloy a ceramic, an allotrope of elemental carbon, a resin, or a polymer. In some embodiments, the metal alloy comprises an iron-comprising alloy, a nickel-comprising alloy, a cobalt-comprising allow, a chrome-comprising alloy, a cobalt chrome-comprising alloy, a titanium-comprising alloy, a magnesium-comprising alloy, or a copper-comprising alloy. In some embodiments, the computing device further comprises the processor configured to embody the forming (e.g., manufacturing) instructions in a data structure. In some embodiments, the forming device comprises an additive manufacturing device. In some embodiments, the data structure is configured to be read by an additive manufacturing device. In some embodiments, the processor is configured to generate the forming instructions such that a three-dimensional object is formed according to the forming instructions comprises a high dimensional fidelity to the geometric object. In some embodiments, the high dimensional accuracy is such that a three-dimensional object formed by the forming instructions deviates from the geometric model by at most 100 micrometers + FLS/1000 micrometers, wherein FLS is the Fundamental Length Scale of the geometric model. In some embodiments, selection of the forming process comprises the processor configured to consider a selection such that a three-dimensional object formed by the forming instructions deviates from the geometric model by at most 100 micrometers + FLS/1000 micrometers, wherein FLS is the Fundamental Length Scale of the geometric model. In some embodiments, the three-dimensional object formed by the manufacturing instructions deviates from the geometric model by at 50 micrometers + most FLS/2500 micrometers. In some embodiments, the FLS corresponds with a length of the geometric model in a direction. In some embodiments, the processor comprises electrical circuitry.

In another aspect, a non-transitory computer-readable medium storing program instructions for generating forming instructions for formation of a three-dimensional object that, when the program instructions are executed by a processing unit, cause the processing unit to: select or facilitate selection of: at least one surface portion of a geometric model of the three-dimensional object, wherein the at least one surface portion has a curvature that ranges between an upper threshold curvature and a lower threshold curvature; and select or facilitate selection of: (i) at least one forming process from a plurality of forming processes for forming the at least one surface portion and/or (ii) at least one forming feature to be added to the at least one surface portion during formation of the three-dimensional object, wherein the curvature is (I) an intrinsic curvature or (II) an extrinsic curvature, of the at least one surface portion.

In some embodiments, the extrinsic curvature is of a curve formed by (A) an intersection of the geometric model with a first plane that is perpendicular to a global vector and/or, (B) an intersection of the geometric model with a second plane that is perpendicular to the first plane in (A). In some embodiments, the second plane is parallel to the global vector. In some embodiments, the global vector is (aa) directed to the local gravitational center of an environment in which a three-dimensional object is formed according to the manufacturing instructions, (bb) directed opposite to a direction of layer-wise deposition to form (e.g., print) the three-dimensional object, and/or (cc) normal to a platform configured to support the three-dimensional object during its forming (e.g., printing) and directed opposite to a surface of the platform that supports the three-dimensional object. In some embodiments, the extrinsic curvature of the curve is a sectional normal curvature. In some embodiments, the upper threshold curvature and/or the lower threshold curvature comprise a global curvature. In some embodiments, the upper threshold curvature and/or the lower threshold curvature comprise a global extremum (e.g., minimum or maximum) of curvature. In some embodiments, the upper threshold curvature and/or the lower threshold curvature comprise a local curvature. In some embodiments, the upper threshold curvature and/or the lower threshold curvature comprise a local extremum (e.g., minimum or maximum) of curvature. In some embodiments, to select the at least one surface portion comprises program instructions that cause the processing unit to select at least one point on the surface of the geometric model and to consider neighboring points on the surface of the geometric model. In some embodiments, the range between the upper threshold curvature and/or the lower threshold curvature is with respect to a curvature at the at least one point on the surface. In some embodiments, to consider neighboring points on the surface comprises utilization of a flood fill algorithm. In some embodiments, to select the at least one surface portion comprises program instructions that cause the processing unit to consider an intended use of the three-dimensional object. In some embodiments, the at least one surface portion corresponds with a region of the three-dimensional object that upon formation and during the intended use undergoes a relatively higher induced stress as compared to an induced stress in an adjacent portion (e.g., a remainder) of the three-dimensional object. In some embodiments, the at least one surface portion corresponds with a region of the three-dimensional object that upon formation and during the intended use undergoes a relatively higher induced temperature variation as compared to an induced temperature variation in an adjacent portion (e.g., a remainder) of the three-dimensional object. In some embodiments, the three-dimensional object is a first three-dimensional object, and wherein the geometric model is a first geometric model, wherein to select the at least one surface portion comprises program instructions that cause the processing unit to consider build history data of a second three-dimensional object that is formed and has a similar associated second geometric model. In some embodiments, the first geometric model and the associated second geometric model are the same. In some embodiments, the first geometric model and the associated second geometric model are different. In some embodiments, to select the at least one surface portion comprises program instructions that cause the processing unit to select while considering a computational model. In some embodiments, the computational model comprises historical data and/or a simulation. In some embodiments, the computational model comprises a physics simulation or a machine learning simulation. In some embodiments, the physics simulation comprises a simulation of the forming process of the three-dimensional object. In some embodiments, the simulation of the forming process of the three-dimensional object considers aspects including (i) the geometric model, and/or (ii) behavior of the material forming the three-dimensional object during and/or after its formation. In some embodiments, material behavior comprises thermal conductance, material microstructure, or mechanical properties. In some embodiments, the mechanical properties comprise stress, strain, contractibility, surface tension, flow, volatility, or wettability. In some embodiments, to select the forming process comprises program instructions that cause the processing unit to coerce and/or suppress of at least one forming process of the plurality of forming processes. In some embodiments, to coerce comprises program instructions that cause the processing unit to increase a likelihood of using the at least one forming process. In some embodiments, to coerce the at least one forming process comprises program instructions that cause the processing unit to exclude a remainder of the plurality of forming processes for forming the at least one surface portion. In some embodiments, to suppress comprises program instructions that cause the processing unit to decrease a likelihood of using the at least one forming process. In some embodiments, the forming process comprises hatching, tiling, forming globular melt pools, forming high aspect ratio melt pools, re-transforming, annealing, machining, or pre-heating. In some embodiments, to select the forming process comprises program instructions that cause the processing unit to consider a forming parameter that comprises (a) an angle (e.g., with respect to a global vector), (b) a surface roughness, (c) a rate of formation, (d) a material composition, or (e) a dimensional fidelity (e.g., of a formed three-dimensional object to the geometric model), of the at least one surface portion. In some embodiments, the forming feature comprises generation of (a) one or more auxiliary supports or (b) a label. In some embodiments, the forming feature comprises generation of the one or more auxiliary supports. In some embodiments, the geometric model comprises a digital model. In some embodiments, the geometric model comprises a virtual model. In some embodiments, the non-transitory computer-readable medium further comprises program instructions that cause the processing unit to determine (a) a value of the upper threshold curvature and/or (b) a value of the lower threshold curvature while considering a forming capability of a given forming tool for forming the three-dimensional object. In some embodiments, the forming tool comprises a dispenser or a platform that supports the three-dimensional object during formation. In some embodiments, the forming tool comprises a printing, molding, welding, machining, or casting tool. In some embodiments, the forming capability comprises a dimensional accuracy capability of a formed three-dimensional object along a direction. In some embodiments, comprising program instructions that cause the processing unit to determine the (a) value of the upper threshold curvature and/or (b) the value of the lower threshold curvature while considering a forming capability of a material for forming the three-dimensional object. In some embodiments, the material comprises an elemental metal, a metal alloy a ceramic, an allotrope of elemental carbon, a resin, or a polymer. In some embodiments, the metal alloy comprises an iron-comprising alloy, a nickel-comprising alloy, a cobalt-comprising allow, a chrome-comprising alloy, a cobalt chrome-comprising alloy, a titanium-comprising alloy, a magnesium-comprising alloy, or a copper-comprising alloy. In some embodiments, the non-transitory computer-readable medium further comprises program instructions that cause the processing unit to embody the forming (e.g., manufacturing) instructions in a data structure. In some embodiments, the forming device comprises an additive manufacturing device. In some embodiments, the data structure is configured to be read by an additive manufacturing device. In some embodiments, the program instructions cause the processing unit to generate the forming instructions such that a three-dimensional object is formed according to the forming instructions comprises a high dimensional fidelity to the geometric object. In some embodiments, the high dimensional accuracy is such that a three-dimensional object formed by the forming instructions deviates from the geometric model by at most 100 micrometers + FLS/1000 micrometers, wherein FLS is the Fundamental Length Scale of the geometric model. In some embodiments, selection of the forming process comprises program instructions that cause the processing unit to consider a selection such that a three-dimensional object formed by the forming instructions deviates from the geometric model by at most 100 micrometers + FLS/1000 micrometers, wherein FLS is the Fundamental Length Scale of the geometric model. In some embodiments, the three-dimensional object formed by the manufacturing instructions deviates from the geometric model by at most 50 micrometers + most FLS/2500 micrometers. In some embodiments, the FLS corresponds with a length of the geometric model in a direction.

In another aspect, a method for generating manufacturing instructions of a three-dimensional object, comprises: selecting at least one surface portion of a surface of a geometric model of the three-dimensional object, wherein the at least one surface portion comprises an overhang and/or cavity ceiling of the geometric model, wherein the overhang and/or cavity ceiling comprises (I) a normal vector on a surface at a point on the overhang such that the overhang forms at most a threshold angle with respect to a global vector and/or (II) an overhang width that is at least a threshold width; and selecting (i) a forming process from a plurality of forming processes for forming the at least one surface portion of the surface and/or (ii) a specification of a forming feature for adding to the at least one surface portion of the surface.

In another aspect, an apparatus for forming a three-dimensional object, comprises: at least one controller that is operatively coupled to a guidance mechanism and is configured to direct the guidance mechanism to guide a transforming agent (i) to form at least one surface portion of the three-dimensional object according to at least one forming process of a plurality of forming processes, and/or (ii) to add at least one forming feature to the at least one surface portion, wherein directing the transforming agent in (i) and (ii) is according to a forming instruction that considers a selection of the at least one surface portion as represented by a geometric model of the three-dimensional object, which selection of the at least one surface portion considers a curvature of the at least one surface portion that ranges between an upper threshold curvature and a lower threshold curvature, and wherein the curvature is (I) an intrinsic curvature or (II) an extrinsic curvature, of the at least one surface portion.

In some embodiments, the apparatus further comprises a guidance mechanism configured to guide the transforming agent along a trajectory. In some embodiments, the guidance mechanism comprises a scanner. In some embodiments, the guidance mechanism comprises an actuator, an electrical contact, or an optical element. In some embodiments, the guidance mechanism comprises an actuator, an XY stage, or a galvanometer scanner. In some embodiments, directing the guidance mechanism is before and/or during formation of the 3D object. In some embodiments, the apparatus further comprises the at least one controller operatively coupled to a dispenser, the at least one controller configured to direct the dispenser to dispense the transforming agent. In some embodiments, the apparatus further comprises the at least one controller operatively coupled to a dispenser, the at least one controller configured to direct the dispenser to dispense a pre-transformed material. In some embodiments, the transforming agent is operable to transform a pre-transformed material to a transformed material. In some embodiments, to transform the pre-transformed material to the transformed material comprising physically binding, chemically bonding, or altering a material phase of the pre-transformed material. In some embodiments, the transforming agent comprises an energy beam, a binding agent, or a reactive agent. In some embodiments, the apparatus further comprises an ejector configured to eject the transforming agent. In some embodiments, the at least one controller is operatively coupled to the ejector and is configured to direct the ejector to alter at least one characteristic of the ejector while considering a formation procedure, which forming procedure comprises (i) or (ii). In some embodiments, directing the ejector is before and/or during formation of the three-dimensional object. In some embodiments, the ejector comprises an energy source or a dispenser. In some embodiments, the apparatus further comprises an energy source configured to irradiate using the transforming agent. In some embodiments, the transforming agent comprises an energy beam. In some embodiments, to guide the transforming agent comprises a closed loop control scheme, which closed loop control comprises a feedback or a feed-forward control scheme. In some embodiments, the closed loop control is in real time. In some embodiments, real time comprises during forming the at least one surface portion of the three-dimensional object. In some embodiments, the forming instructions considers a computational model. In some embodiments, the computational model comprises historical data and/or a simulation. In some embodiments, the computational model comprises a physics simulation or a machine learning simulation. In some embodiments, the selection of the at least one surface portion considers the physics simulation. In some embodiments, the physics simulation comprises a simulation of the forming process of the three-dimensional object. In some embodiments, the simulation of the forming process of the three-dimensional object considers aspects including (i) the geometric model, and/or (ii) behavior of the material forming the three-dimensional object during and/or after its formation. In some embodiments, material behavior comprises thermal conductance, material microstructure, or mechanical properties. In some embodiments, the mechanical properties comprise stress, strain, contractibility, surface tension, flow, volatility, or wettability. In some embodiments, the at least one controller comprises an electrical circuitry. In some embodiments, the electrical circuitry of the at least one controller is operatively coupled to the guidance mechanism. In some embodiments, the three-dimensional object is disposed in an enclosure and/or above a platform.

In another aspect, a method for forming a three-dimensional object comprises: selecting at least a portion of at least one surface patch of a model of the three-dimensional object, to generate a selected set by considering the at least one surface patch; and assigning a selectable option of a formation variable category to the selected set, to generate an assignment that is used in preparation of forming instructions for formation of a portion of the three-dimensional object that is associated with the selected set.

In some embodiments, selecting utilizes the at least one surface patch. In some embodiments, the at least one surface patch encloses an enclosed volume of the model. In some embodiments, assigning the selectable option of the formation variable category to the selected set comprises assigning the formation variable category to the enclosed volume or to an altered enclosed volume. In some embodiments, the altered enclosed volume is an enclosed volume that is reduced by at most about ten percent (10%). In some embodiments, the at least one surface patch comprises a region of a surface of the model that is bounded by one or more bounding curves that form a closed connection. In some embodiments, the one or more bounding curves comprise non-uniform rational basis splines (NURBS). In some embodiments, the at least one surface patch comprises a closed region between at least two (e.g., contiguous) surface edges. In some embodiments, the formation variable category comprises a (i) process parameter, (ii) forming feature, or (ii) material characteristic (e.g., of the formed three-dimensional object). In some embodiments, the process parameter comprises: a forming speed, a forming process (e.g., type), a forming machine (e.g., a manufacturing machine, e.g., a printer), or a forming machine parameter. In some embodiments, the material characteristic comprises: a porosity, a microstructure, or a surface roughness. In some embodiments, the forming feature comprises an auxiliary support. In some embodiments, the selected set comprises the at least the portion of the at least one surface patch. In some embodiments, the selected set comprises at least two surface patches that are geometrically similar. In some embodiments, the selected set comprises at least two surface patches that are geometrically different. In some embodiments, the selected set comprises at least two surface patches that contact each other. In some embodiments, the selected set comprises at least two surface patches that are separated. In some embodiments, the selected set comprises an altered surface patch. In some embodiments, the altered surface patch is altered in terms of its surface area with respect to the surface patch. In some embodiments, the altered surface patch is altered geometrically with respect to the surface patch. In some embodiments, the altered surface patch is shrunk with respect to the surface patch. In some embodiments, rein shrunk is by at most ten percent (10%). In some embodiments, selecting in (a) comprises: (i) a first selection of at least a first portion of at least a first surface patch, and (ii) selecting at least a second portion of at least a second surface patch. In some embodiments, the selected set is generated by considering the at least the first portion of the at least the first surface patch, and wherein the at least the first surface patch and the at least the second surface patch are similar. In some embodiments, the method further comprises modifying the selected set by removal of the at least the second portion therefrom the selected set. In some embodiments, the at least the first portion and the at least the second portion are different. In some embodiments, the at least the first surface patch and the at least the second surface patch are different. In some embodiments, the at least the second portion is similar to the at least the first portion, and/or the at least the second surface patch is similar to the at least the first surface patch. In some embodiments, similar comprises a similarity in a geometry and/or a topology. In some embodiments, the similarity considers an angle and/or a curvature of a surface of the model. In some embodiments, the similarity is within a tolerance of an angle and/or a curvature of the at least the first portion and/or of the at least the first surface patch. In some embodiments, the selection of the at least the portion of the at least one surface patch in (a) considers: (1) an angle, (2) a curvature, (3) a fundamental length scale, or (4) a location, of the at least one surface patch. In some embodiments, the forming instructions comprise instructions for one or more machines configured to form the three-dimensional object. In some embodiments, the one or more machines comprise a dispenser or a platform that supports the three-dimensional object during its formation. In some embodiments, the one or more machines comprise a transforming agent. In some embodiments, the transforming agent comprises an energy beam, a binding agent, or a reactive agent. In some embodiments, the model of the three-dimensional object is a computer-aided design (CAD) model. In some embodiments, selection of the at least the portion of the at least one surface patch is a selection of the at least one surface patch. In some embodiments, selection of the at least the portion of the at least one surface patch is a selection of the at least one surface patch that encloses a volume. In some embodiments, the at least one surface patch comprises a tessellation. In some embodiments, the tessellation comprises a mesh.

In another aspect, a computer system for forming a three-dimensional object comprises processing circuitry coupled to a memory, the memory having recorded thereon instructions that, when executed by the processing circuitry, cause the processing circuitry to be configured to: select at least a portion of at least one surface patch of a model of the three-dimensional object, to generate a selected set by considering the at least one surface patch; and assign a selectable option of a formation variable category to the selected set, to generate an assignment that is used in preparation of forming instructions for formation of a portion of the three-dimensional object that is associated with the selected set.

In another aspect, a non-transitory computer-readable medium storing program instructions for forming a three-dimensional object that, when the program instructions are executed by a processing unit, cause the processing unit to: select at least a portion of at least one surface patch of a model of the three-dimensional object, to generate a selected set by considering the at least one surface patch; and assign a selectable option of a formation variable category to the selected set, to generate an assignment that is used in preparation of forming instructions for formation of a portion of the three-dimensional object that is associated with the selected set.

In some embodiments, the (i) computer system for forming a three-dimensional object and/or (ii) the non-transitory computer-readable medium comprises the following embodiments: In some embodiments, to select utilizes the at least one surface patch. In some embodiments, the at least one surface patch encloses an enclosed volume of the model. In some embodiments, to assign the selectable option of the formation variable category to the selected set comprises an assignment of the formation variable category to the enclosed volume or to an altered enclosed volume. In some embodiments, the altered enclosed volume is an enclosed volume that is reduced by at most about ten percent (10%). In some embodiments, the at least one surface patch comprises a region of a surface of the model that is bounded by one or more bounding curves that form a closed connection. In some embodiments, the one or more bounding curves comprise non-uniform rational basis splines (NURBS). In some embodiments, the at least one surface patch comprises a closed region between at least two (e.g., contiguous) surface edges. In some embodiments, the formation variable category comprises a (i) process parameter, (ii) forming feature, or (ii) material characteristic (e.g., of the formed three-dimensional object). In some embodiments, the process parameter comprises: a forming speed, a forming process (e.g., type), a forming machine, or a forming machine parameter. In some embodiments, the material characteristic comprises: a porosity, a microstructure, or a surface roughness. In some embodiments, the forming feature comprises an auxiliary support. In some embodiments, the selected set comprises the at least the portion of the at least one surface patch. In some embodiments, the selected set comprises at least two surface patches that are geometrically similar. In some embodiments, the selected set comprises at least two surface patches that are geometrically different. In some embodiments, the selected set comprises at least two surface patches that contact each other. In some embodiments, the selected set comprises at least two surface patches that are separated. In some embodiments, the selected set comprises an altered surface patch. In some embodiments, the altered surface patch is altered in terms of its surface area with respect to the surface patch. In some embodiments, the altered surface patch is altered geometrically with respect to the surface patch. In some embodiments, the altered surface patch is shrunk with respect to the surface patch. In some embodiments, shrunk is by at most ten percent (10%). In some embodiments, to select in (a) comprises program instructions that cause the processing unit to: (i) select a first selection of at least a first portion of at least a first surface patch, and (ii) select at least a second portion of at least a second surface patch. In some embodiments, the program instructions cause the processing unit to consider the at least the first portion of the at least the first surface patch to generate the selected set, and wherein the at least the first surface patch and the at least the second surface patch are similar. In some embodiments, the (i) computer system for forming a three-dimensional object and/or (ii) the non-transitory computer-readable medium further comprises program instructions that cause the processing unit to modify the selected set by removal of the at least the second portion therefrom. In some embodiments, the at least the first portion and the at least the second portion are different. In some embodiments, the at least the first surface patch and the at least the second surface patch are different. In some embodiments, the at least the second portion is similar to the at least the first portion, and/or the at least the second surface patch is similar to the at least the first surface patch. In some embodiments, similar comprises a similarity in a geometry and/or a topology. In some embodiments, the similarity considers an angle and/or a curvature of a surface of the model. In some embodiments, the similarity is within a tolerance of an angle and/or a curvature of the at least the first portion and/or of the at least the first surface patch. In some embodiments, the (i) computer system for forming a three-dimensional object and/or (ii) the non-transitory computer-readable medium further comprises program instructions that cause the processing unit to select the at least the portion of the at least one surface patch in (a) by considering: (1) an angle, (2) a curvature, (3) a fundamental length scale, or (4) a location, of the at least one surface patch. In some embodiments, the forming instructions comprise instructions for one or more machines configured to form the three-dimensional object. In some embodiments, the one or more machines comprise a dispenser or a platform that supports the three-dimensional object during its formation. In some embodiments, the one or more machines comprise a transforming agent. In some embodiments, the transforming agent comprises an energy beam, a binding agent, or a reactive agent. In some embodiments, the model of the three-dimensional object is a computer-aided design (CAD) model. In some embodiments, the program instructions cause the processing unit to select the at least one surface patch according to a selection of the at least the portion of the at least one surface patch. In some embodiments, the program instructions cause the processing unit to select the at least one surface patch that encloses a volume according to a selection of the at least the portion of the at least one surface patch. In some embodiments, the at least one surface patch comprises a tessellation. In some embodiments, the tessellation comprises a mesh. In some embodiments, the display comprises facilitating manipulation of the selected portion. In some embodiments, the manipulation comprises moving, identifying, altering, isolating, or at least partially hiding, the selected portion. In some embodiments, the identifying comprises highlighting, shading, patterning, coloring, or affixing a serial-identifier. In some embodiments, the moving comprises translating or rotating. In some embodiments, the altering comprises shrinking while retaining a shape, expanding while retaining the shape, or changing the shape. In some embodiments, the (i) computer system for forming a three-dimensional object and/or (ii) the non-transitory computer-readable medium further comprises program instructions that cause the processing unit to render a user interface (Ul) that comprises a selection tool and/or a viewing tool. In some embodiments, the selection tool comprises a (i) user-guide selection tool, (ii) a geometry-based selection tool, or (iii) a (e.g., entire) model selection tool. In some embodiments, the (i) computer system for forming a three-dimensional object and/or (ii) the non-transitory computer-readable medium further comprises program instructions that cause the selection tool to select at least one similar portion to a selected portion of the model. In some embodiments, the viewing tool comprises a display (e.g., highlight) of a selected portion of the model considering an angle and/or a curvature of a surface of the model. In some embodiments, the display comprises isolation of the selected portion (e.g., hiding a remainder of model portions). In some embodiments, the display comprises hiding of the selected portion (e.g., display a remainder of model portions).

In another aspect, a method for forming a three-dimensional object comprises: selecting at least a portion of at least one surface patch edge of a model of the three-dimensional object by considering the at least one surface patch edge, to generate at least one selected set that encloses at least one enclosed surface of the model of the three-dimensional object, wherein the selected set comprises at least one boundary of the at least one enclosed surface; and assigning a selectable option of a formation variable category to the at least one enclosed surface, to generate an assignment that is used in preparation of forming instructions for formation of a portion of the three-dimensional object that is associated with the at least one enclosed surface.

In some embodiments, the at least one enclosed surface of the model of the three-dimensional object encloses an enclosed volume. In some embodiments, the enclosed volume is at least a portion of the model of the three-dimensional object. In some embodiments, assigning the selectable option of the formation variable category to the at least one enclosed surface comprises assigning the formation variable category to the enclosed volume. In some embodiments, the forming instructions are for formation of the portion of the three-dimensional object that is associated with the enclosed volume. In some embodiments, the at least the portion of the at least one surface patch edge is at least one surface patch edge. In some embodiments, the surface patch edge is a surface boundary. In some embodiments, assigning the selectable option of the formation variable category to the at least one enclosed surface is according to the at least one surface patch edge. In some embodiments, the at least one surface patch edge comprises a border between a first surface patch and a second surface patch. In some embodiments, the first surface patch and/or the second surface patch encloses a volume. In some embodiments, assigning the selectable option of the formation variable category to the at least one enclosed surface comprises assigning the formation variable category to the volume. In some embodiments, the at least one surface patch edge comprises a plurality of surface patch edges that enclose the at least one enclosed surface. In some embodiments, the selection of the at least one surface patch edge in (a) considers: (1) an angle, (2) a curvature, (3) a fundamental length scale, or (4) a location, of the at least one surface patch edge. In some embodiments, the selection of the at least one surface patch edge in (a) considers: (1) an angle, (2) a curvature, (3) a fundamental length scale, or (4) a location, of a surface enclosed by the at least one surface patch edge. In some embodiments, the formation variable category comprises at least one (i) process parameter, (ii) forming feature, and/or (ii) material characteristic (e.g., of the formed three-dimensional object). In some embodiments, the at least one process parameter comprises: a forming speed, a forming process (e.g., type), a forming machine, or a forming machine parameter. In some embodiments, the at least one material characteristic comprises: a porosity, a microstructure, or a surface roughness. In some embodiments, the forming feature comprises an auxiliary support. In some embodiments, the at least one surface patch edge comprises non-uniform rational basis splines (NURBS). In some embodiments, the at least one surface patch edge comprises a tessellation border. In some embodiments, the tessellation comprises a surface mesh. In some embodiments, the surface mesh comprises a space filling polygon. In some embodiments, the surface mesh comprises a triangle. In some embodiments, the at least one surface patch edge forms at least a portion of a surface patch. In some embodiments, the model of the three-dimensional object is a computer-aided design (CAD) model. In some embodiments, the forming instructions comprise instructions for one or more forming machines configured to form the three-dimensional object. In some embodiments, the one or more forming machines comprise a dispenser or a platform that supports the three-dimensional object during its formation. In some embodiments, the one or more forming machines comprise a transforming agent. In some embodiments, the transforming agent comprises an energy beam, a binding agent, or a reactive agent.

In another aspect, a computer system for forming a three-dimensional object comprises processing circuitry coupled to a memory, the memory having recorded thereon instructions that, when executed by the processing circuitry, cause the processing circuitry to be configured to: select at least a portion of at least one surface patch edge of a model of the three-dimensional object by considering the at least one surface patch edge, to generate at least one selected surface patch edge that encloses at least one enclosed surface of the model of the three-dimensional object, wherein the selected set comprises at least one boundary of the at least one enclosed surface; and assign a selectable option of a formation variable category to the at least one enclosed surface, to generate an assignment that is used in preparation of forming instruction for formation of a portion of the three-dimensional object that is associated with the at least one enclosed surface.

In another aspect, a non-transitory computer-readable medium storing program instructions for forming a three-dimensional object that, when the program instructions are executed by a processing unit, cause the processing unit to: select at least a portion of at least one surface patch edge of a model of the three-dimensional object by considering the at least one surface patch edge, to generate at least one selected surface patch edge that encloses at least one enclosed surface of the model of the three-dimensional object, wherein the selected set comprises at least one boundary of the at least one enclosed surface; and assign a selectable option of a formation variable category to the at least one enclosed surface, to generate an assignment that is used in preparation of forming instruction for formation of a portion of the three-dimensional object that is associated with the at least one enclosed surface.

In some embodiments, the (i) computer system for forming a three-dimensional object and/or (ii) the non-transitory computer-readable medium comprises the following embodiments: In some embodiments, the at least one enclosed surface of the model of the three-dimensional object encloses an enclosed volume. In some embodiments, the enclosed volume is at least a portion of the model of the three-dimensional object. In some embodiments, the program instructions cause the processing unit to assign the formation variable category to the enclosed volume in order to assign the selectable option of the formation variable category to the at least one enclosed surface. In some embodiments, the forming instructions are for formation of the portion of the three-dimensional object that is associated with the enclosed volume. In some embodiments, the at least the portion of the at least one surface patch edge is at least one surface patch edge. In some embodiments, the surface patch edge is a surface boundary. In some embodiments, the (i) computer system for forming a three-dimensional object and/or (ii) the non-transitory computer-readable medium further comprises program instructions that cause the processing unit to assign the selectable option of the formation variable category to the at least one enclosed surface according to the at least one surface patch edge. In some embodiments, the at least one surface patch edge comprises a border between a first surface patch and a second surface patch. In some embodiments, the first surface patch and/or the second surface patch encloses a volume. In some embodiments, the (i) computer system for forming a three-dimensional object and/or (ii) the non-transitory computer-readable medium further comprises program instructions that cause the processing unit to assign the formation variable category to the volume according to an assignment of the selectable option of the formation variable category to the at least one enclosed surface. In some embodiments, the at least one surface patch edge comprises a plurality of surface patch edges that enclose the at least one enclosed surface. In some embodiments, the (i) computer system for forming a three-dimensional object and/or (ii) the non-transitory computer-readable medium further comprises program instructions that cause the processing unit to consider: (1) an angle, (2) a curvature, (3) a fundamental length scale, or (4) a location, of the at least one surface patch edge, to select the at least one surface patch edge in (a). In some embodiments, the (i) computer system for forming a three-dimensional object and/or (ii) the non-transitory computer-readable medium further comprises program instructions that cause the processing unit to consider: (1) an angle, (2) a curvature, (3) a fundamental length scale, or (4) a location, of a surface enclosed by the at least one surface patch edge, to select the at least one surface patch edge in (a). In some embodiments, the formation variable category comprises at least one (i) process parameter, (ii) forming feature, and/or (ii) material characteristic (e.g., of the formed three-dimensional object). In some embodiments, the at least one process parameter comprises: a forming speed, a forming process (e.g., type), a forming machine, or a forming machine parameter. In some embodiments, the at least one material characteristic comprises: a porosity, a microstructure, or a surface roughness. In some embodiments, the forming feature comprises an auxiliary support. In some embodiments, the at least one surface patch edge comprises non-uniform rational basis splines (NURBS). In some embodiments, the at least one surface patch edge comprises a tessellation border. In some embodiments, the tessellation comprises a surface mesh. In some embodiments, the surface mesh comprises a space filling polygon. In some embodiments, the surface mesh comprises a triangle. In some embodiments, the at least one surface patch edge forms at least a portion of a surface patch. In some embodiments, the model of the three-dimensional object is a computer-aided design (CAD) model. In some embodiments, the forming instructions comprise instructions for one or more forming machines configured to form the three-dimensional object. In some embodiments, the one or more forming machines comprise a dispenser or a platform that supports the three-dimensional object during its formation. In some embodiments, the one or more forming machines comprise a transforming agent. In some embodiments, the transforming agent comprises an energy beam, a binding agent, or a reactive agent.

In another aspect, a method for forming a three-dimensional object comprises: (a) selecting at least one portion of a surface patch of a model of the three-dimensional object to generate a selected set that includes the at least one portion of the surface patch; (b) assigning an option from a selectable menu of requested outcomes to the selected set to generate an outcome assignment; and (c) using the outcome assignment to generate forming instructions for the selected set to form the three-dimensional object that result in the option.

In some embodiments, the selectable menu includes attributes comprises (i) throughput, (ii) surface roughness, (iii) density, (iv) stress, (v) grain size, (vi) ductility, (vii) strength, (viii) material phase, (ix) corner fidelity, or (x) dimensional tolerance. In some embodiments, the dimensional tolerance (e.g., dimensional accuracy) is of the surface patch. In some embodiments, the dimensional tolerance us if the three-dimensional object. In some embodiments, the throughput is of forming the selected set. In some embodiments, the corner fidelity is of a corner that included in the selected set. In some embodiments, the (i) surface roughness, (ii) density, (iii) stress, (iv) grain size, (v) ductility, (vi) strength, and/or (vii) material phase, is of a material forming a surface corresponding to the selected set. In some embodiments, the density is a material density at least a portion of a skin of the three-dimensional object. In some embodiments, the surface patch comprises a mathematical boundary representation. In some embodiments, the surface patch is part of a computer-aided design (CAD) model. In some embodiments, the surface patch is represented as a computer-aided design (CAD) model. In some embodiments, the surface patch is defined by one or more vectors. In some embodiments, the surface patch is defined by one or more bounding curves comprises non-uniform rational basis splines (NURBS). In some embodiments, the surface patch comprises a non-uniform rational basis splines (NURBS) surface. In some embodiments, a shape of the surface patch comprises one or more control points connected to the surface patch.

In another aspect, a method for forming a three-dimensional object comprises: (a) selecting at least one portion of a volume of a model of the three-dimensional object to generate a selected set that includes the at least one portion of the volume; (b) assigning an option from a selectable menu of requested outcomes to the selected set to generate an outcome assignment; and (c) using the outcome assignment to generate forming instructions for the selected set to form the three-dimensional object that result in the option.

In some embodiments, the selectable menu includes attributes comprises (i) throughput, (ii) surface roughness, (iii) density, (iv) stress, (v) grain size, (vi) ductility, (vii) strength, (viii) material phase, (ix) corner fidelity, or (x) dimensional tolerance. In some embodiments, the dimensional tolerance (e.g., dimensional accuracy) is of the surface patch. In some embodiments, the dimensional tolerance us if the three-dimensional object. In some embodiments, the throughput is of forming the selected set. In some embodiments, the corner fidelity is of a corner that included in the selected set. In some embodiments, the (i) surface roughness, (ii) density, (iii) stress, (iv) grain size, (v) ductility, (vi) strength, and/or (vii) material phase, is of a material forming a surface corresponding to the selected set. In some embodiments, the density is a material density at least a portion of a skin of the three-dimensional object. In some embodiments, the at least one portion of the volume has a mathematical boundary and/or volume representation. In some embodiments, the at least one portion of the volume is part of a computer-aided design (CAD) model. In some embodiments, the at least one portion of the volume is represented as a computer-aided design (CAD) model. In some embodiments, the at least one portion of the volume comprises an implicit surface defined by a mathematical object. In some embodiments, the at least one portion of the volume is defined by one or more surface patches. In some embodiments, the at least one portion of the volume is defined by one or more vectors. In some embodiments, the at least one portion of the volume is defined by one or more bounding curves comprises non-uniform rational basis splines (NURBS).

In another aspect, a system for forming a three-dimensional object comprises at least one controller that is configured to direct: (a) selection of at least one portion of a surface patch of a model of the three-dimensional object to generate a selected set that includes the at least one portion of the surface patch; (b) assignment of an option from a selectable menu of requested outcomes to the selected set to generate an outcome assignment; and (c) usage of the outcome assignment to generate forming instructions for the selected set to form the three-dimensional object that result in the option.

In some embodiments, the at least one controller comprises electrical circuity, electrical inlet, or electrical outlet. In some embodiments, configured to direct comprises programmed to direct. In some embodiments, the at least one controller comprises, or is operatively coupled to, a processing unit that is programmed to direct (a), (b), and/or (c). In some embodiments, at least two of (a), (b), and (c) are directed by the same controller of the at least one controller. In some embodiments, at least two of (a), (b), and (c) are directed by different controllers of the at least one controller. In some embodiments, the at least one controller is configured to operatively couple to a forming mechanism. In some embodiments, the forming mechanism utilizes the forming instructions to form the three-dimensional object. In some embodiments, the at least one controller comprises a feedback control scheme. In some embodiments, the at least one controller is operatively coupled to one or more sensors. In some embodiments, the surface patch has a mathematical boundary representation. In some embodiments, the surface patch is part of a computer-aided design (CAD) model. In some embodiments, the surface patch is represented as a computer-aided design (CAD) model. In some embodiments, the surface patch is defined by one or more vectors. In some embodiments, the surface patch is defined by one or more bounding curves comprises non-uniform rational basis splines (NURBS). In some embodiments, the surface patch comprises a non-uniform rational basis splines (NURBS) surface. In some embodiments, a shape of the surface patch comprises one or more control points connected to the surface patch.

In another aspect, a system for forming a three-dimensional object comprises at least one controller that is configured to direct: (a) selection of at least one portion of a volume of a model of the three-dimensional object to generate a selected set that includes the at least one portion of the volume; (b) assignment of an option from a selectable menu of requested outcomes to the selected set to generate an outcome assignment; and (c) usage of the outcome assignment to generate forming instructions for the selected set to form the three-dimensional object that result in the option.

In some embodiments, the at least one controller comprises electrical circuity, electrical inlet, or electrical outlet. In some embodiments, the at least one controller comprises electrical circuity, electrical inlet, or electrical outlet. In some embodiments, configured to direct comprises programmed to direct. In some embodiments, the at least one controller comprises, or is operatively coupled to, a processing unit that is programmed to direct (a), (b), and/or (c). In some embodiments, at least two of (a), (b), and (c) are directed by the same controller of the at least one controller. In some embodiments, at least two of (a), (b), and (c) are directed by different controllers of the at least one controller. In some embodiments, the at least one controller is configured to operatively couple to a forming mechanism. In some embodiments, the forming mechanism utilizes the forming instructions to form the three-dimensional object. In some embodiments, the at least one controller comprises a feedback control scheme. In some embodiments, the at least one controller is operatively coupled to one or more sensors. In some embodiments, the at least one portion of a volume has a mathematical boundary and/or volume representation. In some embodiments, the at least one portion of a volume is part of a computer-aided design (CAD) model. In some embodiments, the at least one portion of a volume is represented as a computer-aided design (CAD) model. In some embodiments, the at least one portion of the volume comprises an implicit surface defined by a mathematical object. In some embodiments, the at least one portion of the volume is defined by one or more surface patches. In some embodiments, the at least one portion of the volume is defined by one or more vectors. In some embodiments, the at least one portion of the volume is defined by one or more bounding curves comprises non-uniform rational basis splines (NURBS).

In another aspect, a non-transitory computer-readable medium storing program instructions for generating forming instructions for formation of a three-dimensional object that, when the program instructions are executed by at least one processing unit, cause the processing unit to: (a) select at least one portion of a surface patch of a model of the three-dimensional object to generate a selected set that includes the at least one portion of the surface patch; (b) assign an option from a selectable menu of requested outcomes to the selected set to generate an outcome assignment; and (c) use the outcome assignment to generate forming instructions for the selected set to form the three-dimensional object that result in the option.

In some embodiments, the at least one processing unit is operatively coupled to a forming mechanism configured to form the three-dimensional object. In some embodiments, operatively coupled is directly, through at least one network and/or through at least one server. In some embodiments, the computer readable medium comprises a computer program product. In some embodiments, the computer program product comprises a program code that cause the processing unit to perform (a), (b), and/or (c). In some embodiments, the at least one processing unit is at least a portion of a computer system. In some embodiments, the computer system is configured to execute one or more processes. In some embodiments, the one or more processes comprise (a), (b), and/or (c). In some embodiments, the computer system comprises a server. In some embodiments, the computer system is operatively coupled to a computer network. In some embodiments, the surface patch has a mathematical boundary representation. In some embodiments, the surface patch is part of a computer-aided design (CAD) model. In some embodiments, the surface patch is represented as a computer-aided design (CAD) model. In some embodiments, the surface patch is defined by one or more vectors. In some embodiments, the surface patch is defined by one or more bounding curves comprises non-uniform rational basis splines (NURBS). In some embodiments, the surface patch comprises a non-uniform rational basis splines (NURBS) surface. In some embodiments, a shape of the surface patch comprises one or more control points connected to the surface patch.

In another aspect, a non-transitory computer-readable medium storing program instructions for generating forming instructions for formation of a three-dimensional object that, when the program instructions are executed by at least one processing unit, cause the processing unit to: (a) select at least one portion of a volume of a model of the three-dimensional object to generate a selected set that includes the at least one portion of the volume; (b) assign an option from a selectable menu of requested outcomes to the selected set to generate an outcome assignment; and (c) use the outcome assignment to generate forming instructions for the selected set to form the three-dimensional object that result in the option.

In some embodiments, the at least one processing unit is operatively coupled to a forming mechanism configured to form the three-dimensional object. In some embodiments, operatively coupled is directly, through at least one network and/or through at least one server. In some embodiments, the computer readable medium comprises a computer program product. In some embodiments, the computer program product comprises a program code that cause the processing unit to perform (a), (b), and/or (c). In some embodiments, the at least one processing unit is at least a portion of a computer system. In some embodiments, the computer system is configured to execute one or more processes. In some embodiments, the one or more processes comprise (a), (b), and/or (c). In some embodiments, the computer system comprises a server. In some embodiments, the computer system is operatively coupled to a computer network. In some embodiments, the at least one portion of a volume has a mathematical boundary and/or volume representation. In some embodiments, the at least one portion of a volume is part of a computer-aided design (CAD) model. In some embodiments, the at least one portion of a volume is represented as a computer-aided design (CAD) model. In some embodiments, the at least one portion of the volume comprises an implicit surface defined by a mathematical object. In some embodiments, the at least one portion of the volume is defined by one or more surface patches. In some embodiments, the at least one portion of the volume is defined by one or more vectors. In some embodiments, the at least one portion of the volume is defined by one or more bounding curves comprises non-uniform rational basis splines (NURBS).

Another aspect of the present disclosure provides a system for effectuating the methods disclosed herein.

Another aspect of the present disclosure provides an apparatus for effectuating the methods disclosed herein.

Another aspect of the present disclosure provides an apparatus comprising a controller that directs effectuating one or more operations (e.g., steps) in the method disclosed herein, wherein the controller is operatively coupled to the apparatuses, systems, and/or mechanisms that it controls to effectuate the method.

Another aspect of the present disclosure provides a computer system comprising one or more computer processors and a non-transitory computer-readable medium coupled thereto. The non-transitory computer-readable medium comprises machine-executable code that, upon execution by the one or more computer processors, implements any of the methods above or elsewhere herein.

Another aspect of the present disclosure provides an apparatus for printing one or more 3D objects comprising a controller that is programmed to direct a mechanism used in a 3D printing methodology to implement (e.g., effectuate) any of the method disclosed herein, wherein the controller is operatively coupled to the mechanism.

Another aspect of the present disclosure provides a computer software product, comprising a non-transitory computer-readable medium in which program instructions are stored, which instructions, when read by a computer, cause the computer to direct a mechanism used in the 3D forming procedure to implement (e.g., effectuate) any of the method disclosed herein, wherein the non-transitory computer-readable medium is operatively coupled to the mechanism.

Another aspect of the present disclosure provides a non-transitory computer-readable medium comprising machine-executable code that, upon execution by one or more computer processors, implements any of the methods disclosed herein.

Additional aspects and advantages of the present disclosure will become readily apparent to those skilled in this art from the following detailed description, wherein only illustrative embodiments of the present disclosure are shown and described. As will be realized, the present disclosure is capable of other and different embodiments, and its several details are capable of modifications in various obvious respects, all without departing from the disclosure. Accordingly, the drawings and description are to be regarded as illustrative in nature, and not as restrictive.

### INCORPORATION BY REFERENCE

All publications, patents, and patent applications mentioned in this specification are herein incorporated by reference to the same extent as if each individual publication, patent, or patent application was specifically and individually indicated to be incorporated by reference.

### BRIEF DESCRIPTION OF DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings or figures (also "Fig.," Figs.," "Fig." or "Figs." herein), of which:
**Fig. 1** shows a schematic cross-sectional view of a three-dimensional (3D) printing system and its components;
**Fig. 2** illustrates a flowchart;
**Fig. 3** illustrates a flowchart;
**Fig. 4** illustrates a flowchart;
**Fig. 5** illustrates a scheme used in the formation of one or more 3D objects;
**Fig. 6** illustrates a flowchart;
**Fig. 7** illustrates a flowchart;
**Fig. 8A** schematically illustrates a perspective view of a 3D object; **Fig. 8B** schematically illustrates a perspective view of a portion of a 3D object; and **Fig. 8C** schematically illustrates a cross section in various layering planes;
**Fig. 9** schematically illustrates a perspective view of a 3D object;
**Fig. 10** schematically illustrates a vertical cross section of a portion of a 3D object;
**Fig. 11A** schematically illustrates an optical setup; **Fig. 11B** schematically illustrates an energy beam; and **Fig. 11C** schematically illustrates a control scheme;
**Fig. 12A** shows a cross sectional view of a 3D object with a support member; and **Fig. 12B** schematically a horizontal view of a 3D object;
**Fig. 13A-13B** show perspective views of various 3D objects;
**Fig. 14A** schematically illustrates a cross section of a 3D object; **Fig. 14B** schematically illustrates an example of a 3D plane; and **Fig. 14C** schematically illustrates a cross section in portion of a 3D object;
**Figs. 15A-15C** schematically illustrate a cross section in portion of various 3D objects;
**Figs. 16A-16E** show schematic top views of various 3D objects;
**Figs. 17A-17F** schematically illustrate operations in forming a 3D object;
**Figs. 18A-18B** schematically illustrate cross sectional views of various 3D objects; and **Figs. 18C-18D** schematically illustrate overhang portions of 3D objects;
**Fig. 19** schematically illustrates a computer system;
**Fig. 20** schematically illustrates a computer system;
**Fig. 21** schematically illustrates intrinsic and extrinsic curvatures for several objects.
**Fig. 22A** depicts a 3D object in a virtual environment; and **Fig. 22B** depicts various 3D objects in a virtual environment;
**Fig. 23** schematically illustrates a 3D object in a virtual environment;
**Figs. 24A** - **24E** schematically illustrate various 3D objects and portions thereof;
**Figs. 25A** - **25F** schematically illustrate various 3D objects and portions thereof;
**Fig. 26A** - **26G** schematically illustrate various 3D objects and portions thereof;
**Fig. 27A** - **27E** schematically illustrate various 3D objects and portions thereof;
**Fig. 28** schematically illustrates a 3D object in a virtual environment;
**Fig. 29** schematically illustrates a 3D object in a virtual environment;
**Fig. 30A** schematically illustrates a plurality of 3D objects; and **Fig. 30B** schematically illustrates a 3D object (e.g., model thereof) in a computing network environment;
**Fig. 31** schematically illustrates a 3D object model in a virtual environment;
**Fig. 32** schematically illustrates a 3D object model in a virtual environment;
**Fig. 33** schematically illustrates a selected region of a virtual object;
**Figs. 34A-34B** schematically illustrates 3D object models in virtual environments;
**Figs. 35A-35B** schematically illustrates 3D object models in virtual environments;
**Figs. 36A-36D** schematically illustrates 3D object models in virtual environments; and
**Figs. 37A-37B** schematically illustrates 3D object models in virtual environments.

The figures and components therein may not be drawn to scale. Various components of the figures described herein may not be drawn to scale.

### DETAILED DESCRIPTION

While various embodiments of the invention have been shown, and described herein, it will be obvious to those skilled in the art that such embodiments are provided by way of example only. Numerous variations, changes, and substitutions may occur to those skilled in the art without departing from the invention. It should be understood that various alternatives to the embodiments of the invention described herein might be employed.

The present disclosure provides apparatuses, systems and methods for controlling aspects of forming (e.g., printing) 3D objects. In some embodiments, the apparatuses, devices, systems, software, and methods described herein enable specification of at least one forming feature for (e.g., inclusion on) at least a portion of a 3D object. For example, a forming feature may comprise a (e.g., auxiliary) support structure or a label. In some embodiments, the apparatuses, systems and methods enable specification of at least one formative process (e.g., printing process) for forming at least a portion of a 3D object. The forming process may comprise printing, welding, machining, molding, or casting. The printing may comprise three-dimensional printing. The 3D printing may comprise extruding. A forming process may comprise (e.g., impart) one or more characteristics associated therewith. For example, characteristics associated with a forming process may comprise: (i) an angle of a surface (e.g., of the 3D object) with respect to a global vector, (ii) a surface roughness (e.g., of the 3D object); (iii) a rate of formation (e.g., using the given forming process), or (iv) a material composition (e.g., of a portion of the 3D object formed by the given forming process). The global vector may be (a) a (e.g., local) gravitational field vector, (b) a vector in a direction opposite to the direction of layerwise 3D object formation, and/or (c) a vector normal to a surface of a platform that supports the 3D object in a direction opposite to the 3D object. In some embodiments, a forming process comprises an alteration (e.g., annealing) of a (e.g., hardened) portion of a 3D object. For example, the apparatuses, systems and methods may enable a forming process override (e.g., designation and/or specification of a given forming process of a plurality of forming processes) for at least a portion of the 3D object. In some embodiments, specification of at least one forming process may be performed automatically and/or manually. In some embodiments, specification of at least one forming process may be performed in real time (e.g., before, during and/or following formation of at least a portion of the 3D object). In some embodiments, specification of at least one forming process comprises a selection and/or an indication of at least a portion of a 3D object using a model of the 3D object.

Terms such as "a," "an," and "the" are not intended to refer to only a singular entity, but may include the general class of which a specific example may be used for illustration. The terminology herein is used to describe specific embodiments of the invention, but their usage does not delimit the invention.

When ranges are mentioned, the ranges are meant to be inclusive, unless otherwise specified. For example, a range between value 1 and value 2 is meant to be inclusive and include value 1 and value 2. The inclusive range will span any value from about value 1 to about value 2.

The term "between" as used herein is meant to be inclusive unless otherwise specified. For example, between X and Y is understood herein to mean from X to Y.

The term "adjacent" or "adjacent to," as used herein, includes 'next to', 'adjoining', 'in contact with,' and 'in proximity to.' In some instances, adjacent to may be 'above' or 'below.'

The term "operatively coupled" or "operatively connected" refers to a first mechanism that is coupled (or connected) to a second mechanism to allow the intended operation of the second and/or first mechanism, including a first mechanism that is in signal communication with a second mechanism. The term "configured to" refers to an object or apparatus that is (e.g., structurally) configured to bring about an intended result.

Fundamental length scale (abbreviated herein as "FLS") can refer to any suitable scale (e.g., dimension) of an object. For example, a FLS of an object may comprise a length, a width, a height, a diameter, a spherical equivalent diameter, or a diameter of a bounding sphere.

The phrase "a three-dimensional object" as used herein may refer to "one or more three-dimensional objects," as applicable.

"Real time" as understood herein may be during at least part of the forming (e.g., printing) of a 3D object. Real time may be during a print operation. Real time may be during a print cycle. Real time may comprise during formation of: a 3D object, a layer of hardened material as part of the 3D object, a hatch line, a single-digit number of melt pools, a melt pool, or any combination thereof.

The phrase "is/are structured," or "is/are configured," when modifying an article, refers to a structure of the article that is able to bring about the enumerated result.

The phrase "a target surface" may refer to (1) a surface of a build plane (e.g., an exposed surface of a material bed), (2) an exposed surface of a platform, (3) an exposed surface of a 3D object (or a portion thereof), (4) any exposed surface adjacent to an exposed surface of the material bed, platform, or 3D object, and/or (5) any targeted surface. Targeted may be by at least one energy beam, or by a printing head.

The methods, systems, apparatuses, and/or software may effectuate the formation of one or more objects (e.g., 3D objects). In some cases, the one or more objects comprise an elemental metal, metal alloy, ceramic, or an allotrope of elemental carbon. In some embodiments, the 3D object includes an overhang structure. An overhang structure (also referred to herein as "overhang" or "overhang region") can refer to a structure of a 3D object that protrudes a distance from another structure (e.g., a core structure). An overhang structure may comprise (e.g., correspond to) a ceiling (e.g., cavity ceiling), bottom (e.g., cavity bottom), protrusion, ledge, blade, hanging structure, undercut, projection, protuberance, balcony, wing, leaf, extension, shelf, jut, hook, or step, of a 3D object. The overhang may be free of auxiliary supports, e.g., during the forming of the overhang. For example, the overhang may be formed on (e.g., attached to) a previously formed (e.g., already hardened) portion of the 3D object. A surface (e.g., bottom surface) of an overhang may have a surface roughness at or below a prescribed roughness measurement. Bottom may be in the direction of the global vector and/or face the platform during forming of the 3D object.

In some embodiments, the 3D object includes a skin, which can correspond to a portion of the 3D object that includes an exterior surface of the 3D object. The skin is may be formed by an outer contour of a layer of the 3D object and may be referred herein as "outer portion" or "exterior portion." The contour of the layer can be referred herein as a "rim," "contour," "contour portion," "perimeter," or "perimeter portion." In some embodiments, the skin is a "bottom" skin, which can correspond to a skin on a bottom of an overhang with respect to a platform surface during formation (e.g., printing) of the one or more 3D objects. Bottom may be in the direction of the global vector and/or face the platform during printing of the 3D object.

Three-dimensional printing (also "3D printing") generally refers to a for generating a 3D object. The apparatuses, methods, controllers, and/or software described herein pertaining to generating (e.g., forming, or printing) a 3D object, pertain also to generating one or more 3D objects. For example, 3D printing may refer to sequential addition of material layers or joining of material layers (or parts of material layers) to form a 3D structure, in a controlled manner. The controlled manner may comprise manual or automated control. In the 3D printing process, the deposited material can be transformed (e.g., fused, sintered, melted, bound, or otherwise connected) to subsequently harden and form at least a part of the 3D object. Fusing (e.g., sintering or melting) binding, or otherwise connecting the material is collectively referred to herein as transforming a pre-transformed material (e.g., powder material) into a transformed material. Fusing the material may include melting or sintering the material. Binding can comprise chemical bonding. Chemical bonding can comprise covalent bonding. Examples of 3D printing may include additive printing (e.g., layer by layer printing, or additive manufacturing). 3D printing may include layered manufacturing. 3D printing may include rapid prototyping. 3D printing may include solid freeform fabrication. The 3D printing may include binding pre-transformed material with a binder (e.g., polymer or resin). The 3D printing may further comprise subtractive printing.

3D printing methodologies can comprise extrusion, wire, granular, laminated, light polymerization, or powder bed and inkjet head 3D printing. Extrusion 3D printing can comprise robo-casting, fused deposition modeling (FDM) or fused filament fabrication (FFF). Wire 3D printing can comprise electron beam freeform fabrication (EBF3). Granular 3D printing can comprise direct metal laser sintering (DMLS), electron beam melting (EBM), selective laser melting (SLM), selective heat sintering (SHS), or selective laser sintering (SLS). Powder bed and inkjet head 3D printing can comprise plaster-based 3D printing (PP). Laminated 3D printing can comprise laminated object manufacturing (LOM). Light polymerized 3D printing can comprise stereo-lithography (SLA), digital light processing (DLP), or laminated object manufacturing (LOM). 3D printing methodologies can comprise Direct Material Deposition (DMD). The Direct Material Deposition may comprise, Laser Metal Deposition (LMD, also known as, Laser deposition welding). 3D printing methodologies can comprise powder feed, or wire deposition. 3D printing methodologies may comprise forming a green body. 3D printing methodologies may comprise a binder that binds pre-transformed material (e.g., binding a powder). The binder may remain in the 3D object, or may be (e.g., substantially) absent from the 3D printing (e.g., due to heating, extracting, evaporating, and/or burning).

3D printing methodologies may differ from methods traditionally used in semiconductor device fabrication (e.g., vapor deposition, etching, annealing, masking, or molecular beam epitaxy). In some instances, 3D printing may further comprise one or more printing methodologies that are traditionally used in semiconductor device fabrication. 3D printing methodologies can differ from vapor deposition methods such as chemical vapor deposition, physical vapor deposition, or electrochemical deposition. In some instances, 3D printing may further include vapor deposition methods.

"Pre-transformed material," as understood herein, is a material before it has been first transformed (e.g., once transformed) by an energy beam during the formation (e.g., printing) of one or more 3D objects. The pre-transformed material may be a material that was, or was not, transformed prior to its use in the 3D printing process. The pre-transformed material may be a material that was partially transformed prior to its use in the 3D printing process. The pre-transformed material may be a starting material for the 3D printing process. The pre-transformed material may be liquid, solid, or semi-solid (e.g., gel). The pre-transformed material may be a particulate material. The particulate material may be a powder material. The powder material may comprise solid particles of material. The particulate material may comprise vesicles (e.g., containing liquid or semi-solid material). The particulate material may comprise solid or semi-solid material particles.

The FLS of the formed (e.g., printed) 3D object can be at least about 50 micrometers (µm), 80 µm, 100 µm, 120 µm, 150 µm, 170 µm, 200 µm, 230 µm, 250 µm, 270 µm, 300 µm, 400 µm, 500 µm, 600 µm, 700 µm, 800 µm, 1 millimeter (mm), 1.5mm, 2mm, 5mm, 1 centimeter (cm), 1.5cm, 2cm, 10cm, 20cm, 30cm, 40cm, 50cm, 60cm, 70cm, 80cm, 90cm, 1m, 2m, 3m, 4m, 5m, 10m, 50m, 80m, 100m or 1000m. In some cases, the FLS of the printed 3D object may be between any of the afore-mentioned FLSs (e.g., from about 50 µm to about 1000m, from about 120 µm to about 1000m, from about 120 µm to about 10m, from about 200 µm to about 1m, or from about 150 µm to about 10m).

In some instances, it is desired to control the manner in which at least a portion of a layer of hardened material is formed. The layer of hardened material may comprise a plurality of melt pools. In some instances, it may be desired to control one or more characteristics of the melt pools that form the layer of hardened material. The characteristics may comprise a depth of a melt pool, a microstructure, or the repertoire of microstructures of the melt pool. The microstructure of the melt pool may comprise the grain (e.g., crystalline and/or metallurgical) structure, or grain structure repertoire that makes up the melt pool. The grain structure may be referred to herein as microstructure.

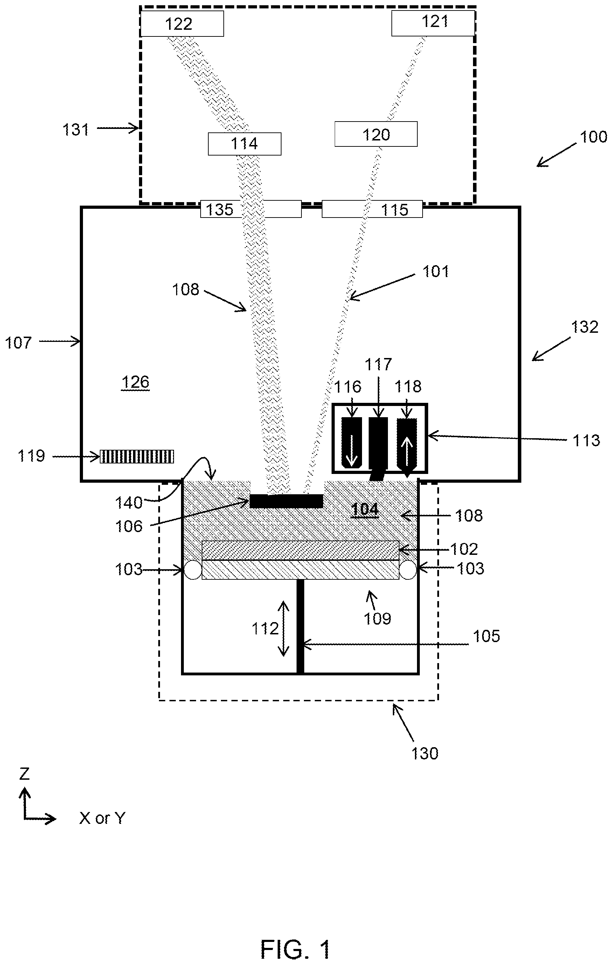

In some embodiments, transforming comprises heating at least a portion of a target surface (e.g., exposed surface of a material bed), and/or a previously formed area of hardened material using at least one energy source. The energy source may generate an energy beam. The energy source may be a radiative energy source. The energy source may be a dispersive energy source (e.g., a fiber laser). The energy source may generate a substantially uniform (e.g., homogenous) energy stream. The energy source may comprise a cross section (e.g., or a footprint) having a (e.g., substantially) homogenous fluence. The energy beam may have a spot size (e.g., footprint or cross-section) on a target surface. The energy generated for transforming a portion of material (e.g., pre-transformed or transformed) by the energy source will be referred herein as the "energy beam." The energy beam may heat a portion of a 3D object (e.g., an exposed surface of the 3D object). The energy beam may heat a portion of the target surface (e.g., an exposed surface of the material bed, and/or a deeper portion of the material bed that is not exposed). The target surface may comprise a pre-transformed material, a partially transformed material and/or a transformed material. The target surface may comprise a portion of the build platform, for example, the base (e.g., Fig. 1, 102). The target surface may comprise a (surface) portion of a 3D object. The heating by the energy beam may be substantially uniform across its footprint on the target surface. In some embodiments, the energy beam takes the form of an energy stream emitted toward the target surface in a step and repeat sequence (e.g., tiling sequence). The energy beam may advance continuously, in a pulsing sequence, or in a step-and repeat sequence. The energy source may comprise an array of energy sources, e.g., a light emitting diode (LED) array.

In some embodiments, the methods, systems, apparatuses, and/or software disclosed herein comprises controlling at least one characteristic of the layer of hardened material (or a portion thereof) that is part of the 3D object. The methods, systems, apparatuses, and/or software disclosed herein may comprise controlling the degree of 3D object deformation. The control may be an *in-situ* and/or real-time control. The control may be control during formation of the at least a portion of the 3D object. The control may comprise a closed loop or an open loop control scheme. The portion may be a surface, layer, plurality (e.g., multiplicity) of layers, portion of a layer, and/or portion of a multiplicity of layers. The layer of hardened material of the 3D object may comprise a plurality of melt pools. The layers' characteristics may comprise planarity, curvature, or radius of curvature of the layer (or a portion thereof). The characteristics may comprise the thickness of the layer (or a portion thereof). The characteristics may comprise the smoothness (e.g., planarity) of the layer (or a portion thereof).

In some embodiments, a 3D forming (e.g., printing, or print) cycle refers to printing one or more 3D objects in a 3D printer, e.g., using one printing instruction batch. A 3D printing cycle may include printing one or more 3D objects above a (single) platform and/or in a material bed. A 3D printing cycle may include printing all layers of one or more 3D objects in a 3D printer. On the completion of a 3D printing cycle, the one or more objects may be removed from the 3D printer (e.g., by sealing and/or removing the build module from the printer) in a removal operation (e.g., simultaneously). During a printing cycle, the one or more objects may be printed in the same material bed, above the same platform, with the same printing system, at the same time span, using the same forming (e.g., printing) instructions, or any combination thereof. A print cycle may comprise printing the one or more objects layer-wise (e.g., layer-by-layer). A layer may comprise a layer height. A layer height may correspond to a height of (e.g., distance between) an exposed surface of a (e.g., newly) formed layer with respect to a (e.g., top) surface of a prior-formed layer. In some embodiments, the layer height is (e.g., substantially) the same for each layer of a print cycle (e.g., within a material bed). In some embodiments, at least two layers of a print cycle within a material bed have different layer heights. A printing cycle may comprise a collection (e.g., sum) of print operations. A print operation may comprise a print increment (e.g., deposition of a layer and transformation of a portion thereof to form at least part of the 3D object). A printing cycle (also referred to herein as "build cycle") may comprise one or more printing-laps (e.g., the process of forming a printed layer in a layerwise deposition to form the 3D object). The printing-lap may be referred to herein as "build-lap" or "print-increment". In some embodiments, a printing cycle comprises one or more printing laps. The 3D printing lap may correspond with (i) depositing a (planar) layer of pre-transformed material (e.g., as part of a material bed) above a platform, and (ii) transforming at least a portion of the pre-transformed material (e.g., by at least one energy beam) to form a layer of a 3D objects above the platform (e.g., in the material bed). The printing cycle may comprise a plurality of laps to layerwise form the 3D object. The 3D printing cycle may correspond with (I) depositing a pre-transformed material toward a platform, and (II) transforming at least a portion of the pre-transformed material (e.g., by at least one energy beam) at or adjacent to the platform to form one or more 3D objects above the platform at the same time-window. An additional sequential layer (or part thereof) can be added to a previous layer of a 3D object by transforming (e.g., fusing and/or melting) a fraction of pre-transformed material that is introduced (e.g., as a pre-transformed material stream) to the prior-formed layer. At times, the platform supports a plurality of material beds and/or a plurality of 3D objects. One or more 3D objects may be formed in a single material bed during a printing cycle (e.g., one or more print jobs). The transformation may connect transformed material of a given layer (e.g., formed during a printing lap) to a previously formed 3D object portion (e.g., of a previous printing lap). The transforming operation may comprise utilizing a transforming agent (e.g., an energy beam or a binder dispenser) to transform the pre-transformed (or re-transform the transformed) material. In some instances, the transforming agent (e.g., energy beam) is utilized to transform at least a portion of the material bed (e.g., utilizing any of the methods described herein).

In some embodiments, at least one (e.g., each) energy source of the 3D forming (e.g., printing) system is able to transform (e.g., print) at a throughput of at least about 6 cubic centimeters of material per hour (cc/hr), 12 cc/hr, 35 cc/hr, 50 cc/hr, 120 cc/hr, 480 cc/hr, 600 cc/hr, 1000 cc/hr, or 2000 cc/hr. The at least one energy source may print at any rate within a range of the aforementioned values (e.g., from about 6 cc/hr to about 2000 cc/hr, from about 6 cc/hr to about 120 cc/hr, or from about 120 cc/hr to about 2000 cc/hr).

In some embodiments, the transforming agent is dispensed through a material dispenser (e.g., binding dispenser). The dispenser may be any dispenser disclosed herein. The dispenser can be controlled (e.g., manually and/or automatically). The automatic control may be using one or more controllers that are operatively coupled to at least one component of the dispenser. The control may be before, during, and/or after the forming (e.g., printing). The dispenser may be translated using an actuator. The translation of the dispenser can utilize a scanner (e.g., an XY stage). In some embodiments, the at least one 3D object is printed using a plurality of dispensers. In some embodiments, at least two dispensers dispense the same type of binder (e.g., comprising a binding agent). In some embodiments, at least two dispensers each dispense a different type of binder. In some embodiments, a binding agent is a polymer or resin. The binding agent can be organic or inorganic. The binding agent can be carbon based or silicon based.

In some embodiments, the energy source is movable such that it can translate across (e.g., laterally) the top surface of the material bed, e.g., during the printing. The energy beam(s) and/or energy source(s) can be moved via at least one (e.g., galvanometer) scanner. The scanner may comprise a galvanometer scanner, a moving (e.g., rotating) polygon, a mechanical-stage (e.g., X-Y-stage), a piezoelectric device, a gimbal, or any combination of thereof. The scanner may comprise a mirror. The scanner may comprise a modulator. The scanner may comprise a polygonal mirror. The scanner can be the same scanner for two or more energy sources and/or beams. At least two (e.g., each) energy sources and/or beams may have a separate scanner. At least two scanners may be operably coupled with a single energy source and/or energy beam. The systems and/or apparatuses disclosed herein may comprise one or more shutters (e.g., safety shutters). The energy source(s) may project energy using a DLP modulator, a one-dimensional scanner, a two-dimensional scanner, or any combination thereof. The energy source(s) can be stationary or translatable. The energy source(s) can translate vertically, horizontally, or in an angle (e.g., planar or compound angle).

At times, the energy source(s) are modulated. The energy (e.g., beam) emitted by the energy source can be modulated. The modulator can comprise an amplitude modulator, a phase modulator, or polarization modulator. The modulation may alter the intensity of the energy beam. The modulation may alter the current supplied to the energy source (e.g., direct modulation). The modulation may affect (e.g., alter) the energy beam (e.g., external modulation such as external light modulator). The modulator can comprise an aucusto-optic modulator or an electro-optic modulator. The modulator can comprise an absorptive modulator or a refractive modulator. The modulation may alter the absorption coefficient of the material that is used to modulate the energy beam. The modulator may alter the refractive index of the material that is used to modulate the energy beam.

The scanner can be included in an optical system that is configured to direct energy from the energy source to a predetermined position on the (target) surface (e.g., exposed surface of the material bed). At least one controller can be programmed to control a trajectory of the energy source(s) with the aid of the optical system. The controller can regulate a supply of energy from the energy source to the pre-transformed material (e.g., at the target surface) to form a transformed material. The optical system may be enclosed in an optical enclosure. Examples of an optical enclosure and/or system can be found in Patent Application serial number PCT/US17/64474, titled "OPTICS, DETECTORS, AND THREE-DIMENSIONAL PRINTING" that was filed December 4, 2017, or in Patent Application serial number PCT/US18/12250, titled "OPTICS IN THREE-DIMENSIONAL PRINTING" that was filed January 3, 2018, each of which is incorporated herein by reference in its entirety.

The energy beam (e.g., transforming energy beam) may comprise a Gaussian energy beam. The energy beam may have any cross-sectional shape comprising an ellipse (e.g., circle), or a polygon. The energy beam may have a cross section (e.g., at an intersection of the energy beam on a target surface) with a FLS of at least about 20µm, 50 µm, 75 µm, 100 µm, 150 µm, 200 µm or 250 µm, 0.3 millimeters (mm), 0.4mm, 0.5mm, 0.8mm, 1mm, 1.5mm, 2mm, 2.5mm, 3mm, 3.5mm, 4mm, 4.5mm, or 5mm. The cross section of the energy beam may be any value of the afore-mentioned values (e.g., from about 50 µm to about 250µm, from about 50µm to about 150µm, from about 150 µm to about 250µm, from about 0.2 mm to about 5 mm, from about 0.2 mm to about 2.5 mm, or from about 2.5 mm to about 5 mm). The FLS may be measured at full width half maximum intensity of the energy beam. The FLS may be measured at 1/e² intensity of the energy beam. In some embodiments, the energy beam is a focused energy beam at the target surface. In some embodiments, the energy beam is a defocused energy beam at the target surface. The energy profile of the energy beam may be (e.g., substantially) uniform (e.g., in the energy beam's cross-sectional area that impinges on the target surface). The energy profile of the energy beam may be (e.g., substantially) uniform during an exposure time (e.g., also referred to herein as a dwell time). The exposure time (e.g., at the target surface) of the energy beam may be at least about 0.1 milliseconds (ms), 0.5 ms, 1 ms, 10 ms, 50 ms, 100 ms, 200ms, 500 ms, 1000 ms, 2500 ms, or 5000 ms. The exposure time may be between any of the above-mentioned exposure times (e.g., from about 0.1 ms to about 5000 ms, from about 0.1 ms to about 1000 ms, or from about 1000 ms to about 5000 ms). In some embodiments, the energy beam is configured to be continuous or non-continuous (e.g., pulsing). In some embodiments, at least one energy source can provide an energy beam having an energy density of at least about 50 joules/cm² (J/cm²), 100 J/cm², 200 J/cm², 300 J/cm², 400 J/cm², 500 J/cm², 600 J/cm², 700 J/cm², 800 J/cm², 1000 J/cm², 1500 J/cm², 2000 J/cm², 2500 J/cm², 3000 J/cm², 3500 J/cm², 4000 J/cm², 4500 J/cm², or 5000 J/cm². The at least one energy source can provide an energy beam having an energy density of at most about 50 J/cm², 100 J/cm², 200 J/cm², 300 J/cm², 400 J/cm², 500 J/cm², 600 J/cm², 700 J/cm², 800 J/cm², 1000 J/cm², 500 J/cm², 1000 J/cm², 1500 J/cm², 2000 J/cm², 2500 J/cm², 3000 J/cm², 3500 J/cm², 4000 J/cm², 4500 J/cm², or 5000 J/cm². The at least one energy source can provide an energy beam having an energy density of a value between the afore-mentioned values (e.g., from about 50 J/cm² to about 5000 J/cm², from about 50 J/cm² to about 2500 J/cm², or from about 2500 J/cm² to about 5000 J/cm²). In some embodiments, the power density (e.g., power per unit area) of the energy beam is at least about 100 Watts per millimeter square (W/mm²), 200 W/mm², 300 W/mm², 400 W/mm², 500 W/mm², 600 W/mm², 700 W/mm², 800 W/mm², 900 W/mm², 1000 W/mm², 2000 W/mm², 3000 W/mm², 5000 W/mm2, 7000 W/mm², 8000 W/mm², 9000 W/mm², 10000 W/mm², 20000 W/mm², 30000 W/mm², 50000 W/mm², 60000 W/mm², 70000 W/mm², 80000 W/mm², 90000 W/mm², or 100000 W/mm². The power density of the energy beam may be any value between the aforementioned values (e.g., from about 100 W/mm² to about 100000W/mm², about 100 W/mm² to about 1000 W/mm², or about 1000 W/mm² to about 10000 W/mm², from about 10000 W/mm² to about 100000 W/mm², from about 10000 W/mm² to about 50000 W/mm², or from about 50000 W/mm² to about 100000 W/mm²). The energy beam may emit energy stream towards the target surface in a step and repeat sequence. The target surface may comprise an exposed surface of an energy beam, a previously formed 3D object portion, or a platform.

At times, an energy source provides power at a peak wavelength. For example, an energy source can provide electromagnetic energy at a peak wavelength of at least about 100 nanometer (nm), 400 nm, 500 nm, 750 nm, 1000 nm, 1010 nm, 1020 nm, 1030 nm, 1040 nm, 1050 nm, 1060 nm, 1070 nm, 1080 nm, 1090 nm, 1100 nm, 1200 nm, 1500 nm, 1600 nm, 1700 nm, 1800 nm, 1900 nm, or 2000 nm. An energy beam can provide energy at a peak wavelength between any value of the afore-mentioned peak wavelength values (e.g., from about 100 nm to about 2000 nm, from about 100 nm to about 1000 nm, or from about 1000 nm to about 2000 nm). The energy source (e.g., laser) may have a power of at least about 0.5 Watt (W), 1 W, 5 W, 10 W, 50 W, 100W, 250W, 500W, 1000W, 2000W, 3000W, or 4000W. The energy source may have a power between any value of the afore-mentioned laser power values (e.g., from about 0.5W to about 4000W, from about 0.5W to about 1000W, or from about 1000W to about 4000W).

At times, an energy beam is translated across a surface (e.g., target surface) at a given rate (e.g., a scanning speed), e.g., in a trajectory. The scanning speed of the energy beam may be at least about 50 millimeters per second (mm/sec), 100 mm/sec, 500 mm/sec, 1000 mm/sec, 2000 mm/sec, 3000 mm/sec, 4000 mm/sec, or 50000 mm/sec. The scanning speed of the energy beam may be any value between the aforementioned values (e.g., from about 50 mm/sec to about 50000 mm/sec, from about 50 mm/sec to about 3000 mm/sec, or from about 3000 mm/sec to about 50000 mm/sec). The energy beam may be continuous or non-continuous (e.g., pulsing). The energy profile of the energy beam may be (e.g., substantially) uniform during the exposure time (e.g., also referred to herein as dwell time). The exposure time (e.g., at the target surface) of the energy beam may be at least about 0.1 milliseconds (ms), 0.5 ms, 1 ms, 10 ms, 50 ms, 100 ms, 500 ms, 1000 ms, 2500 ms, or 5000 ms. The exposure time may be any value between the above-mentioned exposure times (e.g., from about 0.1 ms to about 5000 ms, from about 0.1 to about 1000 ms, or from about 1000 ms to about 5000 ms). The exposure time (e.g., irradiation time) may be the dwell time. The dwell time may be at least 1 minute, or 1hour.

In some embodiments, the at least one 3D object is formed (e.g., printed) using a plurality of energy beams and/or energy sources. At times, at least two transforming agents (e.g., energy sources (e.g., producing at least two energy beams)) may have at least one characteristic value in common with each other. At times, the at least two energy sources may have at least one characteristic value that is different from each other. Characteristics of the transforming agent may comprise transformation density (or transformation strength), trajectory, FLS of footprint on the target surface, hatch spacing, scan speed, or scanning scheme. The transformation density may refer to the volume or weight of material transformed in a given time by the transforming agent. The FLS of footprint on the target surface may refer to the FLS of the energy beam on the target surface, of a binder stream dispensed on the target surface. Characteristics of the energy beam (e.g., energy beam characteristic(s)) may comprise wavelength, power density, amplitude, trajectory, FLS of footprint on the target surface, intensity, energy, energy density, fluence, Andrew Number, hatch spacing, scan speed, scanning scheme, or charge. The scanning scheme may comprise continuous, pulsed or tiled scanning scheme. The charge can be electrical and/or magnetic charge. Andrew number is proportional to the power of the irradiating energy over the multiplication product of its velocity (e.g., scan speed) by a hatch spacing. The Andrew number is at times referred to as the area filling power of the irradiating energy. In some embodiments, at least two of the energy source(s) and/or beam(s) can be translated at different rates (e.g., velocities).

A guidance system and/or an energy source may be controlled manually and/or by at least one controller. For example, at least two guidance systems may be directed by the same controller. For example, at least one guidance system may be directed by its own (e.g., unique) controller. A plurality of controllers may be operatively coupled to each other, to the guidance system(s) (e.g., scanner(s)), and/or to the energy source(s). At least two of a plurality of energy beams may be directed towards the same position at the target surface, or to different positions at the target surface. The one or more guidance systems may be positioned at an angle (e.g., tilted) with respect to the target surface. One or more sensors may be disposed adjacent to the target surface. At least one of the one or more sensors may be disposed in an indirect view of the target surface. At least one of the one or more sensors may be disposed in a direct view of the target surface (e.g., a camera viewing the target surface). The one or more sensors may be configured to have a field of view of at least a portion of the target surface (e.g., an exposed surface of the material bed).

Fig. 1 shows an example of a 3D forming (e.g., 3D printing) system 100 (also referred to herein as "3D printer") and apparatuses, including a (e.g., first) energy source 121 that emits a (e.g., first) energy beam 101 and a (e.g., second) energy source 122 that emits a (e.g., second overlapping) energy beam 108. In the example of Fig. 1 the energy from energy source 121 travels through an (e.g., first) optical system 120 (e.g., comprising a scanner) and an optical window 115 to be incident upon a target surface 140 within an enclosure 126 (e.g., comprising an atmosphere). The enclosure can comprise one or more walls that enclose the atmosphere. The target surface may comprise at least one layer of pre-transformed material (e.g., Fig. 1, 108) that is disposed adjacent to a platform (e.g., Fig. 1, 109). Adjacent can be above. In some embodiments, an elevator shaft (e.g., Fig. 1, 105) is configured to move the platform (e.g., vertically; Fig. 1, 112). The enclosure (e.g., 132) may including sub-enclosures comprising an optical chamber (e.g., 131), a processing chamber (e.g., 107), and a build module (e.g., 130). The platform may be separated from one or more walls (e.g., side walls) of the build module by a seal (e.g., Fig. 1, 103). The guidance system of the energy beam may comprise an optical system. Fig. 1 shows the energy from the energy source 122 travels through an optical system 114 (e.g., comprising a scanner) and an optical window 135 to impinge (e.g., be incident) upon the target surface 140. The energy from the (e.g., plurality of) energy source(s) may be directed through the same optical system and/or the same optical window. At times, energy from the same energy source is directed to form a plurality of energy beams by one or more optical systems. The target surface may comprise a (e.g., portion of) hardened material (e.g., Fig. 1, 106) formed via transformation of material within a material bed (e.g., Fig. 1, 104). In the example of Fig. 1, a layer forming device 113 includes a (e.g., powder) dispenser 116, a leveler 117, and material removal mechanism 118. During printing, the 3D object (e.g., and the material bed) may be supported by a (e.g., movable) platform, which platform may comprise a base (e.g., Fig. 1, 102). The base may be detachable (e.g., after the printing). A hardened material may be anchored to the base (e.g., via supports and/or directly), or non-anchored to the base (e.g., floating anchorlessly in the material bed, e.g., suspended in the material bed). An optional thermal control unit (e.g., Fig. 1, 119) can be configured to maintain a local temperature (e.g., of the material bed and/or atmosphere). In some cases, the thermal control unit comprises a (e.g., passive or active) heating member. In some cases, the thermal control unit comprises a (e.g., passive or active) cooling member. The thermal control unit may comprise or be operatively coupled to a thermostat. The thermal control unit can be provided inside of a region where the 3D object is formed or adjacent to (e.g., above) a region (e.g., within the processing chamber atmosphere) where the 3D object is formed. The thermal control unit can be provided outside of a region (e.g., within the processing chamber atmosphere) where the 3D object is formed (e.g., at a predetermined distance).

In some embodiments, an optical system through which an energy beam travels can be disposed within the enclosure, outside of the enclosure, or within at least one wall of the enclosure. For example, an optical window of an optical system may be disposed within at least one wall of the enclosure (e.g., as in Fig. 1, 135 and 115). In some embodiments, at least a portion of the optical system is disposed within its own (optical) enclosure (e.g., Fig. 1, 131). The optical enclosure may optionally be (e.g., operatively and/or physically) coupled with the processing chamber. Examples of an optical mechanism and any of its components (e.g., including an optical enclosure and/or optical window) can be found in patent application number PCT/US17/60035, titled "GAS FLOW IN THREE-DIMENSIONAL PRINTING" that was filed on November 3, 2017, and in PCT/US18/12250, each of which is incorporated herein by reference in its entirety.

In some embodiments, the target surface is detected by a detection system. The detection system may comprise at least one sensor. The detection system may comprise a light source operable to illuminate a portion of the 3D forming (e.g., printing) system enclosure (e.g., the target surface). The light source may be configured to illuminate onto a target surface. The illumination may be such that objects in the field of view of the detector are illuminated with (e.g., substantial) uniformity. For example, sufficient uniformity may be uniformity such that at most a threshold level (e.g., 25 levels) of variation in grayscale intensity exists (for objects), across the build plane. The illumination may comprise illuminating a map of varied light intensity (e.g., a picture made of varied light intensities). Examples of illumination apparatuses include a lamp (e.g., a flash lamp), a LED, a halogen light, an incandescent light, a laser, or a fluorescent light. The detection system may comprise a camera system, CCD, CMOS, detector array, a photodiode, or line-scan CCD (or CMOS). Examples of a control system, detection system and/or illumination can be found in: PCT/US17/18191, US15/435,065, EP17156707, and in U.S. Patent serial number 10,252,335, titled "ACCURATE THREE-DIMENSIONAL PRINTING" that was filed February 16, 2017 and issued as patent on April 9, 2019, each of which is incorporated herein by reference in its entirety.

The 3D printer may include an enclosure (e.g., Fig. 1, 132). The enclosure can include sub-enclosures. For example, the enclosure can include a processing chamber (e.g., Fig. 1, 107) and a build module (e.g., Fig. 1, 130). The sub-enclosures may be configured to be coupled and decoupled from one another. In some embodiments, the build module and the processing chamber are separate and/or inseparable. In some embodiments, the optical chamber and the processing chamber are separate and/or inseparable. The build module and processing chamber may (e.g., controllably) engage and disengage. The separate build module, optical chamber, and processing chamber may each comprise a separate atmosphere. Any of these atmospheres may be different than the ambient atmosphere outside of the build module, optical chamber, and/or processing chamber. For example, any of these atmospheres may be inert (e.g., comprise argon, or nitrogen). Any of these atmospheres may comprise a species that is reactive with the transformed and/or pre-transformed material during the printing, in an amount below a (e.g., reactive) threshold. The species may comprise water or oxygen. The build module, optical chamber, and/or processing chamber may engage to form a gas tight seal (e.g., hermetic seal). The separate build module, optical chamber, and/or processing chamber may (e.g., controllably) merge. For example, the atmospheres of the build module and processing chamber may merge. In the example of Fig.1, the 3D printing system comprises a processing chamber which comprises the energy beam and the target surface (e.g., comprising the atmosphere in the interior volume of the processing chamber, e.g., 126). At times, at least one build module may be disposed in the enclosure that comprises the processing chamber (having an interior volume 126 comprising an atmosphere). At times, at least one build module may engage with the processing chamber (e.g., Fig. 1) (e.g., 107). At times, a plurality of build modules may be coupled to the enclosure. The build module and/or optical chamber may reversibly engage with (e.g., couple to) the processing chamber. The engagement of the build module and/or optical chamber may be before or after the 3D printing. The engagement of the build module and/or optical chamber with the processing chamber may be controlled (e.g., by a controller, such as a microcontroller). Examples of a controller and any of its components can be found in: patent application serial number PCT/US17/18191, titled "ACCURATE THREE-DIMENSIONAL PRINTING" that was filed on February 16, 2017; patent application serial number US15/435,065, titled "ACCURATE THREE-DIMENSIONAL PRINTING" that was filed on February 16 2017; and/or patent application serial number EP17156707, titled "ACCURATE THREE-DIMENSIONAL PRINTING" that was filed on February 17, 2017; and in US10,252,335, each of which is incorporated herein by reference in its entirety. The controller may direct the engagement and/or dis-engagement of the build module and/or of the optical chamber. The control may comprise automatic and/or manual control. The engagement of the build module with the processing chamber may be reversible. In some embodiments, the engagement of the build module with the processing chamber may be non-reversible (e.g., stable, or static). The FLS (e.g., width, depth, and/or height) of the processing chamber can be at least about 50 millimeters (mm), 60 mm, 70 mm, 80 mm, 90 mm, 100 mm, 200 mm, 250 mm, 280 mm, 400 mm, 500 mm, 800 mm, 900 mm, 1 meter (m), 2 m, or 5 m. The FLS of the processing chamber can be at most about 50 millimeters (mm), 60 mm, 70 mm, 80 mm, 90 mm, 100 mm, 200 mm, 250 mm, 400 mm, 500 mm, 800 mm, 900 mm, 1 meter (m), 2 m, or 5 m. The FLS of the processing chamber can be between any of the afore-mentioned values (e.g., 50 mm to about 5m, from about 250 mm to about 500 mm, or from about 500 mm to about 5m). The build module, optical chamber, and/or processing chamber may comprise any (e.g., be formed of a) material comprising an organic (e.g., polymer or resin) or inorganic material (e.g., a salt, mineral, acid, base, or silicon-based compound). The build module and/or processing chamber may comprise any material disclosed herein (e.g., elemental metal, metal alloy, an allotrope of elemental carbon, ceramic, or glass).

In a forming process (e.g., 3D printing), a requested 3D object can be formed (e.g., printed) according to forming (e.g., printing) instructions. The forming instructions may at least in part consider a model of a requested 3D object. The model may comprise a digital model, a computer model, a geometric model, a corrected geometric model, a test model, a marked model, or a marked geometric model. The geometric model may comprise a Computer-aided Design (CAD) model. The geometric model may be a virtual model (e.g., a computer-generated model of the 3D object). The geometric model may be a virtual representation of the geometry and/or the topology of the 3D object (e.g., in the form of 3D imagery). In some cases, a geometric model corresponds to an image (e.g., scan) of an object (e.g., a test object). The scan can be a 3D or a 2D scan. The model of a marked 3D object may be incorporated in a (e.g., printing) instruction to generate a physically (e.g., structurally) marked 3D object (also referred herein as the "test 3D object", "test object" or "test part") that incorporates one or more physical markers. The one or more markers may be referred to herein as "physical markers," "structural markers" or "test markers" (e.g., depending on the type of object). The structural marker may be a geometric marker. A model of the object can have one or more markers (also referred to herein as "model markers," "image markers," "virtual markers" or "digital markers," depending on the type of model) corresponding to the one or more physical markers. A model of a 3D object, test object, and the markers may be any of the ones disclosed in patent application serial number PCT/US17/54043, titled "THREE-DIMENSIONAL OBJECTS AND THEIR FORMATION," that was filed on September 28, 2017, which is incorporated herein in its entirety.

In some embodiments, a model of a 3D object is arranged (e.g., divided) into a number of constituent portions (e.g., virtual slices). A slice of a 3D model may correspond to a (e.g., planar) section of the 3D model. The (e.g., planar) slice may defined by a top surface, a bottom surface, and a thickness (e.g., where top and bottom are with respect to a global vector). A thickness of a slice may correspond with a layer height (e.g., thickness) of the formed 3D object. The 3D model may be organized into a plurality of (e.g., neighboring) slices. For example, a plurality of slices may be arranged such that a top surface of a first slice is adjacent to (e.g., juxtaposed with) a bottom surface of a neighboring slice that is above the first slice (e.g., above with respect to a global vector). The first slice may be directly adjacent to the second slice. For example, the first slice may contact the second slice. In some embodiments, a (e.g., corresponding) virtual slice exists for each layer of the physically formed 3D object that is formed additively in a layerwise manner.

At times, 3D forming (e.g., printing) comprises one or more forming (e.g., printing) instructions (e.g., embodied in a computer-readable medium). The forming instructions, when executed, may cause a (e.g., suitable) manufacturing (e.g., 3D printing) device to perform a series of operations. The series of operations may cause additive formation of the 3D object. The forming instructions may divide the formation of a physical 3D object into a series of physical layers. The series of physical layers may correspond to a series of virtual slices of a geometric model. In some embodiments, each slice of a geometric model comprises an associated (e.g., set of) printing instruction of a printing lap. In some embodiments, printing operations comprise (i) depositing a first (e.g., planar) layer of pre-transformed material as part a material bed, and (ii) directing an energy beam towards a first portion of the first layer of pre-transformed material to form a first transformed material. In some embodiments, the printing operations comprise (i) depositing a first (e.g., planar) layer of pre-transformed material as part a material bed, and (ii) directing a transforming agent (e.g., an energy beam or a binding agent) towards a first portion of the first layer of pre-transformed material to form a first transformed material. The transformed material may be a portion of the 3D object. The transformed material may be hardened into a hardened (e.g., solid) material as part of the 3D object. The transformed material may comprise pre-transformed material that are connected (e.g., using a binding agent, through chemical bonding such as utilizing covalent bonds, and/or by sintering). The transformed material may be embedded in a matrix (e.g., formed by a binding agent such as glue). Optionally, this process may be repeated layer by layer deposition, or layerwise deposition. Another layer may be formed, for example, by adding a second (e.g., planar) layer of pre-transformed material, directing a transforming agent (e.g., an energy beam, a chemically reactive species, or a binding agent) toward a second portion of the second layer of pre-transformed material to form a second transformed material according to forming instructions of a second slice in the (e.g., geometric) computer model of the 3D object. A dispenser may deposit the binder and/or the reactive species, e.g., through an opening in the dispenser. An energy source may generate the energy beam. A dispenser may deposit the pre-transformed material, e.g., to form the material bed. In some embodiments, the 3D object is formed in a material bed. The material bed (e.g., powder bed) may comprise flowable material (e.g., powder) during the forming process. During formation of the one or more 3D objects, the material bed may exclude a pressure gradient. In some examples, the 3D object (or a portion thereof) may be formed in the material bed with diminished number of auxiliary supports and/or spaced apart auxiliary supports (e.g., spaced by at least about 2, 3, 5, 10, 40, or 60 millimeters). In some examples, the 3D object (or a portion thereof) may be formed in the material bed without being anchored (e.g., to the platform). For example, the 3D object may be formed without auxiliary supports.

In some examples the 3D object may be formed above a platform, without usage of a material bed. The 3D printing cycle may correspond with (I) depositing a pre-transformed material toward the platform, and (II) transforming at least a portion of the pre-transformed material (e.g., by at least one energy beam) at or adjacent to the platform (e.g., during deposition of the pre-transformed material towards the platform) to form one or more 3D objects disposed above the platform. An additional sequential layer (or part thereof) can be added to the previous layer of a 3D object by transforming (e.g., fusing and/or melting) a fraction of pre-transformed material that is introduced (e.g., as a pre-transformed material stream) to the prior-formed layer. The depositing in (i) and the transforming in (ii) may comprise a print increment. A dispenser may deposit the pre-transformed material, e.g., through an opening of the dispenser.

Pre-formation (e.g., virtual) environments (e.g., software) may use a virtual model of the 3D object to, directly or indirectly, generate forming instructions to form a requested 3D object. The virtual model of the 3D object used to generate the forming instructions, may be supplied (e.g., uploaded) in various file formats (e.g., as an input to the pre-formation environment). The virtual model of the 3D object may exist (e.g., and manipulated) in the pre-formation environment as various formats. The virtual model of the 3D object may be exported (e.g., saved) from the pre-formation environment in various formats. In the file format, the 3D model (e.g., surface thereof) may comprise a vectoral representation or be devoid of vectoral representation. The vectoral representation may be of at least a portion of the 3D object model. The at least a portion may be a surface portion (e.g., surface patch), or a volume portion. In the file format, the surface of the 3D object model may be represented as a collection of surfaces (e.g., tessellations or pixels). In the file format, the collection of surfaces in the 3D model may be (e.g., mathematically) related or unrelated. In the file format, the surface of the 3D object may be mathematically represented (e.g., as vector(s) and/or non-uniform rational basis spline(s) (NURBS)). The file format may describe the surface geometry of a model of a 3D object. The 3D model may be a stereolithography type model. The file format may represent the 3D object as approximate mesh, precise mesh, or constructive solid geometry (CSG). The file format may comprise a "Standard Triangle Language," also known as "Standard Tessellation Language" (STL); collaborative design activity (COLLADA); computer-aided design (CAD), "Standard for Exchange of Product model data" (STEP), or Lattice Graph Interchange Module (LTCX). The file format may comprise: OBJ, filmbox (FBX), 3DS, Initial Graphics Exchange Specification (IGES), or virtual reality modeling language (VRML). LTCX can be an element's lattice (e.g., periodic patter, or repeating structure or pattern) file format. The file format (e.g., OBJ file format) may include a data-format that represents 3D geometry comprising a position of each vertex, a UV position of each texture coordinate vertex, vertex normals, faces that make each polygon defined as a list of vertices, or texture vertices. UV position may result from UV mapping, which is the 3D modelling process of projecting a 2D image to a 3D model's surface for texture mapping. The letters "U" and "V" can denote the axes of the 2D texture, while "X", "Y" and "Z" may be used to denote the axes of the 3D object in (e.g., Cartesian) model space.

File formats devoid of a mathematical representation of the surface and/or volume of the 3D object model, may not retain an intent of a client (e.g., designer) concerning any usage and/or partition of various sections (e.g., surface or volume sections) of the 3D object model. The one or more various sections may be logically connected and/or have a particular use or purpose. For example, similar blades of a turbine may have a particular and/or identical purpose that carry a first set of material requirements. A core axis of a turbine may have a particular purpose that carries a second set of material requirements, which purpose may be different than that of the blade of the turbines (e.g., and thus the second set of material requirements may be different than the first set of material requirements). A file format retaining the mathematical representation of the one or more 3D object model sections (e.g., CAD format), may relate to the purpose of the one or more 3D object sections (e.g., the similar blades may be identified as similar, and different from the core of the turbine model). A file format devoid of mathematical representation of the (e.g., surface of) the 3D object model (e.g., STL file format), may not be able to recognize and/or interrelate the various sections of the 3D object model related to any purpose and/or use of the 3D object or a portion thereof.

In some embodiments, the forming instructions for forming (e.g., a given layer of) the 3D object(s) may comprise the utilization (e.g., selection) of one or more 3D forming (e.g., printing) procedures. The particular forming procedure(s) (e.g., of a plurality of forming procedures) that is used to generate a given portion of the (e.g., layer of) the 3D object may consider the geometry of the 3D object. For example, the particular forming procedure that is used may consider: (i) a position of the given portion (e.g., with respect to a geometry of the 3D object(t); (ii) an angle of the given portion (e.g., of a normal vector at a surface of the 3D object, with respect to a global vector); (iii) an intended use of the given portion (e.g., according to an intended use of the requested 3D object); (iv) a requested (e.g., surface) characteristic of the given portion (e.g., a surface roughness or a dimensional accuracy); (v) and/or a requested material property of the given portion. The particular forming procedures that is/are used to generate a given portion of the 3D object may be selected manually and/or automatically. A forming (e.g., printing) procedure that is (e.g., initially) automatically selected to generate a given portion of the 3D object may be referred to herein as a "default forming procedure."

In some embodiments, a forming instructions engine (e.g., module and/or program) comprises code for generation of default forming instructions for a (e.g., each) virtual slice of a virtual geometric model. In some embodiments, the forming instructions engine considers any (e.g., automatically and/or manually) designated forming processes for any region(s) of interest (ROI) specified on the geometric model. A designation may comprise a coercion or a suppression of a given forming process (e.g. of a plurality of forming processes). The plurality of forming processes may comprise hatching, tiling, forming globular melt pools, forming high aspect ratio melt pools, re-transforming, annealing, or pre-heating. Examples of forming processes can be found in Patent Application serial number PCT/US18/20406, titled "THREE-DIMENSIONAL PRINTING OF THREE-DIMENSIONAL OBJECTS" that was filed March 1, 2018, which is incorporated herein by reference in its entirety.

In some examples, the method, systems and/or apparatus may comprise a controller. The controller may comprise an electrical circuitry or a (e.g., embedded) software. In some instances, the software may be separated (e.g., disconnected) from the controller. In some instances, the software may be an integral part of the controller. The software may generate a sequence of events (e.g., printing instructions). The software may be embedded in a non-transitory media, e.g., a non-transitory computer readable media. The forming instructions may be a logical sequence of events. The software may generate the forming instructions according to a plan. The plan may comprise a procedure, a design, a scheme, a planning sequence, or an algorithm. The software may consider process build parameters (e.g., real-time and/or historical). The software may consider an (e.g., thermal) analysis of the material bed and/or of the 3D object (e.g., hardened material of the forming or previously formed 3D object portion) during and/or after the printing. The (e.g., thermal) analysis may consider the physical properties of the material in (i) the material bed and/or (ii) hardened material. The analysis may comprise thermal or mechanical properties. The analysis may comprise physical behavior and/or physical characteristics of various material phases of the pre-transformed material (e.g., solid, liquid, gas, or plasma). The analysis may comprise an interplay between at least of the material phases. The physical behavior may manifest during and/or after the printing. The physical characteristics may comprise heat capacity, heat conductance, heat response (e.g., expansion), stress response (e.g., contraction), surface tension, flow, or wetting. The thermal analysis may comprise dissipation of heat through the pre-transformed and/or transformed material (e.g., as part of the at least a portion of the printed 3D object).

At times, it is requested to select (e.g., to designate and/or to define) a region of interest ("ROI") for at least a portion of a 3D object. An ROI designation may enable a modification to (e.g., override) a forming procedure (e.g., a default forming procedure). At times, a (e.g., forming procedure) category is associated with an ROI designation. For example, a category may comprise (I) a forming feature and/or (II) a given forming (e.g., printing) process of a plurality of forming processes. A forming feature may comprise an auxiliary support or a label. In some embodiments, a label is associated with a portion of the 3D object (e.g., the ROI portion), and/or the (e.g., entire) 3D object. A label may comprise a (e.g., named) reference to a given ROI (e.g., stored as data and associated with the virtual model) of the 3D object. A label may comprise a detectable marking within and/or on a surface of the 3D object. The label may be a material marking (e.g., a detectable material signature). The detectable material signature may be microscopically and/or spectroscopically detectable. The material mark may emit detectable radiation. A label may comprise a (e.g., optically perceptible) marking on a surface of the 3D object. For example, a label may comprise a line, a curve, a symbol, and/or an alphanumeric string (e.g., a word and/or a serial number). A label may be generated manually and/or automatically. In some embodiments, a data store (e.g., a database) comprises data relating a given serial number to a given (e.g., instance of a) formed 3D object (e.g., in a table). For example, an automatically generated label may comprise operations of (a) querying a database to determine (e.g., fetch) a current value of a sequence (e.g., a serial number), (b) generating a label ROI according to the sequence, and (c) incrementing the sequence (e.g., a serial number).

In some embodiments, a given formation category relates at least one characteristic of the 3D object to a given forming process. For example, an angled surface (e.g., with respect to a global vector) of the 3D object that is categorized as an "overhang" may be designated for an overhang portion of the 3D object. The overhang category may have at least one (e.g., skin) forming process and/or a (e.g., auxiliary) support generation feature associated with its formation. In some embodiments, a "critical" region category may be designated for a portion located in a region of the 3D object that is expected to experience a relatively high thermal load, mechanical stress, and/or mechanical strain (e.g., in an environment during its intended use). Relative may be in relation to an adjacent portion and/or to the remaining portions of the 3D object. A critical region category may have at least one forming process associated therewith. The forming process may generate a selected internal (e.g., interior) material property of the 3D object (e.g., in at least a portion of the critical region). A selected internal material property may comprise a (e.g., requested) microstructure (e.g., grain structure), ductility, surface roughness, or density. In some embodiments, an annealing process may be associated with formation of (e.g., at least a portion of) critical region(s). The at least one characteristic of the 3D object that relates to a given formation category may comprise (i) a location, (ii) a surface quality (e.g., roughness), (iii) a (e.g., requested) rate of formation, (iv) a material composition, or (v) a grain characteristic, of the ROI portion of the (e.g., requested) 3D object. The grain characteristic may comprise a crystal structure, crystal phase, material makeup, average fundamental length scale of the grain, metallurgical morphology, or metallurgical phase.

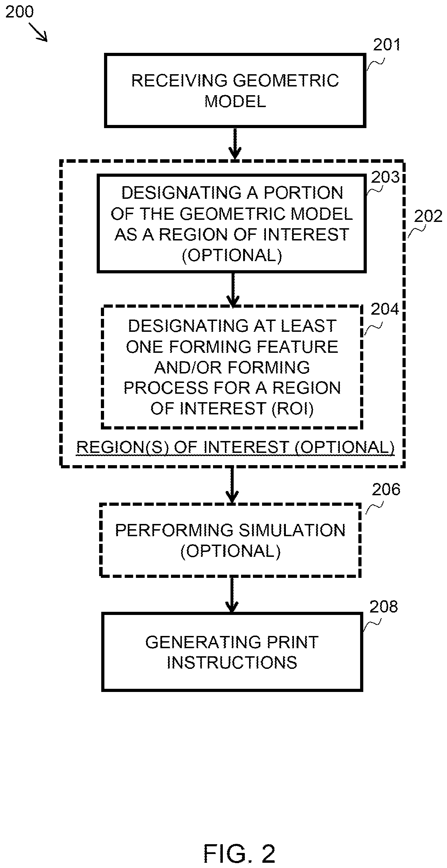

In some embodiments, a sequence of actions directed by a forming instructions engine is represented as a flowchart. The software may generate the flowchart. The flowchart may be a representation of a logic flow diagram. The flowchart may be a plan. Fig. 2 shows an example of a flowchart 200 depicting operations of a forming procedure comprising generating forming instructions from a model of a 3D object. In the example of Fig. 2, at operation 201 a geometric model of one or more requested 3D objects is received (e.g., by a controller and/or software). The geometric model may include a requested geometry. The geometry may include dimensions of the one or more objects. The requested geometry may comprise (e.g., predetermined) dimensions of the object (e.g., as requested by a customer). The geometric model may be a virtual model (e.g., a computer-generated model). The virtual model may reference any coordinate system (e.g., point cloud or computer-aided design ("CAD")). For example, the coordinate system may be cartesian, polar, cylindrical, or spherical. The coordinate system may be homogenous. The virtual model may be in the form of a file (e.g., a CAD or an Additive Manufacturing file Format ("AMF")). In the example of Fig. 2, an optional region(s) of interest (ROI) operation 202 comprises an operation 203 for designating (e.g., at least) a portion of the geometric model as an ROI, and an operation 204 for designating at least one forming procedure for an ROI. A forming procedure may comprise a forming feature or a forming (e.g., printing) process (e.g., of a plurality of forming processes). In some embodiments, designating a (e.g., at least one) forming procedure for any designated ROI is optional (e.g., Fig. 2, dashed box 204). In some embodiments, at least one forming procedure is designated for any designated ROI. The example of Fig. 2 depicts performing a simulation (e.g., of the forming and/or the formed 3D object) in an optional operation 206. The software may consider one or more simulations (e.g., within an enclosure, a material bed and/or the hardened material). A simulation may comprise a thermal, a mechanical, a liquid phase, a gas phase simulation, or any combination thereof, of at least a portion of the forming procedure of the 3D object. A simulation may comprise a numerical simulation. A simulation may comprise a finite element, a boundary element, and/or a finite difference analysis. A simulation may comprise simulating one or more physical aspects of a behavior of a transforming and/or transformed material of a (e.g., portion of a) 3D object (e.g., during its formation). The geometric model (e.g., modified or unmodified) can be used to generate print instructions (e.g., Fig. 2, 208). The print instructions may include instructions for forming (e.g., multiple layers of) the one or more 3D objects. The instructions may comprise instructing at least one characteristic of: an energy beam; an energy source; at least one component of an optical system; a platform; any component of the layer dispensing mechanism; or any component of a gas flow mechanism, of a 3D forming (e.g., printing) system. If one or more simulations are performed, the print instructions can incorporate at least one aspect related to the one or more simulations.

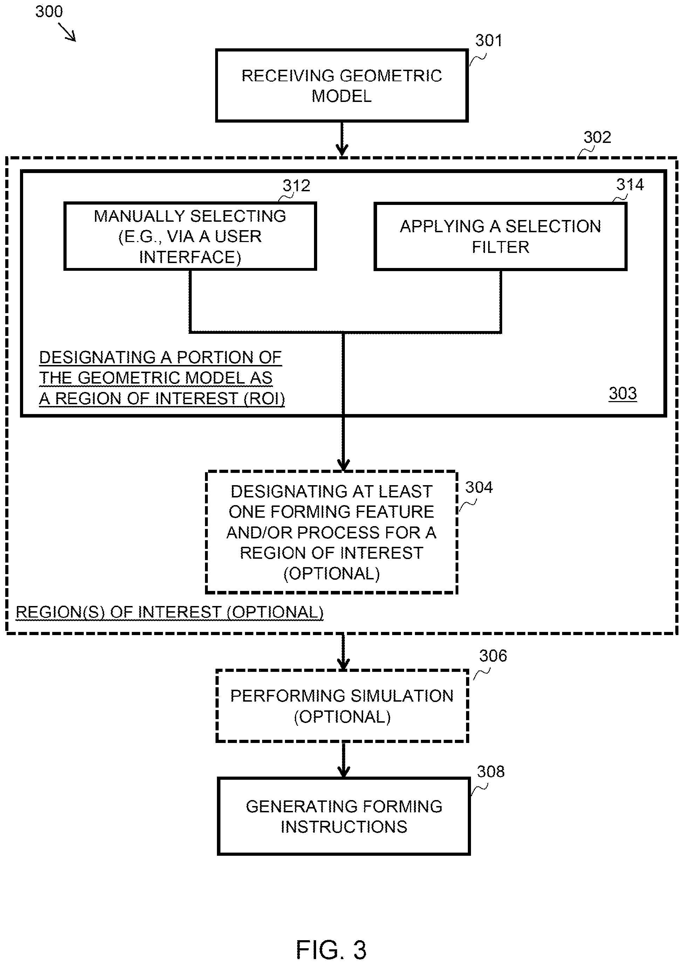

In some embodiments, an ROI is designated for a portion of a surface of a 3D object manually and/or automatically. The designation of the ROI may be according to at least one selection filter. Fig. 3 shows an example of a flowchart 300 depicting operations of a forming procedure comprising generating forming instructions (e.g., Fig. 3, 308) from a received model of a 3D object (e.g., Fig. 3, 301). The designation of a portion of the geometric model as an ROI can be a manual selection and/or a selection according to a selection filter. In the example of Fig. 3, an optional ROI operation 302 comprises an operation 303 for designating a portion of the geometric model as an ROI. The example operation 303 comprises a manual selection (e.g., Fig. 3, 312) and a selection according to a selection filter (e.g., Fig 3, 314). In some embodiments, a manual selection is performed. In some embodiments, a selection filter is used. In the example of Fig. 3, an optional operation 304 comprises designating at least one forming procedure for the ROI(s) designated by the selection(s) from the operation 303. The example of Fig. 3 depicts performing a simulation (e.g., of the forming and/or the formed 3D object) in an optional operation 306 and generating forming instructions in an operation 308.

In some embodiments, a selection filter may be applied manually. In some embodiments, a selection filter may be applied in a predetermined manner (e.g., automatically). A manual selection may comprise an interaction (e.g., by a user) with the geometric model. An interaction with the geometric model may comprise a (e.g., graphical) display of the geometric model. The graphical display of the geometric model may comprise one or more selection tools (e.g., a cursor, a hand or a lasso). The selection tools may be controlled by a (e.g., peripheral) device such as a keyboard, a computer mouse, a stylus, an audio device, and/or a screen (e.g., a touchscreen). The selection tool may be controlled by a device that utilizes any detectable and communicable human response (e.g., audio, visual, electric, or tactile). The display of the geometric model and/or the selection tools may form a part of a (e.g., graphical) user interface (e.g., GUI and/or Ul). An interaction with a geometric model may comprise an interaction with data values that form a part of (e.g., a data set that defines) the geometric model. An interaction with data values may comprise a modification to the data values, or inspection (e.g., reading without modification).

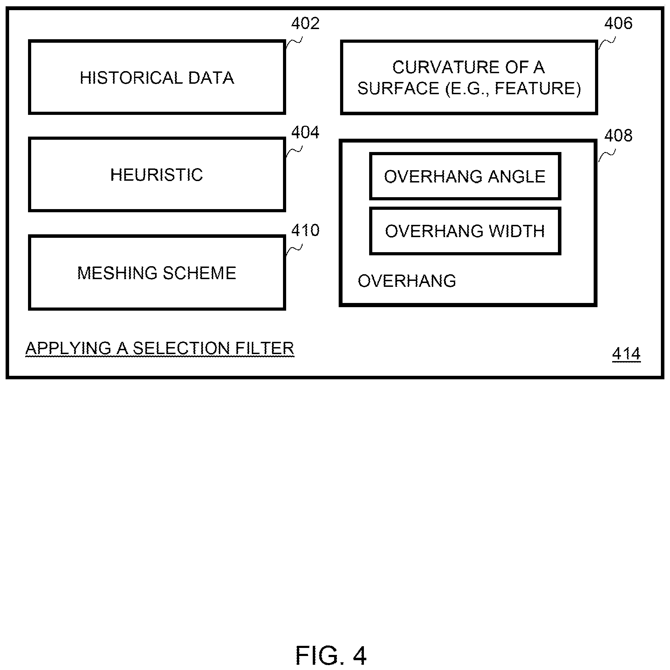

In some embodiments, applying a selection filter comprises a specification of a filter according to one or more filter categories. In the example of Fig. 4, an operation 414 of applying a selection filter comprises considering filter categories for: historical data (e.g., 402); a heuristic (e.g., 404); curvature of a surface (e.g., 406); an (e.g., at least one) overhang (e.g., 408); and/or a meshing scheme (e.g., 410). In some embodiments, application of a selection filter comprises a selection of one or more filters from at least two categories. In some embodiments, application of a selection filter comprises a selection of one or more filters from a single category. The application of a selection filter may comprise a comparison of regions of the geometric model with (i) a reference (e.g., coordinate) system or structure, or (ii) other region(s) of the geometric model. In some embodiments, a reference coordinate system may comprise the geometric model represented in a coordinate system. The coordinate system may be a Cartesian, polar, cylindrical, or spherical coordinate system (e.g., any of which may comprise a global vector). In some embodiments, a reference structure may comprise a platform that is configured to support the 3D object during its formation. In some embodiments, a comparison of regions may be referred to herein as a "relative" comparison. A relative comparison may comprise a specification of a first location (e.g., seed point and/or seed region) on the (e.g., surface of the) geometric model, and a comparison with other portions of the geometric model considering the specified first location. For example, a relative comparison may comprise a selection filter for (e.g., neighboring) portions of the geometric model that are within a specified angular deviation (e.g., deviation of at most about +/- 0.05°, 0.2°, 0.5°, 1°, or 5°) from a specified location on the geometric model. The comparison may comprise a vector comparison (e.g., of normal vectors at points on the surface of the geometric model). The comparison may consider a totality of the geometric object (e.g., a "global" comparison) and/or a neighboring region (e.g., a "local" comparison. In some embodiments, a neighboring region is with respect to a seed (point/region) location. A neighboring region to the seed may comprise an area or volume of the geometric model having points within a threshold distance from the seed location. A threshold distance may be specified (e.g., configured) according to a FLS of the 3D object (e.g., a length, a height, and/or a width). In some embodiments, a result from a global comparison may consider the entirety of (e.g., a surface and/or a volume of) a geometric model. In some embodiments, a result from a relative comparison may consider a (e.g., specified) portion of the geometric model.

In some embodiments, a selection filter may consider historical data associated with the geometric model of the 3D object (e.g., Fig. 4, 402). Historical data may comprise data generated prior to formation (e.g., printing) of the 3D object(s). The historical data may comprise (i) data from the same (e.g., earlier-formed) 3D object or 3D object portion, or (ii) data from a (e.g., geometrically) similar 3D object or 3D object portion. The data generated may comprise data from one or more components of a 3D printing system, including sensor and/or operative data.

In some embodiments, a selection filter may be specified according to a heuristic (e.g., Fig. 4, 404). In some embodiments, a heuristic may be used to specify (e.g., suggest) one or more portions of a geometric model for designation as an ROI. For example, a heuristic may suggest the one or more portions of the geometric model considering an (e.g., estimated) internal material property of a formed 3D object. In some embodiments, a heuristic may estimate one or more (e.g., internal) material properties of a formed 3D object. The material properties may comprise a density, or a (e.g., metallurgical) microstructure (e.g., a crystal structure) of the formed 3D object. The microstructure may be a grain structure. In some embodiments, a heuristic may comprise an estimate of (i) a rate of formation of (e.g., at least a portion of) the 3D object, (ii) a deviation of (e.g., at least a portion of) the formed 3D object from a requested geometry, or (iii) a surface roughness of (e.g., at least a portion of) the formed 3D object. The estimate of the rate of formation, the (e.g., geometry) deviation, material properties, and/or the surface roughness of the (e.g., portion of the) 3D object may consider a particular 3D printing (e.g., manufacturing) device (e.g., from a plurality of different manufacturing devices) that is configured to form the 3D object.

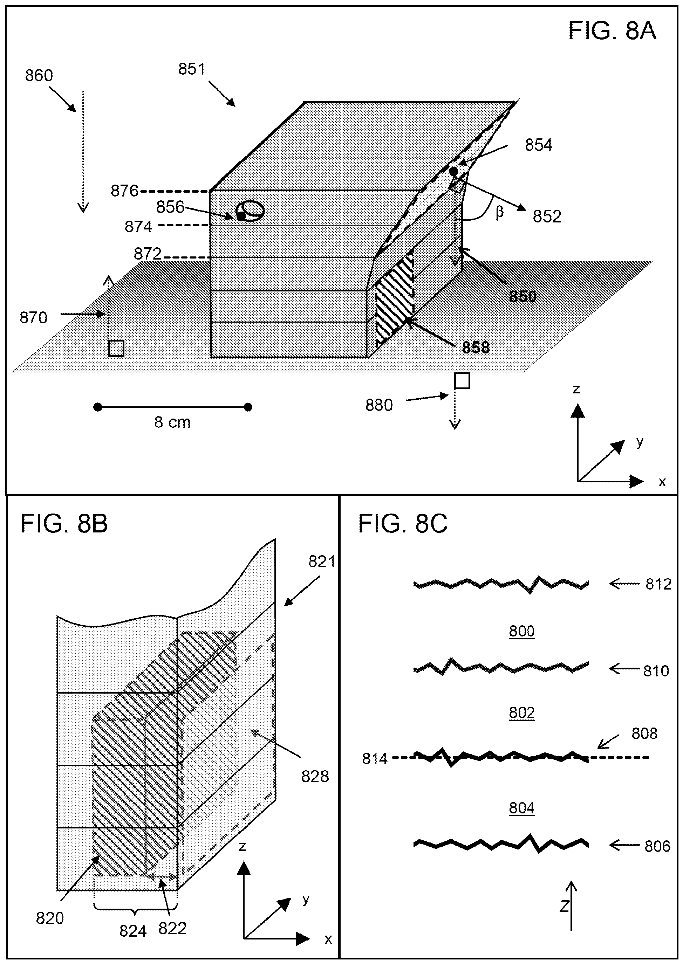

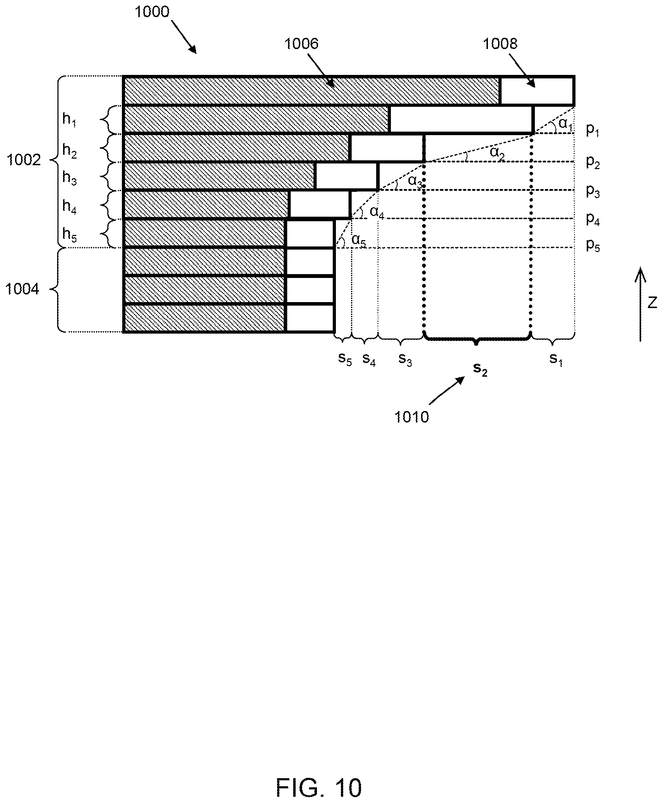

In some embodiments, a selection filter may be specified according to portion(s) of the geometric model that comprise an overhang (e.g., Fig. 4, 408). An overhang may be characterized according to an angle formed by (i) a normal vector on a surface of the overhang portion of the 3D object, and (ii) a global vector (e.g., Fig. 8A, angle α) and/or an (e.g., average) layering plane. In some embodiments, an overhang may be characterized by a "width" of the overhang. A width of an overhang may comprise a lateral extension of a given overhang portion for a given layer of formation of the 3D object. In some embodiments, a selection filter comprises binning (e.g., a selection according to grouping(s) of values). For example, binning may comprise an organization of at least a portion of the geometric model, e.g., according to overhang angle. In some embodiments, surface (e.g., overhang) angles of the geometric model are binned into ranges of angles such that each bin comprises a range of angles of at least about 0.5°, 1°, 5°, 10°, or 20° relative to a layering plane, and/or a plane perpendicular to the global vector. In some embodiments, surface (e.g., overhang) angles of the geometric model are binned into ranges of angles such that each bin comprises a range of angles of at most about 90°, 75°, 60°, 45°, or 30° relative to a layering plane, and/or a plane perpendicular to the global vector. The binned range may comprise any value between the afore-mentioned values (e.g., from about 0.5° to about 20°, from about 0.5° to about 10°, from about 10° to about 20°, from about 0.5° to about 90°, from about 0.5° to about 30°, or from about 30° to about 90°). In some embodiments, surface overhangs (e.g., widths) of the geometric model are binned into ranges of width. An overhang width (e.g., Fig. 10, 1010 (s₂)) may be characterized in relation to a fundamental length scale (FLS) of a layer height (e.g., thickness) (e.g., Fig. 10, 1002 (h₂)). In some embodiments, overhang widths are binned such that each bin comprises a range of overhang widths of at least about 0.3*FLS of the layer height (wherein '*' denotes the multiplication mathematical operation), 0.5*FLS of the layer height, 0.75*FLS of the layer height, 1*FLS of the layer height, 1.5*FLS of the layer height, 2*FLS of the layer height, or 4*FLS of the layer height. The binned range may comprise any value between the afore-mentioned values (e.g., from about 0.3*FLS of the layer height to about 4*FLS of the layer height, from about 0.3*FLS of the layer height to about 1*FLS of the layer height, or from about 1*FLS of the layer height to about 4*FLS of the layer height). In some embodiments, overhang widths are binned such that each bin comprises a range of widths of at least about 20 micrometers (µm), 50 µm, 100 µm, 500 µm, 750 µm, 1 millimeter (mm), 2 mm, or 5 mm. The binned range may comprise any value between the afore-mentioned values (e.g., from about 20 µm to about 5 mm, from about 20 µm to about 1 mm, or from about 1 mm to about 5 mm).

In some embodiments, a selection filter may consider a meshing scheme that was used to generate (e.g., at least a portion of) a geometric model (e.g., Fig. 4, 410). A mesh may comprise a discrete representation of a (e.g., 3D) object. In some embodiments, a meshing scheme comprises isotropic or anisotropic meshing. In some embodiments, a mesh (e.g., scheme) may comprise a surface mesh or a volumetric mesh. In some embodiments, a surface mesh may be used (a) to generate a display of the geometric model, (b) for (e.g., interactive) placement of one or more (e.g., auxiliary) support structures on the geometric model, and/or (c) to slice a volume of the geometric model. In some embodiments, a volumetric mesh may be used for simulating at least one behavior of the 3D object (e.g., according to a numerical simulation), which behavior may be during and/or after the formation of the 3D object. The behavior may refer to thermal and/or mechanical behavior. In some embodiments, a relationship may exist between a surface mesh and a volumetric mesh (e.g., for a given geometric model). For example, a volumetric mesh may be formed considering a (e.g., surface) boundary described by a surface mesh. In some embodiments, formation of a volumetric mesh does not consider a surface mesh (e.g., boundary). At times, a fidelity of a surface (or volume) mesh with respect to a (e.g., requested) 3D object may be related to a coarseness (e.g., of data points) of the mesh. For example, a relatively coarse mesh may have a lower fidelity to a surface (or volume) of a 3D object, as compared to a fine(r) mesh. In some embodiments, a relatively coarse mesh may have a reduced number of data points (e.g., and/or a lower computational cost) as compared to a fine(r) mesh. In some embodiments, geometric characteristics of the geometric model are associated with (e.g., data points) of a mesh. In some embodiments, geometric characteristic data are stored at nodes and/or edges of fundamental components (e.g., cells) of a mesh. A cell of a mesh may be a geometric structure such as a polygon (e.g., 2D or 3D polygon). The polygon may be a space filling polygon. The geometric structure may be a tessellation. In some embodiments, the cell comprises a symmetric polygon. In some embodiments, the cell comprises an equilateral polygon. In some embodiments, the cell comprises a triangle, a tetragon, or a hexagon. In some embodiments, the tetragon comprises a concave or a convex tetragon. In some embodiments, the tetragon comprises a rectangle. For example, the cell may comprise a square, rectangle, triangle, pentagon, hexagon, heptagon, octagon, nonagon, octagon, circle, or icosahedron. The cell may comprise one or more 3D space filling shapes. The cell may comprise a cuboid (e.g., cube), or a tetrahedron. The cell may comprise a polyhedron. The polyhedron may be a prism (e.g., hexagonal prism), or octahedron (e.g., truncated octahedron). The cell may comprise a Platonic solid. The cell may comprise octahedra, truncated octahedron, or a cube. The cell may comprise convex polyhedra (e.g., with regular faces). The cell may comprise a triangular prism, hexagonal prism, cube, truncated octahedron, or gyrobifastigium. The cell may comprise a pentagonal pyramid. The cell may be an indentation of the 3D shape (e.g., a V-groove is an indentation of a cone). The cell may comprise space-filling polyhedra. The cell may exclude a pentagonal pyramid. The cell may comprise 11-hedra, dodecahedra, 13-hedra, 14-hedra, 15-hedra, 16-hedron 17-hedra, 18-hedron, icosahedra, 21-hedra, 22-hedra, 23-hedra, 24-hedron, or 26-hedron. The cell may comprise at least 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, or 40 faces. The cell may comprise at most 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, or 40 faces. The cell may comprise any number of faces between the aforementioned number of faces (e.g., from 4 to 38, from 4 to 20, from 20 to 40, or from 10 to 30 faces).

Geometric characteristics may comprise (e.g., intrinsic and/or extrinsic) curvature, surface angle (e.g., of a normal vector) with respect to a global vector, or (e.g., relative) distance (e.g., and/or surface angles) between locations of the geometric model. The geometric characteristics may be stored as data values associated with (e.g., nodes and/or edges of) a mesh.

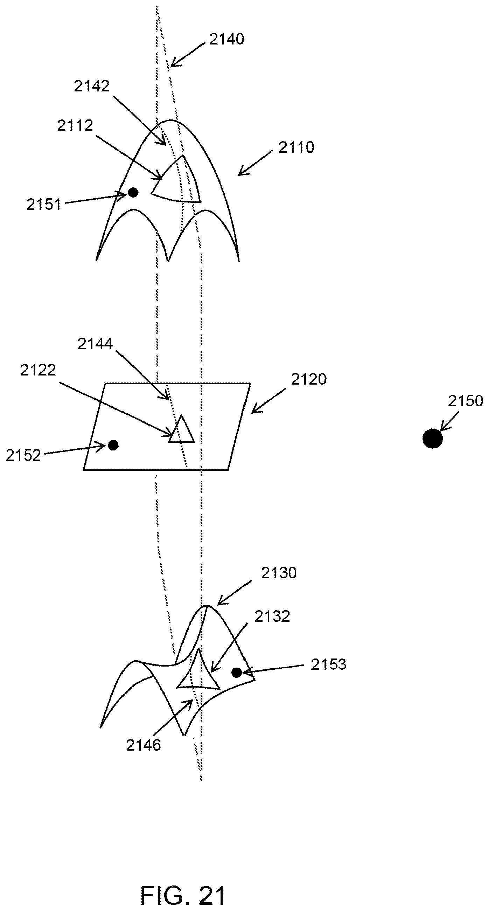

In some embodiments, a selection filter may consider a geometry of a geometric model of the 3D object (e.g., Fig. 4, 406). A geometry may comprise one or more surface geometries of all or a portion of the geometric model of the 3D object. In some embodiments, a selection filter may be specified according to an intersection of one or more geometries on a surface of the geometric model. For example, a first portion of the geometric model may comprise a positive curvature and a second portion of the geometric model may comprise a negative curvature. A location (e.g., a point, a line, and/or curve) on a surface of the geometric model at which a first curvature abuts (e.g., is juxtaposed with) a second curvature may comprise an intersection of geometries. In some embodiments, a portion of the (e.g., surface of the) geometric model may comprise a curvature (e.g., curve). The curvature may comprise an intrinsic or an extrinsic curvature. An intrinsic curvature of an object (e.g., a 3D object) may be detectable by an observer disposed on a surface of the object (e.g., a Gaussian curvature). Fig. 21 shows example of positions 2151, 2152, and 2153 of an observer observing an intrinsic curvature of respective objects 2110, 2120, and 2130. A surface portion may have a negative, a flat, or a positive curvature. In some embodiments, to derive a measure of intrinsic curvature of a surface an observer may measure (e.g., sum) angles of geometric shape (e.g., a triangle), and compare the measured angles to those of a corresponding Euclidean (e.g., zero curvature) geometric shape. In the example of Fig. 21, surfaces are depicted that have a positive curvature (e.g., Fig. 21, 2110), a flat curvature (e.g., Fig. 21, 2120), and a negative curvature (e.g., Fig. 21, 2130). For a surface that has a flat (e.g., zero) curvature, a sum of angles of a given shape corresponds with the sum of angles for the Euclidean shape. In the example of Fig. 21, a sum of internal angle of a triangular shape 2122 in a flat curvature will result in a total of 180°. For a surface that has a positive curvature, a sum of angles of a triangular shape (e.g., of a triangle 2112) will result in a total greater than 180°. For a surface that has a negative curvature, a sum of angles of a triangular shape (e.g., of a triangle 2132) will result in a total less than 180°. An extrinsic curvature of an object may be detectable by an observer disposed outside (e.g., at location 2150) of a surface of the object (e.g., a mean curvature of a surface). For example, an extrinsic curvature may comprise a curvature of a curve (e.g., a sectional curvature or a plane curvature) and/or of a surface. In the example of Fig. 21, extrinsic curvatures (e.g. 2142, 2144, and 2146) of the objects 2112, 2122, and 2132 may be measured by a sectional curvature of an intersection of the plane 2140. In some embodiments, a curvature of at least a portion (e.g., point) of a curve may be given by its radius of curvature. In some embodiments, a radius of curvature at a point of a curve may be given according to the radius of its corresponding osculating circle. In some embodiments, the radius of curvature of a curve at a point is the inverse of the curvature of the curve at that point. In some embodiments, a selection filter comprises a specification of a threshold value of (e.g., intrinsic and/or extrinsic) curvature. For example, a threshold value may be: (i) in a range from a lower (e.g., threshold) curvature to an upper (e.g., threshold) curvature, (ii) below an upper (e.g., threshold) curvature, (iii) above a lower (e.g., threshold) curvature, or (iv) any combination thereof. The (e.g., curvature) selection filter may be applied globally and/or locally (e.g., with respect to a seed point/region). In some embodiments, surface curvature(s) of the geometric model are binned into ranges of curvature, such that each bin comprises a range of curvatures or ranges of radius of curvatures. For example, a bin may comprise a range of radius of curvature values that is about 0.1 millimeters (mm), 0.2 mm, 0.5 mm, 1 mm, 2 mm, 5 mm, 10 mm or 20 mm. The binned range may comprise any value between the afore-mentioned values (e.g., from about 0.1 mm to about 20 mm, from about 0.1 mm to about 5 mm, or from about 5 mm to about 20 mm).

At times, different portions of a 3D object are formed using different default forming (e.g., printing) processes. For example, an interior (e.g., main body or core) portion of a 3D object can be formed using a different process than a process used to form an overhang and/or skin portion. The transforming agent may transform a pre-transformed material into a transformed material to form one or more 3D objects. In some embodiments, a (e.g., transforming agent of a) forming process is able to transform (e.g., print) at a throughput (e.g., formation rate) of at least about 6 cubic centimeters of transformed material per hour (cc/hr), 12 cc/hr, 35 cc/hr, 50 cc/hr, 120 cc/hr, 480 cc/hr, 600 cc/hr, 1000 cc/hr, or 2000 cc/hr. The transforming agent may print at any rate within a range of the afore-mentioned values (e.g., from about 6 cc/hr to about 2000 cc/hr, from about 6 cc/hr to about 120 cc/hr, or from about 120 cc/hr to about 2000 cc/hr). In some embodiments, an interior portion of a 3D object may be formed using a process that has a relatively high formation rate (e.g., throughput) for transforming the pre-transformed material to form (e.g., at least a portion of) the 3D object. Relatively high may be with respect to another forming process available to a particular manufacturing device (e.g., three-dimensional printer). The other forming process may be a conventional and/or non-optimized forming process. The other forming process may be any (e.g., conventional) forming process disclosed herein (e.g., including a forming process of the plurality of forming processes). For example, a relatively high formation rate may be with respect to an average of formation rate (AFR) of another forming processes that could potentially be used for formation of the at least one 3D object. In some embodiments, a relatively high formation rate may be at least 1.1 * AFR, 1.5 * AFR, 2 * AFR, 4 * AFR, 6 * AFR, 10 * AFR, 15 * AFR, or 20 * AFR. The relatively high formation rate may be any value between the afore-mentioned values (e.g., from about 1.1 * AFR to about 20 * AFR, from about 1.1 * AFR to about 10 * AFR, or from about 10 * AFR to about 20 * AFR). At times a choice of a plurality of forming processes may enable formation of a 3D object that is not possible by another forming process (e.g., a conventional forming process and/or one of the plurality of forming processes), e.g., a 3D object comprising a non-supported bottom skin such as, for example, of an overhang structure, and/or of a cavity ceiling. At times, a non-supported bottom skin portion is formed by a forming process that differs from that of an interior portion of a 3D object. In some embodiments, different portions of a given overhang and/or cavity ceiling are formed using different transformation (e.g., forming) processes. The different process may at least partially consider an angle relative to the layering plane, and/or global vector). For example, a first portion of an overhang (and corresponding bottom skin portion) may be formed using a first transformation process, and a second portion of the overhang and/or cavity ceiling (and corresponding bottom skin portion) may be formed using a second transformation process that is different than the first transformation process. At times, auxiliary support structures are generated to support at least a portion of a 3D object during its formation. In some embodiments, support structures are generated for at least a portion of an overhang and/or cavity ceiling portion of a 3D object. In some embodiments, a particular forming process (e.g., of a plurality of forming processes) is selected for generating a given portion of a 3D object according to a forming parameter. In some embodiments, a forming parameter comprises: (i) an angle of a surface (e.g., of the 3D object, with respect to a global vector), (ii) a surface roughness; (iii) a rate of formation, (iv) a material composition, or (v) a dimensional fidelity (e.g., of the formed 3D object to the geometric model), any of which may be requested. Different forming processes may generate different portions of the formed 3D object to have different material properties (e.g., microstructure, density and/or surface roughness). At times, at least two different forming processes may generate at least two different portions of the formed 3D object respectively. At times, at least two different forming processes may generate one portion of the formed 3D object. The different processes may be used to generate different material characteristics of the 3D object portions (e.g., microstructure, density and/or surface roughness). A forming process may be suitable to a particular geometry of a 3D object or a portion thereof. At times, different processes may generate the same material characteristics of the 3D object portions. At times, the same forming process may generate at least two different portions of the formed 3D object. In some embodiments, a formed 3D object comprises a functionally graded material. For example, an internal portion of a (e.g., formed) 3D object may have a first property, and an external portion of the formed 3D object (e.g., overhang, and corresponding bottom skin) may have a second property that is different than the first property. The property can be a material characteristic (e.g., density, porosity, surface roughness, and/or microstructure). The property may be a geometry. In some embodiments, a 3D object can have at least 2, 3, 4, 5, 10, 100, or 1000 regions of different geometry and/or material properties (e.g., microstructure, density and/or surface roughness).

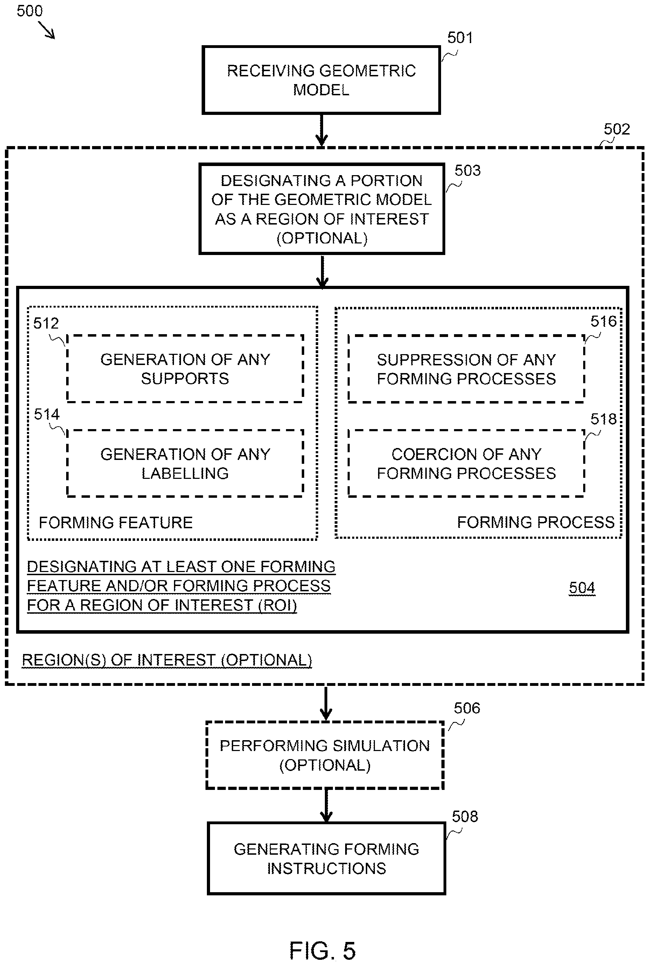

In some embodiments, a (e.g., particular) forming procedure is designated (e.g., as an override) for forming at least a portion of a 3D object. In some embodiments, the particular designated forming procedure considers a (e.g., at least one) designated ROI of a geometric model of the 3D object. The forming procedure may be a printing procedure. In some embodiments, a forming procedure is designated for (e.g., each of) a plurality of designated ROls for a given geometric model. The forming procedure may comprise a forming process or a forming feature. A forming procedure of a 3D object may comprise one or more default forming processes for its formation. A forming process may comprise a printing process. The forming (e.g., printing) process may comprise hatching, tiling, pre-heating, annealing, forming a high aspect ratio melt pool, or forming a globular melt pool. A forming process may be any printing process described herein. The forming process may comprise welding or machining. The designated forming procedure may modify (e.g., override) a default forming procedure. The default forming procedure may comprise a default forming process and/or default formed feature. A modification may comprise (i) a suppression (e.g., exclusion), or (ii) a coercion (e.g., inclusion) of a forming (e.g., printing) processes. In the example of Fig. 5, a flowchart 500 depicts operations of a forming procedure comprising generating forming instructions (e.g., Fig. 5, 508) by considering a model of a 3D object (e.g., Fig. 5, 501). In the example of Fig. 5, an optional ROI operation 502 comprises an operation 503 for designating a portion of the geometric model as an ROI; and operation 504 for designating at least one forming (e.g., printing) procedure for an ROI. The example of Fig. 5 depicts performing a simulation (e.g., of the forming and/or the formed 3D object) in an optional operation 506 and generating forming instructions in operation 508.

In some embodiments, the forming procedure comprises (a) directing formation of one or more forming features, or (b) directing utilization of one or more forming processes. In the example of Fig. 5, the designating at least one forming (e.g., printing) feature comprises: (I) generation of any supports (e.g., Fig. 5, 512); or (II) generation of any labelling (e.g., Fig. 5, 514). In the example of Fig. 5, the designating at least one forming (e.g., printing) processes comprises: (i) suppression of (e.g., any) forming processes (e.g., Fig. 5, 516); and (ii) coercion of (e.g., any) forming processes (e.g., Fig. 5, 518). In some embodiments, designating at least one forming procedure comprises designating at least one forming feature or at least one forming process. In some embodiments, designating at least one forming procedure comprises designating at least one forming feature from (I) or (II) and designating at least one process from (e.g., each of) at least one of (i) and (ii). In some embodiments, for an ROI having more than one designated forming procedure, a conflict resolution comprises ranking of the (e.g., plurality of) designated forming procedures. Ranking may comprise a priority for application (e.g., to the given ROI). The ranking may comprise sequence determination, ordering, classifying, grouping, lining up, and/or succession. The ranking may consider the formation rate, material properties, surface characteristics (e.g., Ra values), and shape of the 3D object portion. The shape of the 3D object under consideration may comprise an angle with respect to the layering plane and/or plane normal to the global vector, a curvature, a skin portion (e.g., a bottom skin surface), or an interior portion. For example, some forming processes are more suitable to a given ranking consideration and/or to forming a given 3D object portion, than other forming processes. In some embodiments, an (e.g., at least one) forming process comprising a coercion may be ranked at a higher priority than (e.g., any) other forming process. In some embodiments, one (e.g., highest ranked) forming procedure is applied for a given ROI. In some embodiments, one coerced forming process may be designated for a given ROI. In some embodiments, a (e.g., attempted) designation of at least two different forming processes as coerced processes generates an error condition. In some embodiments, for a number of forming processes 'n,' up to `n-1' forming processes may be designated for suppression, with n being a positive integer. In some embodiments, a (e.g., attempted) designation of (e.g., all) 'n' forming processes for suppression generates an error condition. The error condition may comprise a (e.g., user) prompt and/or a report. The error condition may comprise a selection of an alternative forming process (e.g., reversion to a default forming process) for the ROI.

The 3D object can have one or more surface roughness profiles, which may be suitable for various applications. The surface roughness may be the deviations in the direction of the normal vector of a real surface, from its ideal form. The surface roughness may be measured as the arithmetic average of the roughness profile (hereinafter "Ra"). The 3D object can have at least a section having an Ra value of at least about 200 µm, 100 µm, 75 µm, 50 µm, 45 µm, 40 µm, 35 µm, 30 µm, 25µm, 20 µm, 15 µm, 10 µm, 7 µm, 5 µm, 3 µm, 1 µm, 500 nm, 400 nm, 300 nm, 200 nm, 100 nm, 50 nm, 40 nm, or 30 nm. The formed object can have a Ra value of at most about 200 µm, 100 µm , 75 µm, 50 µm, 45 µm, 40 µm, 35 µm, 30 µm, 25 µm, 20 µm, 15 µm, 10 µm, 7 µm, 5 µm, 3 µm, 1 µm, 500 nm, 400 nm, 300 nm, 200 nm, 100 nm, 50 nm, 40 nm, or 30 nm. The 3D object can have at least a section having an Ra value between any of the aforementioned Ra values (e.g., from about 30 nm to about 50 µm, from about 5 µm to about 40 µm, from about 3 µm to about 30 µm, from about 10 nm to about 50 µm, or from about 15 nm to about 80 µm). The Ra values may be measured by a contact or by a non-contact method. The Ra values may be measured by a roughness tester and/or by a microscopy method (e.g., any microscopy method described herein). The measurements may be conducted at ambient temperatures (e.g., R.T.). The roughness may be measured by a contact or by a non-contact method. The roughness measurement may comprise one or more sensors (e.g., optical sensors). The roughness measurement may comprise a metrological measurement device (e.g., using metrological sensor(s)). The roughness may be measured using an electromagnetic beam (e.g., visible or IR).

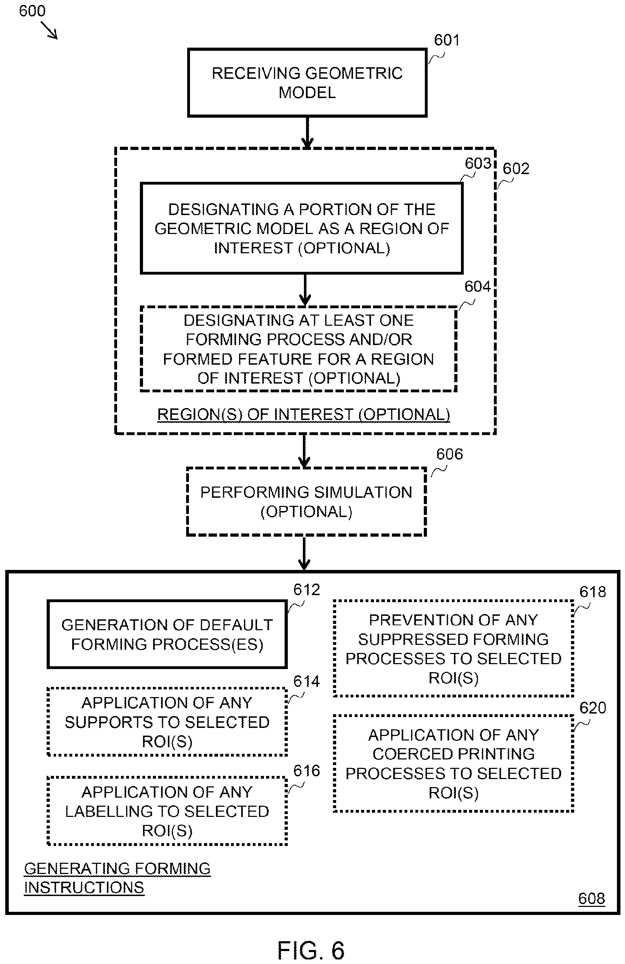

In some embodiments, forming instructions comprise control of one or more characteristics of (a) a material dispenser, (b) a platform (e.g., configured to support a forming 3D object during formation), (c) a gas flow (e.g., within an enclosure in which the 3D object is printed), and/or (d) a transforming agent (e.g., an energy beam). The control may comprise selection of an energy beam among a plurality of energy beams, e.g., to transvers a particular path. Characteristics of an energy beam may comprise power density at the target surface, wavelength, cross section, path, irradiation spot size, scan speed, dwell time, intermission time, and/or power of the energy source generating the energy beam. In some embodiments, the forming instructions are generated by default. In some embodiments, the forming instructions are suggested, and a user may select one or more forming procedure options (e.g., forming process(es) and/or forming feature(s)). The default, suggestive, or user selection of the forming instruction options may consider a curvature, an angle, a material property, a rate of formation, and/or a surface property, of the requested 3D object to be formed. Generation of the default/suggested forming instructions may comprise (e.g., preferred) historical selection by a given user, (e.g., preferred) historical selection by an average user, (e.g., preferred) historical selection by a group of users (e.g., all users). Generation of the default/suggested forming instructions may take into consideration an intended use of the 3D object to be formed. In the example of Fig. 6, a flowchart 600 depicts operations of a forming procedure comprising generating forming instructions (e.g., Fig. 6, 608) from a (e.g., received) model of a 3D object (e.g., Fig. 6, 601). In the example of Fig. 6, an optional ROI operation 602 comprises an operation 603 for designating a portion of the geometric model as an ROI; an optional operation 604 for designating at least one forming (e.g., printing) procedure for an ROI; an optional operation 606 for performing a simulation (e.g., of the forming and/or the formed 3D object); and generating forming instructions in the operation 608. In the example of Fig. 6, generation of the forming instructions operation 608 comprises (e.g., in response to designations in the operation 604): (I) generation of default forming process(es) (e.g., Fig. 6, 612); (II) application of any supports (e.g., Fig. 6, 614; (III) application of any labelling (e.g., Fig. 6, 616); (IV) prevention of any suppressed forming processes (e.g., Fig. 6, 618); and (V) application of any coerced forming processes (e.g., Fig. 6, 620).

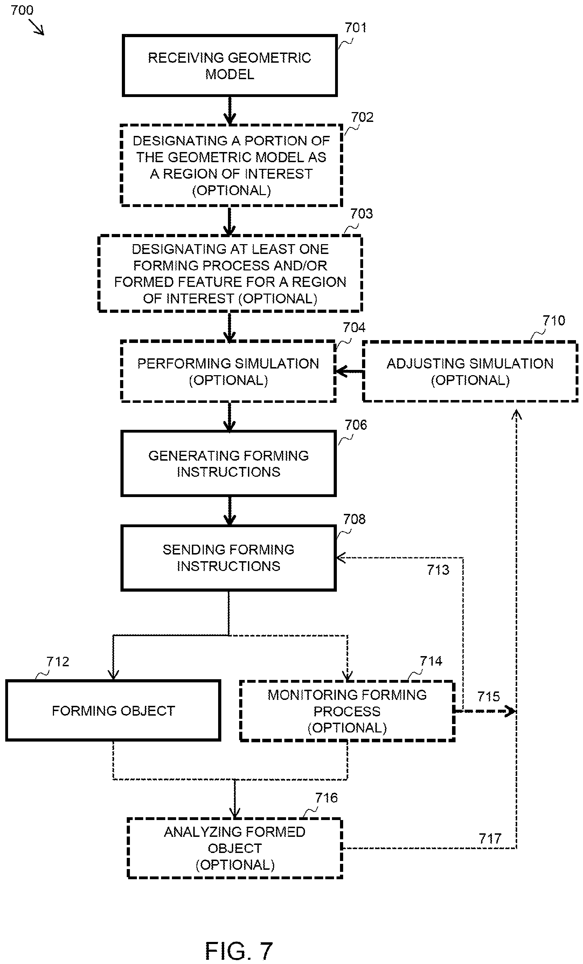

In some embodiments, the generated forming instructions are sent to one or more forming tools (e.g., printer, or welders). Fig. 7 depicts an example flowchart 700 comprising: receiving a geometric model (e.g., 701); an optional operation 702 for designating a portion of the geometric model as an ROI; an optional operation 703 for designating at least one forming (e.g., printing) procedure for an ROI; an optional operation 704 for performing a simulation (e.g., of the forming and/or the formed 3D object); and generating forming instructions (e.g., 706). In some cases, performing the simulation (e.g., Fig. 7, 704), generating forming instructions (e.g., Fig. 7, 706), and/or sending the print instructions (e.g., Fig. 7, 708) is/are performed during at least a portion of the printing. In some cases, performing the simulation (e.g., Fig. 7, 704), creating forming instructions (e.g., Fig. 7, 706), and/or sending the forming instructions (e.g., Fig. 7, 708) is/are performed before and/or during the printing. The simulation may consider the forming process of the 3D object, its physical behavior during and/or after the printing, and any structural correction. The simulation may comprise a computational model. The computational model may comprise the use of mathematics, statistics, physics or computer science. The computational model may consider historical data. The computational model may utilize machine learning. Examples of machine learning can be found in PCT/US17/54043, that is incorporated herein by reference in its entirety. The computational model may consider a physics model. The structural correction may comprise any pre-print correction to the model of the requested 3D object that may result in reduced deformation of the formed 3D object and adherence to the requested dimensionality constraints of the 3D object that is formed. The structural correction may comprise a geometric correction to the geometric model of the requested 3D object. Examples of structural correction can be found in patent application serial number PCT/US16/34857, titled "THREE-DIMENSIONAL PRINTING AND THREE-DIMENSIONAL OBJECTS FORMED USING THE SAME" that was filed on May 27, 2016, PCT/US17/18191, US15/435,065, EP17156707, and PCT/US17/54043, each of which is incorporated herein by reference in its entirety. The physical simulation may comprise thermal and/or mechanical simulation of the 3D object during its formation. Examples of physical simulation can be found in patent application serial number PCT/US16/59781, titled "ADEPT THREE-DIMENSIONAL PRINTING" that was filed on October 31, 2016; PCT/US17/18191; US15/435,065; EP17156707; US10,252,335; and/or PCT/US17/54043; each of which is incorporated herein by reference in its entirety. One or more objects can be formed (e.g., printed) (e.g., Fig. 7, 712) using one or more manufacturing devices (e.g., forming tools such as printers). In some embodiments, formation of the 3D object is optionally monitored (e.g., Fig. 7, 714). The monitoring can comprise using one or more detectors that detect one or more outputs (e.g., thermal, optical, chemical and/or tactile signals). The detector can comprise a sensor. In some cases, monitoring is performed in real-time during formation of the one or more 3D objects. In some cases, monitoring is done before, during and/or after printing. The monitoring may use historical measurements (e.g., as an analytical tool and/or to set a threshold value). Monitoring of one or more aspects of formation can optionally be used to (e.g., directly) modify the forming instructions (e.g., Fig. 7, 713) and/or adjust the one or more simulations (e.g., Fig. 7, 715). For example, one or more thermal detectors may gather (e.g., real time) thermal signals (e.g., real time thermal signature curve) at and/or in a vicinity of an irradiation spot on the target surface during printing of a 3D object. In the vicinity of the irradiation spot may include an area of at least about 1, 1.5, 2, 2.5, 3, 3.5, 4, 4.5, 5, 5.5, 6, 6.5, 7, 7.5, 8, 8.5, 9, 9.5, or 10 FLS (e.g., diameter) of a melt pool. The vicinity of the irradiation spot may include an area between any of the afore-mentioned values (e.g., from about 1 FLS to about 10 FLS, from about 1 FLS to about 5 FLS, from about 5 FLS to about 10 FLS, or from about 1 FLS to about 6 FLS) of irradiation spots. The thermal signals can be compared to a target thermal signal (e.g., target thermal signature curve) during the printing. One or more characteristics of the energy beam (e.g., power density at the target surface, wavelength, cross section, path, irradiation spot size, scan speed, dwell time, intermission time, and/or power of the energy source generating the energy beam) may be altered during formation of the 3D object to adjust the (e.g., real time) thermal signal to (e.g., substantially) match the target thermal signature (e.g., within a (pre-determined) tolerance). In some embodiments, a target thermal signal is obtained from one or more simulations (e.g., Fig. 7, 704). The target signal may be a value, a set of values, or a function (e.g., a time dependent function). The one or more 3D objects may optionally be analyzed (e.g., Fig. 7, 716). In some embodiments, a target (e.g., thermal) signal is obtained from historical data of 3D objects (or portions thereof) that have been analyzed. In some embodiments, the object(s) or portion(s) thereof is analyzed using an inspection tool (e.g., optical camera, x-ray instrument, sensor, and/or a microscope). The microscope may comprise an optical, or an electron microscope. The microscope may comprise a scanning tunneling, scanning electron, or a transmission electron microscope. The measurement may be conducted using a method comprising X-ray tomography, tensile tester, fatigue tester, eStress system, or X-ray diffraction (XRD). The measurements may be conducted at ambient temperature. The roughness can be measured with a surface profilometer. In some cases, the analysis provides data concerning geometry of the object(s). In some cases, the analysis provides data concerning one or more material properties (e.g., porosity, surface roughness, grain structure, internal strain and/or chemical composition) of the object(s). In some embodiments, the analysis data is compared to requested data. For example, a geometry of the printed object(s) may be compared with the geometry of the requested object(s). In some embodiments, the analysis data is used (e.g., Fig. 7, 717) to adjust the simulation (e.g., Fig. 7, 710). The adjusted simulation may be used, for example, in formation of subsequent object(s).

In some embodiments, a modification (e.g., override) of a default forming procedure process (e.g., forming process and/or forming feature) for a given ROI may result in a build error (e.g., failure). A build may comprise a portion of a (e.g., requested) 3D object that fails to form, or is formed to have a deviation from a requested geometry that is beyond a threshold value. In some embodiments, a build error generates a failure condition. The failure condition may prompt an indication of the build error (e.g., on a display, as a message). The failure condition may be recorded (e.g., in a data log), along with associated build parameters (e.g., comprising any designated override processes and/or features for an ROI). In some embodiments, a state of a (e.g., forming) 3D object that is formed according to generated forming instructions is monitored during the formation of the 3D object. In some embodiments, a detected (e.g., nascent) build error causes a modification to the forming instructions that were generated to form the 3D object. In some embodiments, a detected build error considers an estimate of a failure condition of the forming 3D object. In some embodiments, the modification to the forming instructions may comprise a reversion of at least one modified forming process (e.g., reversion to a default forming process) for at least one ROI. In some embodiments, the modification may comprise instructions for adding auxiliary supports and/or one or more marks to at least a portion of at least one ROI. A section of a surface to which auxiliary supports may be added, can be selected and/or revised (e.g., by a user). The angle formed between that surface of the 3D object and the auxiliary supports, may be selected and/or revised (e.g., by a user). The angle formed between a substrate (e.g., a base) and the auxiliary supports, may be selected and/or revised (e.g., by a user). The support may comprise a columnar, tree, plane (e.g., 3D plane), conical, pyramidal, or a point support. The support may comprise a curved section or a planar section. The support may comprise a fillet or chamfer. The support may be a contour support. The contour support may follow a profile (e.g., an edge). The edge may be of at least a portion of the 3D object. The edge may be of a region of interest (e.g., a patch or a volumetric section).

In some embodiments, the geometric model is rendered for display (e.g., on a computer monitor, or as a hard print). The displayed model may comprise a portion (e.g., all) of a 3D object corresponding to the geometric model. The displayed model may comprise an interactive model. The interactive model may facilitate altering the position of at least a portion of the geometric model of the 3D object displayed (e.g., by rotation, movement, and/or mirroring). The interactive model may facilitate altering a dimension of at least a portion of the geometric model of the 3D object displayed (e.g., by enlarging or shrinking it). An interactive model may be configured to enable selection (e.g., designation) of and/or modification to at least a portion to the 3D object, e.g., at least one region of interest (ROI) of the geometric model. One or more (e.g., override) forming procedures may be designated for an ROI. For example, an override may comprise suppression or coercion of any forming (e.g., printing) process, or addition or modification to any forming feature. In some embodiments, a (e.g., interactive) display of a geometric model comprises an indication of any ROIs that have been designated. The indication may comprise a highlight (e.g., a displayed color that differs from a surrounding displayed color) or a (e.g., blinking or pulsing) border. In some embodiments, an interactive display comprises one or more (e.g., 2D and/or 3D) zoom and/or sectional views of the geometric model. The one or more views are pre-determined and/or (e.g., manually) selected (e.g., by a user). In some embodiments, (e.g., views of) the geometric model may be freely rotated and/or panned.

In the example of Fig. 8A, a geometric model 851 of a 3D object is depicted in perspective view. In the example of Fig. 8A, layers (e.g., Fig. 8A, 872, 874, and 876) of the geometric model are depicted. Layers of the geometric model may correspond to (e.g., successive) layers of the formed 3D object (e.g., that formed in a layer-wise manner) and/or slices of the geometric model. In some cases, a layer comprises a layering plane that corresponds to an average layering plane. Fig. 8C shows an example schematic vertical cross section of a portion of a 3D object having layers of hardened material 800, 802, and 804 that are sequentially formed during the 3D forming procedure. Boundaries (e.g., Fig. 8C, 806, 808,810 and 812) between the layers may be visible (e.g., by human eye or using microscopy). The microscopy method may comprise optical microscopy, scanning electron microscopy, or transmission electron microscopy. The boundaries between the layers may be evident by a microstructure of the 3D object. The boundaries between the layers may be (e.g., substantially) planar. The boundaries between the layers may have some irregularity (e.g., roughness) due to the transformation (e.g., melting and or sintering) process (e.g., and formation of any microstructure such as melt pools). An average layering plane (e.g., Fig. 8C, 814) may correspond to a (e.g., imaginary) plane that is an estimated or calculated average. A calculated average may correspond to an arithmetic mean of (e.g., a number of) point locations on a boundary between layers. A calculated average may be calculated using, for example, a linear regression analysis. In some cases, the average layering plane consider deviations from a nominal planar shape.

In some embodiments, designation of at least one ROI comprises a (e.g., manual and/or automatic) selection according to at least one selection filter category. In some embodiments, a selection filter category may comprise an overhang. In the example of Fig. 8A, an overhang ROI (schematically shown as a dashed parallelogram) comprises a point 854 having a normal vector 852 to a surface of the geometric model. In some embodiments, the selection of overhang region(s) of the geometric model comprises a comparison of an angle of the surface(s) of the overhang normal vector(s) with a global vector (e.g., Fig. 8A, angle beta β). The example of Fig. 8A depicts a global vector 850 that is directed (a) in a direction of a (e.g., local) gravitational field vector (Fig. 8A, 860), (b) opposite a vector that is in a direction of layerwise 3D object formation (Fig. 8A, 870), and/or (c) in a direction of a vector normal to a surface of a platform that supports the 3D object and is in a direction opposite to the 3D object (Fig. 8A, 880). In some embodiments, a selection of an overhang ROI may comprise surfaces having a threshold angle with respect to the global vector. For example, surfaces comprising an angle β that is at most about 0.1°, 0.5°, 1°, 5°, 10°, 25°, 30°, 35°, 40°, 45°, or 50° with respect to a global vector. The angle β with respect to the global vector may be between any of the afore-mentioned angles (from about 0.1° to about 50°, from about 0.1° to about 30°, from about 0.1° to about 25°, from about 0.1° to about 45°, from about 0.1° to about 10°, or from about 0.1° to about 20°).

In some embodiments, a selection filter category for designating an ROI comprises a (e.g., intrinsic and/or extrinsic) curvature of (e.g., surfaces of) the geometric model. At times, relatively small features (e.g., indentations and/or holes) of the geometric model may comprise a relatively high curvature. A small feature may be relative to a FLS of a layer thickness of the 3D object. A high curvature may be relative to an average curvature of (e.g., all) features, curves, and/or surfaces of the geometric model. In the example of Fig. 8A, an indent feature having a threshold curvature at the surface 856 is designated as an ROI. In some embodiments, a selection of an ROI considering curvature may comprise features having a threshold curvature. For example, features of the geometric model comprising curvature corresponding to a radius of curvature that is at most about 20 millimeters (mm), 10 mm, 8 mm, 5 mm, 2 mm, 1 mm, or 0.5 mm. The radius of curvature may be between any of the afore-mentioned radius of curvature values (e.g., from at most about 20 mm to about 0.5, about 20 mm to 5 mm, or about 5 mm to about 0.5 mm).

In some embodiments, a 3D object may comprise an interior portion ROI (e.g., excluding a surface of the formed 3D object). The interior portion ROI of the 3D object may comprise a depth from a (e.g., formed) surface of the 3D object. In some embodiments, an interior portion of the 3D object is designated (e.g., formed) such that an offset distance from an external surface of the formed 3D object is maintained. Fig. 8A depicts a designated ROI (e.g., according to selected surface 858) on a face of the geometric model 851. Fig. 8B depicts a perspective view of a portion 821 of a geometric model that comprises an interior ROI 820. In the example of Fig. 8B the interior ROI has a depth 824 relative to the surface of geometric model. In the example of Fig. 8B a (e.g., proximate) extent of the interior ROI to the surface of the geometric model is at an offset distance 822. In some embodiments, an offset distance for an interior ROI is manually specified. In some embodiments, an offset distance for an interior ROI is automatically specified (e.g., predetermined). For example, an offset distanced may be at least about 0.1 millimeters (mm), 0.2 mm, 0.5 mm, 1 mm, 5 mm, 10 mm or 20 mm. the offset distance may be any value between the afore-mentioned values (e.g., from about 0.1 mm to about 20 mm, from about 0.1 mm to about 5 mm, or from about 5 mm to about 20 mm). In some embodiments a dimension (e.g., depth) of an interior ROI is specified considering an offset distance.

In some embodiments, a selection filter category for designating an ROI comprises considering (e.g., a portion of) the 3D object as used in an environment for its intended purpose. For example, an external portion of a 3D object (e.g., exposed to an environment) may be formed (e.g., using a given forming process) to have a relatively smooth surface (e.g., low Ra value). The low-Ra value can be of at most about 1 micrometer (µm), 5 µm , 10 µm , 20 µm, 50 µm, or 100 µm. The low Ra value can be any value between the afore-mentioned values (e.g., from about 1 µm to about 100 µm , from about 1 µm to about 20 µm , or from about 20 µm to about 100 µm). Relatively smooth may be compared to an external portion of the 3D object that is (e.g., less) exposed to the environment (e.g., obstructed and/or hidden surface). The rougher portion may have a relative higher Ra value of at least about (low-Ra)*2, (low-Ra)*5, (low-Ra)*10, or (low-Ra)*50. The rougher portion may have a relatively higher Ra value of at least about 200 µm , 500 µm, 1000 µm , or 5000 µm. The relatively higher Ra value may be between any value of the afore-mentioned values (e.g., from about 200 µm to about 5000 µm , from about 200 µm to about 500 µm, or from about 500 µm to about 5000 µm). For example, a 3D object comprising a conduit may be formed to have a relatively smooth surface (e.g., having a low Ra value) on those portions over which a material (e.g., fluid, particulate material, and/or gas) flows during an intended use of the 3D object. A supporting structure of the conduit may be relatively rough surface (e.g., having a higher Ra value).

In some embodiments, one or more portions of the 3D object are identified (e.g., pre-determined) as "critical" portions. A critical portion of a 3D object may be prone to substantial damage in an environment in which it is used. Substantial damage may render the 3D object unfit to its intended use. A critical portion of a 3D object may undergo, in an environment in which it is used, a relatively high induced stress, strain, and/or temperature gradient. The critical portion of the 3D object may undergo, in an environment in which it is used, cracking, internal deformation (e.g., dislocations) and/or wear (e.g., abrasion). Relatively high may be in relation to other portions of the 3D object. Relatively high may be to an extend in which the 3D object may be unfit for its intended use. In some embodiments, a portion of a 3D object that is identified (e.g., designated) as a critical portion may be formed to have a different material property than (e.g., remaining) other portions of the 3D object. A different material property may comprise a difference in a microstructure, a grain structure, a crystal structure (e.g., size and/or orientation), density, and/or a metallurgical structure. A different material property may comprise an increased ductility (e.g., where increased is in relation to remaining portions of the 3D object). For example, the critical portion of the 3D object may be formed to have a reduced (e.g., residual) stress and/or strain in at least one direction. Reduced may be relative to (e.g., remaining) other portions of the formed 3D object. In some embodiments, formation of a (e.g., at least one) critical portion of a 3D object comprises annealing.

In some embodiments, a portion of a geometric model that is designated as an ROI may be generated considering a relative comparison. A relative comparison may comprise at least one ROI that is specified considering a relationship to one or more locations (e.g., points) on the geometric model. For example, a characteristic of an initial (e.g., "seed") location on a surface of the geometric model may be selected (e.g., manually and/or automatically). A seed location may comprise a (e.g., setpoint) value of the characteristic against which values of neighboring locations (e.g., in a neighborhood) are compared. In some embodiments, an extent of a neighborhood may be configured (e.g., automatically and/or manually by a user). For example, an extent of a neighborhood may be specified by a FLS of the 3D object, an FLS of a layer (e.g., height), and/or by selections of a region on the geometric model (e.g., surface). An extent of a neighborhood may be specified automatically and/or manually (e.g., through an interaction with the geometric model, e.g., a selection of the neighborhood on the geometric model, for example using visual means). A manual interaction may be mediated by a user interface, comprising an input by an input device (e.g., keyboard, mouse, stylus, or touch screen). The input device may be a non-transitory device such as a paper and/or a slate, e.g., that is subsequently scanned. An extent of a neighborhood may be specified automatically. For example, an extent of a neighborhood may be calculated (e.g., determined) considering a flood fill procedure (e.g., algorithm). The flood fill algorithm (e.g., seed fill algorithm) can determine an area connected to a given node in a multi-dimensional array. The flood fill algorithm may facilitate designating connected and/or similarly-characterized areas, with a different characteristic. The characteristic may comprise a threshold. A flood algorithm may find (e.g., all) points that are within a threshold (e.g., threshold value or function) of a seed point value. For example, a seed value may comprise an angle formed by a normal surface vector and the global vector, at the seed location. A flood fill algorithm may consider (e.g., each) neighboring (e.g., mesh) point. If a considered point is within the threshold value, then that value may be included in a result (e.g., the ROI) of a flooded section. A flood fill algorithm can be iterative. A (e.g., each) neighboring (e.g., surface) point to the flooded section can be considered for each iteration. The iterative process may continue until no additional (e.g., qualifying) surface points are found.

In some embodiments, a relative characteristic (e.g., of the neighborhood comparison) may comprise a comparison of (I) (e.g., intrinsic and/or extrinsic) curvature values or (II) overhang (e.g., angle and/or width) values. The values may comprise data values associated with (e.g., a mesh of) the geometric model. In some embodiments, a comparison of curvature values may comprise a comparison of Gaussian curvature, mean curvature, (e.g., sectional) normal curvature, curvature of curves, or radii of curvature. In some embodiments, a (e.g., neighborhood) comparison of overhang angles comprises a vector difference with respect to normal vectors of respective points on a surface of the geometric model. In some embodiments, a comparison of overhang width comprises a comparison on step lengths. A step length of a given layer may comprise a (e.g., lateral) extent by which the given layer exceeds an outer portion of an (e.g., immediately) underlying layer.

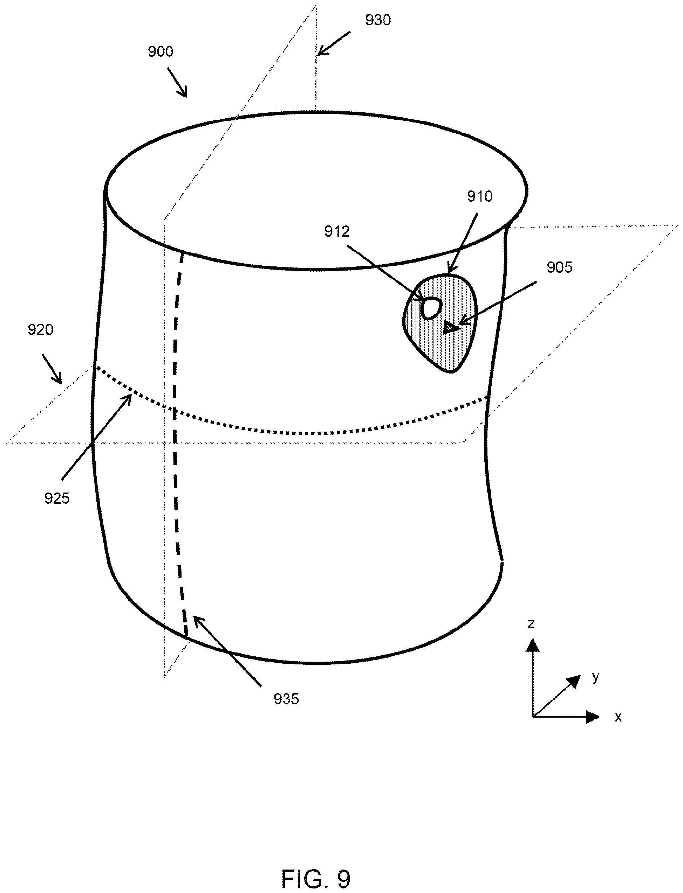

In the example of Fig. 9, an ROI 910 is designated for a geometric model 900. In some embodiments, an ROI is designated according to a relative selection (e.g., based on a seed location). In the example of Fig. 9, an ROI is designated according to a seed location 905. The selected portion of the geometric model (e.g., the ROI 910) may be generated considering a comparison of a characteristic value of the seed location against values of neighboring locations (e.g., according to a flood fill algorithm). The characteristic value of the seed location may comprise an overhang angle, an overhang width, or a (e.g., intrinsic and/or extrinsic) curvature value. A comparison with the seed location value may comprise a selection of neighboring points that have a characteristic value that is within a threshold of the seed location value. For example, selection considering a threshold value may comprise a range of values that is: (i) from a lower value to an upper value, (ii) below an upper value, (iii) above a lower value, or (iv) any combination of the above. In some embodiments, a selection of an overhang ROI may comprise surfaces having a threshold angle with respect to the seed location angle. The seed location angle may be that which is formed by a surface normal vector and the global vector. For example, the neighborhood ROI may comprise (e.g., overhang) surfaces comprising a (e.g., relative) angle that is at most about 0.1°, 0.5°, 1°, 5°, 10°, 30°, or 50° with respect to the normal vector at the point of the seed location (e.g., a vector normal to the surface at the point). The relative angle may be between any of the afore-mentioned angles (from about 0.1 ° to about 50°, from about 0.1° to about 10°, or from about 10° to about 50°).

In some embodiments, an ROI designated for a neighborhood comprises at least one portion that is excluded. In the example of Fig. 9, a portion 912 does not form a part of the ROI 910. In some embodiments, any values (of a neighborhood) for a geometric model that do not satisfy a selection criterion are not included in a given ROI. An excluded portion may formed by an ROI that encompasses, but does not include, the portion.

In some embodiments, an ROI may be designated according to a curvature of a surface and/or a line. A curvature of a line (e.g., on a surface of the geometric model) may be formed by the intersection of the (e.g., surface of the) geometric model with a plane. In some embodiments, a (e.g., sectional) curve may be formed by a plane that is perpendicular to a global vector, and/or a plane having a normal vector that is perpendicular to the global vector. In the example of Fig. 9, an intersection of the surface of the geometric model 900 and a (e.g., x-y) plane 920 forms a (e.g., sectional) curve 925, and an intersection of the surface of the geometric model 900 and a (e.g., z-y) plane 930 forms a (e.g., sectional) curve 935. The orientation of the 3D object during its formation may be chosen such that during formation the x-y plane is normal to the global vector and/or the z-y plane is oriented parallel to the global vector. In some embodiments, an ROI is designated according to a threshold curvature.

At times, an overhang structure (also referred to herein as "overhang" or "overhang region") can refer to a portion of a 3D object that protrudes a distance from previously-transformed portion of the 3D object. The previously-transformed portion may be a portion of the 3D object that is hardened (e.g., solidified or partially solidified). The previously-transformed portion may be referred to herein as a "rigid portion." The rigid portion may be referred to as a "core." The overhang structure may comprise a surface that has a vector at an angle of about 45 degrees or less, with respect to a global vector (which vector is normal to the surface at a point). An overhang structure may comprise (e.g., correspond to) a ceiling (e.g., cavity ceiling), bottom (e.g., cavity bottom), protrusion, ledge, blade, wing, hanging structure, undercut, projection, protuberance, balcony, wing, leaf, extension, shelf, jut, hook, or step of a 3D object. The overhang may be a ledge off an edge of a previously-transformed portion of the 3D object. The overhang may be free of supports during formation (e.g., printing). For example, the overhang may be formed on (e.g., attached to) a previously-transformed portion of the 3D object. A non-supported overhang may be referred to as "free-floating" in that the overhang may "float" anchorlessly within pre-transformed material (e.g., powder) during printing. A non-supported overhang may be referred to as "non-anchored" in that the overhang may not be directly connected to the platform. The previously-transformed portion may comprise one or more supports (e.g., that are coupled with the platform). The overhang may be connected to another portion of the 3D object in one of its sides (e.g., and otherwise not anchored or connected). A surface (e.g., bottom surface) of an overhang may have a surface roughness at or below a prescribed roughness measurement (e.g., Ra value). In some embodiments, the skin is a "bottom" skin, which can correspond to a skin on a bottom of an overhang with respect to a platform surface during a printing operation. Bottom may be in the direction of the global vector. In some cases, the bottom skin of an overhang has a different surface quality than other portions of the 3D object. The surface quality can include a surface roughness, appearance, reflectivity, specularity, and/or shininess. In some cases, the bottom skin of an overhang has (e.g., substantially) the same surface quality as other portions of the 3D object.

Fig. 10 shows an example schematic vertical cross section view of a model object 1000 indicating a layerwise process for forming an overhang. A layerwise printing of an overhang (e.g., Fig. 10, 1002) can comprise sequentially stacking multiple layers of hardened material in accordance with a stacking vector (e.g., Fig. 10, "Z"). A stacking vector may be in a direction of layer-wise formation of the 3D object (e.g. Fig. 8A, 870). The overhang can be formed layerwise from an edge of a rigid portion (e.g., Fig. 10, 1004) of the object. The overhang can be formed in segments, with each segment formed from one or more layers of pre-transformed material. An overhang segment may have a step height (e.g., Fig. 10: h₁, h₂, h₃, h₄ and h₅). The step height (h) of a layer can correspond to a (e.g., average) height of a layer of hardened material. Each layer can include a layer interior portion (e.g., Fig. 10, 1006) and a layer exterior portion (e.g., Fig. 10, 1008). The layer interior portions of the overhang (e.g., Fig. 10, 1002) can together form a skin (e.g., bottom skin) of the overhang. Each layer of the overhang can be (e.g., substantially) parallel to a corresponding (e.g., average) layering plane (e.g., Fig. 10: p₁, p₂, p₃, p₄ and p₅). Each (e.g., average) layering plane may be (e.g., substantially) parallel with respect to each other and/or orthogonal with respect to the stacking vector. Each layer of the overhang can extend from a previously formed (e.g., underlying) layer by a step length (e.g., Fig. 10: s₁, s₂, s₃, s₄ and s₅). An exposed surface (e.g., bottom surface) of each layer of the overhang can be at a step angle (e.g., Fig. 10: α₁, α₂, α₃, α₄ and α₅) from a corresponding layering plane. An overhang layer step length (s) (e.g., overhang width) may be associated with the overhang layer step height (h) and step angle (α). An overhang layer step length may be determined according to the equation s = h/tan(α).

In some embodiments, an ROI may comprise (e.g., overhang) surfaces comprising an overhang width that is at least a threshold value (e.g., Fig. 10, 1010). A threshold value of an overhang width may be at least about 0.5* FLS of the layer height (`h'), 0.75*FLS of `h', 1*FLS of `h', 1.5*FLS of `h', 2*FLS of `h', or 4*FLS of `h'. The threshold value of overhang width may be between any of the afore-mentioned values (e.g., from about 0.5*FLS of `h' to about 4*FLS of `h', from about 0.5*FLS of `h' to about 2*FLS of `h', or from about 2*FLS of `h' to about 4*FLS of `h'). In some embodiments, an ROI may comprise (e.g., overhang) surfaces comprising an overhang width that is at least about 20 micrometers (µm), 50 µm, 100 µm, 500 µm, 750 µm, 1 millimeter (mm), 2 mm, or 5 mm. The threshold value of the overhang width may be between any of the afore-mentioned values (from about 20 µm to about 5 mm, from about 20 µm to about 1 mm, or from about 1 mm to about 5 mm).

At times, a formed (e.g., printed) portion of the 3D object may (e.g., substantially) deviate from the model of the 3D object during and/or after the forming (e.g., 3D printing), e.g., during and/or after the formation of the hardened material. Substantially deviate may be in relation to the intended purpose of the 3D object. For example, manufacturing requirements may dictate that a particular dimension of the 3D object is within a specified threshold (e.g., tolerance). Such deviation may comprise a deformation.

In some embodiments, the 3D object is generated with respect to a (e.g., virtual) model of a requested 3D object. The 3D object model may comprise a simulated model. The model may be a computer-generated model. The 3D object model may comprise a (e.g., 3D object) surface. In some embodiments, the generated 3D object may be generated with the accuracy of at least about 5 µm, 10 µm, 15 µm, 20 µm, 25 µm, 30µm, 35µm, 40µm, 45µm, 50µm, 55µm, 60µm, 65µm, 70µm, 75µm, 80 µm, 85 µm, 90 µm, 95µm, 100µm, 150µm, 200µm, 250µm, 300µm, 400µm, 500µm, 600 µm, 700 µm, 800 µm, 900µm, 1000µm, 1100µm, or 1500µm with respect to a model of the requested 3D object. With respect to a model of the requested 3D object, the generated 3D object may be generated with the accuracy of any accuracy value between the afore-mentioned values (e.g., from about 5µm to about 100µm, from about 15µm to about 35µm, from about 100µm to about 1500µm, from about 5µm to about 1500µm, or from about 400µm to about 600µm). The 3D object (e.g., solidified material) that is generated for the customer can have an average deviation value from the intended dimensions of at most about 0.5 microns (µm), 1 µm, 3 µm, 10 µm, 30 µm, 100 µm, 300 µm or less. The deviation can be any value between the afore-mentioned values. The average deviation can be from about 0.5 µm to about 300 µm, from about 10 µm to about 50 µm, from about 15 µm to about 85 µm, from about 5 µm to about 45 µm, or from about 15 µm to about 35 µm. A tolerance (e.g., dimensional accuracy) can be determined from a deviation of the formed 3D object from a requested (e.g., intended) dimension(s) of the 3D object. The 3D object can have a deviation from the intended dimensions in one or more directions (e.g., in a specific direction), according to the formula Dᵥ +L/K_{dv}, wherein Dᵥ is a deviation value, L is the length of the 3D object in a specific direction, and K_{dv} is a constant. Dᵥ can have a value of at most about 300 µm, 200 µm, 100 µm, 50 µm, 40 µm, 30 µm, 20 µm, 10 µm, 5 µm, 1 µm, or 0.5 µm. Dᵥ can have any value between the afore-mentioned values (e.g., from about 0.5 µm to about 300 µm, from about 10 µm to about 50 µm, from about 15 µm to about 85 µm, from about 5 µm to about 45 µm, or from about 15 µm to about 35 µm). K_{dv} can have a value of at most about 3000, 2500, 2000, 1500, 1000, or 500. K_{dv} can have any value between the afore-mentioned values (e.g., from about 3000 to about 500, from about 1000 to about 2500, from about 500 to about 2000, from about 1000 to about 3000, or from about 1000 to about 2500).

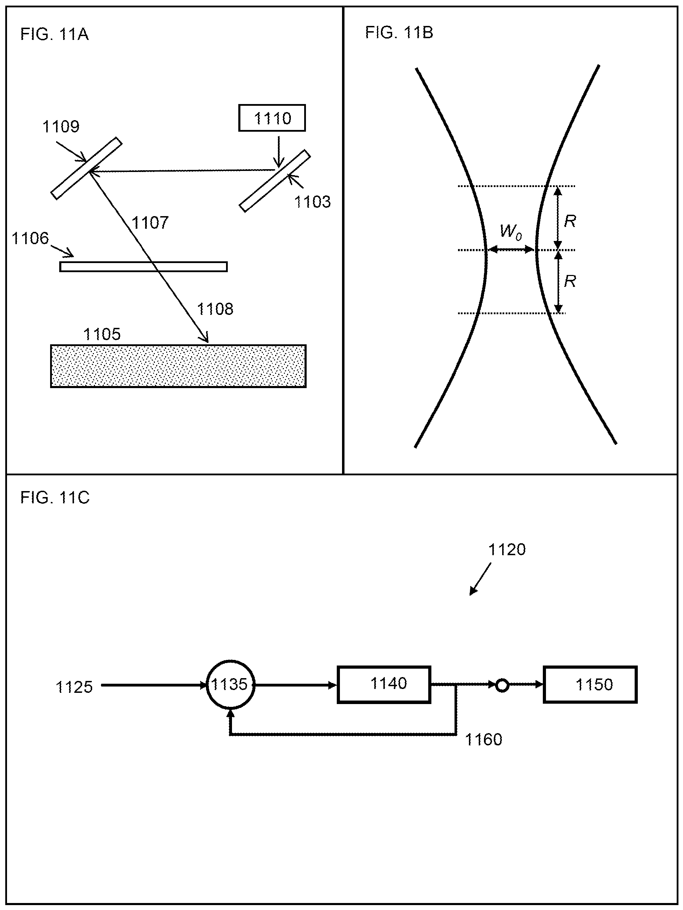

In some embodiments, the printer includes an optical system. The optical system may be used to control the one or more energy beams. The energy beams may comprise a single mode beam (e.g., Gaussian beam) or a multi-mode beam. The optical system may be coupled with or separate from the enclosure. The optical system may be enclosed in an optical enclosure (e.g., Fig. 1, 131). Fig. 11A shows an example of an optical system in which an energy beam is projected from the energy source 1110, and is deflected by two mirrors 1103 and 1109, and travels through an optical element 1106 prior to reaching target 1105 (e.g., an exposed surface of a material bed comprising a pre-transformed material and/or hardened or partially hardened material such as from a previous transformation operation). The optical system may comprise more than one optical element. In some cases, the optical element comprises an optical window (e.g., for transmitting the energy beam into the enclosure). In some embodiments, the optical element comprises a focus altering device, e.g., for altering (e.g., focusing or defocusing) an incoming energy beam (e.g., Fig. 11A, 1107) to an outgoing energy beam (e.g., Fig. 11A, 1108). The focus altering device may comprise a lens. In some embodiments, aspects of the optical system are controlled by one or more controllers of the printer. For example, one or more controllers may control one or more mirrors (e.g., of galvanometer scanners) that directs movement of the one or more energy beams in real time. Examples of various aspects of optical systems and their components can be found in U.S. patent application number 15/435,128, filed on February 16, 2017, titled "ACCURATE THREE-DIMENSIONAL PRINTING," PCT/US17/18191, EP17156707.6, PCT/US17/64474, and in PCT/US18/12250, each of which is entirely incorporated herein by reference.

In some cases, the optical system modifies a focus of the one or more energy beams at the target surface. In some embodiments, the energy beam is (e.g., substantially) focused at the target surface. In some embodiments, the energy beam is defocused at the target surface. An energy beam that is focused at the target surface may have a (e.g., substantially) minimum spot size at the target surface. An energy beam that is defocused at the target surface may have a spot size at the target surface that is (e.g., substantially) greater than the minimum spot size, for example, by a pre-determined amount. For example, a Gaussian energy beam that is defocused at the target surface can have spot size that is outside of a Rayleigh distance from the energy beams focus (also referred to herein as the beam waist). Fig. 11B shows an example profile of a Gaussian beam as a function of distance. The target surface of a focused energy beam may be within a Rayleigh distance (e.g., Fig. 11B, R) from the beam waist (e.g., Fig. 11B, W₀).

In some cases, one or more controllers control the operation of one or more components of a manufacturing device. For example, one or more controllers may control one or more aspects (e.g., movement and/or speed) of a layer forming apparatus. One or more controllers may control one or more aspects of an energy source (e.g., energy beam power, scan speed and/or scan path). One or more controllers may control one or more aspects of an energy beam optical system (e.g., energy beam scan path and/or energy beam focus). One or more controllers may control one or more operations of a gas flow system (e.g., gas flow speed and/or direction). In some embodiments, one or more controllers control aspects of multiple components or systems. For example, a first controller can control aspects of the energy source(s), a second controller can control aspects of a layer forming apparatus(es), and a third controller can control aspects of a gas flow system. In some embodiments, one or more controller controls aspect of one component or system. For example, multiple controllers may control aspects of an optical system. For instance, a first controller can control the path of the one or more energy beams, a second controller may control scan speed of the one or more energy beams, and a third controller may control a focus of the one or more energy beams. As another example, multiple controllers may control aspects of an energy source. For instance, a first controller can control the power of one or more energy beams, a second controller may control pulsing (e.g., pulse versus continuous, or pulse rate) of the one or more energy beams, and a third controller may control a power profile over time (e.g., ramp up and down) one or more energy beams. At times, the first controller, second controller, and the third controller are the same controller. At times, at least two of the first controller, second controller, and the third controller are different controllers. Any combination of one or more controllers may control aspects of one or more components or systems of a printer. The one or more controllers may control the operations before, during, and/or after the printing, or a portion of the printing (irradiation operation).

In some instances, the controller(s) can include (e.g., electrical) circuitry that is configured to generate output (e.g., voltage signals) for directing one or more aspects of the apparatuses (or any parts thereof) described herein. Fig. 11C shows a schematic example of a (e.g., automatic) controller (e.g., a control system, or a controller) 1120 that is programmed or otherwise configured to facilitate formation of one or more 3D objects. The controller may comprise an electrical circuitry. The controller may comprise a connection to an electrical power. The controller (e.g., Fig. 11C, 1120) can comprise a subordinate-controller 1140 for controlling formation of at least one 3D object (e.g., Fig. 11C, 1150). The controller may comprise one or more loop schemes (e.g., open loop, feed-forward loop and/or feedback loop). In the example of Fig. 11C, the controller optionally includes feedback control loop 1160. The subordinate-controller may be an internal-controller. The controller (e.g., or subordinate controller) may comprise a PID loop. The subordinate-controller can be a second-controller as part of the first controller. The subordinate-controller can be a linear controller. The controller may be configured to control one or more components of the forming tool. The controller may be configured to control a transforming agent generator (e.g., an energy source, a dispenser of the binding agent and/or reactive agent), a guidance mechanism (e.g., scanner and/or actuator), at least one component of a layer dispenser, a dispenser (e.g., of a pre-transformed material and/or a transforming agent), at least one component of a gas flow system, at least one component of a chamber in which the 3D object is formed (e.g., a door, an elevator, a valve, a pump, and/or a sensor). The controller (e.g., Fig. 11C, 1120) may be configured to control (e.g., in real time, during at least a portion of the 3D printing) a controllable property comprising: (i) an energy beam power (e.g., delivered to the material bed), (ii) temperature at a position in the material bed (e.g., on the forming 3D object), (iii) energy beam speed, (iv) energy beam power density, (v) energy beam dwell time, (vi) energy beam irradiation spot (e.g., on the exposed surface of the material bed), (vii) energy beam focus (e.g., focus or defocus), or (viii) energy beam cross-section (e.g., beam waist). The controller (e.g., Fig. 11C, 1120) may be configured to control (e.g., in real time, during at least a portion of the 3D printing) a controllable (e.g., binding and/or reactive agent) property comprising: (i) strength (e.g., reaction rate), (ii) volume (e.g., delivered to the material bed), (iii) density (e.g., on a location of the material bed), or (iv) dwell time (e.g., on the material bed). The controllable property may be a control variable. The control may be to maintain a target parameter (e.g., temperature) of one or more 3D objects being formed. The target parameter may vary in time (e.g., in real time) and/or in location. The location may comprise a location at the exposed surface of the material bed. The location may comprise a location at the top surface of the (e.g., forming) 3D object. The target parameter may correlate to the controllable property. The (e.g., input) target parameter may vary in time and/or location in the material bed (e.g., on the forming 3D object). The subordinate-controller may receive a pre-determined power per unit area (of the energy beam), temperature, and/or metrological (e.g., height) target value. For example, the subordinate-controller may receive a target parameter (e.g., Fig. 11C, 1125) (e.g. temperature) to maintain at least one characteristic of the forming 3D object (e.g., dimension in a direction, and/or temperature). The controller can receive multiple (e.g., three) types of target inputs: (i) characteristic of the transforming agent (e.g., energy beam power), (ii) temperature, and (iii) geometry. Any of the target input may be user defined. The geometry may comprise geometrical object pre-print correction. The geometric information may derive from the 3D object (or a correctively deviated (e.g., altered) model thereof). The geometry may comprise geometric information of a previously printed portion of the 3D object (e.g., comprising a local thickness below a given layer, local build angle, proximity to an edge on a given layer, or proximity to layer boundaries). The geometry may be an input to the controller (e.g., via an open loop control scheme). Some of the target values may be used to form 3D forming instructions for generating the 3D object (e.g., Fig. 11C, 1150). The forming instructions may be dynamically adjusted in real time. The controller may monitor (e.g., continuously) one or more signals from one or more sensors for providing feedback (e.g., Fig. 11C, 1160). For example, the controller may monitor the energy beam power, temperature of a position in the material bed, and/or metrology (e.g., height) of a position on the target surface (e.g., exposed surface of a material bed). The position on the target surface may be of the forming 3D object. The monitor may be continuous or discontinuous. The monitor may be in real-time during the 3D printing. The monitor may be using the one or more sensors. The forming instructions may be dynamically adjusted in real time (e.g., using the signals from the one or more sensors). A variation between the target parameter and the sensed parameter may be used to estimate an error in the value of that parameter (e.g., Fig. 11C, 1135). The variation (e.g., error) may be used by the subordinate-controller (e.g., Fig. 11C, 1140) to adjust the forming instructions. The controller may control (e.g., continuously) one or more parameters (e.g., in real time). The controller may use historical data (e.g., for the parameters). The historical data may be of previously printed 3D objects, or of previously printed layers of the 3D object. Configured may comprise built, constructed, designed, patterned, or arranged. The hardware of the controller may comprise the control-model. The control-model may be linear or non-linear. For example, the control-model may be non-linear. The control-model may comprise linear or non-linear modes. The control-model may comprise free parameters which may be estimated using a characterization process. The characterization process may be before, during and/or after the 3D printing. The control-model may be wired to the controller. The control model can be configured into the controller (e.g., before and/or during the 3D printing). Examples of a controller, subordinate controller, and/or control-model can be found in PCT/US16/59781; PCT/US17/18191, US15/435,065, EP17156707, US10,252,335, and PCT/US17/54043, each of which is incorporated herein by reference in its entirety.

In some embodiments, a 3D object includes one or more auxiliary features. The auxiliary feature(s) can be supported by the material (e.g., powder) bed. The term "auxiliary feature" or "support structure" as used herein, generally refers to a feature that is part of a printed 3D object, but is not part of the desired, intended, designed, ordered, modeled, or final 3D object. Auxiliary feature(s) (e.g., auxiliary support(s)) may provide structural support during and/or subsequent to the formation of the 3D object. The 3D object may have any number of supports. The supports may have any shape and size. In some examples, the supports comprise a rod, plate, wing, tube, shaft, pillar, or any combination thereof. In some cases, the supports support certain portions of the 3D object and does not support other portions of the 3D object. In some cases, the supports are (e.g., directly) coupled to a bottom surface the 3D object (e.g., relative to the platform). In some embodiments, the supports are anchored to the platform. In some examples, the supports are used to support portions of the 3D object having a certain (e.g., complex or simple) geometry. The 3D object can have auxiliary feature(s) that can be supported by the material bed (e.g., powder bed) and not touch and/or anchor to the substrate (e.g., base), container accommodating the material bed, or the bottom of the enclosure. The 3D part (3D object) in a complete or partially formed state can be completely supported by the material bed (e.g., without touching the substrate (e.g., base), container accommodating the powder bed, or enclosure). The substrate may comprise a base or a platform (e.g., building platform). The 3D object in a complete or partially formed state can be completely supported by the powder bed (e.g., without touching anything except the powder bed). The 3D object in a complete or partially formed state can be suspended anchorlessly in the powder bed, without resting on and/or being anchored to any additional support structures. In some cases, the 3D object in a complete or partially formed (e.g., nascent) state can freely float (e.g., anchorlessly) in the material bed. Auxiliary feature(s) may enable the removal of energy from the 3D object that is being formed. In some instances, the auxiliary support is a scaffold that encloses the 3D object or part thereof. The scaffold may comprise lightly sintered or lightly fused powder material. In some examples, the 3D object may not be anchored (e.g., connected) to the platform and/or walls that define the material bed (e.g., during formation). At times, the 3D object may not touch (e.g., contact) to the platform and/or walls that define the material bed (e.g., during formation). The 3D object be suspended (e.g., float) in the material bed. The scaffold may comprise a continuously sintered (e.g., lightly sintered) structure that is at most 1 millimeter (mm), 2mm, 5mm or 10mm. The scaffold may comprise a continuously sintered structure having dimensions between any of the aforementioned dimensions (e.g., from about 1mm to about 10mm, from about 5mm to about 10 mm, or from about 1 mm to about 5mm). In some examples, the 3D object may be printed without a supporting scaffold. The supporting scaffold may engulf the 3D object. The supporting scaffold may float in the material bed. The printed 3D object may be printed without the use of auxiliary features, may be printed using a reduced number of auxiliary features, or printed using spaced apart auxiliary features. Examples of an auxiliary support structure can be found in Patent Application Serial No. PCT/US15/36802 filed on June 19, 2015, titled "APPARATUSES, SYSTEMS AND METHODS FOR THREE-DIMENSIONAL PRINTING," which is entirely incorporated herein by reference in its entirety. The printed 3D object may comprise a single auxiliary support mark. The single auxiliary feature (e.g., auxiliary support or auxiliary structure) may be a platform (e.g., a substrate such as a base or building platform), or a mold. The auxiliary support may be adhered to the platform or mold. In some embodiments, the 3D object comprises a layered structure indicative of 3D forming procedure that is devoid of one or more auxiliary support features or one or more auxiliary support feature marks that are indicative of a presence or removal of the one or more auxiliary support features. Examples of auxiliary features comprise heat fins, wires, anchors, handles, supports, pillars, columns, frame, footing, scaffold, flange, projection, protrusion, mold (a.k.a. mould), or other stabilization features.

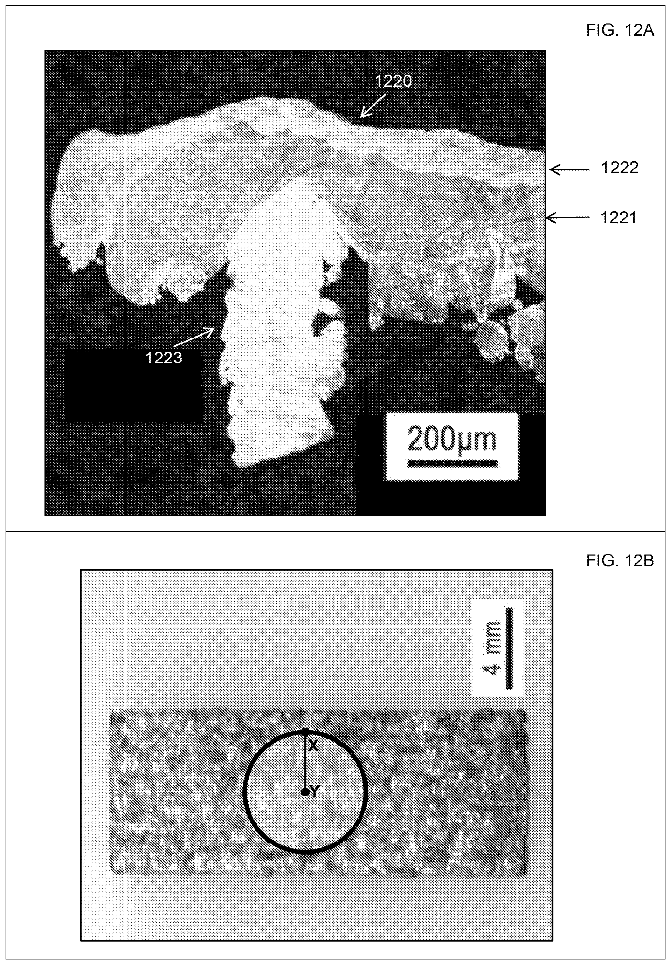

In some cases, the supports (or a portion thereof) are removed from the 3D object after printing. Removal can comprise machining (e.g., cutting, sawing and/or milling), polishing (e.g., sanding) and/or etching. Removal can comprise beam (e.g., laser) etching or chemical etching. In some cases, the supports (or a portion thereof) remain in and/or on the 3D object after printing. In some cases, the one or more supports leave respective one or more support marks on the 3D object that are indicative of a presence or removal of the one or more supports. Fig. 12A shows an example of a vertical cross section of a 3D object that includes a main portion 1220 coupled with a support 1223. In some cases, the main portion comprises multiple layers (e.g., 1221 and 1222) that were sequentially added (e.g., after formation of the support) during a printing operation. In some cases, the support causes one or more layers of the portion of the 3D object to deform during printing. Sometimes, the deformed layers form a detectable (e.g., visible) mark. The mark may be a region of discontinuity in the layer, such as a microstructure discontinuity and/or an abrupt microstructural variation (e.g., Fig. 12A). The discontinuity in the microstructure may be explained by an inclusion of a foreign object (e.g., the support). The microstructural variation may include (e.g., abruptly) altered melt pools and/or grain structure (e.g., crystals, e.g., dendrites) at or near the attachment point of the support. The microstructure variation may be due to differential thermal gradients due to the presence of the support. The microstructure variation may be due to a forced melt pool and/or layer geometry due to the presence of the support. The discontinuity may be at an external surface of the 3D object. The discontinuity may arise from inclusion of the support to the surface of the 3D object (e.g. and may be visible as a breakage of the support when removed from the 3D object (e.g., after printing). In some instances, the 3D object includes two or more support and/or support marks. If more than one support is used, the supports may be spaced apart by a (e.g., pre-determined) distance. Fig. 12B shows an example 3D object having points X and Y on a surface of the 3D object. In some embodiments, X is spaced apart from Y by a support spacing distance. For example, a sphere of radius XY that is centered at X may lack one or more supports (or one or more support marks).

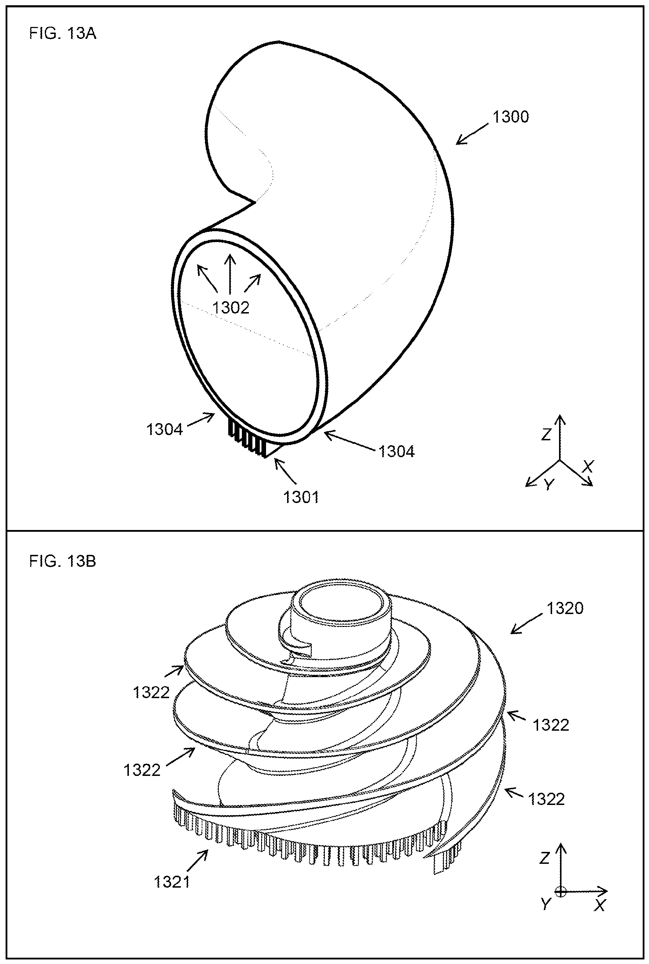

In some embodiments, an overhang portion of a 3D object may be oriented at a shallow, steep and/or intermediate angle with respect to the target surface, layering plane, and/or the direction perpendicular to the 3D object's growth direction, during printing. Fig. 13A shows a perspective view of an example object 1300 having a toroid shape (including a support member 1301, which may be removed from the object, e.g., after the printing). An overhang can include (e.g., correspond to) a cavity ceiling (e.g., 1302) and/or a cavity bottom (e.g., 1304) of the object. The overhang (e.g., cavity ceiling and/or cavity bottom) may be free of auxiliary supports during the printing. For example, the overhang may be supported by (e.g., coupled to) a previously transformed (e.g., hardened) material of the (e.g., requested) object, during the printing. Fig. 13B shows a perspective view of an example object 1320 having an impeller shape (including a support member 1321, which may be removed from the 3D object, e.g., after its printing). An overhang can include (e.g., correspond to) a bottom portion (e.g., bottom surface) of a ledge (e.g., 1322) (e.g., blade) of the object. The overhang (e.g., ledge or blade) may be free of auxiliary supports during its printing. For example, the overhang may be supported by previously transformed (e.g., hardened) material of the object and/or the material bed (e.g., powder) during its printing. The overhang may be supported in only one of its sides (e.g., to the core of the impeller 1320) during its formation (e.g., printing). Forming (e.g., printing) process parameters, such as one or more characteristics of the energy beam(s) (e.g., power/energy, power density at the target surface, dwell time, scan speed, focus, and/or beam width), may be adjusted depending on whether the overhang being printed is at a shallow, steep or intermediate angle relative to the target surface, layering plane, and/or a direction perpendicular to the direction of build. An adjustment may be in order to reduce (e.g., eliminate) deformation of the overhang and/or other portion of the object. For example, different portions of the object 1300 of Fig. 13A and/or the object 1320 of Fig. 13B may be printed using different energy beam characteristic(s).

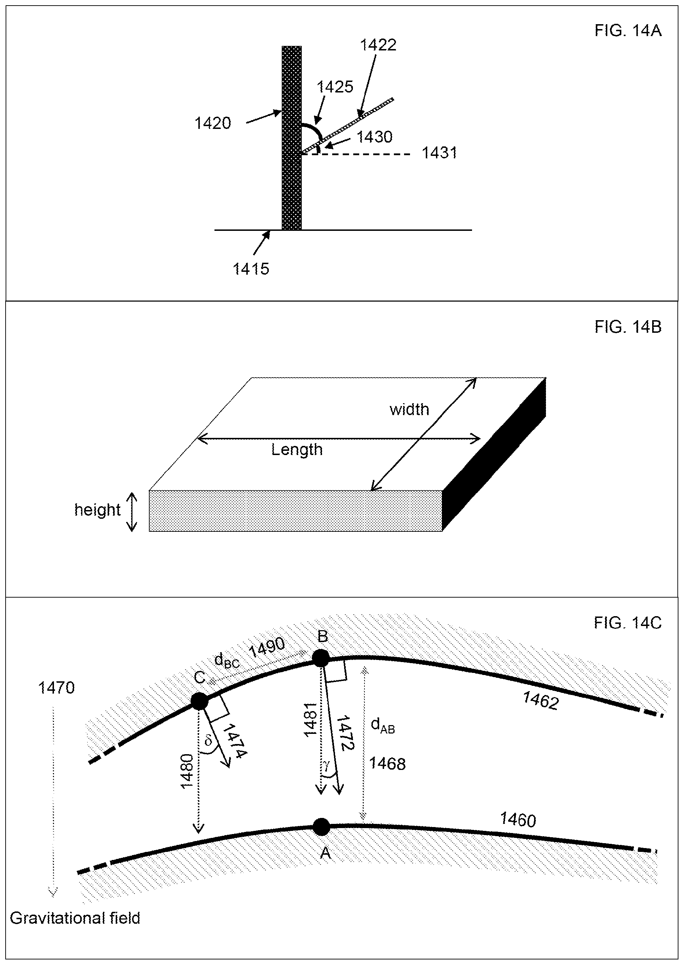

In some embodiments, an overhang is formed on a previously-transformed portion (also referred to herein as rigid portion) of the object. Fig. 14A shows an example schematic depiction of an overhang 1422 connected to a rigid portion 1420. The rigid portion may be connected (e.g., anchored) to a substrate (e.g., Fig. 14A, 1415) (e.g., base or a platform). The overhang may be printed without auxiliary supports other than the connection to the one or more rigid portions (e.g., that are part of the 3D object). The overhang may be formed at an angle (e.g., Fig. 14A, 1430) with respect to the build plane and/or platform (e.g., Fig. 14A, 1415). The overhang and/or the rigid portion may be formed from the same or different pre-transformed material (e.g., powder). The overhang can form a first angle (e.g., Fig. 14A, 1425) with respect to the rigid portion (e.g., Fig. 14A, 1420). The overhang can form a second angle (e.g., Fig. 14A, 1430) with respect to a plane (e.g., Fig. 14A, 1431) that is (e.g., substantially) parallel with the support surface of the platform, to the layering plane, and/or normal to global vector (e.g., were the layer refer to the layerwise deposition of the transformed material to form the 3D object). In some embodiments, a plane (e.g., Fig. 14A, 1431) that is (e.g., substantially) parallel with the support surface of the platform corresponds to a layering plane.

In some embodiments, 3D printing methodologies are employed for forming (e.g., printing) at least one 3D object that is substantially two-dimensional, such as a wire or a planar object. The 3D object may comprise a plane-like structure (referred to herein as "planar object," "three-dimensional plane," or "3D plane"). The 3D plane may have a relatively small thickness as compared to a relatively large surface area. The 3D plane may have a relatively small height relative to its width and length. For example, the 3D plane may have a small height relative to a large horizontal plane. Fig. 14B shows an example of a 3D plane that is substantially planar (e.g., flat). The 3D plane may be planar, curved, or assume an amorphous 3D shape. The 3D plane may be a strip, a blade, or a ledge. The 3D plane may comprise a curvature. The 3D plane may be curved. The 3D plane may be planar (e.g., flat). The 3D plane may have a shape of a curving scarf. The term "3D plane" is understood herein to be a generic (e.g., curved) 3D surface. For example, the 3D plane may be a curved 3D surface. The one or more layers within the 3D object may be substantially planar (e.g., flat). The planarity of a surface or a boundary the layer may be (e.g., substantially) uniform. Substantially uniform may be relative to the intended purpose of the 3D object. The height of the layer at a position may be compared to an average layering plane. The layering plane can refer to a plane at which a layer of the 3D object is (e.g., substantially) oriented during printing. A boundary between two adjacent (printed) layers of hardened material of the 3D object may define a layering plane. The boundary may be apparent by, for example, one or more melt pool terminuses (e.g., bottom or top). A 3D object may include a plurality of layering planes (e.g., with each layering plane corresponding to each layer). In some embodiments, the layering planes are (e.g., substantially) parallel to one another. An average layering plane may be defined by a linear regression analysis (e.g., least squares planar fit of the top-most part of the surface of the layer of hardened material). An average layering plane may be a plane calculated by averaging the material height at each selected point on the top surface of the layer of hardened material. The selected points may be within a specified region of the 3D object. The deviation from any point at the surface of the planar layer of hardened material may be at most 20% 15%, 10%, 5%, 3%, 1%, or 0.5% of the height (e.g., thickness) of the layer of hardened material.

Fig. 14C shows an example of a first (e.g., top) surface 1460 and a second (e.g., bottom) surface 1462 of a 3D object. At least a portion of the first and second surface may be separated by a gap. At least a portion of the first surface may be separated from at least a portion of the second surface (e.g., to constitute a gap). The gap may be filled with pre-transformed or transformed (e.g., and subsequently hardened) material, e.g., during the formation of the 3D object. The second surface may be a bottom skin layer. Fig. 14C shows an example of a vertical gap distance 1440 that separates the first surface 1460 from the second surface 1462. Point A (e.g., in Fig. 14C) may reside on the top surface of the first portion. Point B may reside on the bottom surface of the second portion. The second portion may be a cavity ceiling or hanging structure as part of the 3D object. Point B (e.g., in Fig. 14C) may reside above point A. Above (e.g., top) may be with respect to a global vector 1400. For example, for two positions in a 3D printing system, a (e.g., second) position (e.g., Fig. 14C, B) that has a lower global vector value than a (e.g., first) position (e.g., Fig. 14, A) is above the (e.g., second) position. The gap may be the (e.g., shortest) distance (e.g., vertical distance) between points A and B. Fig. 14C shows an example of the gap 1468 that constitutes the shortest distance d_{AB} between points A and B. There may be a first normal to the bottom surface of the second portion at point B. Fig. 14C shows an example of a first normal 1472 to the surface 1462 at point B. The angle between the first normal 1472 and a direction of global vector 1470 may be any angle γ. A global vector may be (a) directed to a gravitational center, (b) directed opposite to the direction of a layer-wise deposition to print a three-dimensional object, and/or (c) normal to a platform configured to support the three-dimensional object during its printing, and directed opposite to a surface of the platform that supports the three-dimensional object. Point C may reside on the bottom surface of the second portion. There may be a second normal to the bottom surface of the second portion at point C. Fig. 14C shows an example of the second normal 1474 to the surface 1462 at point C. The angle between the second normal 1472 and the global vector 1470 may be any angle δ. Vectors 1480, and 1481 are parallel to the global vector 1470. The angles γ and δ may be the same or different. The angle between the first normal 1472 and/or the second normal 1474 to the global vector 1400 may be any angle alpha disclosed herein. For example, alpha may be at most about 45 °, 40 °, 30 °, 20 °, 10 °, 5 °, 3 °, 2 °, 1 °, or 0.5°. The angle alpha may be any value of the afore-mentioned values (e.g., at most about 45° to about 0.5°, from about 45° to about 20°, or from about 20° to about 0.5°). Examples of an auxiliary support structure and auxiliary support feature spacing distance (e.g., the shortest distance between points B and C) can be found in PCT/US15/36802, which is entirely incorporated herein by reference in its entirety. For example, the shortest distance BC (e.g., d_{BC}) may be at least about 0.1 millimeters (mm), 0.5 mm, 1 mm, 1.5 mm, 2 mm, 3 mm, 4 mm, 5 mm, 10 mm, 15 mm, 20 mm, 25 mm, 30 mm 35 mm, 40 mm, 50 mm, 100 mm, 200 mm, 300 mm, 400 mm, or 500 mm. Fig. 14C shows an example of the shortest distance BC (e.g., 1490, d_{BC}). The bottom skin layer may be the first surface and/or the second surface. The bottom skin layer may be the first formed layer of the 3D object. The bottom skin layer may be a first formed hanging layer in the 3D object (e.g., that is separated by a gap from a previously formed layer of the 3D object). The vertical distance of the gap may be at least about 30 µm, 35 µm, 40 µm, 50 µm, 60 µm, 70 µm, 80 µm, 90 µm, 100 µm, 150 µm, 200 µm, 0.05mm, 0.1mm, 0.25mm, 0.5mm, 1mm, 2mm, 3 mm, 4 mm, 5 mm, 6 mm, 7 mm, 8 mm, 9 mm, 10 mm or 20 mm. The vertical distance of the gap may be any value between the afore-mentioned values (e.g., from about 30 µm to about 200 µm, from about 100 µm to about 200 µm, from about 30 µm to about 100mm, from about 80 mm to about 150 mm, from about 0.05mm to about 20mm, from about 0.05mm to about 0.5mm, from about 0.2mm to about 3mm, from about 0.1mm to about 10mm, or from about 3mm to about 20mm).

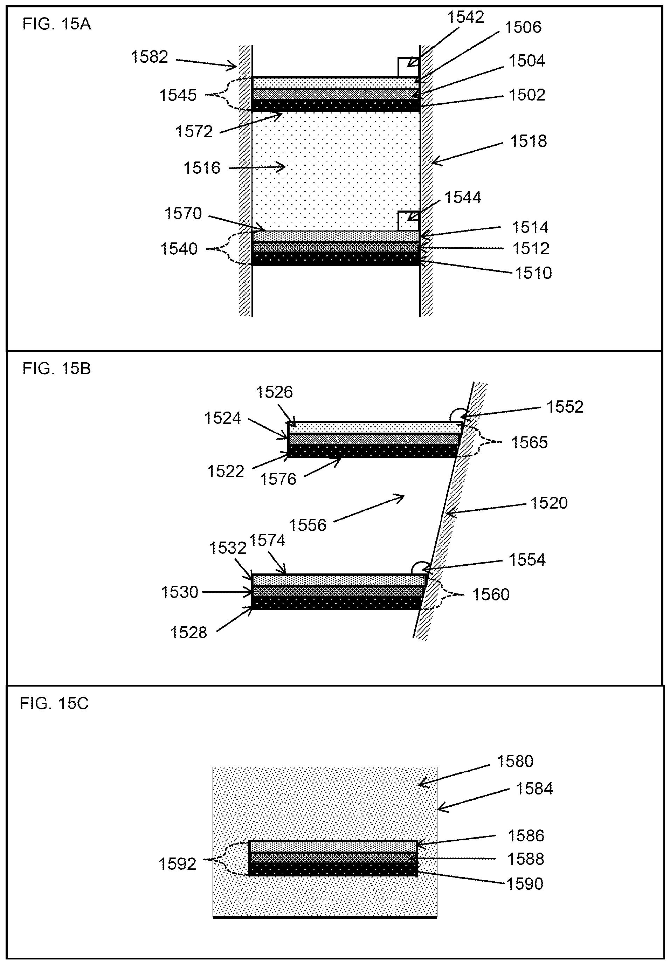

In some cases, a 3D object comprises multiple bottom skin layers (e.g., bottoms of turbine blades). A 3D object may comprise structures such as cavities, gaps, wires, ledges, or 3D planes. A structure within a forming 3D object may comprise a bottom skin layer (e.g., that is formed above a pre-transformed material without auxiliary support, or with spaced apart auxiliary supports). At times, at least two of the structures may have similar geometry. At times, at least two of the structures may have a different geometry. At times, the one of the structures may connect portions of the 3D object. At times, the structures may be separated by a gap. For example, multiple blades of a turbine may be separated by a gap between a first blade portion and a second blade portion. For example, a first portion (e.g., a blade structure) of the 3D object (e.g., a turbine) may comprise a first bottom skin layer followed by one or more layers that form the first portion, and a second portion (e.g., a second blade structure) of the 3D object (e.g., a turbine) may comprise a second bottom skin layer followed by one or more layers that form the second portion of the 3D object. At times, the first portion and the second portion of the 3D object may be connected by a third portion (e.g., a ledge structure) to form the 3D object. Figs. 15A- 15B show examples of a first portion and/or a second portion of a 3D object that are connected to one or more rigid-portions. Fig. 15C shows an example of a first portion of a 3D object, which first portion comprises a bottom skin layer, that is not connected to a rigid-portion, and that is suspended anchorlessly in the material bed. Fig. 15A shows an example of a first portion (e.g., 1540) and a second portion (e.g., 1545) of a 3D object disposed at an angle perpendicular (e.g., 90 degrees, 1542, 1544) to at least one rigid-portion of the 3D object (e.g., two rigid portions 1518, and 1582). Fig. 15B shows an example of a first portion (e.g., 1560) and a second portion (e.g., 1565) of a 3D object (e.g., two blades of a propeller) forming an angle (e.g., 1552, 1554) that is not perpendicular to the rigid portion of the 3D object (e.g., 1520). At times, the first portion and the second portion may not be connected to a portion of the 3D object (e.g., to a rigid-portion. e.g., Fig. 15C). The first portion may comprise one or more layers (e.g. 1510, 1512, 1514, 1528, 1530, and 1532). The second portion may comprise one or more layers (e.g., 1502, 1504, 1506, 1522, 1524, and 1526). The layer may include pre-transformed material (e.g., particulate material). The layer may include transformed (e.g., hardened) material. The first layer for the first and/or second portions of the 3D object may be a bottom skin layer (e.g., 1502, 1510, 1522, and 1528). The bottom skin layer (e.g., 1590, 1528, 1576, 1510, and 1502) may be a transformed material layer. At times, the bottom skin layer may be parallel to the target surface. At times, the bottom skin layer may be at an angle (e.g., a shallow angle, steep angle, or an intermediate angle) relative to the target surface (e.g., an exposed surface of the material bed and/or the support surface of the platform) and/or a (e.g., average) layering plane of the object. Shallow angle may be at least about 0°, 1°, 2°, 5°, 10°, 15°, 20°, 25°, 30°, or 35°. Shallow angle may be at most about 0°, 1°, 2°, 5°, 10°, 15°, 20°, 25°, 30°, or 35°. Shallow angle may be any angle between the afore-mentioned values (e.g., from about 0° to about 35°, from about 0° to about 10°, from about 10° to about 25°, or from about 25° to about 35°) relative to the target surface and/or a (e.g., average) layering plane of the object. Intermediate angle may be at least about 25°, 30°, 35°, 40°, 45°, 50°, 55°, or 60° relative to the target surface and/or a (e.g., average) layering plane of the object. Intermediate angle may be at most about 25°, 30°, 35°, 40°, 45°, 50°, 55°, or 60° relative to the target surface and/or a (e.g., average) layering plane of the object. Intermediate angle may be any angle between the afore-mentioned values (e.g., from about 25° to about 60°, from about 25° to about 35°, from about 35° to about 50°, or from about 50° to about 60°) relative to the target surface and/or a (e.g., average) layering plane of the object. Steep angle may be at least about 45°, 50°, 55°, 60°, 65°, 70°, 75°, 80°, 85°, or 90° relative to the target surface and/or a (e.g., average) layering plane of the object. Steep angle may be at most about 45°, 50°, 55°, 60°, 65°, 70°, 75°, 80°, 85°, or 90° relative to the target surface and/or a (e.g., average) layering plane of the object. Steep angle may be any angle between the afore-mentioned values (e.g., from about 45° to about 90°, from about 45° to about 60°, from about 60° to about 75°, or from about 75° to about 90°) relative to the target surface and/or a (e.g., average) layering plane of the object. The bottom skin layer may comprise a top surface and a bottom surface. The bottom skin layer may be a wire or a ledge or have a planar surface. At least a portion of the first portion (e.g., the top surface of the top layer, 1570) and a portion of the second portion (e.g., the bottom surface of the bottom skin layer, 1572) may be separated by pre-transformed material (e.g., 1516). At least a portion of the first portion (e.g., the top surface of the top layer, 1574) and a portion of the second portion (e.g., the bottom surface of the bottom skin layer, 1576) may be separated by a gap (e.g., 1556). The gap may be filled with pre-transformed material and may be transformed (e.g., subsequently hardened) during the formation of the 3D object. Fig. 15C shows an example of a portion (e.g., 1592) of a 3D object, which portion comprises a bottom skin layer (e.g., 1590), that is not connected to a rigid-portion. The portion of the 3D object may be formed in a material bed (e.g., 1580) within an enclosure (e.g., comprising 1584). The portion of the 3D object may comprise one or more layers formed adjacent to (e.g., above) the bottom skin layer (e.g., 1586, 1588). The bottom skin layer may be floating (e.g., suspended) anchorlessly within the material bed. The bottom skin layer and/or the one or more layers adjacent to the bottom skin layer may not be connected to a rigid-portion. The bottom skin layer may be formed using any 3D printing methodologies described herein.

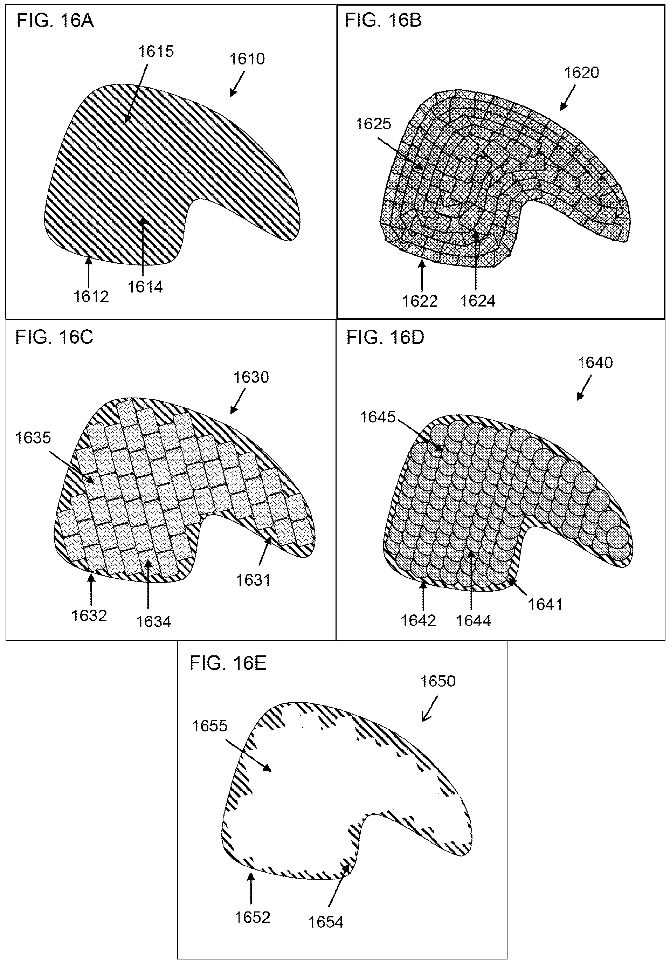

In some embodiments, an object has hatches and/or tiles. Figs. 16A-16E show examples of aerial views of various layers of hardened material. Each of layers in the examples of Figs. 16A-16E can correspond to one of a number of stacked layers of one or more 3D objects. Each layer may have an exterior portion (which can correspond to a portion of a skin of the 3D object) that surrounds an interior portion (also referred to as "core" or "internal portion") of the layer. The exterior portion may be a skin or a portion of the skin. The exterior and interior portion may be generated using the same type of energy beam, or different types of energy beams. In some embodiments, the exterior portion (or parts of the exterior portion) is formed prior to forming the interior portion. In some embodiments, the interior portion (or parts of the interior portion) is formed prior to forming the exterior portion. In some embodiments, the exterior and interior portion are formed (e.g., substantially) simultaneously. The exterior portion and/or the interior portion can comprise hatches and/or tiles. Fig. 16A shows an example of a layer 1610 having an exterior portion 1612 and an interior portion 1614 comprising hatches 1615 (e.g., formed using a hatching energy beam). Fig. 16B shows an example of a layer 1620 having an exterior portion 1622 and interior portion 1624 comprising tiles 1625 (e.g., formed using a tiling energy beam). Fig. 16C shows an example of a layer 1630 having an exterior portion 1632 comprising hatches 1631 (e.g., formed using a hatching energy beam) and an interior portion 1634 comprising tiles 1635 (e.g., formed using a tiling energy beam). Fig. 16D shows an example of a layer 1640 having an exterior portion 1642 comprising hatches 1641 (e.g., formed using a hatching energy beam), and an interior portion 1644 comprising tiles 1645 (e.g., formed using a tiling energy beam). Fig. 16E shows an example of a layer 1650 having a rim 1652 comprising hatches 1654 (e.g., formed using a hatching energy beam) and an interior portion 1655 that is free of hardened material. For example, the tiles may have elliptical (e.g., round) cross-sections (e.g., Fig. 16D, 1644). For example, the tiles may be rectangular (e.g., square) cross-sections (e.g., Fig. 16B, 1625; or Fig. 16C, 1635). In some cases, the tiles appear as crescent-shaped or scallop-shaped. In some embodiments, at least two sequential tiles overlap with each other at least in part. The overlapped area may be at least about 10%, 20%, 30%, 40%, 50%, 60%, 70%, 80% or 90% of the average or mean tile area. The overlapped area may be at most about 10%, 20%, 30%, 40%, 50%, 60%, 70%, 80% or 90% of the average or mean tile area. The overlapped area may between any of the afore-mentioned values (e.g., from about 10% to about 90%, from about 10% to about 50%, or from about 40% to about 90%) of the average or mean tile area. The percentage of overlapped area may be (e.g., substantially) identical along the path of the energy beam forming the tiles.

At times, the 3D structure is formed (e.g., printed) without any auxiliary supports other than the one or more rigid-portions (which are part of the 3D object). The portion of the 3D object may be an overhang. The 3D structures (e.g., overhangs) may have a shallow angle (e.g., with respect to the platform and/or exposed surface of the material bed). In some instances, the rigid-portion may constrain the hardening complex structure. At times, these structural constraints will form one or more deformations (e.g., defects, e.g., structural defects) in a hanging structure and/or cavity that extends from the rigid-portion. The deformations may comprise cracks or breaking points. The forming process(es) described herein may allow reducing the deformation at least in the overhang (e.g., cavity bottom and/or ceiling cavity) that connect to the rigid-structure(s). The process may comprise creating a bottom skin layer that may or may not be connected to one or more rigid-portions. The bottom skin layer can be created using a type-2 energy beam and/or a type-1 energy beam. The type-2 energy beam may be a power density (e.g., at the target surface) that is lower than that of the type-1 energy beam (e.g., lower by at least 3 times (*), 4*, 5*, 6*, 7*, 8*, 9*, 10*, 15*, or 20 *). The type-2 energy beam may be focused or defocused (e.g., at the target surface). The type-2 energy beam may have a larger cross section as compared to the type-1 energy beam (e.g., larger by at least 2 times (*), 3*, 4*, 5*, 6*, 7*, 8*, 9*, 10*, 15*, or 20 *). The bottom skin layer may be formed using hatching and/or tiling. The hatches may be a vectoral hatch. The tiling may be along a tiling path. The tiling path may be a vectoral path. The one or more rigid-portions may be anchored to a platform, or may be floating anchorlessly in the material bed. In some examples, an angle is formed between the vector (e.g., hatch, or path-of-tiles) and a growth direction of the bottom skin layer. The direction of the hatch/path vector may be (e.g., substantially) perpendicular to the growth direction of the forming bottom skin layer. The hatch/path vector may correspond to at least a portion of the bottom skin layer. In some embodiments, the requested overhang as part of the 3D object forms an angle with the rigid-portion. Formation of the angular structure may be effectuated by depositing successive layers that are offset with respect to each other in the direction of the overhang (e.g., ceiling) growth, which successive layers connect to (e.g., and partially overlap with) each other.

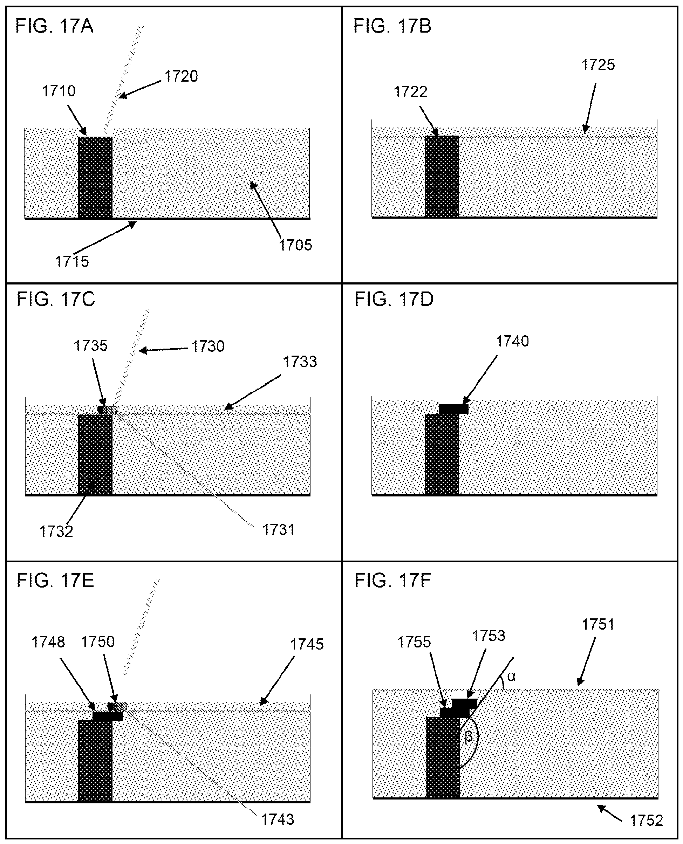

Figs. 17A - 17F illustrate example operations in forming an overhang structure by performing a single transformation (STO) process, wherein the overhang structure is connected to a rigid-portion. Fig. 17A shows an example of a material bed (e.g., 1705) disposed on a platform (e.g., 1715) that comprises pre-transformed material. A portion of the material bed may be irradiated (e.g., and transformed) using a transforming energy beam (e.g., 1720) to form a rigid-portion (e.g., 1710). In the example shown in Fig. 17A, the rigid structure contacts the platform. The rigid-portion may provide support for forming the overhang structure. The overhang may contact, connect, and/or be anchored to the rigid-portion. Fig. 17B shows an example of dispensing a (e.g., planar) layer of pre-transformed material (e.g., 1725) above the rigid-portion (e.g., 1722) disposed in the material bed. Fig. 17C illustrates an operation of irradiating (e.g., and transforming, sintering, and/or melting) a portion of the pre-transformed material layer that contacts the rigid-portion (e.g., and is above the rigid-portion), by using a transforming energy beam (e.g., 1730) to form a portion of the overhang structure (e.g., 1735). Transforming may include generating one or more melt pools. Fig. 17C shows an example of forming one or more melt pools (e.g., 1735) when transforming a portion of the material bed (e.g., 1733) with the transforming energy beam. At least one melt pool (e.g., 1731) may (e.g., horizontally) exceed (e.g., extend beyond) the rigid-portion. In some embodiments, a row of melt pools may form a horizontal extension of the rigid-portion in at least one horizontal direction. One or more melt pools in the row of melt pools may connect to and/or overlap the rigid-portion. For example, the row of melt pools may connect to and/or overlap the rigid-portion in at least one position. For example, the row of melt pools may connect to and/or overlap at least a portion of the rigid portion rim. Fig. 17C shows an example of a vertical cross section of a melt pool 1731 that horizontally extends beyond the rigid portion 1732, and melt pools that connect to the overhanging melt pool 1731, and overlap the rigid portion (e.g., 1735). The transforming energy beam may be the type-2 energy beam and/or the type-1 energy beam. During the STO process, the type-2 energy beam may have dwell time (e.g., at the target surface) of about 1 milliseconds (ms), 5 ms, 10 ms, 15 ms, 20 ms, 30 ms, or 50 ms. During the STO process, the type-2 energy beam may have dwell time (e.g., at the target surface) between any of the afore-mentioned dwell times (e.g., from about 1 ms to about 50 ms, from about 5ms to about 30ms, from about 10 ms to about 20ms, or from about 10ms to about 50 ms). The transforming energy beam may be (e.g., substantially) circular or elongated. The transforming energy beam may operate in retro-scan mode. In some embodiments, a portion of the rigid structure is extended concurrently with forming the overhang.

The extension of the rigid portion may be using any of the 3D printing methodologies described herein (e.g., forming a dense). Fig. 17D shows an example of the first transformed layer (e.g., hardened layer, 1740) that is part of an overhang structure that is connected to the rigid-portion. The first transformed may comprise material that is denser than a respective volume containing the pre-transformed material. The first transformed layer of the overhang structure may be at an angle (e.g., shallow angle) with respect to the platform and/or exposed surface of the material bed. The angled overhang structure can have an acute or obtuse angle with respect to a bulk(er) portion of the 3D object, the platform, or a direction perpendicular to the platform. The angled overhang structure may have a shallow, intermediate, or steep angle with respect to a bulker portion of the 3D object, the platform, or a direction perpendicular to the platform. For example, the first transformed material may be (e.g., substantially) parallel to the platform and/or exposed surface of the material bed. Fig. 17E shows an example of dispensing a second layer of pre-transformed material (e.g., 1745) adjacent to (e.g., above) the previously layer (e.g., 1748) of transformed material as part of the overhang structure. The second layer of pre-transformed material may be irradiated (e.g., and transformed, sintered, and/or melted) to form a second transformed (e.g., denser and/or hardened) portion of the overhang structure. Transforming may include irradiating at least a portion of the second pre-transformed material layer, using a transforming energy beam. Transforming may include re-melting the first transformed material layer (e.g., 1748) while forming the second layer (e.g., transforming at least a portion of the pre-transformed material layer, e.g., 1750). Transforming may include generating one or more melt pools (e.g., 1750). The melt pools may be deep enough to melt through multiple layers (e.g., first and second layer). In order to elongate the resulting overhang (e.g., as part of a ceiling), at a portion of one melt pool (e.g., horizontally) exceeds (e.g., 1743) the previously formed layer of transformed material (e.g., 1748). Fig. 17F shows an example of two (e.g., two) layers of transformed material (e.g., 1753, 1755) of an overhang structure, that are connected to a rigid-portion formed within the material bed, which overhang forms an angle beta (β) with the rigid-portion, and an angle alpha (α) with the exposed surface (e.g., 1751) of the material bed (and with the platform 1752).

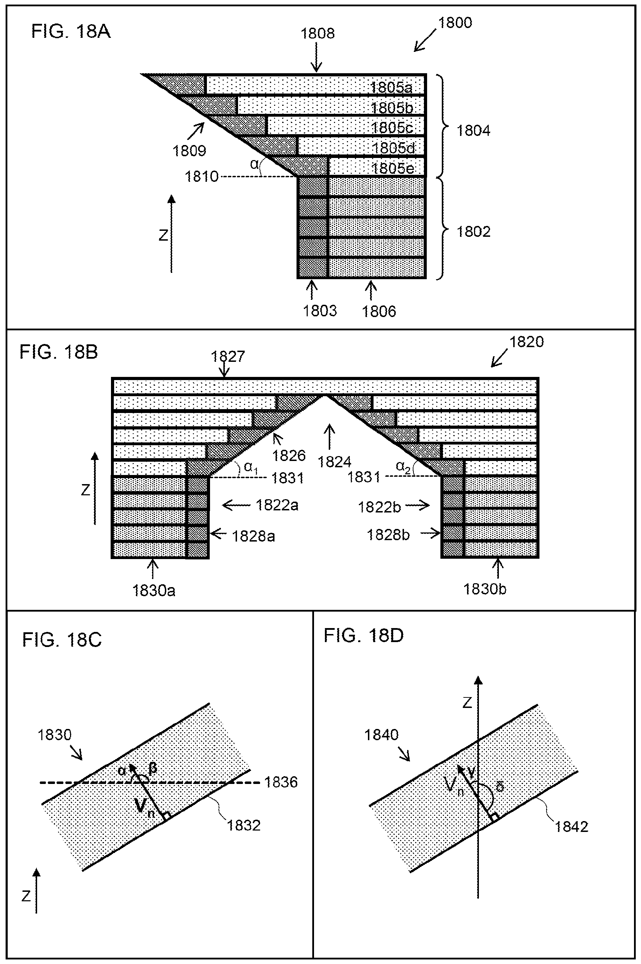

In some embodiments, the 3D object is printed using forming process parameters. The forming process parameters may be adjusted depending which part of the overhang is being printed and/or the type of overhang. For example, a skin (e.g., bottom skin) of the overhang may be printed using one or more different conditions compared to a core portion (also referred to herein as the "core" or "interior portion") of the overhang and/or 3D object. The bottom skin of the overhang can refer to a portion (e.g., a layer) of the overhang that comprises the surface of the overhang that is most proximate to the support surface of the platform (e.g., bottom-most surface of the overhang). Fig. 18A shows an example of a section view of a 3D object 1800, which comprises rigid portion (e.g., previously-formed edge of the object) 1802 from which an overhang 1804 can be formed. The overhang can comprise a skin (e.g., bottom skin) (e.g., 1809) and core (e.g., 1808), e.g., deposited on the skin. The skin (e.g., bottom skin) of the overhang can comprise an exterior (e.g., exposed) surface of the overhang. The rigid portion (e.g., 1802) may comprise a core (also referred to as a rigid portion core) (e.g., 1806) and a skin (also referred to as a rigid portion skin) (e.g., 1803). The overhang may attach to the rigid portion. The rigid portion may comprise one or more layers of hardened material. The overhang can comprise a plurality of layers (e.g., 1805a, 1805b, 1805c, 1805d, and 1805e). Each layer of the overhang can comprise portions of the skin (e.g., bottom skin) (e.g., 1809) and core (e.g., 1808). The exterior surface of the overhang (e.g., bottom skin) may be at an angle (e.g., α) of about 45, 35, 30, 25, 20, 15 or 10 degrees or lower with respect to a (e.g., average) layering plane (e.g., 1810), an exposed surface of the material bed and/or a supporting surface of the build platform. In some embodiments, the skin (e.g., bottom skin) of the overhang is formed using different process parameters than those for forming the core of the overhang. In some embodiments, the skin (e.g., bottom skin) of the overhang is formed using the same process parameters as those for the core of the overhang. The overhang can be a ceiling of the 3D object. Fig. 18B shows a section view of a 3D object 1820, which comprises a ceiling 1824. The ceiling may be printed from rigid portions (e.g., 1822a and 1822b). In some embodiments, the ceiling is formed by sequentially forming ledges until the ledges meet to form a bridge. The ceiling may comprise a skin (e.g., bottom skin) (e.g., 1826) and a core (e.g., 1827). In some cases, the core (e.g., 1827) is formed over the bottom skin (e.g., the bottom skin may support a portion of the core during printing). The rigid portions (e.g., 1822a and 1822b) may comprise a core (also referred to as rigid portion core) (e.g., 1830a or 1830b) and a skin (also referred to as rigid portion skin) (e.g., 1828a or 1828b). The exterior surface of the ceiling (e.g., bottom skin) may be at an angle (e.g., α₁ or α₂) of about 45, 35, 30, 25, 20 degrees or lower with respect to a (e.g., average) layering plane of the object (e.g., 1831), an exposed surface of the material bed and/or a support surface of the build platform. The angles α₁ or α₂ may be the same or different.

In some embodiments, the 3D object comprises an overhang that is at least partly defined by a stacking vector (e.g., Figs. 18A or 18B, vector "Z") and/or a layering plane (e.g., Fig. 18A, 1810 or Fig. 18B, 1831). Fig. 18C shows an example of a section view of an overhang portion 1830 of a 3D object. The bottom surface of an overhang can have an exterior surface (e.g., 1832), where a vector normal (e.g., Vₙ) to the exterior surface that is (i) directed into the object and (ii) has a positive projection onto the stacking vector (e.g., "Z"), is at an acute angle (e.g., alpha (α)) and/or an obtuse angle (beta (β)) with respect to a layering plane (or an average layering plane) (e.g., 1836). The acute angle (e.g., alpha (α)) and the obtuse angle (e.g., beta (β)) may be supplementary angles. The acute angle (e.g., alpha (α)) can be at least about 45 degrees (°), 50°, 55°, 60°, 70°, 80°, or 85°. The acute angle (e.g., alpha (α)) can be at most about 90 degrees. The obtuse angle (e.g., beta (β)) can be complementary to alpha. Fig. 18D shows an example of a section view of an overhang portion 1840 of a 3D object. In some embodiments, a bottom surface of an overhang can have an exterior surface (e.g., 1842), where a vector normal (e.g., Vₙ) to the exterior surface that is (i) into the object and (ii) has a positive projection onto the stacking vector (e.g., "Z"), is at an acute angle (e.g., gamma (γ)) and/or an obtuse angle (e.g., delta (δ)) with respect to the stacking vector (e.g., "Z"). The acute angle (e.g., gamma (γ)) and the obtuse angle (e.g., delta (δ)) may be supplementary angles. The acute angle (e.g., gamma (γ)) can be at most about 45°, 40°, 35°, 30°, 25°, 20°, 15°, 10°, 5°, or 1°. The obtuse angle (e.g., delta (δ)) can be the supplementary angle to gamma.

The systems and/or apparatuses disclosed herein (e.g., an energy beam path selection element) may comprise one or more motors. The motors may comprise servomotors. The servomotors may comprise actuated linear lead screw drive motors. The motors may comprise belt drive motors. The motors may comprise rotary encoders. The apparatuses and/or systems may comprise switches. The switches may be optical, capacitive, inductive and/or mechanical. The switches may comprise homing or limit switches. The motors may comprise actuators. The motors may comprise linear actuators. The motors may comprise belt driven actuators. The motors may comprise lead screw driven actuators. The motors may comprise a material such as copper, stainless steel, iron, rare-earth magnet (e.g., an element in the lanthanide series of the periodic chart). The motors may comprise any material disclosed herein. The actuators may comprise linear actuators. The systems and/or apparatuses disclosed herein may comprise one or more pistons. The systems and/or apparatuses disclosed herein may comprise one or more encoders (e.g., for positional feedback).

At times, an energy beam is directed onto a specified area of at least a portion of the target surface for a specified time period. The material in or on the target surface (e.g., powder material such as in a top surface of a powder bed) can absorb the energy from the energy beam and, and as a result, a localized region of the material can increase in temperature. In some instances, one, two, or more 3D objects are generated in a material bed (e.g., a single material bed; the same material bed). The plurality of 3D objects may be generated in the material bed simultaneously or sequentially. At least two 3D objects may be generated side by side. At least two 3D objects may be generated one on top of the other. At least two 3D objects generated in the material bed may have a gap between them (e.g., gap filled with pre-transformed material). At least two 3D objects generated in the material bed may contact (e.g., not connect to) each other. In some embodiments, the 3D objects may be independently built one above the other. The generation of a multiplicity of 3D objects in the material bed may allow continuous creation of 3D objects.

A pre-transformed material may be a powder material. A pre-transformed material layer (or a portion thereof) can have a thickness (e.g., layer height) of at least about 0.1 micrometer (µm), 0.5 µm, 1.0 µm, 10 µm, 50 µm, 100 µm, 150 µm, 200 µm, 300 µm, 400 µm, 500 µm, 600 µm, 700 µm, 800 µm, 900 µm, or 1000 µm. A pre-transformed material layer (or a portion thereof) may have any value of the afore-mentioned layer thickness values (e.g., from about 0.1 µm to about 1000 µm, from about 1 µm to about 800µm, from about 20 µm to about 600 µm, from about 30 µm to about 300µm, or from about 10 µm to about 1000µm).

At times, the pre-transformed material comprises a powder material. The pre-transformed material may comprise a solid material. The pre-transformed material may comprise one or more particles or clusters. The term "powder," as used herein, generally refers to a solid having fine particles. The powder may also be referred to as "particulate material." Powders may be granular materials. The powder particles may comprise micro particles. The powder particles may comprise nanoparticles. In some examples, a powder comprises particles having an average FLS of at least about 5 nanometers (nm), 10 nm, 20 nm, 30 nm, 40 nm, 50 nm, 100 nm, 200 nm, 300 nm, 400 nm, 500 nm, 1 µm, 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, or 100 µm. In some embodiments, the powder may have an average fundamental length scale of any of the values of the average particle fundamental length scale listed above (e.g., from about 5nm to about 100 µm, from about 1 µm to about 100 µm, from about 15 µm to about 45 µm, from about 5 µm to about 80 µm, from about 20 µm to about 80 µm, or from about 500 nm to about 50 µm). The powder in a material bed may be flowable (e.g., retain its flowability) during the printing.

At times, the powder is composed of individual particles. The individual particles can be spherical, oval, prismatic, cubic, or irregularly shaped. The particles can have a FLS. The powder can be composed of a homogenously shaped particle mixture such that all of the particles have substantially the same shape and fundamental length scale magnitude within at most about 1%, 5%, 8%, 10%, 15%, 20%, 25%, 30%, 35%, 40%, 50%, 60%, or 70%, distribution of FLS. In some embodiments, the powder may have a distribution of FLS of any of the values of the average particle FLS listed above (e.g., from at most about 1% to about 70%, about 1% to about 35%, or about 35% to about 70%). In some embodiments, the powder can be a heterogeneous mixture such that the particles have variable shape and/or fundamental length scale magnitude.

At times, at least parts of the layer are transformed to a transformed material that subsequently forms at least a fraction (also used herein "a portion," or "a part") of a hardened (e.g., solidified) 3D object. At times a layer of transformed or hardened material may comprise a cross section of a 3D object (e.g., a horizontal cross section). At times a layer of transformed or hardened material may comprise a deviation from a cross section of a 3D object. The deviation may comprise vertical or horizontal deviation.

At times, the pre-transformed material is requested and/or pre-determined for the 3D object. The pre-transformed material can be chosen such that the material is the requested and/or otherwise predetermined material for the 3D object. A layer of the 3D object may comprise a single type of material. For example, a layer of the 3D object may comprise a single metal alloy type. In some examples, a layer within the 3D object may comprise several types of material (e.g., an elemental metal and an alloy, several alloy types, several alloy phases, or any combination thereof). In certain embodiments, each type of material comprises only a single member of that type. For example, a single member of metal alloy (e.g., Aluminum Copper alloy). In some cases, a layer of the 3D object comprises more than one type of material. In some cases, a layer of the 3D object comprises more than one member of a material type.

In some instances, the elemental metal comprises an alkali metal, an alkaline earth metal, a transition metal, a rare-earth element metal, or another metal. The alkali metal can be Lithium, Sodium, Potassium, Rubidium, Cesium, or Francium. The alkali earth metal can be Beryllium, Magnesium, Calcium, Strontium, Barium, or Radium. The transition metal can be Scandium, Titanium, Vanadium, Chromium, Manganese, Iron, Cobalt, Nickel, Copper, Zinc, Yttrium, Zirconium, Platinum, Gold, Rutherfordium, Dubnium, Seaborgium, Bohrium, Hassium, Meitnerium, Ununbium, Niobium, Iridium, Molybdenum, Technetium, Ruthenium, Rhodium, Palladium, Silver, Cadmium, Hafnium, Tantalum, Tungsten, Rhenium, or Osmium. The transition metal can be mercury. The rare-earth metal can be a lanthanide, or an actinide. The lanthanide metal can be Lanthanum, Cerium, Praseodymium, Neodymium, Promethium, Samarium, Europium, Gadolinium, Terbium, Dysprosium, Holmium, Erbium, Thulium, Ytterbium, or Lutetium. The actinide metal can be Actinium, Thorium, Protactinium, Uranium, Neptunium, Plutonium, Americium, Curium, Berkelium, Californium, Einsteinium, Fermium, Mendelevium, Nobelium, or Lawrencium. The other metal can be Aluminum, Gallium, Indium, Tin, Thallium, Lead, or Bismuth.

In some instances, the metal alloy comprises an iron based alloy, nickel based alloy, cobalt based allow, chrome based alloy, cobalt chrome based alloy, titanium based alloy, magnesium based alloy, copper based alloy, or any combination thereof. The alloy may comprise an oxidation or corrosion resistant alloy. The alloy may comprise a super alloy (e.g., Inconel). The super alloy may comprise Inconel 600, 617, 625, 690, 718, or X-750. The metal (e.g., alloy or elemental) may comprise an alloy used for applications in industries comprising aerospace (e.g., aerospace super alloys), jet engine, missile, automotive, marine, locomotive, satellite, defense, oil & gas, energy generation, semiconductor, fashion, construction, agriculture, printing, or medical. The metal (e.g., alloy or elemental) may comprise an alloy used for products comprising a device, medical device (human & veterinary), machinery, cell phone, semiconductor equipment, generators, turbine, stator, motor, rotor, impeller, engine, piston, electronics (e.g., circuits), electronic equipment, agriculture equipment, gear, transmission, communication equipment, computing equipment (e.g., laptop, cell phone, i-pad), air conditioning, generators, furniture, musical equipment, art, jewelry, cooking equipment, or sport gear. The impeller may be a shrouded (e.g., covered) impeller that is produced as one piece (e.g., comprising blades and cover) during one 3D printing procedure. The 3D object may comprise a blade. The impeller may be used for pumps (e.g., turbo pumps). Examples of an impeller and/or blade can be found in US5/435,128, PCT/US17/18191, or EP17156707.6, each of which is incorporated herein by reference in its entirety where non-contradictory. The metal (e.g., alloy or elemental) may comprise an alloy used for products for human and/or veterinary applications comprising implants, or prosthetics. The metal alloy may comprise an alloy used for applications in the fields comprising human and/or veterinary surgery, implants (e.g., dental), or prosthetics.

In some instances, the alloy includes a superalloy. The alloy may include a high-performance alloy. The alloy may include an alloy exhibiting at least one of: excellent mechanical strength, resistance to thermal creep deformation, good surface stability, resistance to corrosion, and resistance to oxidation. The alloy may include a face-centered cubic austenitic crystal structure. The alloy may comprise Hastelloy, Inconel, Waspaloy, Rene alloy (e.g., Rene-80, Rene-77, Rene-220, or Rene-41), Haynes alloy, Incoloy, MP98T, TMS alloy, MTEK (e.g., MTEK grade MAR-M-247, MAR-M-509, MAR-M-R41, or MAR-M-X-45), or CMSX (e.g., CMSX-3, or CMSX-4). The alloy can be a single crystal alloy.

In some instances, the iron alloy comprises Elinvar, Fernico, Ferroalloys, Invar, Iron hydride, Kovar, Spiegeleisen, Staballoy (stainless steel), or Steel. In some instances, the metal alloy is steel. The Ferroalloy may comprise Ferroboron, Ferrocerium, Ferrochrome, Ferromagnesium, Ferromanganese, Ferromolybdenum, Ferronickel, Ferrophosphorus, Ferrosilicon, Ferrotitanium, Ferrouranium, or Ferrovanadium. The iron alloy may comprise cast iron, or pig iron. The steel may comprise Bulat steel, Chromoly, Crucible steel, Damascus steel, Hadfield steel, High speed steel, HSLA steel, Maraging steel, Maraging steel (M300), Reynolds 531, Silicon steel, Spring steel, Stainless steel, Tool steel, Weathering steel, or Wootz steel. The high-speed steel may comprise Mushet steel. The stainless steel may comprise AL-6XN, Alloy 20, celestrium, marine grade stainless, Martensitic stainless steel, surgical stainless steel, or Zeron 100. The tool steel may comprise Silver steel. The steel may comprise stainless steel, Nickel steel, Nickel-chromium steel, Molybdenum steel, Chromium steel, Chromium-vanadium steel, Tungsten steel, Nickel-chromium-molybdenum steel, or Silicon-manganese steel. The steel may be comprised of any Society of Automotive Engineers (SAE) grade steel such as 440F, 410, 312, 430, 440A, 440B, 440C, 304, 305, 304L, 304L, 301, 304LN, 301LN, 2304, 316, 316L, 316LN, 316, 316LN, 316L, 316L, 316, 317L, 2205, 409, 904L, 321, 254SMO, 316Ti, 321H, or 304H. The steel may comprise stainless steel of at least one crystalline structure selected from the group consisting of austenitic, superaustenitic, ferritic, martensitic, duplex, and precipitation-hardening martensitic. Duplex stainless steel may be lean duplex, standard duplex, super duplex, or hyper duplex. The stainless steel may comprise surgical grade stainless steel (e.g., austenitic 316, martensitic 420, or martensitic 440). The austenitic 316 stainless steel may comprise 316L, or 316LVM. The steel may comprise 17-4 Precipitation Hardening steel (e.g., type 630, a chromium-copper precipitation hardening stainless steel, 17-4PH steel).

In some instances, the titanium-based alloy comprises alpha alloy, near alpha alloy, alpha and beta alloy, or beta alloy. The titanium alloy may comprise grade 1, 2, 2H, 3, 4, 5, 6, 7, 7H, 8, 9, 10, 11, 12, 13, 14, 15, 16, 16H, 17, 18, 19, 20, 21, 2, 23, 24, 25, 26, 26H, 27, 28, 29, 30, 31, 32, 33, 34, 35, 36, 37, 38, or higher. In some instances, the titanium base alloy comprises Ti-6AI-4V or Ti-6AI-7Nb.

In some instances, the Nickel alloy comprises Alnico, Alumel, Chromel, Cupronickel, Ferronickel, German silver, Hastelloy, Inconel, Monel metal, Nichrome, Nickel-carbon, Nicrosil, Nisil, Nitinol, or Magnetically "soft" alloys. The magnetically "soft" alloys may comprise Mu-metal, Permalloy, Supermalloy, or Brass. The brass may comprise Nickel hydride, Stainless or Coin silver. The cobalt alloy may comprise Megallium, Stellite (e. g. Talonite), Ultimet, or Vitallium. The chromium alloy may comprise chromium hydroxide, or Nichrome.

In some instances, the aluminum alloy comprises AA-8000, AI-Li (aluminum-lithium), Alnico, Duralumin, Hiduminium, Kryron Magnalium, Nambe, Scandium-aluminum, or Y alloy. The magnesium alloy may comprise Elektron, Magnox, or T-Mg-AI-Zn (Bergman phase) alloy.

In some instances, the copper alloy comprises Arsenical copper, Beryllium copper, Billon, Brass, Bronze, Constantan, Copper hydride, Copper-tungsten, Corinthian bronze, Cunife, Cupronickel, Cymbal alloys, Devarda's alloy, Electrum, Hepatizon, Heusler alloy, Manganin, Molybdochalkos, Nickel silver, Nordic gold, Shakudo, or Tumbaga. The Brass may comprise Calamine brass, Chinese silver, Dutch metal, Gilding metal, Muntz metal, Pinchbeck, Prince's metal, or Tombac. The Bronze may comprise Aluminum bronze, Arsenical bronze, Bell metal, Florentine bronze, Guanin, Gunmetal, Glucydur, Phosphor bronze, Ormolu, or Speculum metal. The copper alloy may be a high-temperature copper alloy (e.g., GRCop-84).

In some instances, the metal alloys are Refractory Alloys. The refractory metals and alloys may be used for heat coils, heat exchangers, furnace components, or welding electrodes. The Refractory Alloys may comprise a high melting points, low coefficient of expansion, mechanically strong, low vapor pressure at elevated temperatures, high thermal conductivity, or high electrical conductivity.

In some examples, the material (e.g., pre-transformed material) comprises a material wherein its constituents (e.g., atoms or molecules) readily lose their outer shell electrons, resulting in a free-flowing cloud of electrons within their otherwise solid arrangement. In some examples the material is characterized in having high electrical conductivity, low electrical resistivity, high thermal conductivity, or high density (e.g., as measured at ambient temperature (e.g., R.T., or 20°C)). The high electrical conductivity can be at least about 1*10⁵ Siemens per meter (S/m), 5*10⁵ S/m, 1*10⁶ S/m, 5*10⁶ S/m, 1*10⁷ S/m, 5*10⁷ S/m, or 1*10⁸ S/m. The symbol "*" designates the mathematical operation "times," or "multiplied by." The high electrical conductivity can be any value between the afore-mentioned electrical conductivity values (e.g., from about 1*10⁵ S/m to about 1*10⁸ S/m). The low electrical resistivity may be at most about 1*10⁻⁵ ohm times meter (Ω*m), 5*10⁻⁶ Ω*m, 1*10⁻⁶ Ω*m, 5*10⁻⁷ Ω*m, 1*10⁻⁷ Ω*m, 5*10⁻⁸, or 1*10⁻⁸ Ω*m. The low electrical resistivity can be any value between the afore-mentioned electrical resistivity values (e.g., from about 1*10⁻⁵ Q*m to about 1*10⁻⁸ Ω*m). The high thermal conductivity may be at least about 20 Watts per meters times Kelvin (W/mK), 50 W/mK, 100 W/mK, 150 W/mK, 200 W/mK, 205 W/mK, 300 W/mK, 350 W/mK, 400 W/mK, 450 W/mK, 500 W/mK, 550 W/mK, 600 W/mK, 700 W/mK, 800 W/mK, 900 W/mK, or 1000 W/mK. The high thermal conductivity can be any value between the afore-mentioned thermal conductivity values (e.g., from about 20 W/mK to about 1000 W/mK). The high density may be at least about 1.5 grams per cubic centimeter (g/cm³), 2 g/cm³, 3 g/cm³, 4 g/cm³, 5 g/cm³, 6 g/cm³, 7 g/cm³, 8 g/cm³, 9 g/cm³, 10 g/cm³, 11 g/cm³, 12 g/cm³, 13 g/cm³, 14 g/cm³, 15 g/cm³, 16 g/cm³, 17 g/cm³, 18 g/cm³, 19 g/cm³, 20 g/cm³, or 25 g/cm³. The high density can be any value between the afore-mentioned density values (e.g., from about 1 g/cm³ to about 25 g/cm³, from about 1 g/cm³ to about 10 g/cm³, or from about 10 g/cm³ to about 25 g/cm³).

At times, a metallic material (e.g., elemental metal or metal alloy) comprises small amounts of non-metallic materials, such as, for example, oxygen, sulfur, or nitrogen. In some cases, the metallic material can comprise the non-metallic material in a trace amount. A trace amount can be at most about 100000 parts per million (ppm), 10000 ppm, 1000 ppm, 500 ppm, 400 ppm, 200 ppm, 100 ppm, 50 ppm, 10 ppm, 5 ppm, or 1ppm (based on weight, w/w) of non-metallic material. A trace amount can comprise at least about 10ppt, 100ppt, 1 ppb, 5 ppb, 10 ppb, 50 ppb, 100 ppb, 200 ppb, 400 ppb, 500 ppb, 1000 ppb, 1 ppm, 10 ppm, 100 ppm, 500 ppm, 1000 ppm, or 10000 ppm (based on weight, w/w) of non-metallic material. A trace amount can be any value between the afore-mentioned trace amounts (e.g., from about 10 parts per trillion (ppt) to about 100000 ppm, from about 1 ppb to about 100000 ppm, from about 1 ppm to about 10000 ppm, or from about 1 ppb to about 1000 ppm).

In some embodiments, a pre-transformed material within the enclosure is in the form of a powder, wires, sheets, or droplets. The material (e.g., pre-transformed, transformed, and/or hardened) may comprise elemental metal, metal alloy, ceramics, an allotrope of elemental carbon, polymer, and/or resin. The allotrope of elemental carbon may comprise amorphous carbon, graphite, graphene, diamond, or fullerene. The fullerene may be selected from the group consisting of a spherical, elliptical, linear, and tubular fullerene. The fullerene may comprise a buckyball, or a carbon nanotube. The ceramic material may comprise cement. The ceramic material may comprise alumina, zirconia, or carbide (e.g., silicon carbide, or tungsten carbide). The ceramic material may comprise high performance material (HPM). The ceramic material may comprise a nitride (e.g., boron nitride or aluminum nitride). The material may comprise sand, glass, or stone. In some embodiments, the material may comprise an organic material, for example, a polymer or a resin (e.g., 114 W resin). The organic material may comprise a hydrocarbon. The polymer may comprise styrene or nylon (e.g., nylon 11). The polymer may comprise a thermoplast. The organic material may comprise carbon and hydrogen atoms. The organic material may comprise carbon and oxygen atoms. The organic material may comprise carbon and nitrogen atoms. The organic material may comprise carbon and sulfur atoms. In some embodiments, the material may exclude an organic material. The material may comprise a solid or a liquid. In some embodiments, the material may comprise a silicon-based material, for example, silicon-based polymer or a resin. The material may comprise an organosilicon-based material. The material may comprise silicon and hydrogen atoms. The material may comprise silicon and carbon atoms. In some embodiments, the material may exclude a silicon-based material. The powder material may be coated by a coating (e.g., organic coating such as the organic material (e.g., plastic coating)). The material may be devoid of organic material. The liquid material may be compartmentalized into reactors, vesicles, or droplets. The compartmentalized material may be compartmentalized in one or more layers. The material may be a composite material comprising a secondary material. The secondary material can be a reinforcing material (e.g., a material that forms a fiber). The reinforcing material may comprise a carbon fiber, Kevlar^{®}, Twaron^{®}, ultra-high-molecular-weight polyethylene, or glass fiber. The material can comprise powder (e.g., granular material) and/or wires. The bound material can comprise chemical bonding. Transforming can comprise chemical bonding. Chemical bonding can comprise covalent bonding. The pre-transformed material may be pulverous. The printed 3D object can be made of a single material (e.g., single material type) or multiple materials (e.g., multiple material types). Sometimes one portion of the 3D object and/or of the material bed may comprise one material, and another portion may comprise a second material different from the first material. The material may be a single material type (e.g., a single alloy or a single elemental metal). The material may comprise one or more material types. For example, the material may comprise two alloys, an alloy and an elemental metal, an alloy and a ceramic, or an alloy and an elemental carbon. The material may comprise an alloy and alloying elements (e.g., for inoculation). The material may comprise blends of material types. The material may comprise blends with elemental metal or with metal alloy. The material may comprise blends excluding (e.g., without) elemental metal or comprising (e.g., with) metal alloy. The material may comprise a stainless steel. The material may comprise a titanium alloy, aluminum alloy, and/or nickel alloy.

In some embodiments, at least one controller comprises using data obtained from one or more sensors operatively coupled to the controller. The sensor can detect the physical and/or chemical state of material deposited on the target surface (e.g., liquid, or solid (e.g., powder or bulk)). The sensor can detect the crystallinity of material deposited on the target surface. The sensor may spectroscopically detect the material. The sensor can detect the temperature of the material. For example, the sensor may detect the temperature of the material before, during and/or after its transformation. One or more sensors (at least one sensor) can detect the topology of the exposed surface of the material bed and/or the exposed surface of the 3D object or any part thereof. The sensor can detect the amount of material deposited in the material bed. The sensor can be a proximity sensor. The sensor may detect the temperature and/or pressure of the atmosphere within an enclosure (e.g., chamber). The sensor may detect the temperature of the material (e.g., powder) bed at one or more locations. The controller may be operatively coupled to any apparatus or component thereof, e.g., as disclosed herein.

In some embodiments, the at least one controller receives a target parameter (e.g. temperature) to maintain at least one characteristic of a forming 3D object. Examples of characteristics of forming 3D objects include temperature and/or metrological information of a melt pool. The metrological information of the melt pool may comprise its FLS. Examples of characteristics of forming 3D objects include metrological information of the forming 3D object. For example, geometry information (e.g. height) of the forming 3D object. Examples of characteristics of forming 3D objects include material characteristic such as hard, soft and/or fluid (e.g., liquidus) state of the forming 3D object. The target parameter may be time-varying, location-varying, or a series of values per location or time. The controller may (e.g., further) receive a pre-determined control variable (e.g. power per unit area) target value from a control loop such as, for example, a feed forward control. In some embodiments, the control variable controls the value of a target parameter of the forming 3D object. For example, a predetermined (e.g., threshold) value of power per unit area of an energy beam may control the temperature of the melt pool of the forming 3D object.

At times, a computer model (e.g. comprising a prediction model, statistical model, or a thermal model) predicts and/or estimates one or more physical and/or chemical parameters of the forming 3D object. There may be more than one computer models (e.g. at least 1, 2, 3, 4, 5, 6, 7, 8, 9 or 10 different models). The controller may (e.g., dynamically) switch between the computer models to predict and/or estimate the one or more physical and/or chemical parameters of the forming 3D object. Dynamic includes changing computer models (e.g., in real time) based on a user input, and/or a controller decision that may be based on monitored target variables of the forming 3D object. The dynamic switch may be performed in real-time (e.g., during the forming of the 3D object). Real time may be, for example, during the formation of a layer of transformed material, during the formation of a layer of hardened material, during formation of a portion of a 3D object, during formation of a melt pool, during formation of a single digit number of melt pools, or during formation of an entire 3D object. The at least one computer model may receive sensed parameter(s) value(s) from one or more sensors. The sensed parameter(s) value(s) may comprise temperature sensed within and/or near one or more melt pools. Vicinity may be within a radius of at least about 1, 2, 3, 4, or 5 average melt pool FLS from a forming melt pool. The computer model may use (e.g., in real-time) the sensed parameter(s) value(s) for a prediction and/or adjustment of the target parameter. The computer model may use (e.g., in real-time) geometric information associated with the requested and/or forming 3D object (e.g. melt pool geometry). The use may be in real-time, or off-line. Real time may comprise during the operation of the energy beam and/or energy source. Off-line may be during the time a 3D object is not printed and/or during "off" time of the energy beam and/or source. The computer model may compare a sensed value (e.g., by the one or more sensors) to an estimated value of the target parameter. The computer model may (e.g., further) calculate an error term and readjust the at least one computer model to achieve convergence (e.g., of a desired or requested 3D model with the printed 3D object).

In some embodiments, the computer model estimates a target variable. The target variable may be of a physical or chemical occurrence (e.g., phenomenon) that may or may not be (e.g., directly) detectable. For example, the target variable may be of a temperature that may or may not be (e.g., directly) measurable. For example, the target variable may be of a physical location that may or may not be (e.g., directly) measurable. For example, the target variable may be an oxidative state of the material that may or may not be (e.g., directly) measurable. For example, a physical location may be inside the 3D object at a depth, that may be not directly measured by the one or more sensors. An estimated value of the target variable may be (e.g., further) compared to a critical value of the target variable. At times, the target value exceeds a critical value (e.g., threshold value), and the computer model may provide feedback to the controller to attenuate (e.g., turn off, or reduce the intensity of) the energy beam (e.g., for a specific amount of time). The computer model may set up a feedback control loop with the controller. The feedback control loop may be for the purpose of adjusting one or more target parameters to achieve convergence (e.g., of a desired or requested 3D model with the printed 3D object). In one embodiment, the computer model may predict (i) an estimated temperature of the melt pool, (ii) local deformation within the forming 3D object, (iii) global deformation and/or (iv) imaging temperature fields. The computer model may (e.g. further) predict corrective energy beam adjustments (e.g. in relation to a temperature target threshold). The adjustment predictions may be based on the (i) measured and/or monitored temperature information at a first location on the forming 3D object (e.g. a forming melt pool), (ii) a second location (e.g. in the vicinity of the forming melt pool), and/or (iii) geometric information (e.g. height) of the forming 3D object. The energy beam adjustment may comprise adjusting at least one control variable (e.g. power per unit area, dwell time, cross-sectional diameter, and/or speed) of the energy beam. In some embodiments, the control system may comprise a closed loop feed forward control scheme. The control scheme may override one or more (e.g., any) corrections and/or predictions by the computer model. The override may be by requesting a predefined amount of energy (e.g. power per unit area) to supply to the portion (e.g., of the material bed and/or of the 3D object). Real time may be before, during, or following formation of at least a portion of the 3D object. The control may comprise controlling a cooling rate (e.g., of a material bed or a portion thereof), control the microstructure of a transformed material portion, or control the microstructure of at least a portion of the 3D object. Controlling the microstructure may comprise controlling the phase, morphology, FLS, volume, or overall shape of the transformed (e.g., and subsequently solidified) material portion. The material portion may be a melt pool.

In some embodiments, the forming tool comprises one or more detectors/sensors. In some embodiments, a controller uses data obtained from one or more detectors/sensors. The detector may comprise a sensor. The detectors can comprise the sensors. The detectors (e.g., sensors) can be configured to measure one or more properties of the 3D object and/or the pre-transformed material (e.g., powder). The detectors can collect one or more signals from the 3D object and/or the target surface (e.g., by using the returning energy beams). In some cases, the detectors can collect signals from one or more optical sensors (e.g., as disclosed herein). The detectors can collect signals from one or more vision sensors (e.g. camera), thermal sensors, acoustic sensors, vibration sensors, spectroscopic sensor, radar sensors, and/or motion sensors. The optical sensor may include an analogue device (e.g., CCD). The optical sensor may include a p-doped metal-oxide-semiconductor (MOS) capacitor, charge-coupled device (CCD), active-pixel sensor (APS), micro/nano-electro-mechanical-system (MEMS/NEMS) based sensor, or any combination thereof. The APS may be a complementary MOS (CMOS) sensor. The MEMS/NEMS sensor may include a MEMS/NEMS inertial sensor. The MEMS/NEMS sensor may be based on silicon, polymer, metal, ceramics, or any combination thereof. The detector (e.g., optical detector) may be coupled to an optical fiber. Examples of a detector can be found in patent application number PCT/US15/65297, titled "FEEDBACK CONTROL SYSTEMS FOR THREE-DIMENSIONAL PRINTING" that was filed on December 11, 2015, which is incorporated herein by reference in its entirety.

In some embodiments, the detector includes a sensor, e.g., a temperature sensor. The temperature sensor (e.g., thermal sensor) may sense an IR radiation (e.g., photons). The thermal sensor may sense a temperature of at least one melt pool. The sensor may be a metrology sensor. The metrology sensor may comprise a sensor that measures the FLS (e.g., depth) of at least one melt pool. The transforming energy beam and the detector energy beam (e.g., thermal sensor beam and/or metrology sensor energy beam) may be focused on substantially the same position. The transforming energy beam and the detector energy beam (e.g., thermal sensor beam and/or metrology sensor energy beam) may be confocal.

The detector may include an imaging sensor. The imaging sensor can image a surface of the target surface comprising untransformed material (e.g., pre-transformed material) and at least a portion of the 3D object. The imaging sensor may be coupled to an optical fiber. The imaging sensor can image (e.g. using the returning energy beam) a portion of the target surface comprising transforming material (e.g., one or more melt pools and/or its vicinity). The optical filter or CCD can allow transmission of background lighting at a predetermined wavelength or within a range of wavelengths.

The detector may include a reflectivity sensor. The reflectivity sensor may include an imaging component. The reflectivity sensor can image the material surface at variable heights and/or angles relative to the surface (e.g., the material surface). In some cases, reflectivity measurements can be processed to distinguish between the exposed surface of the material bed and a surface of the 3D object. For example, the untransformed material (e.g., pre-transformed material) in the target surface can be a diffuse reflector and the 3D object (or a melt pool, a melt pool keyhole) can be a specular reflector. Images from the detectors can be processed to determine topography, roughness, and/or reflectivity of the surface comprising the untransformed material (e.g., pre-transformed material) and the 3D object. The detector may be used to perform thermal analysis of a melt pool and/or its vicinity (e.g., detecting keyhole, balling and/or spatter formation). The surface can be sensed (e.g., measured) with dark-field and/or bright field illumination and a map and/or image of the illumination can be generated from signals detected during the dark-field and/or bright field illumination. The maps from the dark-field and/or bright field illumination can be compared to characterize the target surface (e.g., of the material bed and/or of the 3D object). For example, surface roughness can be determined from a comparison of dark-field and/or bright field detection measurements. In some cases, analyzing the signals can include polarization analysis of reflected or scattered light signals.

The at least one sensor can be operatively coupled to a control system (e.g., computer control system). The sensor may comprise a light sensor, acoustic sensor, vibration sensor, chemical sensor, electrical sensor, magnetic sensor, fluidity sensor, movement sensor, speed sensor, position sensor, pressure sensor, force sensor, density sensor, distance sensor, or proximity sensor. The sensor may include a temperature sensor, weight sensor, material (e.g., powder) level sensor, metrology sensor, gas sensor, or humidity sensor. The metrology sensor may comprise a measurement sensor (e.g., height, length, width, angle, and/or volume). The metrology sensor may comprise a magnetic, acceleration, orientation, or optical sensor. The sensor may transmit and/or receive a sound (e.g., echo), magnetic, electronic, or electromagnetic signal. The electromagnetic signal may comprise a visible, infrared, ultraviolet, ultrasound, radio wave, or microwave signal. The metrology sensor may measure at least a portion of the layer of material. The layer of material may be a pre-transformed material (e.g., powder), transformed material, or hardened material. The metrology sensor may measure at least a portion of the 3D object. The gas sensor may sense any of the gas delineated herein. The distance sensor can be a type of metrology sensor. The distance sensor may comprise an optical sensor, or capacitance sensor. The temperature sensor can comprise Bolometer, Bimetallic strip, Calorimeter, Exhaust gas temperature gauge, Flame detection, Gardon gauge, Golay cell, Heat flux sensor, Infrared thermometer, Microbolometer, Microwave radiometer, Net radiometer, Quartz thermometer, Resistance temperature detector, Resistance thermometer, Silicon band gap temperature sensor, Special sensor microwave/imager, Temperature gauge, Thermistor, Thermocouple, Thermometer (e.g., resistance thermometer), or Pyrometer. The temperature sensor may comprise an optical sensor. The temperature sensor may comprise image processing. The temperature sensor may comprise a camera (e.g., IR camera, CCD camera). The pressure sensor may comprise Barograph, Barometer, Boost gauge, Bourdon gauge, Hot filament ionization gauge, Ionization gauge, McLeod gauge, Oscillating U-tube, Permanent Downhole Gauge, Piezometer, Pirani gauge, Pressure sensor, Pressure gauge, Tactile sensor, or Time pressure gauge. The position sensor may comprise Auxanometer, Capacitive displacement sensor, Capacitive sensing, Free fall sensor, Gravimeter, Gyroscopic sensor, Impact sensor, Inclinometer, Integrated circuit piezoelectric sensor, Laser rangefinder, Laser surface velocimeter, LIDAR, Linear encoder, Linear variable differential transformer (LVDT), Liquid capacitive inclinometers, Odometer, Photoelectric sensor, Piezoelectric accelerometer, Rate sensor, Rotary encoder, Rotary variable differential transformer, Selsyn, Shock detector, Shock data logger, Tilt sensor, Tachometer, Ultrasonic thickness gauge, Variable reluctance sensor, or Velocity receiver. The optical sensor may comprise a Charge-coupled device, Colorimeter, Contact image sensor, Electro-optical sensor, Infra-red sensor, Kinetic inductance detector, light emitting diode (e.g., light sensor), Light-addressable potentiometric sensor, Nichols radiometer, Fiber optic sensors, Optical position sensor, Photo detector, Photodiode, Photomultiplier tubes, Phototransistor, Photoelectric sensor, Photoionization detector, Photomultiplier, Photo resistor, Photo switch, Phototube, Scintillometer, Shack-Hartmann, Single-photon avalanche diode, Superconducting nanowire single-photon detector, Transition edge sensor, Visible light photon counter, or Wave front sensor. In another example, one or more sensors (e.g., optical sensors or optical level sensors) can be provided adjacent to the material bed such as above, below, or to the side of the material bed. In some examples, the one or more sensors can sense the powder level. The material (e.g., powder) level sensor can be in communication with a material dispensing mechanism (e.g., powder dispenser). Alternatively, or additionally a sensor can be configured to monitor the weight of the material bed by monitoring a weight of a structure that contains the material bed. One or more position sensors (e.g., height sensors) can measure the height of the material bed relative to the substrate. The position sensors can be optical sensors. The position sensors can determine a distance between one or more energy beams (e.g., a laser or an electron beam.) and a surface of the material (e.g., powder). The one or more sensors may be connected to a control system (e.g., to a processor, to a computer).

In some embodiments, the methods, systems, and/or the apparatus described herein comprise an actuator. In some embodiments, the methods, systems, and/or the apparatus described herein comprise a motor. The motor may comprise a servomotor. The servomotors may comprise actuated linear lead screw drive motors. The motor may comprise a stepper motor. The motors may comprise belt drive motors. The motors may comprise rotary encoders. The apparatuses and/or systems may comprise switches. The switches may comprise homing or limit switches. The motors may comprise actuators. The motors may comprise linear actuators. The motors may comprise belt driven actuators. The motors may comprise lead screw driven actuators. The actuators may comprise linear actuators. The systems and/or apparatuses disclosed herein may comprise one or more pistons. The piston may be a trunk, crosshead, slipper, or deflector piston. The motor may be controlled by the control system and/or manually. The apparatuses and/or systems described herein may include a system that adjusts a position of an (e.g., at least one) optical element (e.g., to direct an energy beam to impinge onto a guidance system). The system for adjusting the optical element may be controlled by the control system, or manually. The motor may connect to a system for adjusting the optical element. The motor may alter (e.g., the position of) the optical element with respect to an energy source, a guidance system, and/or an energy beam (e.g., guidance selection) path.

At times, one or more controllers are configured to control (e.g., direct) one or more apparatuses and/or operations. Control may comprise regulate, modulate, adjust, maintain, alter, change, govern, manage, restrain, restrict, direct, guide, oversee, manage, preserve, sustain, restrain, temper, or vary. The control configuration (e.g., "configured to") may comprise programming. The controller may comprise an electronic circuitry, and electrical inlet, or an electrical outlet. The configuration may comprise facilitating (e.g., and directing) an action or a force. The force may be magnetic, electric, pneumatic, hydraulic, and/or mechanic. Facilitating may comprise allowing use of ambient (e.g., external) forces (e.g., gravity). Facilitating may comprise alerting to and/or allowing: usage of a manual force and/or action. Alerting may comprise signaling (e.g., directing a signal) that comprises a visual, auditory, olfactory, or a tactile signal.

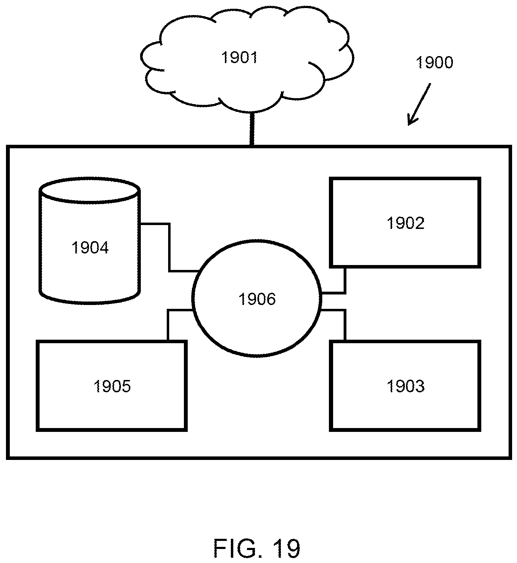

The controller may comprise processing circuitry (e.g., a processing unit). The processing unit may be central. The processing unit may comprise a central processing unit (herein "CPU"). The controllers or control mechanisms (e.g., comprising a computer system) may be configured to, e.g., programmed to implement methods of the disclosure. The controller may control at least one component of the systems and/or apparatuses disclosed herein. Fig. 19 is a schematic example of a computer system 1900 that is programmed or otherwise configured to facilitate the formation of a 3D object according to the methods provided herein. The computer system 1900 can control (e.g., direct and/or regulate) various features of printing methods, apparatuses and systems of the present disclosure, such as, for example, generation of forming instructions for formation of a 3D object. Generated forming instructions may comprise application of a pre-transformed material, application of an amount of energy emitted to a selected location, a detection system activation and deactivation, sensor data and/or signal acquisition, image processing, process parameters (e.g., dispenser layer height, planarization, chamber pressure), or any combination thereof. The computer system 1900 can be part of, or be in communication with, a printing system or apparatus, such as a 3D printing system or apparatus of the present disclosure. The processor may be coupled to one or more mechanisms disclosed herein, and/or any parts thereof. For example, the computer may be coupled to one or more energy sources, optical elements, processing chamber, build module, platform, sensors, valves, switches, motors, pumps, or any combination thereof.

The computer system 1900 can include a processing unit 1906 (also "processor," "computer" and "computer processor" used herein). The computer system may include memory or memory location 1902 (e.g., random-access memory, read-only memory, flash memory), electronic storage unit 1904 (e.g., hard disk), communication interface 1903 (e.g., network adapter) for communicating with one or more other systems, and peripheral devices 1905, such as cache, other memory, data storage and/or electronic display adapters. The memory 1902, storage unit 1904, interface 1903, and peripheral devices 1905 are in communication with the processing unit 1906 through a communication bus (solid lines), such as a motherboard. The storage unit can be a data storage unit (or data repository) for storing data. The computer system can be operatively coupled to a computer network ("network") 1901 with the aid of the communication interface. The network can be the Internet, an Internet and/or extranet, or an intranet and/or extranet that is in communication with the Internet. The network in some cases is a telecommunication and/or data network. The network can include one or more computer servers, which can enable distributed computing, such as cloud computing. The network, in some cases with the aid of the computer system, can implement a peer-to-peer network, which may enable devices coupled to the computer system to behave as a client or a server.

The processing unit can execute a sequence of machine-readable instructions, which can be embodied in a program or software. The instructions may be stored in a memory location, such as the memory 1902. The instructions can be directed to the processing unit, which can subsequently program or otherwise configure the processing unit to implement methods of the present disclosure. Examples of operations performed by the processing unit can include fetch, decode, execute, and write back. The processing unit may interpret and/or execute instructions. The processor may include a microprocessor, a data processor, a central processing unit (CPU), a graphical processing unit (GPU), a system-on-chip (SOC), a coprocessor, a network processor, an application specific integrated circuit (ASIC), an application specific instruction-set processor (ASIPs), a controller, a programmable logic device (PLD), a chipset, a field programmable gate array (FPGA), or any combination thereof. The processing unit can be part of a circuit, such as an integrated circuit. One or more other components of the system 1900 can be included in the circuit.

The storage unit 1904 can store files, such as drivers, libraries, and saved programs. The storage unit can store user data, e.g., user preferences and user programs. The storage unit may store one or more geometric models. The storage unit may store any region(s) of interest (ROIs) associated with (e.g., designated for) the one or more geometric models. The storage unit may store any (e.g., designated) forming processes associated with the ROls. The computer system in some cases can include one or more additional data storage units that are external to the computer system, such as located on a remote server that is in communication with the computer system through an intranet or the Internet.

The computer system can communicate with one or more remote computer systems through the network. For instance, the computer system can communicate with a remote computer system of a user (e.g., operator). Examples of remote computer systems include personal computers (e.g., portable PC), slate or tablet PC's (e.g., Apple^{®} iPad, Samsung^{®} Galaxy Tab), telephones, Smart phones (e.g., Apple^{®} iPhone, Android-enabled device, Blackberry^{®}), or personal digital assistants. The user can access the computer system via the network.

Methods as described herein can be implemented by way of machine (e.g., computer processor) executable code stored on an electronic storage location of the computer system, such as, for example, on the memory 1902 or electronic storage unit 1904. The machine executable or machine-readable code can be provided in the form of software. During use, the processor 1906 can execute the code. In some cases, the code can be retrieved from the storage unit and stored on the memory for ready access by the processor. In some situations, the electronic storage unit can be precluded, and machine-executable instructions are stored on memory.

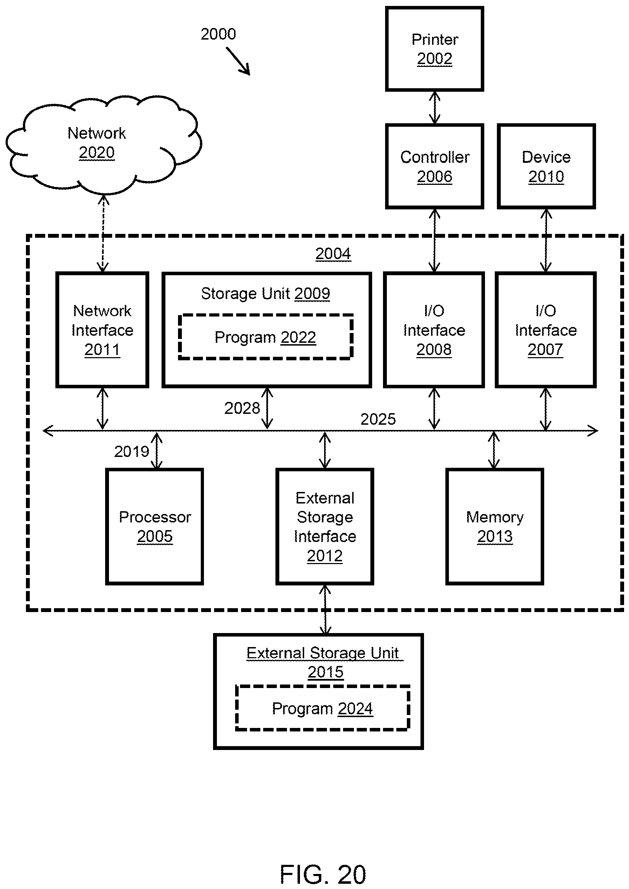

Fig. 20 shows an example computer system 2000, upon which the various arrangements described, can be practiced. The computer system (e.g., Fig. 20, 2000) can control and/or implement (e.g., direct and/or regulate) various features of printing methods, apparatus and/or system operations of the present disclosure. For example, the computer system can be used to instantiate a forming instructions engine. A forming instructions engine may generate instructions to control energy source parameters, processing chamber parameters (e.g., chamber pressure, gas flow and/or temperature), energy beam parameters (e.g., scanning rate, path and/or power), platform parameters (e.g., location and/or speed), layer forming apparatus parameters (e.g., speed, location and/or vacuum), or any combination thereof. A forming instructions engine may generate instructions for forming a 3D object in a layerwise (e.g., slice-by-slice) manner. The generated instructions may according to default and/or designated (e.g., override) forming (e.g., printing) processes. The computer system can be part of, or be in communication with, one or more 3D printers (e.g., Fig. 20, 2002) or any of their (e.g., sub-) components. The computer system can include one or more computers (e.g., Fig. 20, 2004). The computer(s) may be operationally coupled to one or more mechanisms of the printer(s). For example, the computer(s) may be operationally coupled to one or more sensors, valves, switches, actuators (e.g., motors), pumps, optical components, and/or energy sources of the printer(s). In some cases, the computer(s) controls aspects of the printer(s) via one or more controllers (e.g., Fig. 20, 2006). The controller(s) may be configured to direct one or more operations of the one or more printer(s). For example, the controller(s) may be configured to direct one or more actuators of printer(s). In some cases, the controller(s) is part of the computer(s) (e.g., within the same unit(s)). In some cases, the controller(s) is separate (e.g., a separate unit) from the computer(s). In some instances, the computer(s) communicates with the controller(s) via one or more input/output (I/O) interfaces (e.g., Fig. 20, 2008). The input/output (I/O) interface(s) may comprise one or more wired or wireless connections to communicate with the printer(s). In some embodiments, the I/O interface comprises Bluetooth technology to communicate with the controller(s).

The computer(s) (e.g., Fig. 20, 2004) may have any number of components. For example, the computer(s) may comprise one or more storage units (e.g., Fig. 20, 2009), one or more processors (e.g., Fig. 20, 2005), one or more memory units (e.g., Fig. 20, 2013), and/or one or more external storage interfaces (e.g., Fig. 20, 2012). In some embodiments, the storage unit(s) includes a hard disk drive (HDD), a magnetic tape drive and/or a floppy disk drive. In some embodiments, the memory unit(s) includes a random access memory (RAM) and/or read only memory (ROM), and/or flash memory. In some embodiments, the external storage interface(s) comprises a disk drive (e.g., optical or floppy drive) and/or a universal serial bus (USB) port. The external storage interface(s) may be configured to provide communication with one or more external storage units (e.g., Fig. 20, 2015). The external storage unit(s) may comprise a portable memory medium. The external storage unit(s) may be a non-volatile source of data. In some cases, the external storage unit(s) is an optical disk (e.g., CD-ROM, DVD, Blu-ray Disc^{™}), a USB-RAM, a hard drive, a magnetic tape drive, and/or a floppy disk. In some cases, the external storage unit(s) may comprise a disk drive (e.g., optical or floppy drive). Various components of the computer(s) may be operationally coupled via a communication bus (e.g., Fig. 20, 2025). For example, one or more processor(s) (e.g., Fig. 20, 2005) may be operationally coupled to the communication bus by one or more connections (e.g., Fig. 20, 2019). The storage unit(s) (e.g., Fig. 20, 2009) may be operationally coupled to the communication bus one or more connections (e.g., Fig. 20, 2028). The communication bus (e.g., Fig. 20, 2025) may comprise a motherboard.

In some embodiments, methods described herein are implemented as one or more software programs (e.g., Fig. 20, 2022 and/or 2024). The software program(s) may be executable within the one or more computers (e.g., Fig. 20, 2004). The software may be implemented on a non-transitory computer readable media. The software program(s) may comprise machine-executable code. The machine-executable code may comprise program instructions. The program instructions may be carried out by the computer(s) (e.g., Fig. 20, 2004). The machine-executable code may be stored in the storage device(s) (e.g., Fig. 20, 2009). The machine-executable code may be stored in the external storage device(s) (e.g., Fig. 20, 2015). The machine-executable code may be stored in the memory unit(s) (e.g., Fig. 20, 2013). The storage device(s) (e.g., Fig. 20, 2009) and/or external storage device(s) (e.g., Fig. 20, 2015) may comprise a non-transitory computer-readable medium. The processor(s) may be configured to read the software program(s) (e.g., Fig. 20, 2022 and/or 2024). In some cases, the machine-executable code can be retrieved from the storage device(s) and/or external storage device(s), and stored on the memory unit(s) (e.g., Fig. 20, 2006) for access by the processor (e.g., Fig. 20, 2005). In some cases, the access is in real-time (e.g., during printing). In some situations, the storage device(s) and/or external storage device(s) can be precluded, and the machine-executable code is stored on the memory unit(s). The machine-executable code may be pre-compiled and configured for use with a machine have a processor adapted to execute the machine-executable code, or can be compiled during runtime (e.g., in real-time). The machine-executable code can be supplied in a programming language that can be selected to enable the machine-executable code to execute in a pre-compiled or as-compiled fashion.

In some embodiments, the computer(s) is operationally coupled with, or comprises, one or more devices (e.g., Fig. 20, 2010). In some embodiments, the device(s) (e.g., Fig. 20, 2010) is configured to provide one or more (e.g., electronic) inputs to the computer(s). In some embodiments, the device(s) (e.g., Fig. 20, 2010) is configured to receive one or more (e.g., electronic) outputs from the computer(s). The computer(s) may communicate with the device(s) via one or more input/output (I/O) interfaces (e.g., Fig. 20, 2007). The input/output (I/O) interface(s) may comprise one or more wired or wireless connections. The device(s) can include one or more user interfaces (UI). The UI may include one or more keyboards, one or more pointer devices (e.g., mouse, trackpad, touchpad, or joystick), one or more displays (e.g., computer monitor or touch screen), one or more sensors, and/or one or more switches (e.g., electronic switch). In some cases, the UI may be a web-based user interface. At times, the UI provides a model design or graphical representation of a 3D object to be printed. The sensor(s) may comprise a light sensor, a thermal sensor, an audio sensor (e.g., microphone), and/or a tactile sensor. In some cases, the sensor(s) are part of the printer(s) (e.g., Fig. 20, 2002). For example, the sensor(s) may be located within a processing chamber of a printer (e.g., to monitor an atmosphere therein). The sensor(s) may be configured to monitor one or more signals (e.g., thermal and/or light signal) that is generated during a printing operation. In some cases, the sensor(s) are part of a component or apparatus that is separate from the printer(s). In some cases, the device(s) is a pre-printing processing apparatus. For example, in some cases, the device(s) can be one or more scanners (e.g., 2D or 3D scanner) for scanning (e.g., dimensions of) a 3D object. In some cases, the device(s) is a post-printing processing apparatus (e.g., a docking station, unpacking station, and/or a hot isostatic pressing apparatus). In some embodiments, the I/O interface comprises Bluetooth technology to communicate with the device(s).

In some embodiments, the computer(s) (e.g., Fig. 20, 2004), controller(s) (e.g., Fig. 20, 2006), printer(s) (e.g., Fig. 20, 2002) and/or device(s) (e.g., Fig. 20, 2010) comprises one or more communication ports. For example, one or more I/O interfaces (e.g., Fig. 20, 2007 or2008) can comprise communication ports. The communication port(s) may be a serial port or a parallel port. The communication port(s) may be a Universal Serial Bus port (i.e., USB). The USB port can be micro or mini USB. The USB port may relate to device classes comprising 00h, 01h, 02h, 03h, 05h, 06h, 07h, 08h, 09h, 0Ah, 0Bh, 0Dh, 0Eh, 0Fh, 10h, 11h, DCh, E0h, EFh, FEh, or FFh. The communication port(s) may comprise a plug and/or a socket (e.g., electrical, AC power, DC power). The communication port(s) may comprise an adapter (e.g., AC and/or DC power adapter). The communication port(s) may comprise a power connector. The power connector can be an electrical power connector. The power connector may comprise a magnetically coupled (e.g., attached) power connector. The power connector can be a dock connector. The connector can be a data and power connector. The connector may comprise pins. The connector may comprise at least 10, 15, 18, 20, 22, 24, 26, 28, 30, 40, 42, 45, 50, 55, 80, or 100 pins.

In some embodiments, the computer(s) is configured to communicate with one or more networks (e.g., Fig. 20, 2020). The network(s) may comprise a wide-area network (WAN) or a local area network (LAN). In some cases, the computer(s) includes one or more network interfaces (e.g., Fig. 20, 2011) that is configured to facilitate communication with the network(s). The network interface(s) may include wired and/or wireless connections. In some embodiments, the network interface(s) comprises a modulator demodulator (modem). The modem may be a wireless modem. The modem may be a broadband modem. The modem may be a "dial up" modem. The modem may be a high-speed modem. The WAN can comprise the Internet, a cellular telecommunications network, and/or a private WAN. The LAN can comprise an intranet. In some embodiments, the LAN is operationally coupled with the WAN via a connection, which may include a firewall security device. The WAN may be operationally coupled the LAN by a high capacity connection. In some cases, the computer(s) can communicate with one or more remote computers via the LAN and/or the WAN. In some instances, the computer(s) may communicate with a remote computer(s) of a user (e.g., operator). The user may access the computer(s) via the LAN and/or the WAN. In some cases, the computer(s) (e.g., Fig. 20, 2004) store and/or access data to and/or from data storage unit(s) that are located on one or more remote computers in communication via the LAN and/or the WAN. The remote computer(s) may be a client computer. The remote computer(s) may be a server computer (e.g., web server or server farm). The remote computer(s) can include desktop computers, personal computers (e.g., portable PC), slate or tablet PC's (e.g., Apple^{®} iPad, Samsung^{®} Galaxy Tab), telephones, smart phones (e.g., Apple^{®} iPhone, Android-enabled device, Blackberry^{®}), or personal digital assistants.

At times, the processor (e.g., Fig. 20, 2005) includes one or more cores. The computer system may comprise a single core processor, a multiple core processor, or a plurality of processors for parallel processing. The processor may comprise one or more central processing units (CPU) and/or graphic processing units (GPU). The multiple cores may be disposed in a physical unit (e.g., Central Processing Unit, or Graphic Processing Unit). The processor may be a single physical unit. The physical unit may be a die. The physical unit may comprise cache coherency circuitry. The processor may include multiple physical units. The physical unit may comprise an integrated circuit chip. The integrated circuit chip may comprise one or more transistors. The integrated circuit chip may comprise at least about 0.2 billion transistors (BT), 0.5 BT, 1BT, 2 BT, 3 BT, 5 BT, 6 BT, 7 BT, 8 BT, 9 BT, 10 BT, 15 BT, 20 BT, 25 BT, 30 BT, 40 BT, or 50 BT. The integrated circuit chip may comprise at most about 7 BT, 8 BT, 9 BT, 10 BT, 15 BT, 20 BT, 25 BT, 30 BT, 40 BT, 50 BT, 70 BT, or 100 BT. The integrated circuit chip may comprise any number of transistors between the afore-mentioned numbers (e.g., from about 0.2 BT to about 100 BT, from about 1 BT to about 8 BT, from about 8 BT to about 40 BT, or from about 40 BT to about 100 BT). The integrated circuit chip may have an area of at least about 50 mm², 60 mm², 70 mm², 80 mm², 90 mm², 100 mm², 200 mm², 300 mm², 400 mm², 500 mm², 600 mm², 700 mm², or 800 mm². The integrated circuit chip may have an area of at most about 50 mm², 60 mm², 70 mm², 80 mm², 90 mm², 100 mm², 200 mm², 300 mm², 400 mm², 500 mm², 600 mm², 700 mm², or 800 mm². The integrated circuit chip may have an area of any value between the afore-mentioned values (e.g., from about 50 mm² to about 800 mm², from about 50 mm² to about 500 mm², or from about 500 mm² to about 800 mm²). The multiple cores may be disposed in close proximity. The close proximity may allow substantial preservation of communication signals that travel between the cores. The close proximity may diminish communication signal degradation. A core as understood herein is a computing component having independent central processing capabilities. The computing system may comprise a multiplicity of cores, which are disposed on a single computing component. The multiplicity of cores may include two or more independent central processing units. The independent central processing units may constitute a unit that read and execute program instructions. The independent central processors may constitute parallel processing units. The parallel processing units may be cores and/or digital signal processing slices (DSP slices). The multiplicity of cores can be parallel cores. The multiplicity of DSP slices can be parallel DSP slices. The multiplicity of cores and/or DSP slices can function in parallel. The multiplicity of cores may include at least about 2, 10, 40, 100, 400, 1000, 2000, 3000, 4000, 5000, 6000, 7000, 8000, 9000, 10000, 11000, 12000, 13000, 14000 or 15000 cores. The multiplicity of cores may include at most about 1000, 2000, 3000, 4000, 5000, 6000, 7000, 8000, 9000, 10000, 11000, 12000, 13000, 14000, 15000, 20000, 30000, or 40000 cores. The multiplicity of cores may include cores of any number between the afore-mentioned numbers (e.g., from about 2 to about 40000, from about 2 to about 400, from about 400 to about 4000, from about 2000 to about 4000, from about 4000 to about 10000, from about 4000 to about 15000, or from about 15000 to about 40000 cores). In some processors (e.g., FPGA), the cores may be equivalent to multiple digital signal processor (DSP) slices (e.g., slices). The plurality of DSP slices may be equal to any of plurality core values mentioned herein. The processor may comprise low latency in data transfer (e.g., from one core to another). Latency may refer to the time delay between the cause and the effect of a physical change in the processor (e.g., a signal). Latency may refer to the time elapsed from the source (e.g., first core) sending a packet to the destination (e.g., second core) receiving it (also referred as two-point latency). One-point latency may refer to the time elapsed from the source (e.g., first core) sending a packet (e.g., signal) to the destination (e.g., second core) receiving it, and the designation sending a packet back to the source (e.g., the packet making a round trip). The latency may be sufficiently low to allow a high number of floating point operations per second (FLOPS). The number of FLOPS may be at least about 1 Tera Flops (T-FLOPS), 2 T-FLOPS, 3 T-FLOPS, 5 T-FLOPS, 6 T-FLOPS, 7 T-FLOPS, 8 T-FLOPS, 9 T-FLOPS, or 10 T-FLOPS. The number of flops may be at most about 5 T-FLOPS, 6 T-FLOPS, 7 T-FLOPS, 8 T-FLOPS, 9 T-FLOPS, 10 T-FLOPS, 20 T-FLOPS, 30 T-FLOPS, 50 T-FLOPS, 100 T- FLOPS, 1 P-FLOPS, 2 P-FLOPS, 3 P-FLOPS, 4 P-FLOPS, 5 P-FLOPS, 10 P-FLOPS, 50 P-FLOPS, 100 P-FLOPS, 1 EXA-FLOP, 2 EXA-FLOPS, or 10 EXA-FLOPS. The number of FLOPS may be any value between the afore-mentioned values (e.g., from about 0.1 T-FLOP to about 10 EXA-FLOPS, from about 0.1 T-FLOPS to about 1 T-FLOPS, from about 1 T-FLOPS to about 4 T-FLOPS, from about 4 T-FLOPS to about 10 T-FLOPS, from about 1 T-FLOPS to about 10 T-FLOPS, or from about 10 T-FLOPS to about 30 T-FLOPS, from about 50 T-FLOPS to about 1 EXA-FLOP, or from about 0.1 T-FLOP to about 10 EXA-FLOPS). In some processors (e.g., FPGA), the operations per second may be measured as (e.g., Giga) multiply-accumulate operations per second (e.g., MACs or GMACs). The MACs value can be equal to any of the T-FLOPS values mentioned herein measured as Tera-MACs (T-MACs) instead of T-FLOPS respectively. The FLOPS can be measured according to a benchmark. The benchmark may be an HPC Challenge Benchmark. The benchmark may comprise mathematical operations (e.g., equation calculation such as linear equations), graphical operations (e.g., rendering), or encryption/decryption benchmark. The benchmark may comprise a High Performance LINPACK, matrix multiplication (e.g., DGEMM), sustained memory bandwidth to/from memory (e.g., STREAM), array transposing rate measurement (e.g., PTRANS), Random-access, rate of Fast Fourier Transform (e.g., on a large one-dimensional vector using the generalized Cooley-Tukey algorithm), or Communication Bandwidth and Latency (e.g., MPI-centric performance measurements based on the effective bandwidth/latency benchmark). LINPACK may refer to a software library for performing numerical linear algebra on a digital computer. DGEMM may refer to double precision general matrix multiplication. STREAM benchmark may refer to a synthetic benchmark designed to measure sustainable memory bandwidth (in MB/s) and a corresponding computation rate for four simple vector kernels (Copy, Scale, Add and Triad). PTRANS benchmark may refer to a rate measurement at which the system can transpose a large array (global). MPI refers to Message Passing Interface.

At times, the computer system includes hyper-threading technology. The computer system may include a chip processor with integrated transform, lighting, triangle setup, triangle clipping, rendering engine, or any combination thereof. The rendering engine may be capable of processing at least about 10 million polygons per second. The rendering engines may be capable of processing at least about 10 million calculations per second. As an example, the GPU may include a GPU by NVidia, ATI Technologies, S3 Graphics, Advanced Micro Devices (AMD), or Matrox. The processor(s) may be able to process algorithms comprising a matrix or a vector. The core may comprise a complex instruction set computing core (CISC), or reduced instruction set computing (RISC).

At times, the computer system includes an electronic chip that is reprogrammable (e.g., field programmable gate array (FPGA)). For example, the FPGA may comprise Tabula, Altera, or Xilinx FPGA. The electronic chips may comprise one or more programmable logic blocks (e.g., an array). The logic blocks may compute combinational functions, logic gates, or any combination thereof. The computer system may include custom hardware. The custom hardware may comprise an algorithm.

At times, the computer system includes configurable computing, partially reconfigurable computing, reconfigurable computing, or any combination thereof. The computer system may include a FPGA. The computer system may include an integrated circuit that performs the algorithm. For example, the reconfigurable computing system may comprise FPGA, CPU, GPU, or multi-core microprocessors. The reconfigurable computing system may comprise a High-Performance Reconfigurable Computing architecture (HPRC). The partially reconfigurable computing may include module-based partial reconfiguration, or difference-based partial reconfiguration.

At times, the computing system includes an integrated circuit that performs the algorithm (e.g., control algorithm). The physical unit (e.g., the cache coherency circuitry within) may have a clock time of at least about 0.1 Gigabits per second (Gbit/s), 0.5 Gbit/s, 1 Gbit/s, 2 Gbit/s, 5 Gbit/s, 6 Gbit/s, 7 Gbit/s, 8 Gbit/s, 9 Gbit/s, 10 Gbit/s, or 50 Gbit/s. The physical unit may have a clock time of any value between the afore-mentioned values (e.g., from about 0.1 Gbit/s to about 50 Gbit/s, or from about 5 Gbit/s to about 10 Gbit/s). The physical unit may produce the algorithm output in at most about 0.1 microsecond (µs), 1 µs, 10 µs, 100 µs, or 1 millisecond (ms). The physical unit may produce the algorithm output in any time between the afore-mentioned times (e.g., from about 0.1 µs, to about 1 ms, from about 0.1 µs, to about 100 µs, or from about 0.1 µs to about 10 µs).

In some instances, the controller(s) (e.g., Fig. 20, 2006) uses real time measurements and/or calculations to regulate one or more components of the printer(s). In some cases, the controller(s) regulate characteristics of the energy beam(s). The sensor(s) (e.g., on the printer) may provide a signal (e.g., input for the controller and/or processor) at a rate of at least about 0.1KHz, 1KHz, 10KHz, 100KHz, 1000KHz, or 10000KHz). The sensor(s) may be a temperature and/or positional sensor(s). The sensor(s) may provide a signal at a rate between any of the above-mentioned rates (e.g., from about 0.1KHz to about 10000KHz, from about 0.1KHz to about 1000KHz, or from about 1000 KHz to about 10000KHz). The memory bandwidth of the processor(s) may be at least about 1 gigabytes per second (Gbytes/s), 10 Gbytes/s, 100 Gbytes/s, 200 Gbytes/s, 300 Gbytes/s, 400 Gbytes/s, 500 Gbytes/s, 600 Gbytes/s, 700 Gbytes/s, 800 Gbytes/s, 900 Gbytes/s, or 1000 Gbytes/s. The memory bandwidth of the processor(s) may be at most about 1 gigabytes per second (Gbytes/s), 10 Gbytes/s, 100 Gbytes/s, 200 Gbytes/s, 300 Gbytes/s, 400 Gbytes/s, 500 Gbytes/s, 600 Gbytes/s, 700 Gbytes/s, 800 Gbytes/s, 900 Gbytes/s, or 1000 Gbytes/s. The memory bandwidth of the processor(s) may have any value between the afore-mentioned values (e.g., from about 1 Gbytes/s to about 1000 Gbytes/s, from about 100 Gbytes/s to about 500 Gbytes/s, from about 500 Gbytes/s to about 1000 Gbytes/s, or from about 200 Gbytes/s to about 400 Gbytes/s). The sensor measurements may be real-time measurements. The real-time measurements may be conducted during at least a portion of the 3D printing process. The real-time measurements may be in-situ measurements in the 3D printing system and/or apparatus. the real-time measurements may be during at least a portion of the formation of the 3D object. In some instances, the processor(s) may use the signal obtained from the at least one sensor to provide a processor(s) output, which output is provided by the processing system at a speed of at most about 100 minute (min), 50 min, 25 min, 15 min, 10 min, 5 min, 1 min, 0.5 min (i.e., 30 seconds (sec)), 15 sec, 10 sec, 5 sec, 1 sec, 0.5 sec, 0.25 sec, 0.2 sec, 0.1 sec, 80 milliseconds (ms), 50 ms, 10 ms, 5 ms, or 1 ms. In some instances, the processor(s) may use the signal obtained from the at least one sensor to provide a processor(s) output, which output is provided at a speed of any value between the aforementioned values (e.g., from about 100 min to about 1 ms, from about 100 min to about 10 min, from about 10min to about 1 min, from about 5 min to about 0.5 min, from about 30 sec to about 0.1 sec, or from about 0.1 sec to about 1 ms). The processor(s) output may comprise an evaluation of the temperature at a location, position at a location (e.g., vertical and/or horizontal), or a map of locations. The location may be on the target surface. The map may comprise a topological or temperature map.

At times, the processor(s) (e.g., Fig. 20, 2005) uses the signal obtained from one or more sensors (e.g., on the printer) in an algorithm that is used in controlling the energy beam. The algorithm may comprise the path of the energy beam. In some instances, the algorithm may be used to alter the path of the energy beam on the target surface. The path may deviate from a cross section of a model corresponding to the requested 3D object. The processor may use the output in an algorithm that is used in determining the manner in which a model of the requested 3D object may be sliced. The processor may use the signal obtained from the at least one sensor in an algorithm that is used to configure one or more parameters and/or apparatuses relating to the 3D printing procedure. The parameters may comprise a characteristic of the energy beam. The parameters may comprise movement of the platform and/or material bed. The parameters may include characteristics of the gas flow system. The parameters may include characteristics of the layer forming apparatus. The parameters may comprise relative movement of the energy beam and the material bed. In some instances, the energy beam, the platform (e.g., material bed disposed on the platform), or both may translate. Alternatively, or additionally, the controller(s) (e.g., Fig. 20, 2010) may use historical data for the control. Alternatively, or additionally, the processor may use historical data in its one or more algorithms. The parameters may comprise the height of the layer of pre-transformed material disposed in the enclosure and/or the gap by which the cooling element (e.g., heat sink) is separated from the target surface. The target surface may be the exposed layer of the material bed.

At times, the memory (e.g., Fig. 20, 2006) comprises a random-access memory (RAM), dynamic random access memory (DRAM), static random access memory (SRAM), synchronous dynamic random access memory (SDRAM), ferroelectric random access memory (FRAM), read only memory (ROM), programmable read only memory (PROM), erasable programmable read only memory (EPROM), electrically erasable programmable read only memory (EEPROM), a flash memory, or any combination thereof. The flash memory may comprise a negative-AND (NAND) or NOR logic gates. A NAND gate (negative-AND) may be a logic gate which produces an output which is false only if all its inputs are true. The output of the NAND gate may be complement to that of the AND gate. The storage may include a hard disk (e.g., a magnetic disk, an optical disk, a magneto-optic disk, a solid-state disk, etc.), a compact disc (CD), a digital versatile disc (DVD), a floppy disk, a cartridge, a magnetic tape, and/or another type of computer-readable medium, along with a corresponding drive.

At times, all or portions of the software program(s) (e.g., Fig. 20, 2027) are communicated through the WAN or LAN networks. Such communications, for example, may enable loading of the software program(s) from one computer or processor into another, for example, from a management server or host computer into the computer platform of an application server. Thus, another type of media that may bear the software elements includes optical, electrical, and electromagnetic waves, such as used across physical interfaces between local devices, through wired and optical landline networks and over various air-links. The physical elements that carry such waves, such as wired or wireless links, optical links, or the like, also may be considered as media bearing the software program(s). As used herein, unless restricted to non-transitory, tangible "storage" media, terms such as computer or machine "readable medium" refer to any medium that participates in providing instructions to a processor for execution. Hence, a machine-readable medium, such as computer-executable code, may take many forms, including but not limited to, a tangible storage medium, a carrier wave medium, or physical transmission medium. Non-volatile storage media include, for example, optical or magnetic disks, such as any of the storage devices in any computer(s) or the like, such as may be used to implement the databases. Volatile storage media can include dynamic memory, such as main memory of such a computer platform. Tangible transmission media can include coaxial cables, wire (e.g., copper wire), and/or fiber optics, including the wires that comprise a bus within a computer system. Carrier-wave transmission media may take the form of electric or electromagnetic signals, or acoustic or light waves such as those generated during radio frequency (RF) and/or infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a ROM, a PROM and EPROM, a FLASH-EPROM, any other memory chip or cartridge, a carrier wave transporting data or instructions, cables or links transporting such a carrier wave, any other medium from which a computer may read programming code and/or data, or any combination thereof. The memory and/or storage may comprise a storing device external to and/or removable from device, such as a Universal Serial Bus (USB) memory stick, or/and a hard disk. Many of these forms of computer readable media may be involved in carrying one or more sequences of one or more instructions to a processor for execution.

At times, the computer system monitors and/or controls various aspects of the 3D printer(s). In some cases, the control is via controller(s) (e.g., Fig. 20, 2006). The control may be manual and/or programmed. The control may comprise an open loop control or a closed loop control (e.g., including feed forward and/or feedback) control scheme. The closed loop control may utilize signal from the one or more sensors. The control may utilize historical data. The control scheme may be pre-programmed. The control scheme may consider an input from one or more sensors (described herein) that are connected to the control unit (i.e., control system or control mechanism) and/or processor(s). The computer system (including the processor(s)) may store historical data concerning various aspects of the operation of the 3D printing system. The historical data may be retrieved at predetermined times and/or at a whim. The historical data may be accessed by an operator and/or by a user. The historical, sensor, and/or operative data may be provided in an output unit such as a display unit. The output unit (e.g., monitor) may output various parameters of the 3D printing system (as described herein) in real time or in a delayed time. The output unit may output the current 3D printed object, the ordered 3D printed object, or both. The output unit may output the printing progress of the 3D printed object. The output unit may output at least one of the (i) total time of, (ii) time remaining from, and (iii) time expanded on, printing the 3D object. The output unit may output (e.g., display, voice, and/or print) the status of sensors, their reading, and/or time for their calibration or maintenance. The output unit may output the type of material(s) used and various characteristics of the material(s) such as temperature and flowability of the pre-transformed material. The output unit may output which guidance system of a plurality of guidance systems is (e.g., configured for) directing an energy beam. The output unit may output a guidance selection beam path. The output unit may output a position of at least one optical element (e.g., configured for) selecting a guidance selection beam path. The computer may generate a report comprising various parameters of the 3D printing system, method, and or objects at predetermined time(s), on a request (e.g., from an operator), and/or at a whim. The output unit may comprise a screen, printer, a light source (e.g., lamp), or speaker. The control system may provide a report. The report may comprise any items recited as optionally output by the output unit.

At times, the systems, methods, and/or apparatuses disclosed herein comprises receiving a request for a 3D object (e.g., from a customer). The request can include a geometric model (e.g., a CAD file) of the requested 3D object. Alternatively, or additionally, a model of the requested 3D object may be generated. The model may comprise one or more regions of interest (ROIs). One or more forming procedures may be designated for an (e.g., each) ROI. The model may be used to generate 3D forming instructions. The software program(s) (e.g., Fig. 20, 2022 and/or 2024) may comprise the 3D forming instructions. The 3D forming instructions may exclude the 3D model. The 3D forming instructions may be based on the 3D model. The 3D forming instructions may take the 3D model into account. The 3D forming instructions may be alternatively or additionally based on simulations. The 3D forming instructions may use the 3D model. The 3D forming instructions may comprise using a calculation (e.g., embedded in a software program(s)) that considers the 3D model, simulations, historical data, sensor input, or any combination thereof. The processor may compute the calculation during the 3D forming procedure (e.g., in real-time), during the formation of the 3D object, prior to the 3D forming procedure, after the 3D forming procedure, or any combination thereof. The processor may compute the calculation in the interval between pulses of the energy beam, during the dwell time of the energy beam, before the energy beam translates to a new position, while the energy beam is not translating, while the energy beam does not irradiate the target surface, while the (e.g., at least one) energy beam irradiates the target surface, or any combination thereof. The processor may compute the calculation in the interval between a movement of at least one optical element from a first position to a second position, while the at least one optical element moves (e.g., translates) to a new (e.g., second) position. For example, the processor(s) may compute the calculation while the energy beam translates and does substantially not irradiate the exposed surface. For example, the processor(s) may compute the calculation while the energy beam does not translate and irradiates the exposed surface. For example, the processor(s) may compute the calculation while the energy beam does not substantially translate and does substantially not irradiate the exposed surface. For example, the processor(s) may compute the calculation while the energy beam does translate and irradiates the exposed surface. The translation of the energy beam may be translation along an entire energy beam path or a portion thereof. The energy beam path may correspond to a cross section of the model of the 3D object. The translation of the energy beam may be translation along at least one energy beam path.

In some embodiments, a pre-formation application (e.g., 3D object formation preparation software, or 3D object "pre-print" software) provides flexible capabilities for interaction with a virtual 3D model of a requested 3D object. The (e.g., flexible) pre-formation application may comprise (i) an application for interaction with a virtual model of a single (e.g., discrete) requested 3D object (e.g., "Object Environment" or "Part Space"), (ii) an application for interaction with at least one virtual model of a (e.g., at least one) requested 3D object in a manufacturing device environment (e.g., "Formation Environment" or "Build Space"), or (iii) an application for a combination of (i) and (ii). An Object Environment and/or a Formation Environment may be a virtual environment (e.g., as opposed to a physical, real-world, manufacturing environment, e.g., a real-world environment of a printer). In some embodiments, an Object Environment application and a Formation Environment application are provided as separate (e.g., distinct) applications. In some embodiments, an Object Environment application and a Formation Environment application are integrated in the same virtual environment (e.g., in a pre-formation application), in the same application, and/or in the same user interface (e.g., as various options, e.g., selectable from a menu such as a static or dropdown menu).

In some embodiments, an Object Environment application comprises at least one template corresponding to at least one virtual model of a requested 3D object. A template may comprise at least one preset regarding a formation variable category option. A template may comprise at least one preset regarding formation (e.g., manufacturing) of the requested 3D object, e.g., included in formation instructions for forming the requested 3D object. For example, a template may comprise at least one preset for control of a selected effect with respect to at least a portion of a requested 3D object. For example, a selected effect for the requested 3D object may comprise (i) a material type, (ii) a microstructure (iii) a density, (iv) a surface roughness, (v) a material porosity, (vi) a presence (or absence) of an auxiliary support structure, (vii) a dimensional requirement and/or tolerance, (viii) a rate of formation , with which (e.g., a portion of) the requested 3D object is formed. A template (e.g., from the at least one template) may comprise at least one (e.g., predefined) region of interest (ROI), and/or at least one forming process by which (e.g., at least a portion of) the requested 3D object is to be formed. At times, a forming process by which a 3D object is formed may change over time (e.g., versioned). In some embodiments, a template comprises a version identification (e.g., version number) corresponding to a given version of at least one forming process used in the formation of the requested 3D object. A template may comprise an orientation of an object during its formation. An orientation of an object may be with respect to a manufacturing device environment (e.g., with respect to a platform above which the 3D object is formed in the manufacturing device), with respect to a global vector, or with respect to a coordinate system. A template may comprise at least one property or setting of a manufacturing device with which the requested 3D object is formed. For example, a setting of a manufacturing device may comprise (I) an atmospheric composition within which the requested 3D object is formed, (II) a throughput of formation of the requested 3D object, (III) a layer height, (IV) gas flow, (V) manufacturing device (e.g., type and/or unit number), (VI) pre-transformed material size and/or type, (VII) transforming agent type (e.g., energy beam characteristic, or binder characteristic such as flow rate). The binder characteristic may comprise material type, binding rate (e.g., adhesion rate), flow speed, translational speed (of binder dispenser), and flow footprint on the target surface. In some embodiments, at least one template is associated with any (e.g., each) virtual model of a requested 3D object in an Object Environment application. In some embodiments, a plurality of templates may be associated with a given virtual model of a requested 3D object. Each of the plurality of templates may represent a different set of manufacturing instructions to instruct the requested 3D object. The Object Environment application may analyze (e.g., simulate) an outcome of the manufacturing instructions to result in an analyzed virtual example of manufacturing 3D object. At least two of the plurality of templates may differ in at least one 3D object characteristics. The Object Environment application may recommend a printing instruction set. The user may select a printing instruction set from a plurality of suggested printing instruction sets. For example, one template may be associated with a first manufacturing instruction set that is optimized for fastest manufacturing speed (having a first manufacturing speed), that is analyzed to result in a first object roughness and a first dimensional accuracy (e.g., relative to the virtual model of the requested 3D object); and a second template may be associated with a second manufacturing instruction set that is optimized for lowest surface roughness that is analyzed to result in a second object roughness, a second manufacturing speed, and a second dimensional accuracy relative to the virtual model of the requested 3D object. The user may choose the first or second manufacturing instruction based on the manufacturing speed, surface roughness, and/or dimensional accuracy.

An Object Environment application may comprise a control of interaction with a virtual model of a requested 3D object. For example, control of an interaction may comprise control of a view and/or a selection tool for interacting with (e.g., modifying) at least a portion of a virtual model of a requested 3D object. A modification (e.g., from a template) may comprise a change to, an addition, or a removal of, at least one preset of the template. For example, modifications from a template may include modification to at least one formation variable category option. For example, modifications from a template may include any modifications to (I) a selected effect, (II) a (e.g., predefined) ROI, (III) a forming process, (IV) a forming feature, for at least a portion of the requested 3D object, (V) an orientation at which the requested 3D object is formed (e.g., relative to a platform), (VI) a manufacturing speed, and/or (VI) a modification to at least one setting of a manufacturing device. In some embodiments, a catalog stores data associated with (e.g., all presets of) a template (e.g., and any modification thereto) of a (e.g., plurality of) virtual model(s). In some embodiments, an Object Environment application enables a modification to a virtual model of a requested 3D object. For example, a modification to a virtual model may comprise a simplification of the model. An alteration (e.g., simplification) of a virtual model may result in a greater ease of manufacturing, increase manufacturing speed, an increase in a performance of a manufacturing device for forming, and/or a reduction in weight of, a requested 3D object (as compared to the original, non-altered, 3D object).

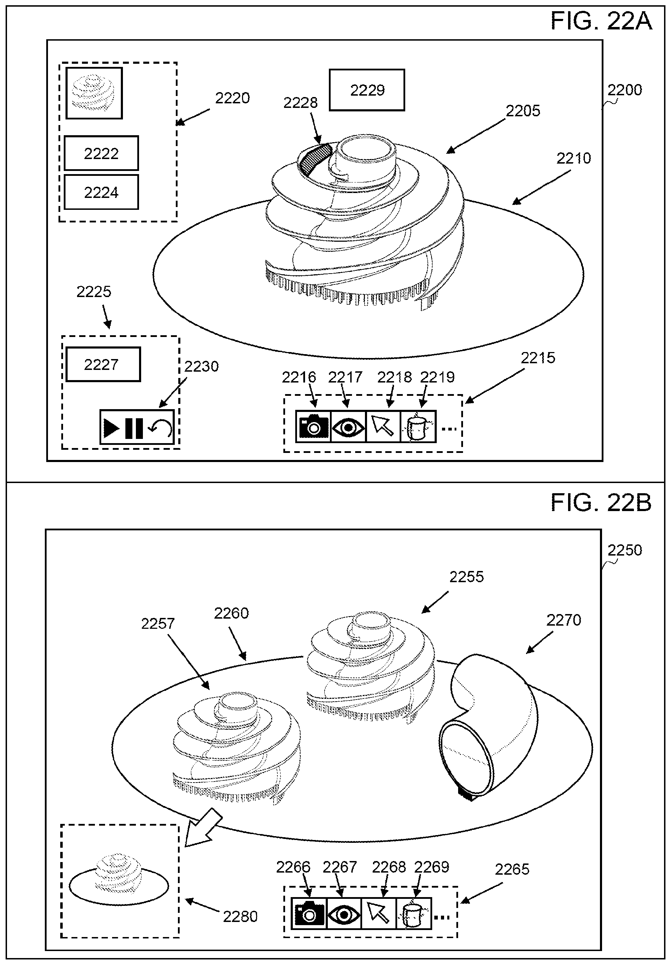

Fig. 22A depicts an example of an Object Environment application 2200. In the example of Fig. 22A, an Object Environment application includes a virtual model 2205 of a requested 3D object, displayed atop a reference plane 2210. The reference plane may imitate a platform above which the 3D object is disposed during manufacturing. In some embodiments, a virtual model of a requested 3D object may be displayed floating freely in space (e.g., devoid of any reference plane). In some embodiments, an Object Environment application may comprise at least one display aid. A display aid (e.g., recognizable indicator) may include (i) a (e.g., configurable) display color, (ii) a grid (e.g., that is overlaid onto a reference plane), (iii) (e.g., a plurality of) surface line(s) overlaid onto the virtual model of the 3D object, (iv) a highlight portion, e.g., according to a selected (e.g., range of) surface angles and/or curvature, and/or (v) a representation of an orientation the model within a (e.g., selected) coordinate system. The display aid may be configurable, with at least one color, pattern, and/or shade (e.g., grayscale) selected for: the virtual model of the 3D object; selected portion(s) of the virtual model of the 3D object; highlighted portions of the virtual model of the 3D object; an application background; a reference plane; and/or a selection tool overlay. The Object Environment application may comprise a toolbar. The toolbar may comprise an icon. The icon may have an associated function (e.g., may trigger an event). The event may be visualized on the screen. The even may be non-visual. The event may include data manipulation. The event may comprise opening one or more menus (e.g., dropdown menu). In the example of Fig. 22A, a toolbar 2215 includes icons corresponding to various manner of controlling a view of the virtual model of the 3D object, and/or various selection tools. For example, control of a view of the virtual model may comprise control of a camera view (e.g., angle, zoom, pan, focus and/or perspective) of the virtual model (e.g., 2216), a view modality (e.g., shaded, wireframe, shaded with edges, semi-transparent, forming process filter, and/or angle filter) (e.g., 2217), or a section view (e.g., 2219). In some embodiments, a section view comprises a section along an orthogonal axis of a (e.g., Cartesian) coordinate system (e.g., an xy plane, xz plane, and/or yz plane section). In some embodiments, a section view is along an arbitrary (e.g., user defined, or user configured) plane (e.g., in a coordinate system). In some embodiments the virtual model of the requested 3D object (e.g., 1st model) may be manipulated with another virtual model of a 3D object (2nd model). The other 3D object (2nd model) can be the same or different than the virtual model of the requested 3D object (1st model). The same or different may be in shape and/or size. Different may comprise smaller or larger. Different may comprise simpler or more complex (e.g., as geometrically defined). The 2nd model may be a sphere, a rectangle, or any other geometric or arbitrary shape. The manipulation may comprise intersection, union, symmetric difference, or relative complement operations of the two models with each other. The intersection operation may output a resulting virtual 3D object (e.g., resulting model) that is a volumetric overlap between the 1st model and the 2nd model. The union operation may output a resulting virtual 3D object (e.g., resulting model) that is a volumetric union between the 1st model and the 2nd model. The symmetric difference operation (e.g., disjunctive union) operation may output a resulting virtual 3D object (e.g., resulting model) that is a volumetric overlap between the 1st model and the 2nd model, excluding the result of their intersection. The relative complement operation (e.g., set difference) may output a resulting virtual 3D object (e.g., resulting model) that is the 1st model excluding the volume portion of the intersection between the 1st model and the 2nd model. The intersection operation (e.g., set difference) may output a resulting virtual 3D object (e.g., resulting model) that is the 2st model excluding the volume portion of the intersection between the 1st model and the 2nd model. In a similar manner, the virtual model of the requested 3D object may be manipulated using a plurality of other virtual models of 3D objects.

In some embodiments, the region of interest may comprise at least one patch (also referred herein as a "surface patch"). The patch may be a boundary patch. A patch may have a boundary representation (e.g., mathematical boundary representation). The patch may be a mathematically represented object (e.g., topological object). The patch may comprise topological information. The patch may carry its topological definition. The patch may comprise mathematical representation of a design (e.g., and the designer's intent). The patch may be a surface (e.g., a planar surface or a 3D surface, also referred to herein as "3D plane") generated from (i) a closed two-dimensional model, and/or (ii) a closed boundary. The patch may be created and/or defined by a designer. The designer may be of a requested model (e.g., a three-dimensional model). The designer may be of a requested object (e.g., 3D object). A patch may have one or more edges. The one or more edges of the patch may be disposed on the circumference of the patch. The one or more edges may form a closed structure (e.g., a closed loop). A patch may comprise a corner. A patch may be associated with a use and/or functionality as part of the 3D object. The utility and/or functionality may have one or more requirements and/or constraints. The requirements and/or constraints may be material constraints (e.g., microstructure, surface finish (e.g., roughness), porosity, strength (e.g., tensile strength), and/or strain). The microstructure may comprise metallurgical structure, crystal structure, or material phase. The patch be a portion of the 3D object that is not arbitrarily selected. The patch may be generated during formation of the 3D object. A model of the 3D object (e.g., a CAD model) may comprise one or more patches. The patches may be defined by the designer and/or by a design software.

In some embodiments, the pre-forming environment may facilitate selection of a portion of the 3D object that borders the edge, and expands from the edge to another portion of the 3D object (e.g., referred to herein as an "edge expansion portion"). The edge expansion portion may comprise a surface portion of the 3D object and/or a volumetric potion of the 3D object. An extend of the edge expansion portion may be defined automatically (e.g., as a default option). The extend of the edge expansion portion may be controlled (e.g., defined) by a user (e.g., interactively during usage of the pre-forming application). Once an edge expansion section is defined, similar edge expansion sections may be selected. In the pre-formation environment (e.g., application), the edge expansion section(s) and the bordering edge(s) may be displayed separately and/or concurrently.

Any of the user selectable options in any of the applications disclosed herein (e.g., pre-forming application) may be selected and/or revised (i) prior to, (ii) during, and/or (iii) after, loading (e.g., import) of the 3D object model to the application.

In some embodiments, control of a selection tool (e.g., 2218) includes user-guided selection (e.g., lasso selection, shape selection (closed shape such as a polygon (e.g., rectangle) or circular selection option)), geometry-based selection based on the geometry of the virtual model of the 3D object (e.g., a surface patch and/or edge), and/or selection of the entire virtual model of the 3D object. Fig. 22A depicts an example of a (e.g., patch) surface selection 2228, and an interaction window 2229 that provides an interface for specifying any modifications to the selected portion of the model. In the example of Fig. 22A, a window 2220 includes template information 2222 associated with the displayed model, and any specified modification(s) 2224 applied (e.g., from the template) to the current model.

In some embodiments, a Formation Environment application is configured for interaction with one or more virtual models of the 3D object (e.g., of a corresponding one or more requested 3D objects). In some embodiments, a Formation Environment application may interact with (e.g., load) at least one virtual model of a requested 3D object that was prepared in an Object Environment application. In some embodiments, a Formation Environment application may load at least one virtual model of a requested 3D object that was prepared in an application other than an Object Environment application. In some embodiments, a Formation Environment application may comprise interaction with (i) a single virtual model of the 3D object, (ii) a plurality of virtual models (e.g., corresponding to a same or to similar requested 3D object), or (iii) at least two different virtual models (e.g., corresponding to at least two different requested 3D objects). A Formation Environment application may be configured to organize a distribution (e.g., a layout) of one or more virtual models corresponding to one or more requested 3D objects that are formed in a forming cycle. The organization may be relative to a platform above which the 3D objects are to be manufactured in a horizontal direction and/or vertical direction. A Formation Environment application may correspond to at least one manufacturing device environment. For example, A Formation Environment application may comprise a virtual environment that corresponds to a physical environment of at least one manufacturing device (e.g., from a plurality of manufacturing devices). A physical environment of a manufacturing device may comprise at least one manufacturing device parameter. For example, a manufacturing device parameter may comprise a processing volume within which at least one object may be formed (e.g., during a forming cycle). A processing volume may comprise an area (e.g., of a platform) that is addressable by at least one transforming agent. A processing volume may comprise a height over which at least one object may be formed (e.g., over which a platform that supports a forming object may translate). In some embodiments, a Formation Environment application comprises a configuration of a virtual environment. A configuration of a given virtual environment may correspond to at least one parameter of a physical environment of a corresponding manufacturing device. In some embodiments, a Formation Environment application excludes enabling (e.g., locks) modification to at least a portion of a (e.g., loaded) virtual model of the 3D object. In some embodiments, a Formation Environment application enables modification to at least a portion of a (e.g., loaded) model. A modification to at least a portion of a loaded model may be made directly (e.g., within a Formation Environment application), and/or indirectly. Indirect modification may be through execution of at least one other application (e.g., via opening the model in an Object Environment application). Arranging of one or more objects in the Formation Environment may be according to a coordinate system. The coordinate system may comprise a Cartesian, polar, cylindrical, or homogenous coordinate system. The coordinate system may comprise a number line.

Fig. 22B depicts an example of a Formation Environment application 2250. In the example of Fig. 22B, a forming area (e.g., a platform) 2260 is disposed below an arrangement of a plurality of models (e.g., 2255, 2257, and 2270) that correspond to a plurality of requested 3D objects. An arrangement of virtual models may comprise a layout. In some embodiments, a Formation Environment application may comprise at least one display aid. A display aid may include (i) a (e.g., configurable) display pattern, color and/or shade, (ii) a grid (e.g., that is overlaid onto a forming area), (iii) (e.g., a plurality of) surface lines overlaid onto the layout, and/or (iv) a plane. The display color may be configurable for: the virtual model(s) (e.g., of a layout); selected portion(s) of the virtual model(s); highlighted portions of the virtual model(s); an application background; a forming area (e.g., platform); and/or a selection tool overlay. In the example shown in Fig. 22B, a toolbar 2265 includes icons corresponding to control of a view of the model(s) (e.g., of a layout), and a selection tool. For example, control of a view of the virtual model(s) may comprise control of a camera view (e.g., angle, zoom, pan, focus and/or perspective) of the mode(s)l (e.g., 2266), a view modality (e.g., shaded, wireframe, shaded with edges, semi-transparent, and/or angle filter) (e.g., 2267), or a section view (e.g., 2269). In some embodiments, control of a selection tool (e.g., 2268) comprises user-guided selection (e.g., lasso selection, or , a shape selection), geometry-based selection (e.g., a surface patch and/or edge), or selection of an entire virtual model (e.g., within a layout). In some embodiments, a Formation Environment application provides a capability to modify (e.g., a selected portion of) a virtual model of a requested 3D object. In some embodiments, a modification may be made (e.g., directly) from within a Formation Environment application. In some embodiments, a modification may be made (e.g., indirectly) by opening an Object Environment application (e.g., 2280).

In some embodiments, an Object Environment application and/or a Formation Environment application comprises a log (e.g., that maintains a history) of user interactions (e.g., for a given session). The log may comprise a journal. In some embodiments, a journal may track at least some (e.g., all) user interactions regarding viewing, selecting, modifying a template, modifying a layout and/or modifying model(s) of the requested 3D object(s). A user may have an option to select what user interactions are tracked in the journal, from a plurality of options. The journal may operate (e.g., be updated and/or save data) in real time. Real time may comprise updating a journal with (e.g., each) user interaction(s) with the application. In some embodiments, a journal comprises a command history. For example, a command may comprise a (e.g., any) interaction of a user with a User Interface (Ul) of an Object Environment application and/or a Formation Environment application. In some embodiments, a journal comprises a (e.g., text and/or icon) display of interactions of a user with a Ul. An interaction with a UI may be mediated by a (e.g., peripheral) device, for example, a keyboard, a computer mouse, a stylus, an audio device (e.g., microphone and/or speaker), and/or a screen (e.g., a touchscreen). In some embodiments, a journal enables command replay. A command replay may comprise a display (e.g., within an Object Environment application and/or a Formation Environment application) corresponding to the recorded commands of the journal. A command replay may comprise a rollback (e.g., reversion to a previous state) of at least one interaction with one or more virtual model of the 3D objects. In some embodiments, a journal enables scripting and/or testing of at least one interaction considering recorded user commands. For example, the scripting and/or testing may (e.g., automatically) perform at least one operation in an Object Environment application and/or a Formation Environment application. The scripting and/or testing operation(s) may be pre-determined, considering at least one command recorded in a journal.

In the example of Fig. 22A a journal (e.g., window) 2225 comprises a history of user interactions 2227 within an Object Environment application. Fig. 22A depicts exemplary tools 2230 for navigating the (e.g., display of the) history of user interactions, the navigation tools include a play function, a pause function, and a rewind function. In some embodiments, navigation tool(s) for a journal comprise a greater or a fewer number of functions. The position of a journal window may be located in a (e.g., lower left) region of an Object Environment application and/or a Formation Environment application. The position of the journal window may be pre-defined and/or altered by a user (e.g., to be anywhere in the region of the pre-formation application (e.g., the Object Environment application)).

In some embodiments, a pre-formation application enables loading a virtual model of a requested 3D object by importation of and/or opening one of a plurality of file format options. For example, a pre-formation application may enable importing and/or opening a virtual model of a 3D object that is in a native computer-aided design ("CAD") file format. A pre-formation application may enable importing and/or opening a model of a requested 3D object that is generatively designed, topologically optimized, and/or that includes at least a portion of a network region. A pre-formation application may be compatible with a (e.g., any) file format that supports implicit and/or explicit representation of surface(s) of a requested 3D object. A pre-formation application may be compatible with a (e.g., any) file format that supports a boundary-representation (B-rep) (e.g., solid) model. For example, a pre-formation application may be compatible with (e.g., import and/or open) file formats comprising IGES, JT, Parasolid, PRC, STEP, 3mf, or LTCX. In some embodiments, a pre-formation application imports and/or open a virtual model of a requested 3D object without converting (e.g., any portion of) the model to a mesh representation (e.g., of a surface or volume). In some embodiments, a pre-formation application imports and/or opens a virtual model of a requested 3D object (e.g., from a native CAD format) while maintaining a topology and/or a geometry of the requested 3D object. In some embodiments, a pre-formation application imports and/or opens a virtual model of a requested 3D object (e.g., from a native CAD format) while maintaining a surface patch representation of the requested 3D object (e.g., designated by an object design tool and/or object designer). In some embodiments, a pre-formation imports and/or opens a virtual model of a requested 3D object while converting (e.g., at least a portion of) the model to a mesh representation (e.g., of a surface or volume).

In some embodiments, the model of a requested 3D object may compromise one or more imperfections. The one or more imperfections may comprise a gap in a mesh (e.g., surface mash) representing the 3D object in the virtual space. In some embodiments, the pre-formation application may comprise an option to correct (e.g., heal) at least one defect of the 3D model. The pre-formation application may be configured to alert the user of the imperfection (e.g., type, location, extent, correction option(s)). The alert may be in the form of a message (e.g., visual, and/or audio). The visual message may be transitory (e.g., displayed on a screen) or non-transitory (e.g., printed on a paper or a disk). The correction may be manually selected (e.g., by a user) and/or automatically initiated (e.g., to cause automatic correction (e.g., healing)). The at least one defect may be at least type of defect. The option to correct the defect may be available depending on a threshold (e.g., value or function). The threshold may relate to the fidelity (e.g., resolution) of the printing process(es) and/or forming machine selected to form the 3D object. The threshold may be equal to or lower than the fidelity. For example, a threshold value may be at most equal to the fidelity value (e.g., resolution value) of the forming machine. For example, when a 3D printer is programmed to form solid layers (as part of the 3D object) that are 50 micrometers (µm) high, then the threshold value of the gap may be equal to or less than 50 µm. For example, when a 3D printer is programmed to form melt pools are 20 µm in diameter, then the threshold value of the gap can be equal to or less than 20 µm. A user may able to select the threshold, or the threshold benchmark (e.g., layer height or melt-pool diameter). The threshold may be automatically chosen and/or suggested by the pre-formation application. The threshold may be a value of at most about 100µm, 80µm, 50µm, 25µm, 10µm, 5µm, or 1µm. The threshold may be a value between the afore-mentioned values (e.g., from about 100µm to about 1µm, from about 100µm to about 50µm, from about 50µm to about 1µm, from about 25µm to about 1µm, or from about 50µm to about 5µm). The correction may be such that (i) drastic changed to the requested 3D object are avoided, (ii) the change will not be noticeable (e.g., be within the resolution of the forming machine), (iii) will preserve the intent of the user (e.g., and/or designer), (iv) will allow the formed 3D object to function according to its intended purpose, and/or (v) facilitate formation of the 3D object within requested tolerance.

At times, a surface of a (e.g., CAD) virtual model of a 3D object may comprise at least one (e.g., surface) patch. A surface patch may comprise a (e.g., closed) region of a virtual model surface that is defined (e.g., bounded) by one or more curves that form a closed connection. In some embodiments, one or more bounding curves may comprise non-uniform rational basis splines (abbreviated herein as "NURBS"). A surface patch may comprise a closed region between at least two (e.g., contiguous) surface edges. A plurality (e.g., all) surfaces of a virtual model of a 3D object may be divided into a plurality of (e.g., non-intersecting and/or nonoverlapping) surface patches. At least two surface patches of a plurality of surface patches that represent a virtual model surface may have a different shape and/or size. In some embodiments, the (e.g., respective) shape and/or size of a plurality of surface patches that represent one or more (e.g., all) surfaces of a virtual model of the 3D object are automatically generated. For example, an application (e.g., CAD) that is used to a generate a virtual model of the 3D object may automatically generate a plurality of surface patches (e.g., in a pre-determined manner). Generation of a plurality of surface patches to represent surfaces of a virtual model of the 3D object may be with or without user interaction (e.g., configuration). The user may be a designer of the requested 3D object.

At times, a network region (e.g., structure) comprises a lightweight region (e.g., a structure having a density that is less than a density of an adjacent denser (e.g., continuous, or "solid") portion of the requested 3D object. For example, a network region may have an increased porosity (e.g., with respect to a porosity of an adjacent portion of the requested 3D object). The network region may comprise a foam, or a 3D structure resembling a lattice (e.g., a mesh). The network region may comprise a base unit that is repetitive within the network. The network region may be devoid of repeating units. The network structure may comprise at least 30%, 40%, 50%, 60%, 70%, 80%, 90%, or 95% porous region (measured as volume/volume), e.g., that does not comprise a transformed and/or hard material. The network structure may comprise at most 0.5%, 5%, 10%, 20%, 30%, 40%, 50%, 60%, or 70% hard and/or transformed material, e.g., dense material (measured as volume/volume). In some embodiments, a network region comprises at least one region having regular (e.g., repeating) order (e.g., a lattice region). A fundamental length scale (FLS) of a distance over which a repeating order occurs (e.g., a repetition distance, or coherence length) may be about 25 micrometers (µm), about 50 µm, about 200 µm, about 500 µm, about 1 millimeter (mm), or about 2 mm. An FLS of a repeating distance for a network region having a regular order may be between any value of the aforementioned values (e.g., from about 25 µm to about 2 mm, from about 25 µm to about 200 µm, or from about 200 µm to about 2mm). In some embodiments, a network region comprises at least one region having a semi-regular order (e.g., a region that has a regular order within a given dimensional tolerance). The dimensional tolerance for a semi-regular order may be expressed as a fraction of a FLS of an ordered network region repetition distance (e.g., a coherence length "CL" at a direction). For example, a dimensional tolerance for a semi-regular order may be about 0.01 * CL (where "*" denotes a multiplication operation), about 0.05 * CL, about 0.1 * CL, about 0.25 * CL, or about 0.5 * CL. A dimensional tolerance for a semi-regular order may be between any value of the afore-mentioned values (from about 0.01 * CL to about 0.5 * CL, from about 0.01 * CL to about 0.1 * CL, or from about 0.1 * CL to about 0.5 * CL). The direction of the coherence length may correspond to the lattice structure of the network (e.g., corresponding to the coordinates defined by the repeating unit). The dimensional tolerance may be prescribed and/or altered by a user. In some embodiments, a network region comprises at least one region that is devoid of regular order. For example, a region that is devoid of regular order may comprise an amorphous composition, a sponge-like composition, or a foam-like composition (e.g., a metal foam). In some embodiments, a requested 3D object may comprise (i) a network region, (ii) a hybrid network region (e.g., at least one network region and at least one denser region), or (iii) a composite network region (e.g., at least two types of network regions). Various network (e.g., scaffold) regions and their formation can be found in Patent Application serial number PCT/US15/059790, titled "SYSTEMS, APPARATUSES AND METHODS FOR GENERATING THREE-DIMENSIONAL OBJECTS WITH SCAFFOLD FEATURES," filed November 9, 2015, which is incorporated herein by reference in its entirety. Denser is with comparison to the network region. The denser region may be at most 25%, 20%, 10%, 5%, 1%, 0.5%, 0.05% porous (measured as volume by volume).

The network structure can include at least one scaffold structure, e.g., in a lattice pattern. The lattice can comprise a diamond, tetragonal lattice, or cubic type repeating unit. The network may comprise at least one fiber and/or column structure. network constituents may be interconnected in at least one position. Individual small-scaffold features may be interconnected to one another and/or to non-scaffold features (e.g., dense portions). Interconnected small-scaffold features can be disposed alongside features that may not have small-scaffold features (e.g., that comprise bulk and/or denser features). The network may comprise a sheet. The sheet can comprise (i) a bundle of fibers and/or columnar structures, (ii) a mesh or (iii) a net. The network may comprise hollow cavities (e.g., compartments). The network may comprise a scaffold (e.g., formed of the cavity walls). The scaffolds can be arranged in a lattice pattern. The lattice may comprise substantially repeating units. The units may comprise cavity walls comprised of hard and/or transformed material. The lattice units may comprise cavities. The network can comprise a regular or irregular pattern. The network can comprise a fiber, wire, shell, plate, or foil. The network may comprise a mesh of interconnected fibers that can support each other. The network may comprise a woven mesh, for example, a woven mesh of fibers. At least two of the wires (e.g., fibers) included in the network may be interlaced, interweaved, alternated, entwined, braided, weaved, contacted, bordered, touching, or any combination thereof. The wires (e.g., fibers) included in the network may form a pattern comprising lines that are arranged in crisscross, zigzag, parallel, or any combination thereof. At least one of the wires (e.g., fibers) included in the network may be twisted, bent, waggling, waving, oscillating, or irregular. The network may comprise a mesh, a braid, a tangled arrangement, or an intertwined arrangement of wires. The pattern in the lattice may comprise separated wires or planes. The pattern may comprise touching wires or planes. The pattern may be linear or non-linear. The pattern may comprise wires or planes of FLSs. The wires or planes may comprise a variation. The wires or planes within the network may vary. The variation may be in the microstructures, crystal structures, or metallurgical structures. The variation may be in the FLSs of the wires or planes that form the network. The variation may be in relative angles of the wires or planes. The variation may be in the respective distance between the wires or planes. The variation may depend on the respective wire or plane position (e.g., relative position) within the small scaffold feature. The variation may depend on the position of the wire or plane within the 3D object with respect to a selected position or selected area. The selected position or selected area may be any selected position or area disclosed herein (e.g., edge, king, crossing, rim, ledge, or bridge). The variation may be in a type and/or FLS of the microstructures. The variation may follow a mathematical series. The variation may follow a power series (e.g., a Taylor series). The power series may be a geometric series. The pattern may follow a logarithmic series. The pattern may follow a trigonometric series (e.g., Fourier series). The pattern may follow a Laurent or Dirichlet series. The series may be converging or diverging. The series may be a telescopic series. The series may be a linear series, arithmetic series, geometric series, arithmetic-geometric series, exponential series, logarithmic series, or any combination thereof. The logarithmic series may be a natural logarithmic series. The exponential series may be a natural exponential series. In some cases, the network can be enclosed by the harder material of the requested 3D object. The network may reside, at least in part, on a surface of the 3D object. At least a portion of the requested 3D object (e.g., the network) may comprise a functionally graded material. Various network structures and their formation can be found in Patent Application serial number PCT/US15/059790, which is incorporated herein by reference in its entirety.

In some embodiments, a pre-formation application imports and/or opens (e.g., a combination of) at least two data files to display and/or interact with a virtual model of a requested 3D object that comprises a network region. A portion of the virtual model corresponding to (e.g., all) denser (e.g., "solid," bulk, or continuous) regions of the requested 3D object may be stored in a first file format. A portion of the virtual model corresponding to (e.g., all) network regions of the requested 3D object may be stored in (e.g., at least) a second file format. In some embodiments, the first file format and the second file format are the same. In some embodiments, the first file format and the second file format are different. In some embodiments, the denser region(s) of a virtual model may be stored in a file format that maintains a topology and/or geometry of a model (e.g., that supports B-rep models). In some embodiments, the network region(s) of a virtual model of the 3D object may be stored in a (e.g., delimited) data file format (e.g., a comma separated values (csv), 3mf, and/or LTCX). In some embodiments, the network region(s) of a virtual model of the 3D object may be stored in at least two data file formats. For example, a virtual model of the 3D object comprising a composite network region may store at least two types of the network region in at least two different data file formats. The network region(s) of a virtual model of the 3D object may be stored in a data file format that enables "procedural formation" of the network region(s). For example, procedural formation may comprise formation of elements of the network according to a relationship (e.g., at least one equation). In some embodiments, (e.g., each of) the data files of the denser region and of the network regions comprise a coordinate system. In some embodiments, a pre-formation application may combine (e.g., for display and/or interaction with a user) any denser region and any network region of a hybrid virtual model of the 3D object in a representation comprising a view, a virtual file or a UI representation. The view, virtual file and/or UI representation may consider a coordinate system, e.g., the coordinate system stored in at least one data file of the denser region(s) and of the network region. In some embodiments, a pre-formation application may combine (e.g., for display and/or interaction) any denser region and any network region of a hybrid requested 3D object for a virtual model of the requested 3D object, e.g., considering a user input. For example, a user input may specify (e.g., relative) an orientation of the denser region and/or network region. The specification may include (i) a mating (e.g., join, or offset distance), and/or (ii) an angle between, at least one surface of the denser region and at least one surface of the network region.

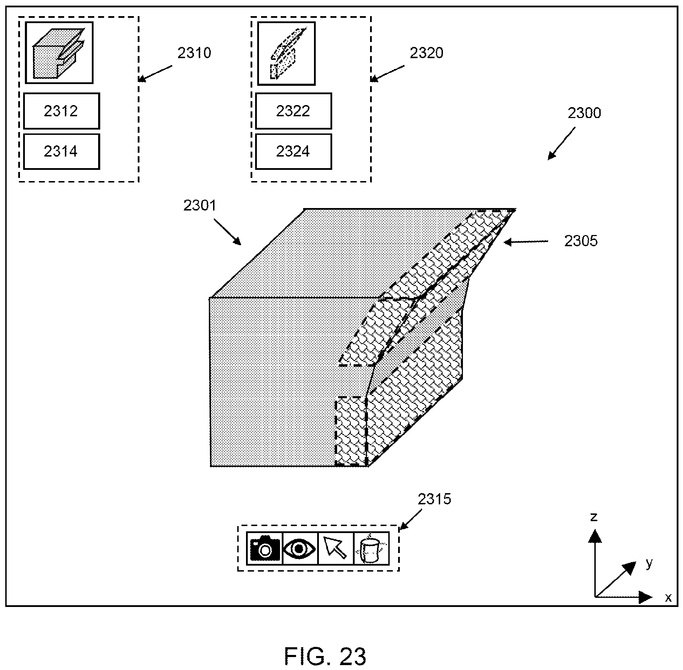

In some embodiments, a pre-formation application comprises selective display (e.g., viewing and/or hiding) and/or selection of denser portion(s) or network portion(s) of a virtual model of a hybrid network structure of a 3D object. Fig. 23 depicts an exemplary pre-formation application UI including a selection and viewing tool (e.g., 2315) for interacting with a solid region and/or a network region of a hybrid network model. A pre-formation application may comprise (e.g., respective) interaction windows for the denser region and the network region. In some embodiments, at least two (e.g., different) templates are associated with a denser region and a network region of a hybrid network model of the 3D object. A pre-formation application may group any templates associated with a virtual hybrid network model of the 3D object according to region type (e.g., denser region or network region). Fig. 23 depicts an example of a window 2310 associated with a denser region 2301 of a displayed hybrid network model 2300, the denser region(s) window including template information 2312, and any specified modification(s) 2314 applied (e.g., from the template) to the denser region. Fig 23 depicts an example window 2320 associated with a network region 2305 of the displayed virtual model of the 3D object, the network region(s) window including template information 2322, and any specified modification(s) 2324 applied (e.g., from the template) to the network region.

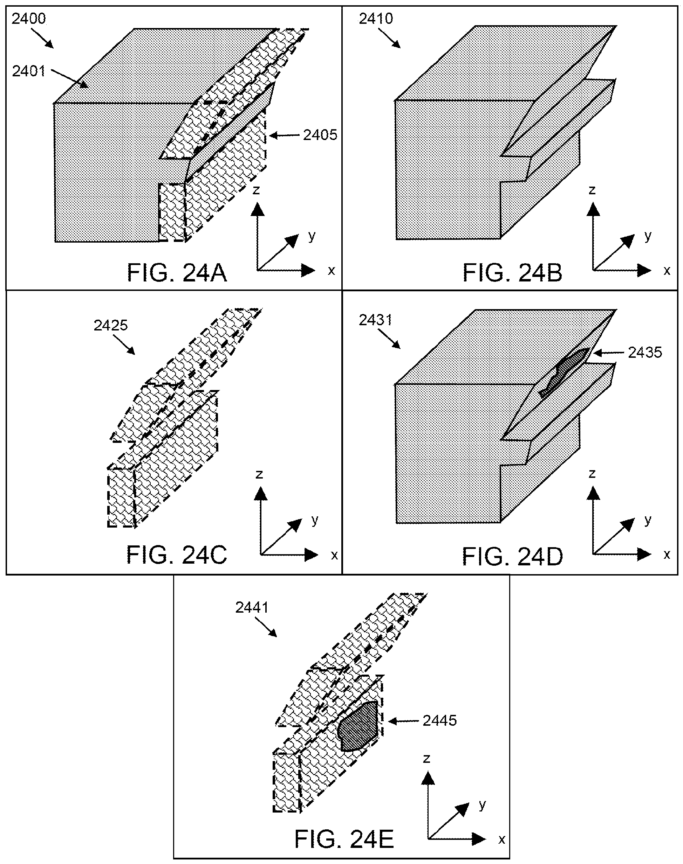

At times, it may be difficult (e.g., for a user) to access (e.g., to view, select and/or otherwise manipulate) a portion of a denser region or of a network region (e.g., of a virtual hybrid network model of the 3D object). For example, a denser region or a network region of a virtual hybrid network model of the 3D object may comprise a complex arrangement (e.g., portion). A complex arrangement may comprise a region of a virtual model (e.g., of a requested 3D object) that comprises a high surface area to volume ratio ("sa/vol"). The sa/vol has units of inverse length ("L-1"), where length may be expressed in any suitable unit (e.g., meter, centimeter, micrometer, nanometer, yard, foot, inch, or micro-inch). In some embodiments, a complex portion (e.g., arrangement) of a virtual model has a sa/vol of at least about 10 L-1, 25 L-1, 50 L-1, 100 L-1, or 200 L-1. The complex portion of a virtual model may have a sa/vol value that is between any of the afore-mentioned values (e.g., from about 10 L-1 to about 200 L-1, from about 10 L-1 to about 50 L-1, or from about 50 L-1 to about 200 L-1). For example, one or more network regions may be (e.g., at least partially) embedded in adjacent denser region(s). In some embodiments, a viewing tool of a pre-formation application enables selective display (e.g., making visible and/or hiding) of at least a portion of a denser region and/or network region of a virtual hybrid network model of the 3D object. A viewing tool enabling selective display may form a part of a selection and/or viewing tool (e.g., 2315), or a part of a region-specific window (e.g., 2310 and/or 2320). A selective display of denser regions and/or network regions may improve an ease of viewing, selecting, modifying, and/or otherwise manipulating at least a portion of a virtual hybrid network model of the 3D object. For example, a viewing tool may comprise selective display of an entirety (e.g., all) denser regions and/or network regions of a virtual hybrid network model of the 3D object. The selective display may consider at least one data source (e.g., a file) used to load a virtual hybrid network model of the 3D object. For example, a pre-formation application may identify (e.g., flag) a (e.g., portion of a) virtual hybrid network model of the 3D object as corresponding to a denser region (or a network region) according to a file format of a file used to import and/or open the given portion. Fig. 24A depicts an example of a pre-formation application having loaded a hybrid network model 2400 that includes a denser region 2401 and a network region 2405. A selective display tool of a pre-formation application may enable selection of a (e.g., entire) solid region (e.g., Fig. 24B, 2410), and/or of a (e.g., entire) network region (e.g., Fig. 24C, 2425). A selective display tool may enable hiding at least a portion (e.g., all) of a denser region and/or a network region. A selective display tool may enable viewing at least a portion (e.g., all) of a denser region and/or a network region. In some embodiments, a selection and/or viewing tool enables a selection of at least a portion of a denser region, while at least a portion of a network region is hidden. In the example of Fig. 24D, a selected portion 2435 is made from a surface of a denser region 2431 (e.g., while a corresponding network region of a hybrid network model is hidden). In the example of Fig. 24E, a selected portion 2445 is made from a surface of a network region 2441 (e.g., while a corresponding solid region of a hybrid network model is hidden).

In some embodiments, a region of interest (ROI) designated for a portion of a virtual model of a requested 3D object comprises at least one selected forming process or forming feature. An ROI may (e.g., further) comprise forming parameters, which forming parameters may comprise (i) a requested surface quality (e.g., roughness) for a formed 3D object, (ii) a requested rate of object formation, (iii) a requested dimensional fidelity (e.g., of a formed 3D object with respect to a requested 3D object), or (iv) a requested material composition and/or microstructure. In some embodiments, a pre-formation application comprises a display of any specified ROI(s) for a virtual model of a requested 3D object. A display of an ROI may comprise a designation of at least one forming process, forming (e.g., manufacturing) machine, forming feature, or forming parameter that is associated with the ROI. A designation at least one forming process, forming feature, forming machine (e.g., manufacturing apparatus (e.g., machine such as a printer)), or forming parameter may comprise a label indicating at least one category such as, for example, formation variable category (e.g., forming process, forming feature, and/or forming parameter) that is specified for the ROI. In some embodiments, a category may comprise at least two of: a forming process, a forming feature, or a forming parameter. In some embodiments, a quality category may include a requested surface roughness, a requested dimensional fidelity, or a combination of the foregoing. In some embodiments, a formation rate category may include a requested formation rate. The label may be visible on the virtual model of the 3D object. A location of the label may be assigned automatically and/or by a user. The location of the label on the virtual 3D object may be stored (e.g., for a future use). A user may be able to select a forming machine for the 3D object, e.g., from a plurality of forming machines. An option to select and/or alter a selection of the forming machine, may be incorporated in any virtual environment (e.g., module and/or program) disclosed herein, e.g., a pre-formation application. For example, the option to select and/or alter a selection of the forming machine, may be incorporated in the Object Environment and/or in the Forming Environment.

In some embodiments, a pre-formation application viewing (e.g., visualization) tool facilitates inspection and/or selection of at least a portion of a virtual model of a requested 3D object. A viewing tool (e.g., a Ul) may facilitate a (e.g., any) interaction of a user (e.g., via the Ul) with a pre-formation application. An output of the pre-formation application viewing tool may be utilized for preparation of (or may comprise) forming instructions to form the requested 3D object. An interaction with the pre-formation application viewing tool may be mediated by at least one (e.g., peripheral) device, for example, a keyboard, a computer mouse, a stylus, an audio device, a tactile device, and/or a screen (e.g., a touchscreen). In some embodiments, a pre-formation application viewing tool comprises a geometry-aware selection (e.g., a surface patch, a surface patch edge, or a border between at least two adjacent surface patches). In some embodiments, adjacent patches form a border by contacting each other at the border line (e.g., curve). A selection may be made considering a specified value or range of values in at least one selection filter category (e.g., curvature, radius of curvature, overhang angle, and/or overhang width). For example, a geometry-aware selection may comprise selection considering at least a portion of a (e.g., surface) patch of a virtual model of a 3D object. In some embodiments, a pre-formation application maintains an arrangement of a plurality of surface patches that represent a surface of a virtual model of a 3D object. For example, a pre-formation application may maintain a plurality of surface patches for a virtual model as defined (e.g., generated) in a native CAD application. In some embodiments, a pre-formation application may generate an arrangement of a plurality of surface patches to represent a surface of a (e.g., imported and/or opened) virtual model of a 3D object. In some embodiments, a pre-formation application viewing tool facilitates arbitrary selection of at least one portion of a virtual model surface of a 3D object. An arbitrary selection may be made via a selection tool (e.g., a lasso tool).

A pre-formation application may comprise a display filter (e.g., according to angle and/or curvature). The display filter may be according to formation variable category options. In some embodiments, a display filter may cause a display of an indication (e.g., highlight) of a (e.g., all) portions of a model that correspond to a specified property, value or range of values in at least one display filter category. A display filter category may comprise (i) an (e.g., 3D object surface and/or overhang) angle, (ii) an overhang FLS (e.g., width or length) of the 3D object, (iii) a (e.g., intrinsic and/or extrinsic) curvature, (iv) a distance (e.g., height) above a platform that would support the requested 3D object during its formation, (v) any auxiliary supports that would anchor a surface portion of the 3D object to the platform during formation of the 3D object, or (v) any specified forming process(es) for forming the requested 3D object. The curvature may be of a surface of the requested 3D object. In some embodiments, a display filter indication comprises at least one visual representation (represented by a color, pattern and/or shade). The pattern may comprise a raster. In some embodiments, a display filter comprises a heatmap. A heatmap may comprise a spectrum and/or gradient of the highlight representation. Different highlight representation spectrum (and/or gradient) may correspond to different values of a range of values in at least on display filter category. In some embodiments, a specified value or range of values of a display filter category may be configurable (e.g., by a user). In some embodiments, a display filter may facilitate selection of at least a portion of a virtual model of the 3D object. For example, a pre-formation application may facilitate selection of at least a portion of a virtual model of the 3D object that corresponds to at least one highlighted portion, considering a result of a display filter setting. A pre-formation application may facilitate isolation of the selected portion(s) from a remainder of the virtual model. For example, a remainder of (e.g., non-selected portions) of a virtual model may be rendered invisible (e.g., hidden), or rendered semi-transparent (e.g., as directed by a user).

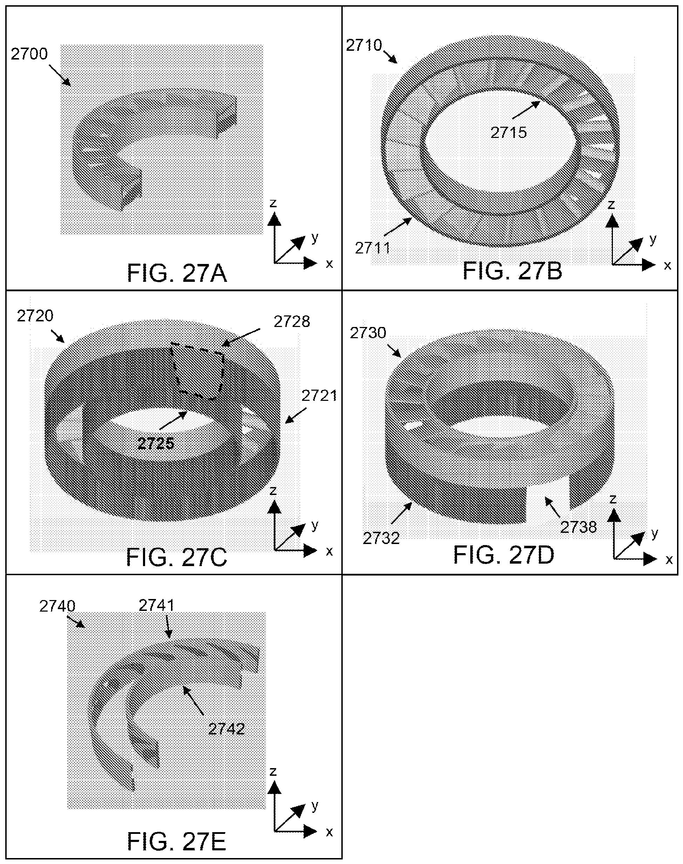

At times, a virtual model of a requested 3D object comprises a plurality of similar regions (e.g., surfaces and/or geometries). Similar regions may (e.g., at least) differ in their (e.g., respective) locations in space, or in placement in a coordinate system, e.g., of a pre-formation environment. For example, similar regions may comprise (i) a plurality of through-holes of a same size (e.g., within a tolerance), (ii) a plurality of arch (e.g., ceiling) regions, (iii) portions of a virtual model of the 3D object comprising a same angle (e.g., within a tolerance), or (iv) regions of a model comprising a same curvature (e.g., within a tolerance). The portions may comprise ledges, arches, depression (e.g., 2505), protrusion, or blades (e.g., 2632). The portions may comprise a network. The portions may exclude a network. At times, a pre-formation application provides an extensible selection tool that facilitates selection of at least two similar regions of a model of a requested 3D object. The at least two similar regions of a model of a requested 3D object may be grouped. A filter may be applied on one or more selected region of the virtual model of the 3D object. The plurality of selected regions may be grouped. The plurality of selected regions (e.g., for application of a region, and/or for defining a group) may be similar or dissimilar. In some embodiments, a group may comprise similar regions (e.g., similar blades 2651, similar depressions 2515). In some embodiments, an extensible selection tool facilitates selection of all similar portions of the virtual model of the 3D object (e.g., similar blades 2651, similar depressions 2515). In some embodiments, an extensible selection tool facilitates selection of at least one second portion that is a similar portion to a first portion of the virtual model of the 3D object. Selection of at least one (e.g., fewer than all) additional portion that is a similar portion(s) to a previously selected portion, may be made within a (e.g., user) specified region of the virtual model of the 3D object (e.g., Fig. 27A, 2700). In the example shown in Fig. 27A a (e.g., section) portion of a stator ring 2710 is selected and presented as 2700. One or more blades in 2700 may be selected. One or more wall portions (e.g., Fig. 27E, interior wall portion 2742 and/or exterior wall portion 2741 of a virtual model 2740) may be selected. In some embodiments, a (e.g., first, previous, or initial) selected portion of the virtual model of the 3D object may be expanded to (e.g., one or more, or any) similar portions of the (e.g., entire) virtual model of the 3D object. A similar portion may comprise a similar geometry (e.g., similar surface patch geometry, a similarity in surface patch edge, or a similarity in a border between at least two surface patches). For example, a similar geometry may comprise two patches having an identical geometry, wherein the two patches are located at different positions in (e.g., 3D) space, e.g., with respect to each other, with respect to a coordinate system, global vector, and/or with respect to the platform. In some embodiments, the similarity of the similar geometries considers (e.g., comprises a geometry within) a tolerance. A tolerance may be pre-defined, and/or user defined. A tolerance may be altered (e.g., configured by a user). In some embodiments, a similarity tolerance may be regarding a fundamental length scale (FLS) of the portion (e.g., volume enclosed by the surface patch), a radius of curvature (RoC) of a (e.g., first) selected portion surface, or an angle of the selected portion surface (e.g., relative to a coordinate system, global vector, and/or with respect to the platform, wherein the portion is of a virtual model of the 3D object. A RoC of a (e.g., surface and/or interior) virtual model portion (e.g., section of the virtual model) of a requested 3D object may equal infinity (e.g., when the portion of the virtual model is planar). The RoC of the virtual model portion may have a value of at least about 0.1 millimeter (mm), 0.5 mm, 0.1 centimeter (cm), 0.5 cm, 1 cm, 5 cm, 10 cm, 30 cm, 50 cm, or 1 meter (m). The RoC of the virtual model portion may have any value between the afore-mentioned values (from about 0.1 mm to about 1 m, from about 0.1 mm to about 1 cm, or from about 1 cm to about 1 m). For example, a RoC similarity tolerance may be a dimension of at most about 0.01 * RoC, 0.02 * RoC, 0.05 * RoC, 0.1 * RoC, 0.25 * RoC, or 0.5 * RoC, of a first selected portion of a virtual model. A similarity tolerance may be a dimension between any of the aforementioned values (e.g., from about 0.01 * RoC to about 0.5 * RoC, from about 0.01 * RoC to about 0.25 * RoC, or from about 0.25 * RoC to about 0.5 * RoC, of a first selected portion of a virtual model). In some embodiments, a similarity tolerance may be regarding a surface (e.g., overhang and/or ceiling) angle of a selected (e.g., first) portion of a model. For example, an angle similarity tolerance (e.g., + or-) at most about 0.05°, about 0.2°, about 0.5°, about 1°, about 5°, about 10°, about 25°, or about 50°, of a surface angle of a first selected portion. An angle similarity tolerance (e.g., +/-) may be between any of the afore-mentioned values (e.g., from about 0.05° to about 50°, from about 0.05° to about 25°, or from about 25° to about 50°). A tolerance may be an error range. A tolerance may be any of the afore-mentioned value above or below a requested value (e.g., of dimension, angle, and/or curvature) related to the portion of the requested 3D object.

In some embodiments, the pre-formation application (e.g., Object Environment) may be configured to facilitate selection of a portion (e.g., a section) of the virtual model of the requested 3D object. The portion (e.g., section) may be a surface section (e.g., a patch). The portion (e.g., section) may be a volumetric portion (e.g., volumetric section). The volumetric section may be defined by one or more surface patches. The volumetric section may comprise a surface portion. The volumetric portion may be embedded in the 3D object. The volumetric portion may be devoid of a surface portion. The pre-formation application may be configured to facilitate selection of the portion and/or one or more additional portion similar thereto. The pre-formation application may be configured to facilitate assignment of a (i) process parameter, (ii) forming feature, and/or (ii) material characteristic, to the portion(s). The assignment may be by a user and/or automatic (e.g., in the form of default option). In some embodiments, the user may not be able to assign a (i) process parameter, (ii) forming feature, and/or (ii) material characteristic, to the portion.

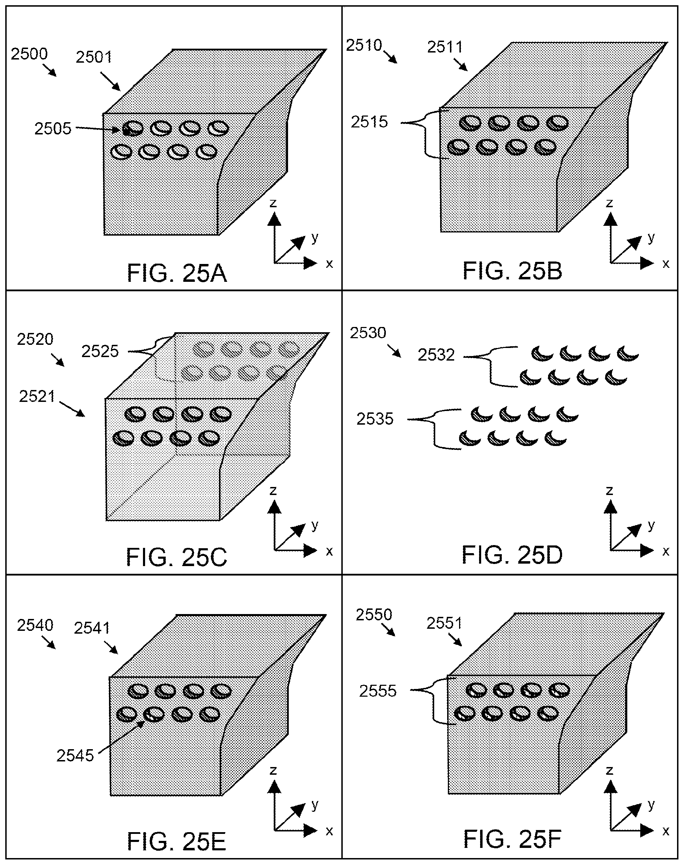

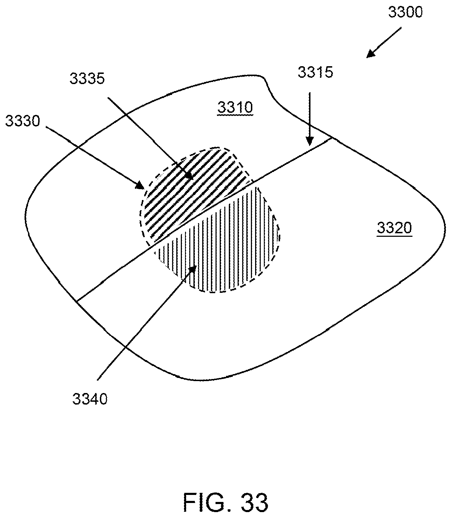

In some embodiments, identification of similar regions of a virtual model of a 3D object is facilitated by geometric and/or topological data associated with the virtual model of a 3D object or portion thereof (e.g., surface patch data). In some embodiments, a pre-formation application associates a selection of a (e.g., first) portion of a virtual model of a 3D object while considering (e.g., according to) a surface patch. For example, the portion of the virtual model can be associated with at least a portion of at least one (e.g., parent) surface patch. For example, the portion of the virtual model can be associated with a surface patch that has or has not been modified (e.g., expanded, shrunk, or altered in any way). In some embodiments, a selection comprises (e.g., respective) portions of at least two surface patches. In the example of Fig. 33, a portion 3300 of a virtual model of a requested 3D object includes two (e.g., parent) surface patches (e.g., 3310 and 3320, separated along border 3315). A geometry and/or size of respective portions of at least two surface patches may be the same or different. Fig. 33 depicts an example of a selection 3330 that includes a (e.g., first) portion 3335 and a (e.g., second) portion 3340 that have different geometry and size. A pre-formation application may facilitate expansion of a (e.g., first) selection (e.g., associated with at least one first parent surface patch) to any similar portions of a model by considering (e.g., searching for) any similar parent surface patches of the virtual model of a 3D object (e.g., with a tolerance). A search for any similar parent surface patch(es) may return no (e.g., further) instances of surface patch(es) similar to the parent surface patch(es). The search results may be grouped to a group. A search for any similar parent surface patch(es) may return at least one instance of surface patch(es) similar to the parent surface patch(es). Fig. 25A depicts an example of a (e.g., first) selection 2500 of a portion 2505 within a recess of a model 2501. Fig. 25B depicts an expansion of an initial selection 2510 to a plurality of selected portions 2515 within a (e.g., corresponding) plurality of recesses of a model 2511.

In some embodiments, a pre-formation application facilitates modifying (e.g., refining) a display (e.g., view) of a virtual model of a requested 3D object. For example, a refinement to a display of a virtual model of the 3D object may comprise changing a displayed (e.g., Ul) appearance of at least a portion of the virtual model of the 3D object. Changing the displayed appearance (e.g., on a Ul) may include (i) rendering (e.g., at least partially) transparent, (ii) rendering hidden (e.g., invisible), (iii) exposing, and/or (iv) isolating, at least a portion of a virtual model of the 3D object. At least a portion of a virtual model of the 3D object may comprise a selected portion, or an entirety of the virtual model of the 3D object. Changing (e.g., modifying or refining) a display of a virtual model of the 3D object may facilitate generation of any regions of interest (ROI), modifications to any (e.g., predefined) ROI, or specification of at least one formation variable category option (e.g., forming process or forming feature) for at least a portion of the virtual model of the 3D object. For example, modifying a display of a virtual model of the 3D object may facilitate viewing and/or modifying (e.g., adding or removing supports, and/or applying corrective deformation adjustments, e.g., Object Pre-print Correction) to at least a portion of a virtual model of the 3D object that is (e.g., normally) hidden or obstructed from view. Rendering a partially transparent view may be referred to herein as an "X-ray view." An X-ray view may facilitate (e.g., a more complete) view of internal portions of a model. For example, an "X-ray view" may facilitate viewing which portions of a model are selected following an expansion of a first selected portion of the model to similar portions of the model. In the example of Fig. 25C, an "X-ray view" 2520 of a virtual model of the 3D object 2521 facilitates viewing all selected recessed portions of the virtual model of the 3D object, including recessed portions 2525 that are located at the back of the virtual model of the 3D object.

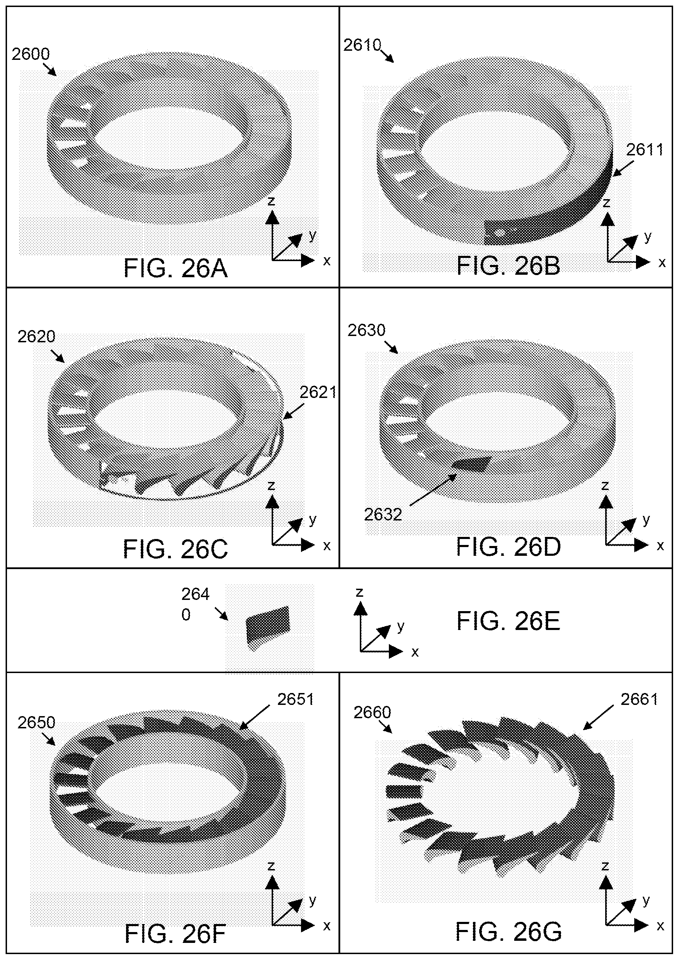

At times, rendering invisible may facilitate viewing and/or selecting portions of a virtual model of the 3D object that are obstructed from view (e.g., internal structures). In some embodiments, a rendering hidden comprises removing any (e.g., all) selected portions of a virtual model of the 3D object invisible (e.g., hidden). For example, a virtual model of the 3D object of a requested 3D object may comprise a plurality of similar (e.g., repeating) structures that are at least partially contained within an interior portion of the virtual model of the 3D object (e.g., Fig. 26A, a plurality of blades of a stator ring 2600 having an interior wall 2606 and an exterior wall 2604, and blades between interior and exterior walls). An interior portion may be defined by at least one exterior wall of a virtual model of the 3D object. In some embodiments, at least a portion (e.g., of a surface patch) of a virtual model of the 3D object is selected (e.g., Fig. 26B, a portion 2611 of an exterior wall of a stator ring 2610), and rendered hidden (e.g., Fig. 26C, invisible portion 2621 of stator ring 2620).

At times, isolating at least a portion of a virtual model of the 3D object may facilitate a view of, or modification to, the at least the portion of the virtual model of the 3D object. For example, isolating at least a portion of a virtual model of the 3D object may remove at least one obscuring portion of the virtual model of the 3D object from view. In the example of Fig. 26D, a selected (e.g., highlighted) single blade 2632 of a stator ring 2630 is partially obscured by exterior and interior walls of the stator ring. In the example of Fig. 26E, a display isolation operation results in a stator ring blade 2640 that is displayed without obstruction. In some embodiments, isolating at least a portion of a virtual model of the 3D object may facilitate a view of any (e.g., all) portions selected following an expansion of a first portion to any (e.g., all) similar portions of the model (e.g., Fig. 25., portions 2532 and 2535 of recesses of a model 2530). In the example of Fig. 26F, a plurality of (e.g., all) blades 2651 of a stator ring 2650 are selected; in the example of Fig. 26G a plurality of blades 2661 is isolated for display from a (e.g., remainder of a) stator ring 2660, e.g., the walls of the stator ring (e.g., 2604 and 2606) that are excluded from this view.

In some embodiments, a (e.g., first or initial) selection of at least a portion of a virtual model of the 3D object may be refined (e.g., modified). For example, a first selection may comprise a (e.g., predefined) ROI. A refinement may comprise an addition to or a subtraction from a first selection (e.g., an ROI). A refinement to a first selection (e.g., ROI) may be made (i) programmatically (e.g., according to a surface angle, a radius of curvature of a feature that comprises a curvature (e.g., hole 2505), and/or a curvature of a surface portion), or (ii) at whim (e.g., via a selection tool such as a free selection tool, e.g., lasso tool). A refinement to an ROI may comprise a modification to (i) which portion(s) of a virtual model of the 3D object is/are associated with the ROI, or (ii) one or more formation variable category options (e.g., forming processes, or forming features) specified for the ROI. For example, a ROI may have a (e.g., first) formation quality associated therewith. A refinement selection to at least a portion of the ROI may be made to specify a (e.g., second) formation quality in the at least the portion. For example, an ROI may have a forming feature (e.g., auxiliary supports) associated therewith. A refinement selection to at least a portion of the ROI may be made to specify a removal of one or more auxiliary supports in at least the portion of the virtual model of the 3D object. In the example of Fig. 27B, a stator ring 2710 comprises an ROI including a bottom surface of an outer ring (e.g., 2711) and of an inner ring (e.g., 2715) corresponding to the interior and exterior wall so the stator ring. An ROI may have an associated specification of at least one forming process or at least one forming feature (e.g., auxiliary supports). In the example shown in Fig. 27C, an ROI of a stator ring 2720 comprises a specification of auxiliary supports 2721 and 2725 to bottom surfaces of an outer ring and an inner ring, respectively. In some embodiments, a modification to a first selection may comprise selecting a subset of (e.g., surfaces of) the first selection. For example, a modification may comprise selecting a subset of surfaces that form a part of a ROI of a model. In the example of Fig. 27C, a refinement selection 2728 comprises a portion of the ROI (e.g., a portion of bottom surfaces of the outer and inner rings). In the example of Fig. 27D, an ROI has been refined to remove supports 2732 from a (e.g., gap) portion 2738 of a stator ring 2730.

A refinement to an ROI may comprise an expansion of a first (e.g., refinement) selected portion to any (e.g., all) similar portions (e.g., surface patches) of the ROI. In the example of Fig. 25E, a virtual model of the 3D object 2540 comprises an ROI 2541 having a plurality recessed portions (e.g., that are curved). Fig. 25E depicts a first refinement selection 2545 made on a bottom surface of one of the recessed portions of the virtual model of the 3D object. Fig. 25F depicts an expansion 2551 of a first refinement selection (e.g., application of the first refinement) to all similar portions of the virtual model of the 3D object 2550, to form a plurality of selected (e.g., similar) portions 2555.

In some embodiments, a ROI set may comprise a plurality of selected portions of a virtual model of a requested 3D object. A plurality of selected portions forming a ROI set may comprise a plurality of similar portions (e.g., similar surface patch regions). For example, an ROI set may be formed of at least two (e.g., all) portions of a virtual model of the 3D object that satisfy a given selection filter criterion. For example, a ROI set may correspond to a plurality of regions (e.g., through-holes) of the virtual model of the 3D object that comprise a given radius of curvature (RoC) (e.g., about 2 mm). For example, an ROI set may correspond to a plurality of regions (e.g., overhang portions and/or ceiling portions) that comprise a given (e.g., range of) surface angle(s) (e.g., from about 10° to about 20°). An ROI set may comprise a plurality of (e.g., at least one) dissimilar portions. In some embodiments, a plurality of selected portions forming an ROI set may comprise at least two dissimilar portions. A dissimilar portion may comprise a difference (e.g., with respect to another portion of an ROI set) in at least one of a size (FLS), geometry, shape, topology, location (e.g., in 3D space), or surface (e.g., patch). A plurality of selected portions may be from disparate regions of a virtual model of the 3D object.

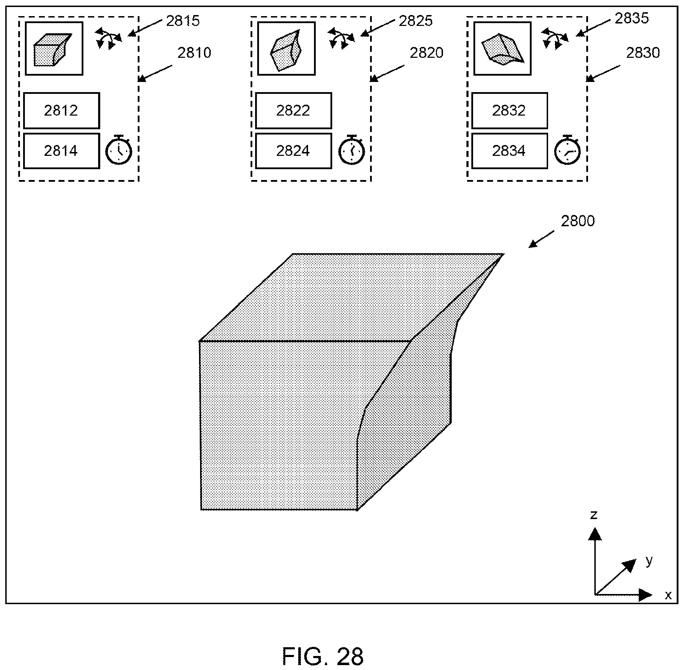

In some embodiments, selection of a first set of formation variable category options (e.g., collectively referred to herein as "template," or "virtual object template"), and/or material properties may result in formation instructions for a 3D object that is different in at least one respect to one formed using a second set of formation variable category options (e.g., process parameters and/or material properties). These differences may or may not be important to the intended purpose of the requested 3D object. For example, a faster speed of formation may result in a 3D object with diminished precision in one or more material and/or geometric characteristics of the formed 3D object, as compared to one formed at a slower speed (e.g., with the other parameters being equal). In some embodiments, a pre-formation application presents (e.g., suggests) at least two configurations (e.g., to a user) of a virtual model of the requested 3D object to facilitate formation of a requested 3D object (e.g., used to form forming instructions to form the requested 3D object). A (e.g., suggested) configuration of a virtual model may comprise an orientation in which an object is formed in a manufacturing device. An orientation of a virtual model may be with respect to (i) a coordinate system (e.g., of a virtual pre-formation application), (ii) a global vector, (iii) a 3D space, and/or (iv) a platform on which a requested 3D object is formed. A given (e.g., suggested) configuration of a virtual model may comprise an (e.g., estimated) formation time associated with the given configuration. A given (e.g., suggested) configuration may comprise an associated virtual object template, and/or any modifications thereto, of a virtual model. For example, an associated template may comprise a (e.g., estimated) set of forming processes and/or forming features (e.g., auxiliary supports) associated with the given configuration. In the example of Fig. 28, a virtual object 2800 having three suggested configurations (e.g., relative to a platform, not shown) is depicted in three (e.g., respective) windows (e.g., 2810, 2820, and 2830). The example windows are depicted as having three (e.g., respective) orientations (e.g., 2815, 2825, and 2835). In some embodiments, a pre-formation application facilitates viewing (e.g., a preview of) a suggested orientation of a virtual model. A preview may comprise a representation of a virtual model of a requested 3D object within a build environment (e.g., of a given manufacturing device), according to the given configuration (e.g., orientation, and/or any auxiliary supports present). In some embodiments, an orientation of a virtual object may be modified by a user. The example of Fig. 28 includes a template associated with (e.g., each of) the suggested configurations (e.g., 2812, 2822, and 2832, respectively). The example of Fig. 28 depicts (e.g., respective) estimated formation times associated with each given configuration (e.g., 2814, 2824, and 2834). In some embodiments, at least one forming process and/or forming feature is modified according to a suggested configuration. For example, a modification considering a suggested configuration may comprise a modification to a virtual object template regarding (I) a rate of formation, (II) a number of auxiliary supports, or (III) a placement of auxiliary supports, for a requested 3D object. In some embodiments, a pre-formation application comprises providing an estimate of a (e.g., any) failure to form (e.g., at least a portion of) a requested 3D object for a (e.g., given) orientation of a virtual model.

In some embodiments, a pre-formation application view modality comprises a display of at least one edge of a virtual object. An edge of a virtual object may comprise a transition between geometries of a virtual object (e.g., between at least two surface patches). For example, an edge may comprise a boundary portion of at least two surface elements (e.g., surface patches). A boundary portion may comprise a discontinuity in a surface curvature (e.g., gradient) between at least two (e.g., adjacent) surface portions of a virtual object. In some embodiments, a surface patch may be located between at least two edges of a virtual object. In some embodiments, an edge of a virtual object comprises a tessellation (e.g., a portion of a surface mesh). An edge of a virtual object may comprise a curve or a straight line. In some embodiments, a pre-formation application facilitates a display of at least one edge of a virtual object that considers a (e.g., formation history of a) virtual model as defined (e.g., generated) in a native CAD application. In some embodiments, a pre-formation application facilitates a display of at least one edge of a virtual object that does not consider a (e.g., formation history of a) virtual model as defined (e.g., generated) in a native CAD application. The edge may be a least a portion of a patch circumference. The edge may be at least a portion of a patch border. At least a portion of the edge may be selectable in any of the virtual environments disclosed herein (e.g., in the Object Environment and/or in the Forming Environment), e.g., by a user and/or automatically. For example, the Object Environment may facilitate selection of at least a portion of the edge, e.g., by a user and/or automatically. At least two potions of different edges may be selected by a user (e.g., in any virtual environment disclosed herein, e.g., a pre-formation application). The different edges may contact to form a corner. The corner may be selectable in any of the virtual environments disclosed herein, e.g., by a user and/or automatically. The pre-formation application may allow selection of similar edges (or edge portions). The pre-formation application may allow selection of similar corners (or corner portions).

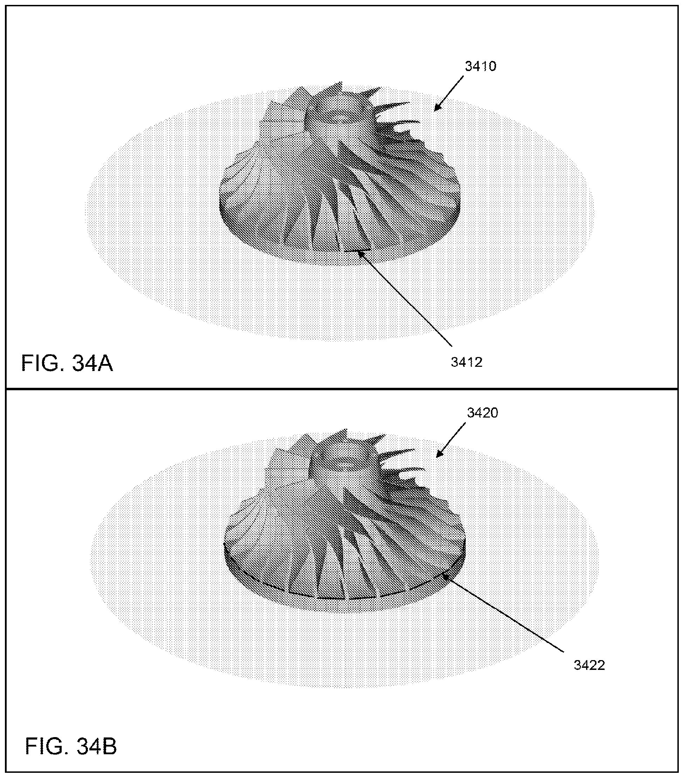

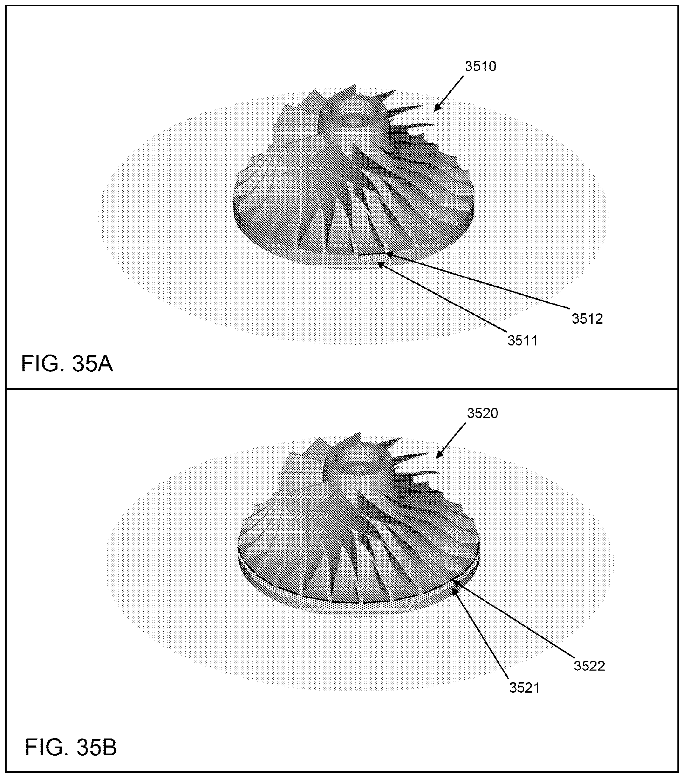

Fig. 34A-34B depicts an example of a virtual 3D object. The virtual 3D object can be disposed in a pre-forming application (e.g., an Object Environment). The example of Fig. 34A shows a virtual 3D model (e.g., 3410) in which an edge 3412 has been highlighted (e.g., and selected). In the example of Fig. 34B shows a virtual 3D model (e.g., 3420) in which edges similar to 3412, such as edge 3422, have additionally been highlighted (e.g., and selected). Fig. 35A-35B depicts an example of a virtual 3D object. The virtual 3D object can be disposed in a pre-forming application (e.g., an Object Environment). The example of Fig. 35A shows a virtual 3D model (e.g., 3510) in which an edge 3512 and an edge expansion portion 3511 have been highlighted (e.g., and selected). In the example of Fig. 35B shows a virtual 3D model (e.g., 3520) in which edges similar to 3512, such as edge 3522, have been highlighted (e.g., and selected); and edge expansion portion similar to 3511, such as edge expansion portion 3521, have been also highlighted (e.g., and selected).

In some embodiments, the edge can be selected in a workflow. An example of a workflow for edge selection may include (in any sequence): (1) from one or more selection methods (e.g., from a menu), select an edge section option, (2) move a cursor to the desired position that includes an edge, and select the edge, (3) select an option for edge related characteristic and/or feature, (4) manipulate the edge related characteristic and/or feature. The edge related characteristic and/or feature may comprise: edge fidelity (e.g., dimensional accuracy), supports connected to the edge, edge roughness, or an extension from edge into the 3D object that borders the edge. The edge related characteristics and/or feature may have a range and/or threshold. A user may alter a range and/or threshold. For example, a user may alter a requested edge roughness and/or define a range for a requested edge roughness. For example, a user may alter a requested edge fidelity and/or define a range for a requested edge roughness. For example, a user may alter (e.g., expand or limit) an extent of edge-extension feature and/or a direction of the edge extension into the 3D object. For example, a user may alter auxiliary support type, density, angle, and/or material structure, which auxiliary support contacts and/or borders the edge. The edge may be recognized from a CAD geometry of a model of the requested 3D object. During user manipulation, the edge may be defined using a mathematical representation (e.g., NURBS). During user manipulation, the edge may retain its mathematical representation (e.g., NURBS).

In some embodiments, any of the virtual environments disclosed herein (e.g., in the Object Environment and/or in the Forming Environment) may comprise an automatic edge detection feature. The automatic edge detection may be considered when suggesting a threshold value, e.g., for any selection. For example, the edge detection feature may be considered when addition auxiliary support and/or deciding of an angle of the auxiliary support (e.g., with respect to the platform). When aiming to support at least a portion of the 3D object to a platform, the edge detection feature may circumvent inadvertent anchoring of the auxiliary support to a portion of a 3D object (rather than to a platform). The auxiliary supports may extend to the platform from the edge and/or from an extension of the edge (into the 3D object, e.g., into a surface of the 3D object).

In some embodiments, the edge is between two surfaces (e.g., a first surface and a second surface) that form an angle. An edge expansion region can expand from the edge towards the first surface, and/or towards the second surface. The user may be able to select towards which of the surface(s) the edge expansion region expands to, and the extent of that expansion (e.g., collectively, or to each surface separately). The selection of the user may be facilitated using a dialog box and/or a (e.g., dropdown or tab) menu. The selection may be performed in any of the virtual environments disclosed herein. Any virtual environment disclosed herein may offer a default selection (e.g., of the edge, auxiliary supports, and/or expansion region(s)). The user may choose the material structure (e.g., lattice structure) of any portion of the 3D object and/or auxiliary supports for formation.

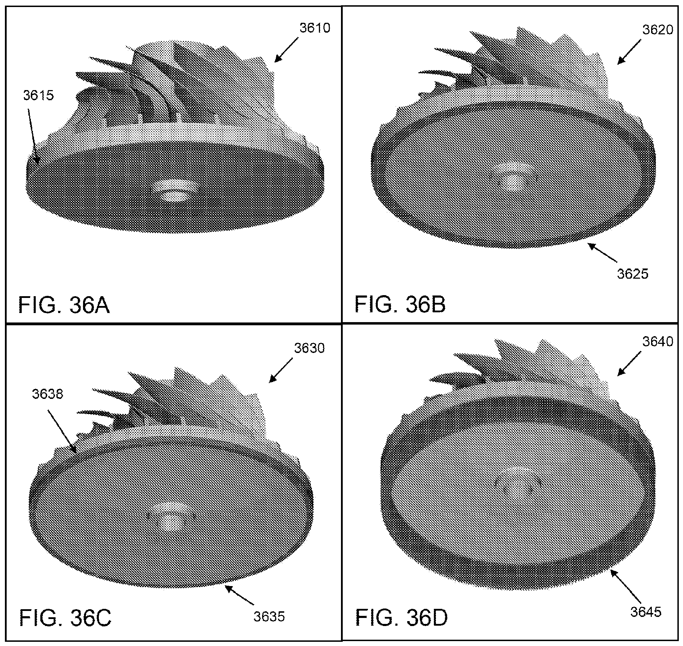

Figures 36A-36D show examples of 3D objects models in virtual environments. Fig. 36A shows an example of a 3D object model 3610 and a highlighted edge thereof 3615. Fig. 36B shows an example of a 3D object model 3620 and a highlighted edge expansion region 3625 that expands into the model of the 3D object on a plane (e.g., at the bottom portion of the 3D object model 3620). Fig. 36C shows an example of a 3D object model 3630 and two highlighted edge expansion regions: region 3635 that expands into the model of the 3D object on a first plane (e.g., at the bottom portion of the 3D object model 3630), and region 3638 that expands into the model of the 3D object on a second plane (e.g., at the side portion of the 3D object model 3630). In the example shown in Fig. 36C, the first plane is perpendicular to the second plane, however, any angle between the two planes is possible. Fig. 36D shows an example of a 3D object model 3640 and auxiliary supports that extend from an edge and from the extended region (e.g., 3625) of the model of the 3D object. The auxiliary supports form an angle with the bottom surface of the 3D object. In the example shown in Fig. 36B, the angle is 90°, however, other angles may be selected.

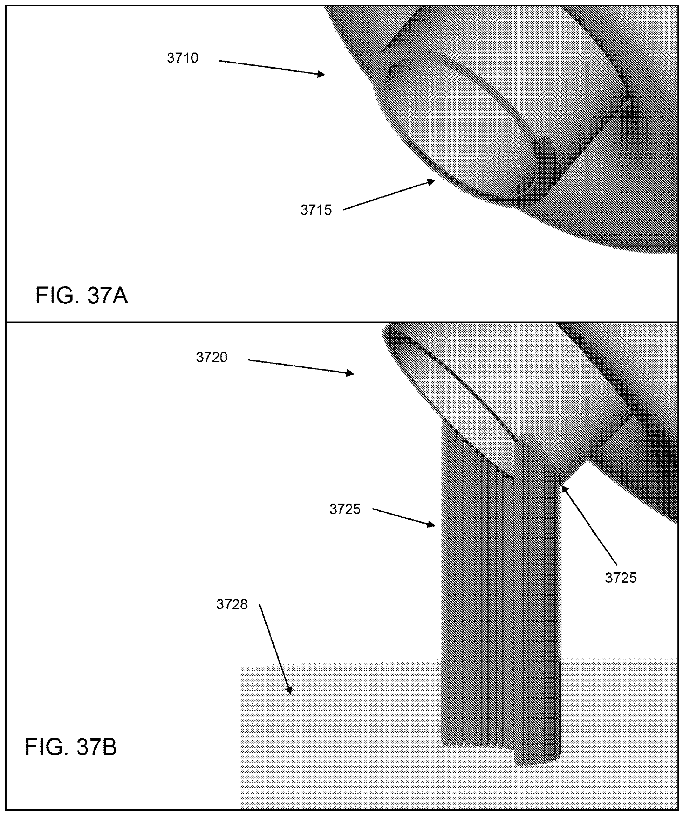

Figures 37A-36B show examples of portions of 3D object models in virtual environments. Fig. 37A shows an example of a 3D object model portion 3710 and a highlighted edge and expansion region of the edge 3715. Fig. 37B shows an example of a portion of a 3D object model 3720 and a highlighted edge expansion region 3725 from which auxiliary supports extend and anchor on a platform 3728. The auxiliary supports 3725 in the example of Fig. 37B form an angle alpha of 90° with the platform 3728, and an angle beta that has a value other than 90° with the portion of the 3D object model 3720. Alpha and beta can be any acute or an obtuse angle (e.g., any angle from zero to 180°).

In some embodiments, a pre-formation application view modality comprises a display of an (e.g., range of) angle or curvature of a surface of a virtual model. In some embodiments, a display of angle(s) and/or curvature(s) of a virtual model comprises at least one recognizable indicator comprising a color, border, pattern, or label (e.g. number and/or name) that is associated with a given (e.g., range of) angular and/or curvature value(s). For example, angles may be binned into a plurality of ranges (e.g., a first range from about 0 to about 15°, a second range from about 16° to about 30°, and/or a third range from about 31° to about 45°). A pre-formation application may be configured to display a first color (e.g., red) that is associated with a first range of angles, a second color (e.g., yellow) that is associated with a second range of angles, and/or a third color (e.g., blue) that is associated with a third range of angles. In some embodiments, a display color and/or pattern that is associated with a given surface angle (e.g., and/or surface curvature) value, or range of values, is configurable (e.g., user-defined). In some embodiments, a number of given surface angle and/or curvature range(s) that are displayed is configurable.

In some embodiments, a pre-formation application comprises a surface edge (e.g., overhang) angle detection functionality for a virtual model. An edge angle detection functionality may facilitate providing a notification (e.g., to a user) of a (e.g., any) potential formation failure for (e.g., at least a portion of) a requested 3D object (e.g., for a given orientation of a virtual object). A potential formation failure may comprise an estimation of a likelihood that (e.g., at least) a portion of a requested 3D object in a vicinity of an edge may fail to form (e.g., in a requested manner). A formation failure may comprise a defect in at least a portion of the requested 3D object and/or a malfunction in a device operating to form the requested 3D object. For example, an orientation of a virtual object may be (e.g., modified) such that (e.g., a plurality of) one or more surfaces of the virtual object are above a threshold angle (e.g., above about 40°, e.g., with respect to a platform on which a requested 3D object is supported during its formation). A pre-formation application may be configured to detect edges of a surface of the virtual object. A pre-formation application may be configured to display (e.g., highlight) any portion of a virtual object that comprises an edge having associated therewith an estimated likelihood of formation failure that is above a threshold value. In some embodiments, in response to an estimated formation failure, a pre-formation application provides a (e.g., suggested) modification to at least one formation variable category. The formation variable category may include: (i) an orientation of a virtual model (e.g., in the manufacturing device, e.g., a printer), (ii) a forming process of the virtual model, (iii) a forming feature of the virtual model, and/or (iv) a manufacturing device setting). For example, a pre-formation application may suggest formation of auxiliary supports in a vicinity of an estimated formation failure.

In some embodiments, a pre-formation application comprises a omparison functionality (e.g., tool) for a plurality of virtual objects (e.g., associated with at least one requested 3D object). In some embodiments, at least two of a plurality of virtual objects are the same virtual object, having different (e.g., respective) configurations (e.g., versions). A comparison tool may comprise a visual comparison (e.g., visual representation) or a data comparison, of at least two virtual objects. A comparison tool may comprise a comparison of at least one formation constraint associated with the virtual object(s). A formation constraint may form a part of template of a virtual object. A formation constraint may comprise selection of at least one option of a formation variable category (e.g., comprising (i) an orientation, (ii) a selected effect for a requested 3D object, (iii) at least one forming process, (iv) at least one forming feature, or (v) at least one manufacturing device setting), associated with a virtual object of the requested 3D object. For example, a comparison between at least two virtual objects may comprise comparing two sets that are different in at least one option of a formation variable category (e.g., comprising (I) surface angle(s) (e.g., overhang and/or ceilings), (II) surface curvature(s) (e.g., intrinsic and/or extrinsic), (III) auxiliary support(s) (e.g., a number and/or placement thereof), (IV) selected forming process(es), (V) a requested material property, or (VI) an estimated formation time), of the plurality of virtual objects. The comparison may comprise intersection, union, symmetric difference, or relative complement operations of the at least two models with each other, e.g., as delineated herein. The comparison may highlight the differences between the virtual objects and/or any 3D object simulated to be formed in association with these virtual objects and corresponding templates. In some embodiments, a virtual object of a requested 3D object comprises at least two versions. A (e.g., first) version of a virtual object for a requested 3D object may be modified to another (e.g., second) version according to a change in at least one formation constraint. For example, a version may comprise a modification (e.g., change) to (A) a placement of auxiliary supports or (B) a surface roughness, for a portion of the virtual object. In some embodiments, an estimated formation time for a requested 3D object comprises an estimated time for post-processing of the (e.g. formed) requested 3D object. Post-processing may comprise a (e.g., any) process that follows formation of the requested 3D object in a given manufacturing device. A post-processing operation may comprise a removal of the 3D object from the manufacturing device, removal (e.g., trimming) of (e.g., any) auxiliary supports from the formed 3D object, any requested densification (e.g., furnace), or any requested porosity reduction (e.g., hot isostatic pressing, also referred to as "HIP"). A trimming process may be an operation conducted after the completion of a 3D forming (e.g., printing) process. The trimming process may be a separate operation from the 3D forming process. The trimming may comprise cutting (e.g., using a piercing saw and/or electrical discharge machining ("EDM")), ablating (e.g., using a laser and/or (e.g., chemical) etching. The trimming can comprise polishing or blasting. The blasting can comprise solid blasting, gas blasting or liquid blasting. The solid blasting can comprise sand blasting. The gas blasting can comprise air blasting. The liquid blasting can comprise water blasting. The blasting can comprise mechanical blasting.

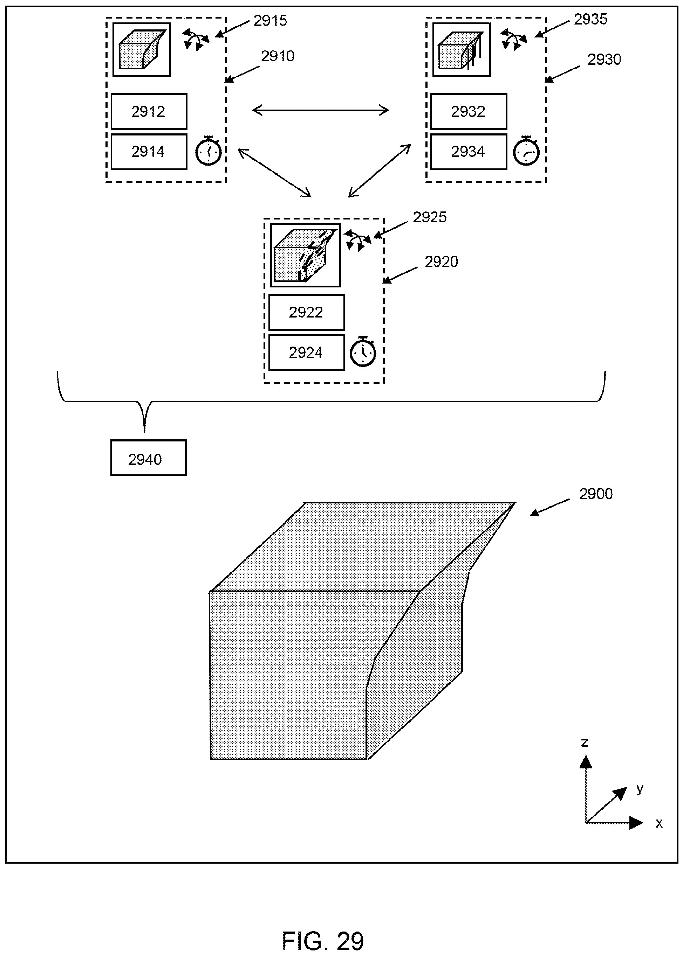

Fig. 29 depicts an example of a comparison functionality for a virtual object 2900 in a pre-formation application. In the example of Fig. 29, a comparison of three versions of the virtual object are depicted in three windows (e.g., 2910, 2920, and 2930). The example comparison windows depict three (e.g., respective) orientations (e.g., 2915, 2925, and 2935) of the three virtual object versions. The example of Fig. 29 includes a template (e.g., comprising at least one formation constraint) associated with (e.g., each of) the virtual object versions (e.g., 2912, 2922, and 2932, respectively). The example of Fig. 29 depicts (e.g., respective) estimated formation times associated with each given virtual object version (e.g., 2914, 2924, and 2934). In some embodiments, a comparison functionality may comprise generation of a comparison report and/or display (e.g., displaying any visual differences between a 3D object that would be formed as a result of applying of each template). A comparison report may comprise any formation variable category. For example, a comparison report may comprise (e.g., comparisons of) (i) an estimated formation time, (ii) an estimated post-processing time, or (iii) an estimated quality (e.g., surface roughness and/or deviation from a requested geometry), of the plurality of compared virtual objects. In the example of Fig. 29, a result of comparing the three versions of the virtual object includes a comparison report 2940.

In some embodiments, a pre-formation application is coupled with a (e.g., selected) manufacturing device that comprises an, e.g., autonomous or partially autonomous, production capability. Autonomous production may comprise direction of a manufacturing device for formation of at least one (e.g., a plurality of) requested 3D object(s), without user intervention. Partially autonomous production may comprise direction of a manufacturing device for formation of at least one (e.g., a plurality of) requested 3D object(s), with some user intervention (e.g., with minimal user intervention). In some embodiments, a pre-formation application (e.g., Object Environment application and/or Formation Environment application) comprises a coupling with a (e.g., at least one) product lifecycle management ("PLM") application. A coupling may comprise an application programming interface (API) connection. A PLM application may facilitate revision control of a plurality of requested 3D objects (e.g., for a customer, or a plurality of customers). Examples of PLM applications comprise Agile by Oracle of Redwood City, California; eDrawingsTM by Dassault Systemes SolidWorks Corporation of Waltham, Massachusetts; or Autodesk Vault by Autodesk of San Rafael, California. A pre-formation application may facilitate lifecycle management for at least one (e.g., a plurality of) virtual models of a (e.g., respective) requested 3D object. For example, a pre-formation application may facilitate traceability of a virtual 3D model, any revision history for the virtual model (e.g., Object Environment application), a layout of at least two virtual models (e.g., Formation Environment application), and/or any (e.g., satisfactory) templates associated with the 3D model. The traceability may be categorized per user, per object type, or per date (e.g., and time), per manufacturing device and/or operator. The traceability may comprise any component of the revision history. A revision history may comprise data for (i) any forming restraints (ii) a requested object identification (e.g., label), (iii) a manufacturing device identification, (iv) an operator (e.g., designer and/or technician) identification, or (v) a formation (e.g., build) owner identification, or (vi) an arrangement (e.g., placement and location) within a manufacturing device environment, that is associated with a virtual model and/or virtual layout. In some embodiments, a pre-formation application is coupled with a PLM that is externally managed (e.g., by a 3rd party). In some embodiments, a pre-formation application is coupled with a PLM that is internally managed (e.g., by an owner and/or operator of a manufacturing device for forming requested 3D objects).

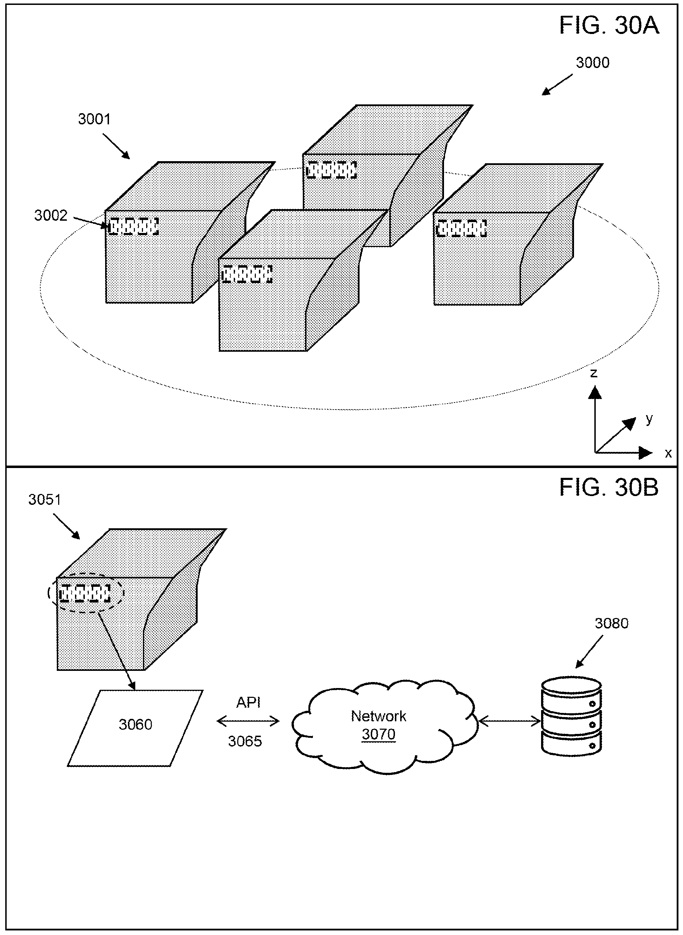

In some embodiments, a catalog of a pre-formation application comprises a location (e.g., and/or a manner of placement) of a virtual object label on a virtual model (e.g., a label portion). A virtual object label may correspond to a (e.g., physical) label that forms a part of a requested 3D object. For example, a location of a virtual object label may be a part of a virtual object ROI. For example, a location of a virtual object label may be specified with respect to at least one boundary of a virtual model of a requested 3D object. In some embodiments, a (e.g., configurable or user-defined) characteristic of a virtual object label comprise a size, orientation, and/or typeface. In some embodiments, a virtual model comprises simulation and/or forming instructions associated therewith (e.g., in a template and/or catalog of an Object Environment application). In some embodiments, a pre-formation application may facilitate a simulation and/or a forming instructions engine to ignore (e.g., exclude) a label portion during execution thereof. For example, a simulation and/or generation of forming instructions may be executed in an Object Environment application for at least a portion (e.g., all) of a virtual model exception a label portion. In some embodiments, at least one (e.g., a plurality of) virtual object(s) arranged in a layout (e.g., in a Formation Environment application) do not require any (e.g., further) simulation and/or formation instructions generation. In some embodiments, at least one (e.g., a plurality of) virtual object(s) arranged in a layout comprises a simulation and/or generation of forming instructions for at least a portion of the virtual object. In some embodiments, a pre-formation application may facilitate a simulation and/or a forming instructions engine to consider (e.g., include) a label portion during execution thereof. In some embodiments, a pre-formation application may facilitate a simulation and/or a forming instructions engine to ignore (e.g., exclude) a label portion during execution thereof. In some embodiments, a pre-formation application may facilitate a simulation and/or a forming instructions engine to consider a label portion during execution thereof (e.g., and to exclude a remainder of the virtual model). For example, a simulation and/or generation of forming instructions may be executed in a Formation Environment application (e.g., only, or exclusively) for a label portion of a virtual object. Fig. 30A depicts an example of a pre-formation application (e.g., a Formation Environment application) 3000 that includes a plurality of (e.g., versions of) a virtual model 3001 that includes a label portion 3002. A plurality of virtual models in a layout may correspond to (i) a plurality of versions of a same virtual model, or (ii) at least two different virtual models.

In some embodiments, a label associated with a virtual 3D object (e.g., to be subsequently associated with a formed 3D object that is in turn associated with the virtual 3D object) comprises a modifiable value (e.g., serial number and/or character, e.g., letter). A label of a given virtual model may be (e.g., automatically) modified (e.g., according to a set, e.g., numerical value sequence, letter sequence, character sequence). The character sequence may comprise a line/dot sequence. the lines and/or dots may be of various areas. The set may be defined. The order in the set may be defined and/or altered (e.g., by a user or as a default option). The modification may be incremental per sequence of the items in that set (e.g., numerically sequence, or alphabetically sequence). For example, a pre-formation application may communicate (e.g. over an application programing interface (API)) with a PLM application to retrieve and assign a (e.g., current) serial number to at least one virtual model (e.g., in a Formation Environment application). In the example of Fig. 30B, a pre-formation application facilitates a retrieval of a current value (e.g., serial number) 3060 for a label portion of a virtual model 3051, the current value retrieved from a database (e.g., PLM) 3080 via an API connection 3065 over a network 3070. A manufacturing device that forms a requested 3D object associated with a virtual model may form a (e.g., physical) label depicting the retrieved value (e.g., a current serial number).

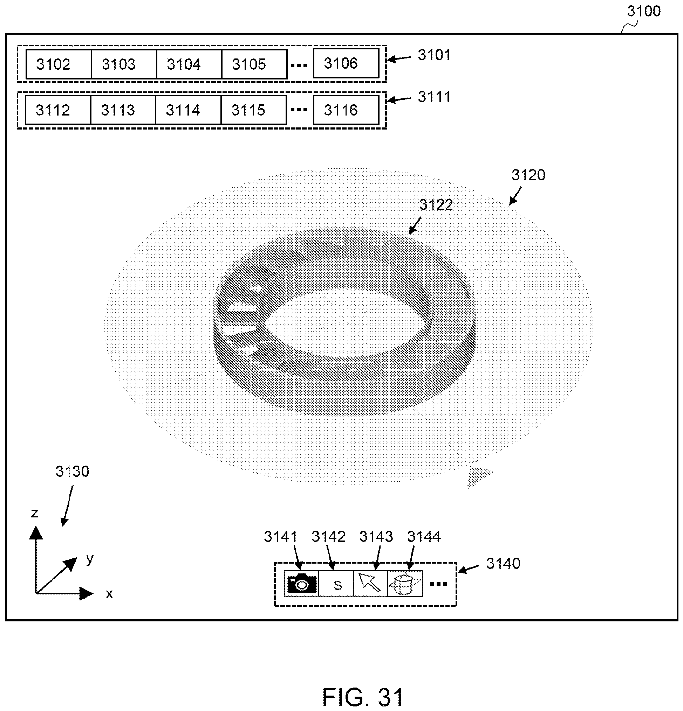

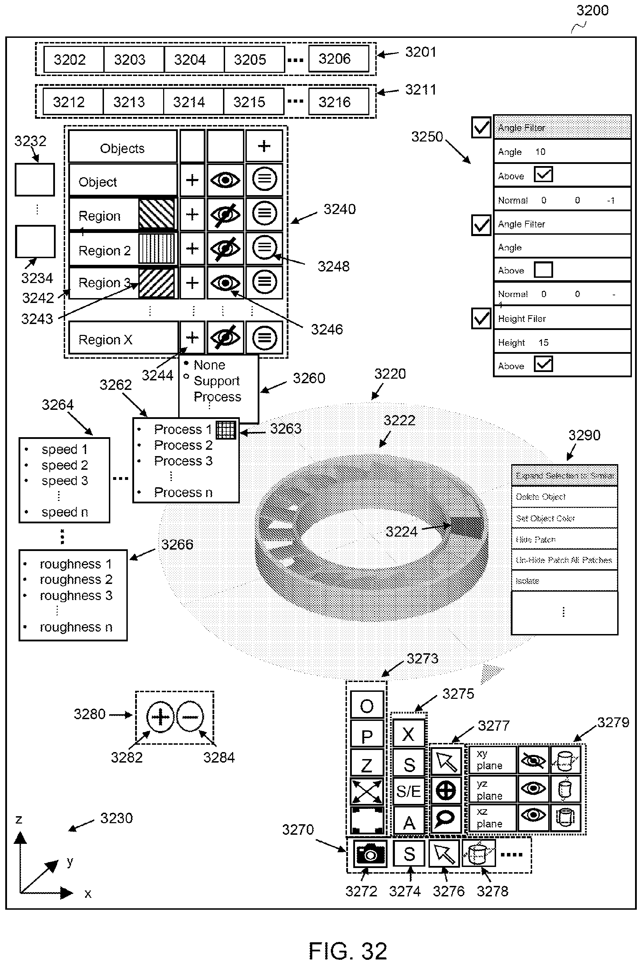

At times, a user interface (abbreviated herein as a "UI") of a virtual pre-formation environment (e.g., an Object Environment application and/or a Formation Environment application) provides at least one field that facilitates an interaction between a user and at least one functionality of the virtual pre-formation environment. In some embodiments, at least one field in a pre-formation application UI is persistently (e.g., permanently) displayed. The persistently displayed field may be disposed anywhere on the Ul, e.g., screen. In some embodiments, at least one field in a virtual pre-formation application UI comprises a transitory display (e.g., a pop up menu and/or a drop down menu). The transitory displayed field may be disposed anywhere on the Ul, e.g., screen. In some examples, a trigger in the persistently displayed field will cause the transitory displayed field to display on the Ul. In some examples, a trigger in the transitory displayed field will cause another transitory displayed field to display on the Ul. The transitory displayed field may be displayed adjacent (e.g., next to, directly next to, or contacting), to the triggering field that is associated with the transitory displayed field. In some embodiments, Fig. 31 depicts an example of a pre-formation application UI 3100 (e.g., an Object Environment application) presenting a (e.g. loaded) virtual object 3122 (e.g., stator ring) and a reference plane 3120. Fig. 32 depicts an example of a virtual pre-formation application UI 3200 presenting a virtual object 3222 and a reference plane 3220. The reference may represent a substrate (e.g., a base) above which the 3D object will be generated. A virtual pre-formation application UI may facilitate user interactions via interaction of one or more fields. Some examples of interactive fields may comprise (i) an application menu (e.g., Fig. 31, 3101; Fig. 32, 3201), (ii) an application toolbar (e.g., Fig. 31, 3111; Fig. 32, 3211), (iii) a navigation menu (e.g., bar) (e.g., Fig. 31, 3140; Fig. 32, 3270), and (iv) a coordinate system (e.g., orientation) indicator (e.g., Fig. 31, 3130; Fig. 32, 3230). In some embodiments, a location of at least one of the: application menu, application toolbar, navigation menu and/or coordinate system indicator is modifiable (e.g., user-defined and/or user configured). An application menu may comprise interactions for: (I) opening a virtual model of a requested 3D object (e.g., Fig. 31, 3102; Fig. 32, 3202), (II) importing a virtual model of a requested 3D object (e.g., Fig. 31, 3103; Fig. 32, 3203), (III) saving (e.g., as a data file) a current state of a virtual model (e.g., Fig. 31, 3104; Fig. 32, 3204), (IV) editing (e.g., rewinding, undoing, and/or re-doing) an (e.g., at least one) interaction command (e.g., Fig. 31, 3105; Fig. 32, 3205), or (V) a help function (e.g., Fig. 31, 3106; Fig. 32, 3206). An application toolbar may comprise interactions for (a) a (e.g., virtual) object orientation (e.g., Fig. 31, 3112; Fig. 32, 3212), (b) a (e.g., specification and/or view of at least one) forming process (e.g., Fig. 31, 3113; Fig. 32, 3213), (c) a (e.g., specification and/or view of at least one) forming process (e.g., process recipe) (e.g., Fig., 31, 3114; Fig. 32, 3214), (d) an object database (e.g., catalog) functionality (e.g., Fig. 31, 3115; Fig. 32, 3215), or (e) a formation preview (e.g., review) functionality (e.g., Fig. 31, 3116; Fig. 32, 3216). A navigation menu may comprise interactions for (A) a (e.g., camera) view (e.g., 3141), (B) a view modality (e.g., 3142), (C) a selection tool (e.g., 3143), or (D) a section view (e.g., 3144), of a virtual model of a requested 3D object. In some embodiments, any (e.g., at least one) of the interaction fields (e.g., application menu, application toolbar, navigation menu and/or coordinate system indicator) may comprise a greater or fewer number of interaction triggers (e.g., buttons, sub-fields and/or values).

In some embodiments, a pre-formation application comprises at least one field for viewing and/or interacting with template data of a loaded virtual model (e.g., an object browser window; Fig. 32, 3240). An object browser may comprise an indication of at least one virtual model (e.g., or component thereof) (e.g., from a CAD model and/or a data file) that is loaded in a virtual environment. A virtual model may comprise one or more patches. A virtual model component may comprise a denser portion (e.g., Fig. 32, 3232) and/or a network portion (e.g., Fig. 32, 3234) (e.g., of a hybrid network virtual model). In some embodiments, a component such as a surface patch, tessellation, volume enclosed by at least one surface path and/or volume enclosed by at least one tessellation has associated therewith at least one template (e.g., ROI). In some embodiments, a tessellation or surface patch comprises at least one edge. An edge may be disposed between (e.g., separate) at least two adjacent surface units (e.g., two surface patches or two tessellations). A border may comprise at least one (e.g., a plurality of) edge(s). A border may comprise a boundary that encompasses the surface patch (or tessellation). In some embodiments, a selection of a volume that is enclosed by at least one surface unit (e.g., surface patch or tessellation) may be according to a selection of at least one selected edge (e.g., a border) of the surface unit. In some embodiments, a selection of a volume that is enclosed by a surface unit may be according to a selection of (e.g., a portion of) an interior (e.g., within a border) enclosed by at least one surface unit (e.g., surface patch). In some embodiments, a selection of the volume enclosed by the at least one surface unit may be altered (e.g., shrunk or expanded). Altered may be by a volume/volume percentage relative to the initial volume (e.g., alteration by at least about 1%, 2%, 3%, 4%, 5%, 10%, or 15%). The alteration may be with respect to the center of the volume. The alteration may be away from the at least one surface of the surface unit (e.g., towards the interior of the volume center, or away from the interior of the surface volume center). The alteration may be by a value (e.g., alteration by at least about 20 micrometers (µm), 50 µm, 100 µm, 500 µm, 1mm, 2mm, or 5mm). A user may select an alteration (e.g., increase or reduce) of the volume. Assignment of one or more formation variable category option may be to at least one volume, at least one altered volume, at least one surface (e.g., of at least a patch or tessellation), or at least one altered surface area of the surface. An object browser may comprise at least one field for displaying and/or interacting with an ROI of a virtual model (e.g., 3242). In some embodiments, a pre-formation application UI facilitates specification of an option of a formation variable category (e.g., (i) forming process, (ii) forming feature, (iii) material property, and/or (iv) forming parameter), for a (e.g., at least one) ROI via a triggering field (e.g., icon 3244). The triggering field may comprise an icon. The triggering field may be an interactive field. An interaction within an interactive field may generate (e.g., produce) a display of another interaction field (e.g., a sub-field). For example, a sub-field of an object browser may comprise a window that facilitates a specification of a formation variable category (e.g., forming feature or a forming process), for a given (e.g., selected ROI). In some embodiments, a (e.g., first) field may comprise a plurality of (e.g., successive) sub-fields. In some embodiments, a (e.g., first) sub-field may comprise a plurality of sub-fields (e.g., thereto). In the example of Fig. 32, a window (e.g., 3260) depicting forming feature (e.g., auxiliary support) and forming process selection comprises an interactive sub-field (e.g., 3262) displaying a selection of a plurality of forming processes, an interactive sub-field (e.g., 3264) displaying a selection of a plurality of formation speed options (e.g., rates of object formation), an interactive sub-field (e.g., 3266) displaying a selection of a plurality of surface roughness options (e.g., surface qualities). The UI may comprise an interactive field displaying various material properties (e.g., porosity, material type, and/or microstructure). Each of the options may be selected by a user. A recognizable indicator including color, pattern, and/or shade, may be associated with the selection. One or more (e.g., user selected) patches of the virtual model (e.g., 3224) may be assigned one or more formation variable category options (e.g., forming process, forming feature, forming parameter, and/or material property; one option of a selected category). The one or more patches may enclose a volume. The volume may be altered (e.g., expanded or shrunk). For example, one formation variable category option may be assigned to the surface patch, and another formation variable category option may be assigned to the volume enclosed by the surface patch. Alteration of the volume may be prior to or subsequent to the assignment of the formation variable category option. A surface area of a surface patch (or group thereof) may be altered (e.g., expanded or shrunk from the edges of the patch, or from the edges of the patch group). Alteration of the surface area may be prior to or subsequent to the assignment of the formation variable category option. In some embodiments, a selection of the surface area enclosed by the at least one surface unit (e.g., surface patch) may be altered (e.g., shrunk or expanded). Altered may be by an area/area percentage relative to the initial area of the surface unit (e.g., alteration by at least about 1%, 2%, 3%, 4%, 5%, 10%, or 15%). The alteration may be with respect to the center of the area. The alteration may be away from the at least one surface unit (e.g., towards the interior of the surface area center, or away from the interior of the surface area center). The alteration may be by a value (e.g., alteration by at least about 20 micrometers (µm), 50 µm, 100 µm, 500 µm, 1mm, 2mm, or 5mm). A user may select an alteration (e.g., increase or reduce) of the surface area of the surface unit (e.g., surface patch). The user may assign a patch that encloses a volume (or a selected group of patches) to a user selected option (from the various options) of at least one formation variable category. At least one of the selected options may have a recognizable indicator; which may be displayed as part of at least a portion of the virtual model of the requested 3D object presented on the Ul. The virtual model of the 3D object may be tessellated. Tessellation may be applied to the object, e.g., pre-formation application. The tessellation may be applied to at least one patch of the object. Assignment of a formation variable category (e.g., including forming process, forming feature, forming parameter, and/or material property), may be to a tessellation or a group of tessellations having a surface area. The tessellation or group of tessellations may enclose a volume and/or a surface of the virtual model. In some embodiments, a pre-formation application UI comprises greater or fewer (e.g., interactive) fields and/or sub-fields. For example, in some embodiments a pre-formation application UI comprises a sub-field for at least one of the formation variable categories (e.g., a forming feature, a forming process, a material property, forming feature, and/or a forming parameter) may be (1) specified (e.g., configured) for at least a portion (e.g., patch) of the virtual model of a requested 3D object, and/or (2) presented on at least a portion of the virtual model of the requested 3D object on the Ul. The at least a portion of the virtual model of the requested 3D object presented on the UI may be manipulated (e.g., sectioned, adjusted, translated and/or rotated), e.g., as described herein. Adjusted comprises geometric adjustment. The geometric adjustment may comprise deformed by a user and/or automatically by application of a corrective adjustment procedure (e.g., Object Pre-print Correction (OPC)). The corrective adjustment may be performed in prior to forming the one or more 3D object. The corrective procedure may be executed after models of the 3D object have been arranged (e.g., in the Formation environment). The corrective procedure may be executed after models of the 3D object has been optimized (e.g., in the Object Environment). The corrective procedure may be part of the options in the virtual environment (e.g., Object Environment and/or Forming Environment). The corrective procedure may be automatically executed (e.g., in the Object Environment and/or Forming Environment). In some embodiments, the corrective procedure may be offered as an option to the user. In some embodiments, the corrective procedure may not be offered as an option to the user (e.g., and may be executed automatically).

In some embodiments, an object browser comprises a display visibility toggle tool (e.g., 3246). A visibility toggle tool may function to render invisible (e.g., to hide) or to render visible (e.g., to show), a portion of a virtual model (e.g., an ROI). In some embodiments, a visibility toggle tool is associated with at least one sub-field in a pre-formation application Ul. In some embodiments, an object browser comprises an edit function for at least one field. An edit function may comprise locking, removing (e.g., deleting), or modifying at least one selection and/or setting associated with a field. In the example of Fig. 32, a plurality of edit functions 3248 are associated with (e.g., each of) a plurality of ROIs of the virtual model. For example, an edit function may facilitate a modification to at least one formation variable category (e.g., forming feature, forming process, forming feature, material property, and/or forming parameter associated with a given ROI). A ROI may be assigned a recognizable indicator, that may be visually displayed on at least a portion of the virtual model of the 3D object, on the Ul.

In some embodiments, a pre-formation application comprises at least one field for displaying at least one property of a selected function of the Ul, and/or portion of a loaded virtual model (e.g., a property window; Fig. 32, 2350). For example, a property window may show any selected display filter(s) for a virtual model. In the example of Fig. 32, a property window has display angle and height filters to display any portions of a virtual object that have a surface angle above 10°, and are at least 15 millimeters above a plane on which the virtual model is disposed. In some embodiments, a display filter window may comprise a (e.g., specified value or range of values of) surface curvature, material property, forming features, and/or any (e.g., available) forming processes specified for a virtual model.

In some embodiments, formation variable category(ies) may include (i) a forming process, (ii) a forming feature, (iii) forming tools (e.g., manufacturing devices), and/or (iv) a forming parameter. At least one of the formation variable categories may have a UI display. The UI display may also include an ROI, and/or a display filter. The UI display may allow interactive user experience. The UI display may comprise one or more options. The option may have a recognizable indicator including a highlight, border, pattern, and/or color associated with each option) associated therewith. In the example of Fig. 32, a region of interest 3242 has a diagonal striped pattern display 3243 associated therewith, and a forming process has a horizontal striped pattern display 3263 associated therewith. In some embodiments, an associated display may be visible on at least a portion of the virtual model. An associated display may be visible on an external surface and/or within an interior surface portion of the virtual model.

In some embodiments, a navigation menu of a pre-formation application UI comprises interactions for controlling a view e.g., a camera view (e.g., 3272), a virtual model view modality (e.g., 3274), a selection tool (e.g., 3276), or a section view (e.g., 3278). In some embodiments, at least one (e.g., all) UI menu comprises at least one sub-menu. In some embodiments, control of a view (e.g., camera view) comprises a sub-menu (e.g., 3273) for control of a pan (which may be designated by a letter "P"), zoom (which may be designated by a letter "Z"), angle, or orbit (which may be designated by a letter "O") at which a virtual model is viewed within a virtual environment. In some embodiments, a camera view sub-menu comprises a fit object to view functionality (e.g., which may be represented as, for example, a crossed arrows icon of 3273) or a reset (e.g., to a default) view functionality (e.g., which may be represented as, for example, as an open brackets icon of 3273). In some embodiments, a virtual model view modality comprises a sub-menu (e.g., 3275) for a selection of rendering a virtual model as shaded (which may be designated by a letter "S"), as shaded with edges (which may be designated by letters "S/E"), as (e.g., semi-) transparent (which may be designated by "X-ray" or by a letter "X"), as shaded with an angle (e.g., or range of angles) overlay (which may be designated by a letter "A"), or as a wireframe model (e.g., not shown). In some embodiments, a view modality comprises a view of a virtual model according to a selected (e.g., at least one) forming process associated with at least a portion of the virtual model. In some embodiments, a selection tool comprises a sub-menu (e.g., 3277) for a selection according to (i) a user-guided selection (e.g., lasso selection, shape selection (closed shape such as a polygon (e.g., rectangle) or circular selection option)) (which may be designated by a loop icon), (ii) a geometry-based selection based on the geometry of the virtual model of the 3D object (e.g., a surface patch and/or edge) (which may be designated by an encircled cross icon), and/or (iii) selection of the entire virtual model of the 3D object (which may be designated by an arrow icon), (iv) intersection according to a plane (e.g., 3276), or (v) intersection with another object, e.g., as delineated herein. For example, a section view functionality may comprise a sub-menu (e.g., 3279) for a selection of a section view along an (e.g., at least one) orthogonal axis of a (e.g., Cartesian) coordinate system (e.g., an xy plane, xz plane, and/or yz plane section). In some embodiments, a section view is along an arbitrary (e.g., user defined, or user configured) plane (e.g., in a coordinate system. In some embodiments, a section view along a given plane is toggled by a visibility toggle tool.

In some embodiments, a selected portion of a virtual model may comprise a pop-up interaction window. A pop-up interaction window may comprise at least one view and/or interaction specified for the selected portion. In the example of Fig. 32, a pop-up interaction window 3290 for a selected portion 3224 of a stator ring comprises operations to (i) expand the selected portion to (e.g., any) similar portion(s), (ii) remove (e.g., delete) the selected portion, or (iii) modify a display of the selected portion and/or a remainder of a virtual model. For example, modifying a display via a pop-up interaction window may comprise setting an object visibility characteristic (e.g., a recognizable indicator including a color, pattern, and/or border), rendering the selected portion hidden, rendering any (e.g., all) similar portions of the virtual model hidden, or isolating the selected portion (e.g., hiding a remainder of the virtual model).

In some embodiments, an object database (e.g., catalog) interaction field facilitates opening and/or loading a virtual model (e.g., of a plurality of stored virtual models) comprising a (e.g., pre-defined) template. In some embodiments, a catalog interaction may comprise storing a (e.g., new) template for a virtual model (e.g., as modified within a pre-formation environment) to an object catalog. In some embodiments, a data file associated with a virtual model stores at least some of (e.g., all) specified forming processes, forming features, and/or forming parameters of the virtual model in an object catalog. In embodiments, a virtual model (e.g., entry) in an object catalog comprises data corresponding to a result of a simulation of (e.g., a formation of) the virtual model. In embodiments, a virtual model entry in an object catalog comprises data corresponding to forming instructions for the virtual model (e.g., formed by a forming instructions engine).

In some embodiments, a formation preview (e.g., review) interaction field facilitates a preview (e.g., estimate) of at least one forming parameter for a virtual model of a requested 3D object. For example, a review function may estimate a likelihood of formation failure for at least a portion of the requested 3D object (e.g., during formation). A review function may estimate a likelihood of a formation considering a simulation of a virtual model. A review function may determine a state (e.g., successful completion) of at least one operation on a virtual model (e.g., a simulation thereof, and/or a generation of forming instructions).

In some embodiments, a pre-formation application UI comprises an interaction tool that facilitates selecting (e.g., constraining, and/or locking) an interaction modality for the pre-formation application Ul. For example, an interaction modality tool may constrain a manner in which at least one selected portion of a virtual model is modified. In some embodiments, an interaction modality to may comprise a constraint designating (e.g., further) selection(s) to "add to" at least one (e.g., prior) selected portion. In some embodiments, an interaction modality tool may comprise a constraint designating (e.g., further) selection(s) to "remove from" at least one (e.g., prior) selected portion. For example, an interaction modality tool may add and/or remove at least one forming feature (e.g., from at least a portion of a virtual model). For example, an interaction modality tool may alter at least one ROI of a virtual model. An alteration may comprise an interaction to add and/or remove at least one region of a virtual model (e.g., of a pre-defined ROI). In the example of Fig. 32, a pre-formation application UI comprises an interaction modality tool (e.g., Fig. 32, 3280) having an additional modality (e.g., button; Fig. 32, 3282) and a subtraction modality (e.g., button; Fig. 32, 3284).

### Examples

The following are illustrative and non-limiting examples of methods of the present disclosure.

### Example 1

For a geometric model of dimension 8 centimeters (cm) in width x 8 cm in length x 9 cm in height (e.g., as in Fig. 8A, 851), a forming instructions engine generated forming instructions comprising default forming (e.g., printing) procedures for transforming layers of material using a layerwise manufacturing process as described herein. The layers of material had an average thickness of about 50 µm. A region of interest (ROI) was specified according to a selection criterion of surfaces having a radius of curvature of at most 8 mm (as in Fig. 8A, 856). A default forming process for the ROI 856 included a forming process for a skin including transformation of material at 20 cubic centimeters/hour (cc/hr). An override forming process was designated (e.g., coerced) to form the region of the geometric model corresponding to the ROI 856 using a main body forming process including transformation of material at 50 cc/hr. A forming instructions engine modified the default forming process instructions for those portions of the designated ROI 856.

While preferred embodiments of the present invention have been shown, and described herein, it will be obvious to those skilled in the art that such embodiments are provided by way of example only. It is not intended that the invention be limited by the specific examples provided within the specification. While the invention has been described with reference to the afore-mentioned specification, the descriptions and illustrations of the embodiments herein are not meant to be construed in a limiting sense. Numerous variations, changes, and substitutions will now occur to those skilled in the art without departing from the invention. Furthermore, it shall be understood that all aspects of the invention are not limited to the specific depictions, configurations, or relative proportions set forth herein which depend upon a variety of conditions and variables. It should be understood that various alternatives to the embodiments of the invention described herein may be employed in practicing the invention. It is therefore contemplated that the invention shall also cover any such alternatives, modifications, variations, or equivalents. It is intended that the following claims define the scope of the invention and that methods and structures within the scope of these claims and their equivalents be covered thereby.

For the avoidance of doubt, the application extends to the subject-matter set out in the following numbered paragraphs ("Para" or "Paras"):
1. A method for forming a three-dimensional object, comprising:
   (a) selecting at least one portion of a surface patch of a model of the three-dimensional object to generate a selected set that includes the at least one portion of the surface patch;
   (b) assigning an option from a selectable menu of requested outcomes to the selected set to generate an outcome assignment; and
   (c) using the outcome assignment to generate forming instructions for the selected set to form the three-dimensional object that result in the option.
2. The method of Para 1, wherein the selectable menu includes attributes comprising (i) throughput, (ii) surface roughness, (iii) density, (iv) stress, (v) grain size, (vi) ductility, (vii) strength, (viii) material phase, (ix) corner fidelity, or (x) dimensional tolerance.
3. The method of Para 2, wherein the dimensional tolerance (e.g., dimensional accuracy) is of the surface patch.
4. The method of Para 2, wherein the dimensional tolerance us if the three-dimensional object.
5. The method of Para 2, wherein the throughput is of forming the selected set.
6. The method of Para 2, wherein the corner fidelity is of a corner that included in the selected set.
7. The method of Para 2, wherein the (i) surface roughness, (ii) density, (iii) stress, (iv) grain size, (v) ductility, (vi) strength, and/or (vii) material phase, is of a material forming a surface corresponding to the selected set.
8. The method of Para 2, wherein the density is a material density at least a portion of a skin of the three-dimensional object.
9. The method of Para 1, wherein the surface patch comprises a mathematical boundary representation.
10. The method of Para 1, wherein the surface patch is part of a computer-aided design (CAD) model.
11. The method of Para 1, wherein the surface patch is represented as a computer-aided design (CAD) model.
12. The method of Para 1, wherein the surface patch is defined by one or more vectors.
13. The method of Para 1, wherein the surface patch is defined by one or more bounding curves comprising non-uniform rational basis splines (NURBS).
14. The method of Para 1, wherein the surface patch comprises a non-uniform rational basis splines (NURBS) surface.
15. The method of Para 1, wherein a shape of the surface patch comprises one or more control points connected to the surface patch.
16. A method for forming a three-dimensional object, comprising:
   (a) selecting at least one portion of a volume of a model of the three-dimensional object to generate a selected set that includes the at least one portion of the volume;
   (b) assigning an option from a selectable menu of requested outcomes to the selected set to generate an outcome assignment; and
   (c) using the outcome assignment to generate forming instructions for the selected set to form the three-dimensional object that result in the option.
17. The method of Para 16, wherein the selectable menu includes attributes comprising (i) throughput, (ii) surface roughness, (iii) density, (iv) stress, (v) grain size, (vi) ductility, (vii) strength, (viii) material phase, (ix) corner fidelity, or (x) dimensional tolerance.
18. The method of Para 17, wherein the dimensional tolerance (e.g., dimensional accuracy) is of the surface patch.
19. The method of Para 17, wherein the dimensional tolerance us if the three-dimensional object.
20. The method of Para 17, wherein the throughput is of forming the selected set.
21. The method of Para 17, wherein the corner fidelity is of a corner that included in the selected set.
22. The method of Para 17, wherein the (i) surface roughness, (ii) density, (iii) stress, (iv) grain size, (v) ductility, (vi) strength, and/or (vii) material phase, is of a material forming a surface corresponding to the selected set.
23. The method of Para 17, wherein the density is a material density at least a portion of a skin of the three-dimensional object.
24. The method of Para 16, wherein the at least one portion of the volume has a mathematical boundary and/or volume representation.
25. The method of Para 16, wherein the at least one portion of the volume is part of a computer-aided design (CAD) model.
26. The method of Para 16, wherein the at least one portion of the volume is represented as a computer-aided design (CAD) model.
27. The method of Para 16, wherein the at least one portion of the volume comprises an implicit surface defined by a mathematical object.
28. The method of Para 16, wherein the at least one portion of the volume is defined by one or more surface patches.
29. The method of Para 16, wherein the at least one portion of the volume is defined by one or more vectors.
30. The method of Para 16, wherein the at least one portion of the volume is defined by one or more bounding curves comprising non-uniform rational basis splines (NURBS).
31. A system for forming a three-dimensional object, comprising at least one controller that is configured to direct:
   (a) selection of at least one portion of a surface patch of a model of the three-dimensional object to generate a selected set that includes the at least one portion of the surface patch;
   (b) assignment of an option from a selectable menu of requested outcomes to the selected set to generate an outcome assignment; and
   (c) usage of the outcome assignment to generate forming instructions for the selected set to form the three-dimensional object that result in the option.
32. The system of Para 31, wherein the at least one controller is configured to operatively couple to a forming mechanism.
33. The system of Para 32, wherein the forming mechanism utilizes the forming instructions to form the three-dimensional object.
34. The system of Para 31, wherein the at least one controller comprises a feedback control scheme.
35. The system of Para 31, wherein the at least one controller is operatively coupled to one or more sensors.
36. The system of Para 31, wherein the surface patch has a mathematical boundary representation.
37. The system of Para 31, wherein the surface patch is part of a computer-aided design (CAD) model.
38. The system of Para 31, wherein the surface patch is represented as a computer-aided design (CAD) model.
39. The system of Para 31, wherein the surface patch is defined by one or more vectors.
40. The system of Para 31, wherein the surface patch is defined by one or more bounding curves comprising non-uniform rational basis splines (NURBS).
41. The system of Para 31, wherein the surface patch comprises a non-uniform rational basis splines (NURBS) surface.
42. The system of Para 31, wherein a shape of the surface patch comprises one or more control points connected to the surface patch.
43. A system for forming a three-dimensional object, comprising at least one controller that is configured to direct:
   (a) selection of at least one portion of a volume of a model of the three-dimensional object to generate a selected set that includes the at least one portion of the volume;
   (b) assignment of an option from a selectable menu of requested outcomes to the selected set to generate an outcome assignment; and
   (c) usage of the outcome assignment to generate forming instructions for the selected set to form the three-dimensional object that result in the option.
44. The system of Para 43, wherein the at least one controller is configured to operatively couple to a forming mechanism.
45. The system of Para 44, wherein the forming mechanism utilizes the forming instructions to form the three-dimensional object.
46. The system of Para 43, wherein the at least one controller comprises a feedback control scheme.
47. The system of Para 43, wherein the at least one controller is operatively coupled to one or more sensors.
48. The system of Para 43, wherein the at least one portion of a volume has a mathematical boundary and/or volume representation.
49. The system of Para 43, wherein the at least one portion of a volume is part of a computer-aided design (CAD) model.
50. The system of Para 43, wherein the at least one portion of a volume is represented as a computer-aided design (CAD) model.
51. The system of Para 43, wherein the at least one portion of the volume comprises an implicit surface defined by a mathematical object.
52. The system of Para 43, wherein the at least one portion of the volume is defined by one or more surface patches.
53. The system of Para 43, wherein the at least one portion of the volume is defined by one or more vectors.
54. The system of Para 43, wherein the at least one portion of the volume is defined by one or more bounding curves comprising non-uniform rational basis splines (NURBS).
55. A non-transitory computer-readable medium storing program instructions for generating forming instructions for formation of a three-dimensional object that, when the program instructions are executed by at least one processing unit, cause the processing unit to:
   (a) select at least one portion of a surface patch of a model of the three-dimensional object to generate a selected set that includes the at least one portion of the surface patch;
   (b) assign an option from a selectable menu of requested outcomes to the selected set to generate an outcome assignment; and
   (c) use the outcome assignment to generate forming instructions for the selected set to form the three-dimensional object that result in the option.
56. The non-transitory computer-readable medium of Para 55, wherein the surface patch has a mathematical boundary representation.
57. The non-transitory computer-readable medium of Para 55, wherein the surface patch is part of a computer-aided design (CAD) model.
58. The non-transitory computer-readable medium of Para 55, wherein the surface patch is represented as a computer-aided design (CAD) model.
59. The non-transitory computer-readable medium of Para 55, wherein the surface patch is defined by one or more vectors.
60. The non-transitory computer-readable medium of Para 55, wherein the surface patch is defined by one or more bounding curves comprising non-uniform rational basis splines (NURBS).
61. The non-transitory computer-readable medium of Para 55, wherein the surface patch comprises a non-uniform rational basis splines (NURBS) surface.
62. The non-transitory computer-readable medium of Para 55, wherein a shape of the surface patch comprises one or more control points connected to the surface patch.
63. A non-transitory computer-readable medium storing program instructions for generating forming instructions for formation of a three-dimensional object that, when the program instructions are executed by at least one processing unit, cause the processing unit to:
   (a) select at least one portion of a volume of a model of the three-dimensional object to generate a selected set that includes the at least one portion of the volume;
   (b) assign an option from a selectable menu of requested outcomes to the selected set to generate an outcome assignment; and
   (c) use the outcome assignment to generate forming instructions for the selected set to form the three-dimensional object that result in the option.
64. The non-transitory computer-readable medium of Para 63, wherein the at least one portion of a volume has a mathematical boundary and/or volume representation.
65. The non-transitory computer-readable medium of Para 63, wherein the at least one portion of a volume is part of a computer-aided design (CAD) model.
66. The non-transitory computer-readable medium of Para 63, wherein the at least one portion of a volume is represented as a computer-aided design (CAD) model.
67. The non-transitory computer-readable medium of Para 63, wherein the at least one portion of the volume comprises an implicit surface defined by a mathematical object.
68. The non-transitory computer-readable medium of Para 63, wherein the at least one portion of the volume is defined by one or more surface patches.
69. The non-transitory computer-readable medium of Para 63, wherein the at least one portion of the volume is defined by one or more vectors.
70. The non-transitory computer-readable medium of Para 63, wherein the at least one portion of the volume is defined by one or more bounding curves comprising non-uniform rational basis splines (NURBS).

## Claims

1. A stator printed by three-dimensional printing, the stator comprising:
an inner ring;
an outer ring; and
a plurality of blades disposed between the inner ring and the outer ring;
wherein the stator comprises layers of material successively deposited and stacked by the three-dimensional printing, each of the layers having an average layering plane;
wherein the blades are devoid of auxiliary support marks; and
wherein at least a portion of an exterior of one of the blades is disposed at an angle of lower than 30 degrees with respect to the average layering plane.

2. The stator of claim 1, wherein the angle with respect to the average layering plane is 25 degrees, 20 degrees, 15 degrees, or 10 degrees or lower.

3. The stator of claim 1, wherein bottom surfaces of the inner ring and the outer ring have auxiliary support marks.

4. The stator of claim 1, wherein the stator has a fundamental length scale of at least about 20 centimeters; and optionally wherein the fundamental length scale comprises (I) a diameter, (II) a spherical equivalent diameter, or (III) a diameter of a bounding sphere.

5. The stator of claim 1, wherein (I) the layers comprise a layer having a thickness of at least about 10 micrometers, (II) the layers comprise a layer having a thickness of from about 30 micrometers to about 300 micrometers, (III) the stator is indicative of the layers being printed by using respective layers of pre-transformed material having a thickness of at least 10 micrometers, (IV) the stator is indicative of the layers being printed by using respective layers of pre-transformed material having a thickness of from about 30 micrometers to about 300 micrometers, or (V) any combination of (I), (II), (III), and (IV); and optionally wherein the pre-transformed material is a powder material.

6. The stator of claim 1, wherein the stator is indicative of fusing a powder material; and optionally wherein fusing comprises melting or sintering; and optionally wherein the stator is indicative of a selective laser melting; and optionally wherein the layers comprise melt pools.

7. The stator of claim 1, wherein the stator comprises a material comprising elemental metal or metal alloy; optionally wherein the metal alloy comprises a super alloy; optionally wherein the material comprises a nickel based alloy; and optionally wherein the nickel based alloy comprises Inconel 718.

8. The stator of claim 1, wherein the stator is of a single material type; and optionally wherein the single material type is a single alloy or a single elemental metal.

9. The stator of claim 1, wherein the stator comprises surface roughness profiles.

10. The stator of claim 9, wherein the blade has a bottom skin having different surface quality than other portions of the object.

11. A method of three-dimensional printing, the method comprising: printing the stator of any preceding claim using the three-dimensional printing.

12. The method of claim 11, wherein the three-dimensional printing comprises using a laser to fuse a pre-transformed material to print the object; optionally wherein the pre-transformed material comprises powder; optionally wherein the powder is disposed in a powder bed during the three-dimensional printing; and optionally wherein the three-dimensional printing comprises generating melt pools.

13. The method of claim 11, wherein using the three-dimensional printing comprises controlling, or directing control of, the printing at least in part by using (I) feedback loop control scheme and (II) monitoring a temperature of a position from which the stator is printed; optionally wherein the position is in a material bed; and optionally wherein the material bed is a powder bed.

14. An apparatus for three-dimensional printing, the apparatus comprising at least one controller configured to: (i) operatively couple to at least one component of a three-dimensional printer; and (ii) direct the at least one component to execute a method comprising printing the stator of any of claims 1 to 10 using the three-dimensional printing; optionally wherein using the three-dimensional printing comprises controlling, or directing control of, the printing at least in part by using (I) feedback loop control scheme and (II) monitoring a temperature of a position from which the stator is printed; optionally wherein the position is in a material bed; and optionally wherein the material bed is a powder bed.

15. A computer software product, comprising a non-transitory computer-readable medium in which program instructions for three-dimensional printing are stored, the program instructions, when read by one or more processors operatively coupled to at least one component of a three-dimensional printer, cause the one or more processors to direct the at least one component to execute a method comprising printing the stator of any of claims 1 to 10 using the three-dimensional printing; optionally wherein using the three-dimensional printing comprises controlling, or directing control of, the printing at least in part by using (I) feedback loop control scheme and (II) monitoring a temperature of a position from which the stator is printed; optionally wherein the position is in a material bed; and optionally wherein the material bed is a powder bed.
